(19) Europäisches Patentamt
European Patent Office
Office européen des brevets

(11) **EP 2 101 313 A1**

(12) **EUROPEAN PATENT APPLICATION**
published in accordance with Art. 153(4) EPC

(43) Date of publication:
**16.09.2009 Bulletin 2009/38**

(51) Int Cl.:
*G09G 5/14* (2006.01)     *G09G 5/00* (2006.01)
*G09G 5/36* (2006.01)     *G09G 5/377* (2006.01)
*H04N 17/04* (2006.01)

(21) Application number: **07850747.2**

(22) Date of filing: **18.12.2007**

(86) International application number:
**PCT/JP2007/074259**

(87) International publication number:
**WO 2008/075657 (26.06.2008 Gazette 2008/26)**

(84) Designated Contracting States:
**AT BE BG CH CY CZ DE DK EE ES FI FR GB GR HU IE IS IT LI LT LU LV MC MT NL PL PT RO SE SI SK TR**

(30) Priority: **18.12.2006 JP 2006340080**
**06.11.2007 JP 2007288456**

(71) Applicant: **Sony Corporation**
**Tokyo 108-0075 (JP)**

(72) Inventor: **KONDO, Tetsujiro**
**Minato-ku**
**Tokyo 108-0075 (JP)**

(74) Representative: **Körber, Martin Hans**
**Mitscherlich & Partner**
**Patent- und Rechtsanwälte**
**Sonnenstraße 33**
**80331 München (DE)**

(54) **DISPLAY CONTROL DEVICE, DISPLAY CONTROL METHOD, AND PROGRAM**

(57)     The present invention relates to a display control apparatus, a display control method, and a program that allow checking of an image. A signal processing unit 12 performs a predetermined signal process on input image data. A display control unit 13 causes an image corresponding to the input image data to be displayed in a display region of a display apparatus 2 having a screen with a larger number of pixels than the number of pixels of the input image data, the display region being a part of the screen, and also causes an image corresponding to processed image data obtained by the predetermined signal process to be displayed in a display region that is another part of the screen of the display apparatus 2. The present invention can be applied to, for example, a monitor system or the like for displaying an image, which is used for checking the image quality or the like of the image in a broadcast station.

FIG. 1

EP 2 101 313 A1

**Description**

Technical Field

The present invention relates to a display control apparatus, a display control method, and a program, and more specifically to a display control apparatus, a display control method, and a program in which, for example, an image to be displayed on the receiving side can be checked or the like on the broadcast side of television broadcasting.

Background Art

For example, on the broadcast side of television broadcasting, before a program is broadcast, the image of the program is displayed on a display apparatus (monitor) to check the image quality or the like.
As a method for checking the image quality of an image, there is a method in which an original image and a processed image obtained by processing the original image are displayed on a single display by switching them using a switch so that a person subjectively evaluates each of the original image and the processed image, and further in which an evaluation result of the original image is displayed adjacent to the original image while an evaluation result of the processed image is displayed adjacent to the processed image (see, for example, Patent Document 1).
Patent Document 1: Japanese Unexamined Patent Application Publication No. 2001-136548

Disclosure of Invention

Technical Problem

In recent years, the performance of display apparatuses such as television receivers for receiving television broadcasts has been improved. For example, display apparatuses having large screens of 50 inches or more, such as LCDs (Liquid Crystal Displays), have become increasingly prevalent.
To this end, on the receiving side at a home or the like for receiving television broadcasts, programs have been viewed using display apparatuses having a higher performance than display apparatuses used for checking the image quality or the like on the broadcast side (hereinafter referred to as check-use display apparatuses, as desired), that is, for example, display apparatuses having larger screens than the check-use display apparatuses.
Then, in a case where programs are viewed using display apparatuses having larger screens than the check-use display apparatuses, a degradation in image quality such as noise, which is not pronounced in the check-use display apparatuses, may be pronounced to cause viewers to feel unnatural.
The present invention has been made in view of such a situation, and is intended to allow checking of an image to be displayed on the receiving side or the like.

Technical Solution

A display control apparatus in an aspect of the present invention is a display control apparatus for controlling display of an image, including signal processing means for performing a predetermined signal process on input image data, and display control means for causing an image corresponding to the input image data to be displayed in a display region of a display apparatus having a screen with a larger number of pixels than the number of pixels of the input image data, the display region being a part of the screen, and causing an image corresponding to processed image data obtained by the predetermined signal process to be displayed in a display region that is another part of the screen.
A display control method or a program in an aspect of the present invention is a display control method for controlling display of an image or a program for causing a computer to execute a display control process, including the steps of performing a predetermined signal process on input image data, and causing an image corresponding to the input image data to be displayed in a display region of a display apparatus having a screen with a larger number of pixels than the number of pixels of the input image data, the display region being a part of the screen, and causing an image corresponding to processed image data obtained by the predetermined signal process to be displayed in a display region that is another part of the screen.
In an aspect of the present invention, a predetermined signal process is performed on input image data, and an image corresponding to the input image data is displayed in a display region of a display apparatus having a screen with a larger number of pixels than the number of pixels of the input image data, the display region being a part of the screen, while an image corresponding to processed image data obtained by the predetermined signal process is displayed in a display region that is another part of the screen.
Note that the program can be provided by transmitting it through a transmission medium or recording it onto a recording medium.

Advantageous Effects

According to an aspect of the present invention, an image can be displayed. Furthermore, by confirming this displayed image, for example, an image to be displayed on the receiving side or the like can be checked.

Brief Description of Drawings

[Fig. 1] Fig. 1 is a block diagram illustrating an example structure of an embodiment of a monitor system to which the present invention is applied.

[Fig. 2] Fig. 2 is a diagram illustrating an example structure of a screen of a display apparatus 2.

[Fig. 3] Fig. 3 is a flowchart explaining a process of the monitor system.

[Fig. 4] Fig. 4 is a block diagram illustrating a first example structure of a signal processing unit 12.

[Fig. 5] Fig. 5 is a diagram illustrating an example of display on the display apparatus 2.

[Fig. 6] Fig. 6 is a diagram illustrating an example of the display of an image of mH $\times$ mV pixels.

[Fig. 7] Fig. 7 is a block diagram illustrating a second example structure of the signal processing unit 12.

[Fig. 8] Fig. 8 is a diagram illustrating an example of display on the display apparatus 2.

[Fig. 9] Fig. 9 is a block diagram illustrating a third example structure of the signal processing unit 12.

[Fig. 10] Fig. 10 is a diagram illustrating an example of display on the display apparatus 2.

[Fig. 11] Fig. 11 is a block diagram illustrating a fourth example structure of the signal processing unit 12.

[Fig. 12] Fig. 12 is a diagram illustrating an example of display on the display apparatus 2.

[Fig. 13] Fig. 13 is a block diagram illustrating a fifth example structure of the signal processing unit 12.

[Fig. 14] Fig. 14 is a diagram illustrating an example of display on the display apparatus 2.

[Fig. 15] Fig. 15 is a block diagram illustrating a sixth example structure of the signal processing unit 12.

[Fig. 16] Fig. 16 is a diagram illustrating an example of display on the display apparatus 2.

[Fig. 17] Fig. 17 is a diagram explaining a pseudo-inches image generation process.

[Fig. 18] Fig. 18 is a diagram explaining a pseudo-inches image generation process.

[Fig. 19] Fig. 19 is a diagram explaining a pseudo-inches image generation process.

[Fig. 20] Fig. 20 is a flowchart explaining a process of a display control apparatus 1 in the case of displaying an image corresponding to n-inch pseudo-inches image data in a display region #1.

[Fig. 21] Fig. 21 is a block diagram illustrating a seventh example structure of the signal processing unit 12.

[Fig. 22] Fig. 22 is a diagram illustrating an example of display on the display apparatus 2.

[Fig. 23] Fig. 23 is a block diagram illustrating an eighth example structure of the signal processing unit 12.

[Fig. 24] Fig. 24 is a diagram illustrating an example of display on the display apparatus 2.

[Fig. 25] Fig. 25 is a block diagram illustrating an example structure of an image conversion device 101 that performs an image conversion process using a class classification adaptive process.

[Fig. 26] Fig. 26 is a flowchart explaining an image conversion process performed by the image conversion device 101.

[Fig. 27] Fig. 27 is a block diagram illustrating an example structure of a learning device 121 that learns a tap coefficient.

[Fig. 28] Fig. 28 is a block diagram illustrating an example structure of a learning unit 136 of the learning device 121.

[Fig. 29] Fig. 29 is a diagram explaining various image conversion processes.

[Fig. 30] Fig. 30 is a flowchart explaining a learning process performed by the learning device 121.

[Fig. 31] Fig. 31 is a block diagram illustrating an example structure of an image conversion device 151 that performs an image conversion process using the class classification adaptive process.

[Fig. 32] Fig. 32 is a block diagram illustrating an example structure of a coefficient output unit 155 of the image conversion device 151.

[Fig. 33] Fig. 33 is a block diagram illustrating an example structure of a learning device 171 that learns coefficient seed data.

[Fig. 34] Fig. 34 is a block diagram illustrating an example structure of a learning unit 176 of the learning device 171.

[Fig. 35] Fig. 35 is a flowchart explaining a learning process performed by the learning device 171.

[Fig. 36] Fig. 36 is a block diagram illustrating an example structure of an embodiment of a computer to which the present invention is applied.

[Fig. 37] Fig. 37 is a block diagram illustrating a structure of an example of an FPD display apparatus of the related art.

[Fig. 38] Fig. 38 is a block diagram illustrating an example structure of an embodiment of an image signal processing device included in an FPD display apparatus.

[Fig. 39] Fig. 39 is a block diagram illustrating an example structure of a CRT display apparatus.

[Fig. 40] Fig. 40 is a flowchart explaining a process of the image signal processing device.

[Fig. 41] Fig. 41 is a block diagram illustrating an example structure of a VM processing unit 10034.

[Fig. 42] Fig. 42 is a diagram illustrating an example of a VM coefficient.

[Fig. 43] Fig. 43 is a diagram explaining a method of determining a VM coefficient.

[Fig. 44] Fig. 44 is a diagram illustrating a relationship between a beam current and a spot size.

[Fig. 45] Fig. 45 is a diagram illustrating a color identification mechanism.

[Fig. 46] Fig. 46 is a diagram illustrating a spot of an electron beam.

[Fig. 47] Fig. 47 is a diagram illustrating a spot of an electron beam.

[Fig. 48] Fig. 48 is a cross-sectional view illustrating a manner in which an electron beam is radiated in a case where an aperture grille is adopted as a color separation mechanism.

[Fig. 49] Fig. 49 is a diagram illustrating an intensity distribution of electron beams, which is approximated by two-dimensional normal distribution.

[Fig. 50] Fig. 50 is a diagram illustrating an intensity distribution of electron beams passing through slits in the aperture grille.

[Fig. 51] Fig. 51 is a diagram illustrating an intensity distribution of electron beams and an intensity distribution of electron beams among the electron beams, which pass through slits in the aperture grille.

[Fig. 52] Fig. 52 is a diagram illustrating an intensity distribution of electron beams and an intensity distribution of electron beams among the electron beams, which pass through slits in a shadow mask.

[Fig. 53] Fig. 53 is a diagram illustrating an intensity distribution of electron beams and an intensity distribution of electron beams among the electron beams, which pass through slits in the shadow mask.

[Fig. 54] Fig. 54 is a diagram explaining the integration for determining the intensity of an electron beam passing through a slit.

[Fig. 55] Fig. 55 is a diagram illustrating a manner in which an electron beam is incident on an aperture grille serving as a color separation mechanism.

[Fig. 56] Fig. 56 is a diagram illustrating pixels and an intensity distribution of electron beams.

[Fig. 57] Fig. 57 is a diagram illustrating an example structure of a circuit for determining an amount of EB influence.

[Fig. 58] Fig. 58 is a block diagram illustrating an example structure of an EB processing unit 10220.

[Fig. 59] Fig. 59 is a block diagram illustrating another example structure of the EB processing unit 10220.

[Fig. 60] Fig. 60 is a block diagram illustrating an example structure of a section of a CRT γ processing unit 10035 that performs a color temperature compensation process.

[Fig. 61] Fig. 61 is a block diagram illustrating another example structure of the VM processing unit 10034.

[Fig. 62] Fig. 62 is a block diagram illustrating an example structure of a luminance correction unit 10310.

[Fig. 63] Fig. 63 is a diagram explaining a luminance correction process.

[Fig. 64] Fig. 64 is a block diagram illustrating another example structure of the luminance correction unit 10310.

[Fig. 65] Fig. 65 is a flowchart explaining a learning process for determining a tap coefficient as a VM coefficient.

[Fig. 66] Fig. 66 is a flowchart explaining a learning process for determining a class prediction coefficient.

[Fig. 67] Fig. 67 is a block diagram illustrating an example structure of an embodiment of a computer.

[Fig. 68] Fig. 68 is a block diagram illustrating an example structure of a first embodiment of an image processing device that can provide, using a first display device, reproduction of a state in which an image is displayed on a second display device having characteristics different from those of the first display device.

[Fig. 69] Fig. 69 is a block diagram illustrating an example structure of a motion detecting unit 20100.

[Fig. 70] Fig. 70 is a diagram explaining motion detection.

[Fig. 71] Fig. 71 is a diagram explaining motion detection.

[Fig. 72] Fig. 72 is a block diagram illustrating an example structure of a sub-field developing unit 20200.

[Fig. 73] Fig. 73 is a diagram illustrating an example structure of sub-fields.

[Fig. 74] Fig. 74 is a diagram illustrating an example structure of sub-fields.

[Fig. 75] Fig. 75 is a block diagram illustrating an example structure of a light-intensity integrating unit 20300.

[Fig. 76] Fig. 76 is a diagram explaining generation of a pseudo-contour.

[Fig. 77] Fig. 77 is a diagram illustrating a light-intensity integrating region.

[Fig. 78] Fig. 78 is a diagram illustrating a light-intensity integrating region.

[Fig. 79] Fig. 79 is a block diagram illustrating an example structure of a second embodiment of an image processing device that can provide, using a first display device, reproduction of a state in which an image is displayed on a second display device having characteristics different from those of the first display device.

[Fig. 80] Fig. 80 is a block diagram illustrating an example structure of a gradation-level converting unit 20400.

[Fig. 81] Fig. 81 is a diagram explaining an operation of a dither converting circuit 20404.

[Fig. 82] Fig. 82 is a block diagram illustrating an example structure of a third embodiment of an image processing device that can provide, using a first display device, reproduction of a state in which an image is displayed on a second display device having characteristics different from those of the first display device.

[Fig. 83] Fig. 83 is a block diagram illustrating an example structure of a fourth embodiment of an image processing device that can provide, using a first display device, reproduction of a state in which an image is displayed on a second display device having characteristics different from those of the first display device.

[Fig. 84] Fig. 84 is a block diagram illustrating an example structure of a vision correcting unit 20500.

[Fig. 85] Fig. 85 is a diagram explaining an operation of a dither correcting circuit 20501.

[Fig. 86] Fig. 86 is a diagram explaining an operation of a diffused-error correcting circuit 20502.

[Fig. 87] Fig. 87 is a flowchart illustrating an operation of a first embodiment of an image processing device that can provide, using a first display device, reproduction of a state in which an image is displayed on a second display device having characteristics different from those of the first display device.

[Fig. 88] Fig. 88 is a flowchart explaining a motion detecting process.

[Fig. 89] Fig. 89 is a flowchart explaining a process of developing an image over sub-fields.

[Fig. 90] Fig. 90 is a flowchart explaining a light-intensity integrating process.

[Fig. 91] Fig. 91 is a flowchart illustrating an operation of a second embodiment of an image processing device that can provide, using a first display device, reproduction of a state in which an image is displayed on a second display device having characteristics different from those of the first display device.

[Fig. 92] Fig. 92 is a flowchart explaining a gradation-level converting process.

[Fig. 93] Fig. 93 is a flowchart illustrating an operation of a third embodiment of an image processing device that can provide, using a first display device, reproduction of a state in which an image is displayed on a second display device having characteristics different from those of the first display device.

[Fig. 94] Fig. 94 is a flowchart illustrating an operation of a fourth embodiment of an image processing device that can provide, using a first display device, reproduction of a state in which an image is displayed on a second display device having characteristics different from those of the first display device.

[Fig. 95] Fig. 95 is a flowchart explaining a vision correcting process.

[Fig. 96] Fig. 96 is a diagram illustrating a display model.

[Fig. 97] Fig. 97 is a diagram illustrating a pixel in the display model.

[Fig. 98] Fig. 98 is a diagram illustrating a light-intensity integrating region in the display model.

[Fig. 99] Fig. 99 is a diagram illustrating a cross-section region.

[Fig. 100] Fig. 100 is a diagram illustrating the cross-section region moving in the display model with time T.

[Fig. 101] Fig. 101 is a diagram illustrating the cross-section region moving in the display model with time T.

[Fig. 102] Fig. 102 is a flowchart explaining a light-intensity integrating process.

[Fig. 103] Fig. 103 is a block diagram illustrating another example structure of the light-intensity integrating unit 20300.

[Fig. 104] Fig. 104 is a diagram illustrating a light-intensity-integrated-value table.

[Fig. 105] Fig. 105 is a flowchart explaining a light-intensity integrating process.

[Fig. 106] Fig. 106 is a block diagram illustrating an example structure of an embodiment of a computer.

[Fig. 107] Fig. 107 is a block diagram illustrating an example structure of an embodiment of an image signal processing device that reproduces the appearance of a PDP using a display other than a PDP.

[Fig. 108] Fig. 108 is a diagram explaining a stripe array reproduction process.

[Fig. 109] Fig. 109 is a block diagram illustrating an example structure of an image processing unit 30001 for performing a stripe array reproduction process.

[Fig. 110] Fig. 110 is a flowchart explaining a stripe array reproduction process.

[Fig. 111] Fig. 111 is a diagram explaining a color shift caused in an image displayed on a PDP.

[Fig. 112] Fig. 112 is a diagram illustrating a coefficient to be multiplied with an image signal in a color shift addition process.

[Fig. 113] Fig. 113 is a block diagram illustrating an example structure of an image processing unit 30001 for performing a color shift addition process.

[Fig. 114] Fig. 114 is a flowchart explaining a color shift addition process.

[Fig. 115] Fig. 115 is a diagram explaining an inter-pixel pitch reproduction process.

[Fig. 116] Fig. 116 is a diagram illustrating an example structure of an image processing unit 30001 for performing an inter-pixel pitch reproduction process.

[Fig. 117] Fig. 117 is a flowchart explaining an inter-pixel pitch reproduction process.

[Fig. 118] Fig. 118 is a diagram explaining a spatial dither addition process.

[Fig. 119] Fig. 119 is a block diagram illustrating an example structure of an image processing unit 30001 for performing a spatial dither addition process.

[Fig. 120] Fig. 120 is a diagram illustrating a lookup table stored in a spatial dither pattern ROM 30043.

[Fig. 121] Fig. 121 is a flowchart explaining a spatial dither addition process.

[Fig. 122] Fig. 122 is a block diagram illustrating an example structure of an image processing unit 30001 for performing a temporal dither addition process.

[Fig. 123] Fig. 123 is a flowchart explaining a temporal dither addition process.

[Fig. 124] Fig. 124 is a block diagram illustrating an example structure of an image processing unit 30001 for performing all the color shift addition process, spatial dither addition process, temporal dither addition process, the inter-pixel pitch reproduction process, and stripe array reproduction process.

[Fig. 125] Fig. 125 is a flowchart explaining a process of the image processing unit 30001.

[Fig. 126] Fig. 126 is a block diagram illustrating an example structure of an embodiment of a computer.

Explanation of Reference Numerals

1 display control apparatus, 2 display apparatus, 3 remote commander, 11 image conversion unit, 12 signal processing unit, $12_1$ first signal processing unit, $12_2$ second signal processing unit, $12_3$ third signal processing unit, 13 display control unit, 14 control unit, $31_1$, $31_2$, $31_3$ image conversion unit, $41_1$, $41_2$, $41_3$ simulation processing unit, 51, 52 image conversion unit, 61 enhancement processing unit, 62 adaptive gamma processing unit, 63 high-frame-rate processing unit, $71_1$, $71_2$, $71_3$ pseudo-inches image generation unit, 101 image conversion device, 111 pixel-of-interest selection unit, 112, 113 tap selection unit, 114 class classification unit, 115 coefficient output unit, 116 predictive computation unit, 121 learning device, 131 learning image storage unit, 132 teacher data generation unit, 133 teacher data storage unit, 134 student data generation unit, 135 student data storage unit, 136 learning unit, 141 pixel-of-interest selection unit, 142, 143 tap selection unit, 145 additional addition unit, 146 tap coefficient calculation unit, 151 image conversion device, 155 coefficient output unit, 161 coefficient generation unit, 162 coefficient seed memory, 163 parameter memory, 164 coefficient memory, 174 student data generation unit, 176 learning unit, 181 parameter generation unit, 192, 193 tap selection unit, 195 additional addition unit, 196 coefficient seed calculation unit, 201 bus, 202 CPU, 203 ROM, 204 RAM, 205 hard disk, 206 output unit, 207 input unit, 208 communication unit, 209 drive, 210 input/output interface, 211 removable recording medium, 10011 brightness adjustment contrast adjustment unit, 10012 image quality improvement processing unit, 10013 γ correction unit, 10031 brightness adjustment contrast adjustment unit, 10032 image quality improvement processing unit, 10033 ABL processing unit, 10034 VM processing unit, 10035 CRT γ processing unit, 10036 full screen brightness average level detection unit, 10037 peak detection differential control value detection unit, 10038 ABL control unit, 10039 VM control unit, 10040 display color temperature compensation control unit, 10051 brightness adjustment contrast adjustment unit, 10052 image quality improvement processing unit, 10053 gain adjustment unit, 10054 γ correction unit, 10055 video amplifier, 10056 CRT, 10057 FBT, 10058 beam current detection unit, 10059 ABL control unit, 10060 image signal differentiating circuit, 10061 VM driving circuit, 10101 bus, 10102 CPU, 10103 ROM, 10104 RAM, 10105 hard disk, 10106 output unit, 10107 input unit, 10108 communication unit, 10109 drive, 10110 input/output interface, 10111 removable recording medium 10210 luminance correction unit, 10211 VM coefficient generation unit, 10212 computation unit, 10220 EB processing unit, 10241 EB coefficient generation unit, 10242A to 10242D and 10242F to 10242I computation unit, 10250 EB function unit, 10251 to 10259 delay unit, 10260 EB coefficient generation unit, 10261 product-sum operation unit, 10271, 10272 selector, 10281 control unit, 10282 level shift unit, 10283 gain adjustment unit, 10310 luminance correction unit, 10311 delay timing adjustment unit, 10312 differentiating circuit, 10313 threshold processing unit, 10314 waveform shaping processing unit, 10315 multiplying circuit, 10321 tap selection unit, 10322 class classification unit, 10323 class prediction coefficient storage unit, 10324 prediction unit, 10325 class decision unit, 10326 tap coefficient storage unit, 10327 prediction unit, 20100 motion detecting unit, 20101 correlation calculating circuit, 20102 delay circuit, 20103 line-of-sight decision circuit, 20200 sub-field developing unit, 20201 sub-field assigning circuit, 20202 light-emission decision circuit, 20300 light-intensity integrating unit, 20301 light-intensity-integrating-region decision circuit, 20302 light-intensity integrating circuit, 20303 light-intensity-integrated-value-table storage unit, 20304 light-intensity-integrating-region selecting circuit, 20400 gradation-level converting unit, 20401 delay circuit, 20402 gradation-level converting circuit, 20403 gradation-level converting table, 20404 dither converting circuit, 405, 406 computing units, 20500 vision correcting unit, 20501 dither correcting circuit, 20502 diffused-error correcting circuit, 21101 bus, 21102 CPU, 21103 ROM, 21104 RAM, 21105 hard disk, 21106 output unit, 21107 input unit, 21108 communication unit, 21109 drive, 21110 input/output interface, 21111 removable recording medium, 30001 image processing unit, 30002 monitor, 30011 magnification/stripe formation circuit, 30012 resizing/resampling circuit, 30021 current-frame memory, 30022 preceding-frame memory, 30023 edge portion cutting circuit, 30024 motion detecting circuit, 30025 color coefficient multiplying circuit, 30031 magnification processing circuit, 30032 inter-pixel luminance decreasing circuit, 30041 smooth-portion extracting circuit, 30042 color comparison circuit, 30043 spatial dither pattern ROM, 30044 dither adding circuit, 30051 color comparison circuit, 30052 temporal dither pattern ROM, 30053 dither adding circuit, 30054 to 30056 output memory, 30060 image processing unit, 30061 current-frame memory, 30062 preceding-frame memory, 30063 edge portion cutting circuit, 30064 motion detecting circuit, 30065 color coefficient multiplying circuit, 30070 image processing unit, 30071 color comparison circuit, 30072 temporal/spatial dither pattern ROM, 30073 dither adding circuit, 30074 to 30076 output memory, 30080 image processing unit, 30081 magnification processing circuit, 30082 stripe formation circuit, 30083 inter-pixel luminance decreasing circuit, 30101 bus, 30102 CPU, 30103 ROM, 30104 RAM, 30105 hard disk, 30106 output unit, 30107 input unit, 30108 communication unit, 30109 drive, 30110 input/output interface, 30111 removable recording medium

Best Modes for Carrying Out the Invention

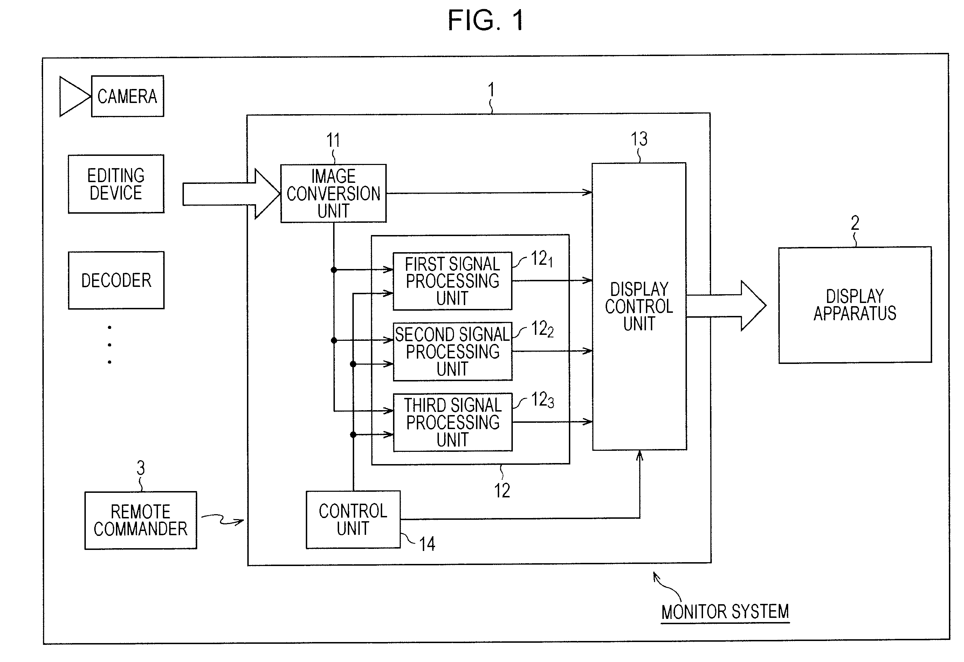

Fig. 1 is a block diagram illustrating an example structure of an embodiment of a monitor system to which the present invention is applied (the term system refers to a logical set of a plurality of apparatuses regardless of whether or not the individual constituent apparatuses reside in the same housing).

The monitor system is constructed from a display control apparatus 1, a display apparatus 2, and a remote commander 3, and is used, for example, at a broadcast station or the like for television broadcasting to check the image quality or the like.

The monitor system is supplied with, as input image data to be input to the monitor system, image data output from a camera for capturing images, image data output from an editing device for editing so-called raw material, image data output from a decoder for decoding encoded data encoded using an MPEG (Moving Picture Expert Group) scheme or the like, or other image data of a moving image of a program that has not yet been broadcast from the broadcast station or the like.

Then, in the monitor system, the display of an image corresponding to image data of a program that has not yet been broadcast, as input image data, on a display apparatus (a display apparatus of a type different from that of the display apparatus 2) on the receiving side at a home or the like is simulated (emulated). That is, an image that would be displayed if an image corresponding to the input image data were displayed is displayed on various display apparatuses on the receiving side that receive the input image data. This allows an evaluator or the like who checks (evaluates) the image quality or the like to check, by viewing the displayed image, the image quality or the like with which the image corresponding to the input image data is displayed on a display apparatus on the receiving side.

The display control apparatus 1 is constructed from an image conversion unit 11, a signal processing unit 12, a display control unit 13, and a control unit 14. The display control apparatus 1 performs a predetermined signal process on the input image data to cause an image corresponding to the input image data to be displayed in a display region that is a part of a screen of the display apparatus 2 and to cause an image corresponding to processed image data obtained by the predetermined signal process to be displayed in a display region that is another part of the screen.

That is, the input image data is supplied to the image conversion unit 11. The image conversion unit 11 regards the input image data as check image data to be checked to determine what image is displayed on a display apparatus on the receiving side, and subjects this check image data to an image conversion process for converting the number of pixels, if necessary. The image conversion unit 11 supplies a resulting check image data to the signal processing unit 12 and the display control unit 13.

In the embodiment of Fig. 1, the signal processing unit 12 is constructed from three, a first signal processing unit $12_1$, a second signal processing unit $12_2$, and a third signal processing unit $12_3$. The signal processing unit 12 subjects the check image data from the image conversion unit 11 to a signal process for allowing an image that would be displayed if the image corresponding to the input image data (check image data) were displayed on a display apparatus on the receiving side to be displayed on the display apparatus 2, and supplies processed image data obtained by this signal process to the display control unit 13.

That is, the first signal processing unit $12_1$ subjects the check image data from the image conversion unit 11 to a signal process according to the control from the control unit 14, and supplies processed image data obtained by this signal process to the display control unit 13.

Like the first signal processing unit $12_1$, the second signal processing unit $12_2$ and the third signal processing unit $12_3$ also subject the check image data from the image conversion unit 11 to individual signal processes according to the control from the control unit 14, and supply processed image data obtained by the signal processes to the display control unit 13.

The display control unit 13 causes, according to the control of the control unit 14, an image corresponding to the check image data supplied from the image conversion unit 11 to be displayed in a display region that is a part of the screen of the display apparatus 2. Further, the display control unit 13 causes, according to the control of the control unit 14, an image corresponding to the processed image data supplied from each of the first signal processing unit $12_1$, the second signal processing unit $12_2$, and the third signal processing unit $12_3$ to be displayed in a display region that is another part of the screen of the display apparatus 2.

Note that the display control unit 13 controls the position or size of an image to be displayed on the display apparatus 2 according to a parameter supplied from the control unit 14.

Here, the processed image data individually supplied to the display control unit 13 from the first signal processing unit $12_1$, the second signal processing unit $12_2$, or the third signal processing unit $12_3$ is hereinafter also referred to as first processed image data, second processed image data, or third processed image data, respectively, as desired.

The control unit 14 receives an operation signal sent from the remote commander 3 or an operation unit (not illustrated) provided in the display control apparatus 1, and controls the first signal processing unit $12_1$, the second signal processing unit $12_2$, the third signal processing unit $12_3$, and the display control unit 13 in correspondence with this operation signal. Further, the control unit 14 supplies a parameter necessary for a process and other information to

7

EP 2 101 313 A1

individual blocks, namely, the first signal processing unit $12_1$, the second signal processing unit $12_2$, the third signal processing unit $12_3$, and the display control unit 13.

The display apparatus 2 is, for example, an apparatus that displays an image on an LCD (Liquid Crystal Display), and has a screen with a larger number of pixels than the number of pixels of the check image data supplied from the image conversion unit 11 to the signal processing unit 12 and the display control unit 13. Then, the display apparatus 2 displays, according to the control of the display control unit 13, an image corresponding to the check image data in a display region that is a part of the screen and also displays each of images corresponding to the first processed image data, the second processed image data, and the third processed image data in a display region that is another part of the screen.

The remote commander 3 is operated by, for example, an evaluator or the like who checks the image quality or the like with which the image corresponding to the check image data, and therefore the input image data, is displayed on a display apparatus on the receiving side, and sends an operation signal corresponding to this operation to the control unit 14 wirelessly such as via infrared waves.

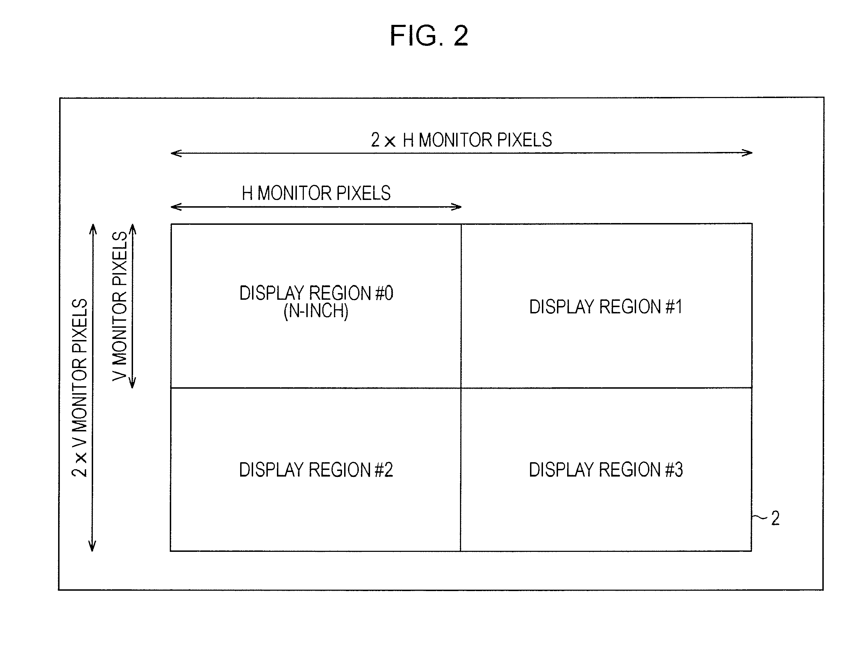

Fig. 2 illustrates an example structure of the screen of the display apparatus 2.

In the display apparatus 2, the screen thereof is equally horizontally and vertically divided to produce four display regions #0, #1, #2, and #3 in each of which an image is displayed.

That is, in the display apparatus 2, an image corresponding to the check image data is displayed in the upper left display region #0 of the four display regions #0 to #3, an image corresponding to the first processed image data is displayed in the upper right display region #1, an image corresponding to the second processed image data is displayed in the lower left display region #2, and an image corresponding to the third processed image data is displayed in the lower right display region #3.

Here, it is assumed that pixels constituting the screen of the display apparatus 2 are hereinafter referred to as monitor pixels, as desired, in order to identify them from pixels of image data. Then, the screen of the display apparatus 2 is constructed with $2H \times 2V$ monitor pixels (monitor pixels, the number of which is $2H \times 2V$) given in horizontal and vertical order.

Therefore, the display regions #0 to #3 are each constructed with $H \times V$ monitor pixels.

Note that, for example, if the number H of horizontal monitor pixels of the display region #i (i = 0, 1, 2, 3) is 1920 and the number V of vertical monitor pixels is 1080, an HDTV (High-Definition Television) image having an aspect ratio of 16:9 can be displayed in the display region #i.

Further, in the present embodiment, the screen of the display apparatus 2 is segmented into the four display regions #0 to #3, each of the four display regions #0 to #3 being regarded as one so-called virtual screen, and an image (one image) is displayed in each of the display regions #0 to #3. In the display apparatus 2, however, an image (one image) can be displayed over the four display regions #0 to #3, i.e., on the entire screen of the display apparatus 2.

As described above, it is assumed that the display region #i is constructed with $1920 \times 1080$ monitor pixels. Then, in a case where an image is displayed on the entire screen of the display apparatus 2, an image having higher definition than an HDTV image, which is constructed with $[2 \times 1920] \times [2 \times 1080]$ pixels, can be displayed on the display apparatus 2.

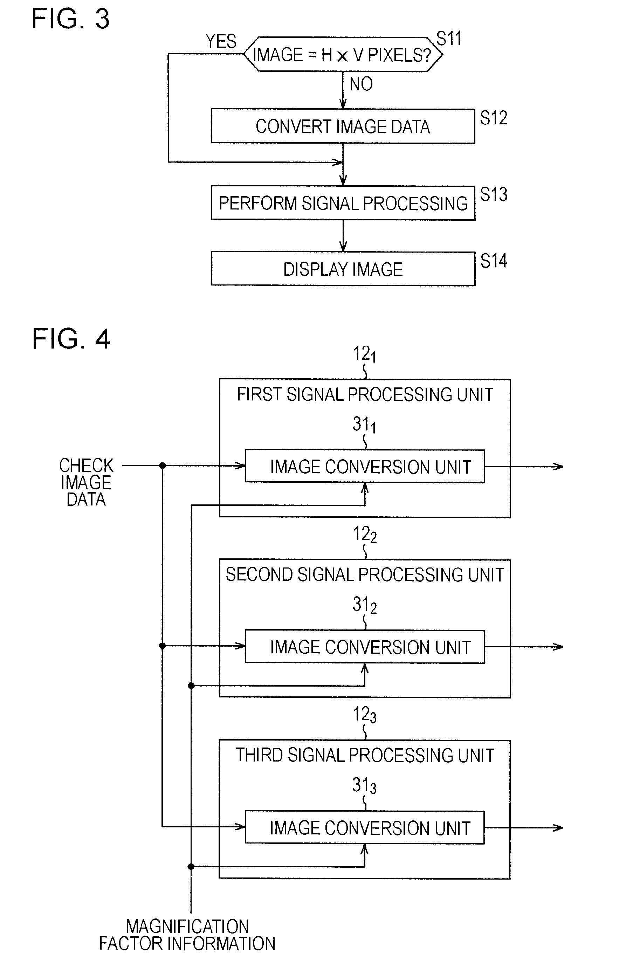

Next, the process of the monitor system of Fig. 1 will be explained with reference to a flowchart of Fig. 3.

When input image data is supplied to the image conversion unit 11 of the display control apparatus 1 from outside, in step S11, the image conversion unit 11 regards the input image data as check image data, and determines whether or not this check image data is constructed with the same number of pixels as the number of, for example, monitor pixels constituting the display region #0. That is, the image conversion unit 11 determines whether or not the check image data is constructed with $H \times V$ pixels.

In step S11, in a case where it is determined that the check image data is constructed with $H \times V$ pixels which are the same as monitor pixels constituting the display region #0, the process skips step S12 and proceeds to step S13.

Also, in step S11, in a case where it is determined that the check image data is constructed with the number of pixels other than $H \times V$ pixels which are the same as the monitor pixels constituting the display region #0, the process proceeds to step S12, in which the image conversion unit 11 performs an image conversion process on the check image data for converting the number of pixels of the check image data into $H \times V$ pixels, the number of which is the same as the number of pixels of the monitor pixels constituting the display region #0. The image conversion unit 11 supplies check image data obtained after the image conversion process to the signal processing unit 12 and the display control unit 13. The process proceeds to step S13.

In step S13, each of the first signal processing unit $12_1$, the second signal processing unit $12_2$, and the third signal processing unit $12_3$ constituting the signal processing unit 12 subjects the check image data from the image conversion unit 11 to a signal process according to the control from the control unit 14. First processed image data, second processed image data, and third processed image data obtained by the signal processes are supplied to the display control unit 13. The process proceeds to step S14.

In step S14, the display control unit 13 causes, according to the control unit 14, an image corresponding to the

8

check image data from the image conversion unit 11 to be displayed in the display region #0 of the display apparatus 2. Furthermore, in step S14, the display control unit 13 causes, according to the control of the control unit 14, an image corresponding to the first processed image data from the first signal processing unit $12_1$ to be displayed in the display region #1, an image corresponding to the second processed image data from the second signal processing unit $12_2$ to be displayed in the display region #2, and an image corresponding to the third processed image data from the third signal processing unit $12_3$ to be displayed in the display region #3.

In the manner as above, an image corresponding to the check image data is displayed in the display region #0, and an image corresponding to first processed image data obtained by subjecting the check image data to a predetermined signal process, that is, an image that would be displayed if the image corresponding to the check image data were displayed on a certain type of display apparatus on the receiving side, is displayed in the display region #1.

Also, an image corresponding to second processed image data obtained by subjecting the check image data to a predetermined signal process, that is, an image that would be displayed if the image corresponding to the check image data were displayed on another type of display apparatus on the receiving side, is displayed in the display region #2, and an image corresponding to third processed image data obtained by subjecting the check image data to a predetermined signal process, that is, an image that would be displayed if the image corresponding to the check image data were displayed on still another type of display apparatus on the receiving side, is displayed in the display region #3.

1 Therefore, the image displayed in the display region #0 can be used to check the image quality, for example, S/N (Signal to Noise Ratio) or the like, of the image data of the program. Further, the images displayed in the display regions #1 to #3 can be used to check how the image displayed in the display region #0 is displayed on various types of display apparatuses on the receiving side.

Further, since the display apparatus 2 has a screen with a larger number of monitor pixels than the number of pixels of the check image data of H $\times$ V pixels, as illustrated in Fig. 2, the image corresponding to the check image data is displayed in a display region that is a part of the screen, for example, in the display region #0. At the same time, images corresponding to processed image data obtained by subjecting the check image data to predetermined signal processes, that is, images that would be displayed if the image corresponding to the check image data were displayed on display apparatuses on the receiving side, can be displayed in display regions that are other parts of the screen, namely, in the display regions #1, #2, and #3.

Therefore, the image corresponding to the check image data and a state of this image to be displayed on a display apparatus on the receiving side, i.e., a degraded image with degradation in image quality or the like caused before the check image data is broadcast as a program and is received and displayed on the display apparatus on the receiving side, can be compared with each other to check the state of degradation of the image (degraded image) to be displayed on the display apparatus on the receiving side.

And the state of degradation of the image to be displayed on the display apparatus on the receiving side can be qualitatively taken into account and editing (re-editing) or the like of the program can be performed.

Also, the image corresponding to the check image data and the images corresponding to the processed image data are displayed on a physically single screen of the display apparatus 2. Thus, it is not necessary to take into account various differences in characteristic between display apparatuses, which may cause a problem in a case where the image corresponding to the check image data and the images corresponding to the processed image data are displayed on different display apparatuses.

Next, Fig. 4 illustrates a first example structure of the signal processing unit 12 of Fig. 1.

In Fig. 4, the first signal processing unit $12_1$ of the signal processing unit 12 is constructed from an image conversion unit $31_1$, the second signal processing unit $12_2$ is constructed from an image conversion unit $31_2$, and the third signal processing unit $12_3$ is constructed from an image conversion unit $31_3$.

The image conversion unit $31_1$ (i = 1, 2, 3) is supplied with the check image data from the image conversion unit 11 (Fig. 1), and is also supplied with magnification factor information, from the control unit 14 (Fig. 1), indicating magnification factors m, m', and m" (> 1) for magnifying an image.

Then, the image conversion unit $31_i$ performs a signal process equivalent to a process of magnifying an image, which is performed by a display apparatus on the receiving side, on the check image data from the image conversion unit 11 according to the magnification factor information supplied from the control unit 14.

That is, some display apparatuses on the receiving side have a magnification function for performing a process of magnifying an image serving as a program from a broadcast station. The image conversion unit $31_i$ performs a signal process equivalent to a process of magnifying an image, which is performed by such a display apparatus on the receiving side.

Specifically, the image conversion unit $31_1$ performs an image conversion process for converting the check image data from the image conversion unit 11 into m-times magnified image data, which is produced by magnifying the check image data m times, according to the magnification factor information supplied from the control unit 14. The image conversion unit $31_1$ supplies the m-times magnified image data obtained by this image conversion process to the display control unit 13 (Fig. 1) as processed image data.

The image conversion unit $31_2$ performs an image conversion process for converting the check image data from the image conversion unit 11 into m'-times magnified image data, which is produced by magnifying the check image data m' times, according to the magnification factor information supplied from the control unit 14, and supplies the m'-times magnified image data obtained by this image conversion process to the display control unit 13 as processed image data. Likewise, the image conversion unit $31_3$ performs an image conversion process for converting the check image data from the image conversion unit 11 into m''-times magnified image data, which is produced by magnifying the check image data m'' times, according to the magnification factor information supplied from the control unit 14, and supplies the m''-times magnified image data obtained by this image conversion process to the display control unit 13 as processed image data.

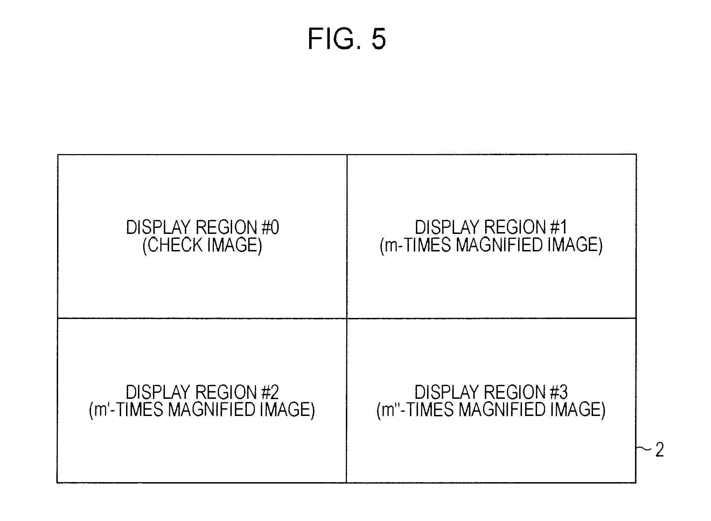

Fig. 5 illustrates an example of display on the display apparatus 2 in a case where the signal processing unit 12 is constructed as illustrated in Fig. 4.

In the display apparatus 2, an image corresponding to the check image data (hereinafter referred to also as a check image, as desired) is displayed in the display region #0. Also, an image corresponding to the m-times magnified image data, an image corresponding to the m'-times magnified image data, and an image corresponding to the m''-times magnified image data are displayed in the display region #1, the display region #2, and the display region #3, respectively.

Therefore, in a display apparatus having a magnification function among display apparatuses on the receiving side, in a case where an image serving as a program from a broadcast station is magnified and displayed by using the magnification function, the state of the displayed image (the image quality or the like of a magnified image) can be checked.

Note that the magnification factors m, m', and m'' can be specified by, for example, operating the remote commander 3 (Fig. 1).

Incidentally, in the image conversion unit $31_1$ of Fig. 4 (also in the other image conversion units $31_2$ and $31_3$), the check image data is converted into m-times magnified image data produced by increasing the number of pixels in each of the horizontal and vertical directions m times by using the image conversion process.

In the present embodiment, as described above, the check image data is constructed with $H \times V$ pixels, the number of which is the same as the number of pixels of the display region #i constructed with $H \times V$ monitor pixels. Thus, the m-times magnified image data is constructed with $mH \times mV$ pixels.

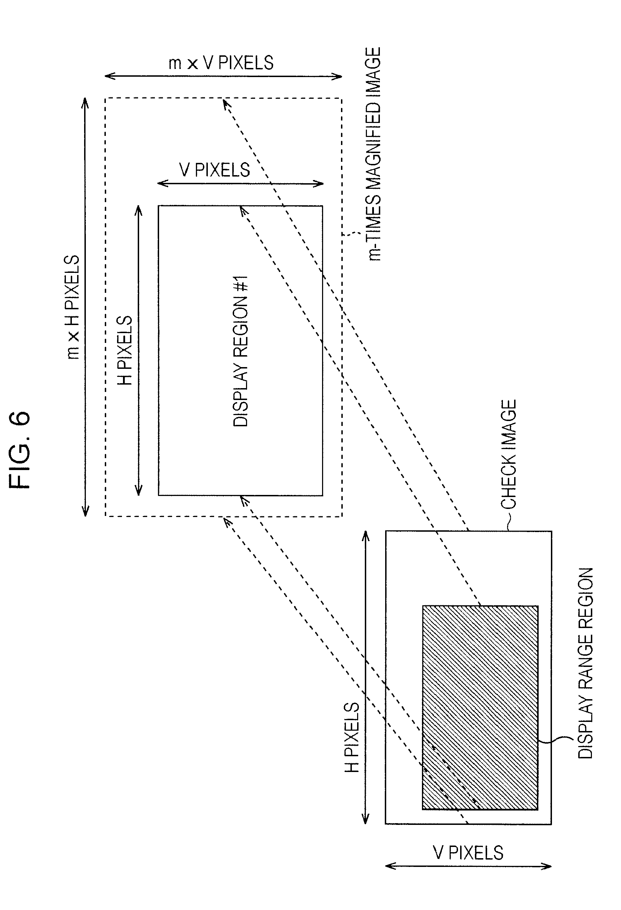

Therefore, the entire image corresponding to the m-times magnified image data constructed with $mH \times mV$ pixels cannot be displayed in the display region #1. Thus, as illustrated in Fig. 6, a portion of an image of $mH \times mV$ pixels corresponding to the m-times magnified image data is displayed in the display region #1.

That is, Fig. 6 illustrates an example of the display of the image of $mH \times mV$ pixels corresponding to the m-times magnified image data.

In the display region #1 constructed with $H \times V$ monitor pixels, the portion of a region of $H \times V$ pixels within the image of $mH \times* mV$ pixels corresponding to the m-times magnified image data is displayed.

Now, if it is assumed that a check image region (a portion indicated by diagonal hatching in Fig. 6) corresponding to the region of $H \times V$ pixels to be displayed in the display region #1 within the image of $mH \times mV$ pixels corresponding to the m-times magnified image data is referred to as a display range region, the display range region can be specified by, for example, operating the remote commander 3. The display control unit 13 causes a portion of the image of $mH \times mV$ pixels corresponding to the m-times magnified image data to be displayed in the display region #1 according to the specified display range region.

Also, for example, the display range region in the check image can be displayed so as to be superimposed on the check image in the display region #0 where the check image is displayed.

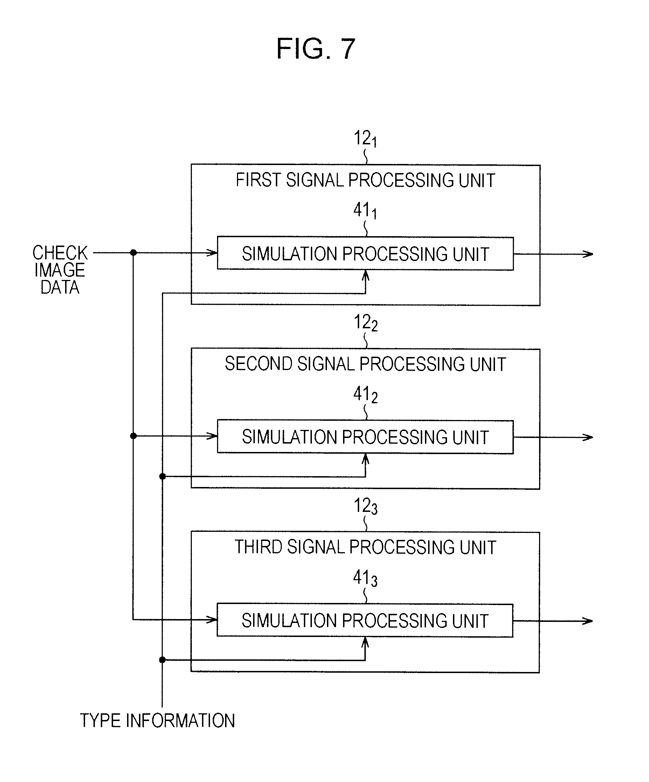

Next, Fig. 7 illustrates a second example structure of the signal processing unit 12 of Fig. 1.

In Fig. 7, the first signal processing unit $12_1$ of the signal processing unit 12 is constructed from a simulation processing unit $41_1$, the second signal processing unit $12_2$ is constructed from a simulation processing unit $41_2$, and the third signal processing unit $12_3$ is constructed from a simulation processing unit $41_3$.

The simulation processing unit $41_i$ (i = 1, 2, 3) is supplied with the check image data from the image conversion unit 11 (Fig. 1), and is also supplied with type information, from the control unit 14 (Fig. 1), indicating the type of a display device that displays an image.

Then, the simulation processing unit $41_i$ performs, according to the type information supplied from the control unit 14, a signal process on the check image data from the image conversion unit 11 for generating, as processed image data, image data for displaying in the display region #i of the display apparatus 2 an image equivalent to an image to be displayed on another display apparatus having a different display characteristic from that of the display apparatus 2 when the check image is displayed on the other display apparatus.

That is, while, as described above, the display apparatus 2 is constructed from an LCD, a display apparatus on the receiving side can be a display apparatus having a display device having display characteristics different from those of an LCD, for example, a CRT (Cathode Ray Tube), a PDP (Plasma Display Panel), an organic EL (Electro Luminescence) display, an FED (Field Emission Display), or the like. Also, in the future, display apparatuses having new display devices can be developed.

Thus, the simulation processing unit $41_i$ performs a signal process for generating, as processed image data, image data for displaying in the display region #i of the display apparatus 2 an image equivalent to the check image to be displayed on such a display apparatus on the receiving side having a display characteristic different from that of the display apparatus 2.

Here, image data for displaying on the LCD display apparatus 2 an image equivalent to the check image to be displayed on a display apparatus having an organic EL display on the receiving side is referred to as pseudo-organic EL image data, and a signal process for generating the pseudo-organic EL image data from the check image data is referred to as an organic EL simulation process.

Also, image data for displaying on the LCD display apparatus 2 an image equivalent to the check image to be displayed on a display apparatus having a PDP on the receiving side is referred to as pseudo-PDP image data, and a signal process for generating the pseudo-PDP image data from the check image data is referred to as a PDP simulation process.

Further, image data for displaying on the LCD display apparatus 2 an image equivalent to the check image to be displayed on a display apparatus having a CRT on the receiving side is referred to as pseudo-CRT image data, and a signal process for generating the pseudo-CRT image data from the check image data is referred to as a CRT simulation process.

In this case, the simulation processing unit $41_1$ performs, according to the type information supplied from the control unit 14, for example, an organic EL simulation process for generating pseudo-organic EL image data from the check image data from the image conversion unit 11, and supplies pseudo-organic EL image data obtained by this organic EL simulation process to the display control unit 13 (Fig. 1) as processed image data.

The simulation processing unit $41_2$ performs, according to the type information supplied from the control unit 14 according to the type information supplied from the control unit 14, for example, a PDP simulation process for generating pseudo-PDP image data from the check image data from the image conversion unit 11, and supplies pseudo-PDP image data obtained by this PDP simulation process to the display control unit 13 as processed image data.

Likewise, the simulation processing unit $41_3$ also performs, according to the type information supplied from the control unit 14, for example, a CRT simulation process for generating pseudo-CRT image data from the check image data from the image conversion unit 11, and supplies pseudo-CRT image data obtained by this CRT simulation process to the display control unit 13 as processed image data.

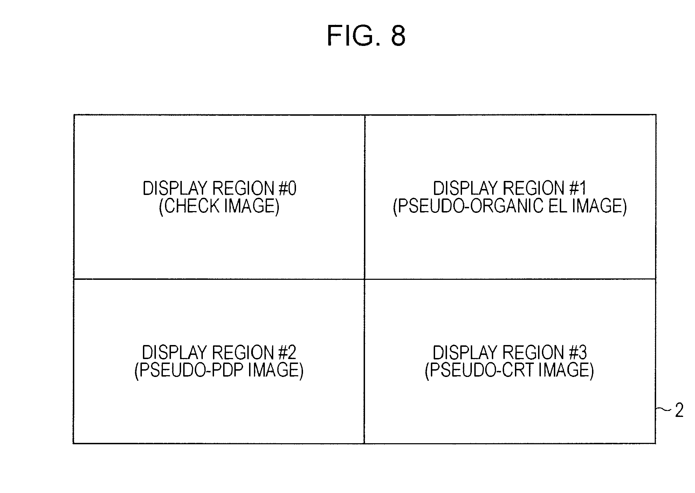

Fig. 8 illustrates an example of display on the display apparatus 2 in a case where the signal processing unit 12 is constructed as illustrated in Fig. 7.

In the display apparatus 2 having an LCD, the check image is displayed in the display region #0. Also, an image corresponding to the pseudo-organic EL image data, an image corresponding to the pseudo-PDP image data, and an image corresponding to the pseudo-CRT image data are displayed in the display region #1, the display region #2, and the display region #3, respectively.

Therefore, the image quality or the like with which an image serving as a program from a broadcast station is displayed on each of a display apparatus having an LCD, a display apparatus having an organic EL display panel, a display apparatus having a PDP, and a display apparatus having a CRT among the display apparatuses on the receiving side can be checked.

Note that the display characteristic of a display device included in a display apparatus on which an image equivalent to the check image is to be displayed by performing, using the simulation processing unit $41_i$ of Fig. 7, a signal process for generating image data for displaying the image equivalent to the check image on the display apparatus 2 of an LCD is decided based on the type information supplied from the control unit 14 to the simulation processing unit $41_i$. The type information to be supplied from the control unit 14 to the simulation processing unit $41_i$ can be specified by, for example, operating the remote commander 3 (Fig. 1).

Also, other parameters necessary for performing the signal process are supplied from the control unit 14 to the simulation processing unit $41_i$.

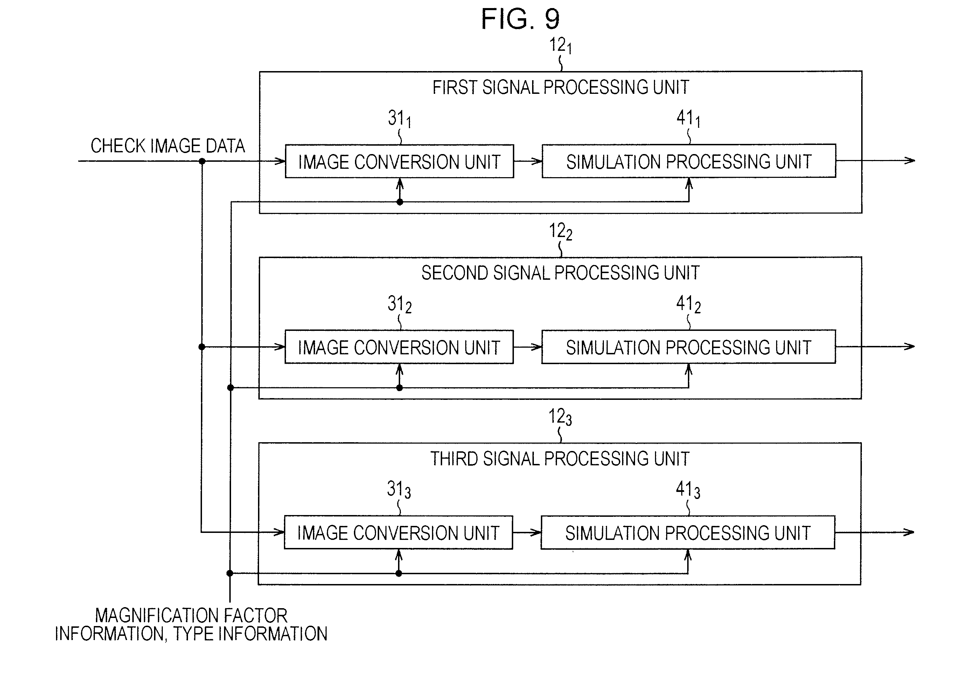

Next, Fig. 9 illustrates a third example structure of the signal processing unit 12 of Fig. 1.

Note that in the figure, portions corresponding to those in the case of Fig. 4 or 7 are designated by the same numerals.

In Fig. 9, the first signal processing unit $12_1$ of the signal processing unit 12 is constructed from an image conversion unit $31_1$ and a simulation processing unit $41_1$, the second signal processing unit $12_2$ is constructed from an image conversion unit $31_2$ and a simulation processing unit $41_2$, and the third signal processing unit $12_3$ is constructed from an image conversion unit $31_3$ and a simulation processing unit $41_3$.

The image conversion unit $31_1$ is supplied with the check image data from the image conversion unit 11 (Fig. 1), and is also supplied with magnification factor information from the control unit 14 (Fig. 1).

The image conversion unit $31_1$ performs an image conversion process according to the magnification factor information supplied from the control unit 14 to convert the check image data from the image conversion unit 11 into m-times magnified image data, and supplies the m-times magnified image data to the simulation processing unit $41_1$.

The simulation processing unit $41_1$ performs, for example, an organic EL simulation process according to type information supplied from the control unit 14 to generate pseudo-organic EL image data from the m-times magnified image data from the image conversion unit $31_1$, and supplies the pseudo-organic EL image data to the display control unit 13 (Fig. 1) as processed image data.

The image conversion unit $31_2$ is supplied with the check image data from the image conversion unit 11, and is also supplied with magnification factor information from the control unit 14.

The image conversion unit $31_2$ performs an image conversion process according to the magnification factor information supplied from the control unit 14 to convert the check image data from the image conversion unit 11 into m'-times magnified image data, and supplies the m'-times magnified image data to the simulation processing unit $41_2$.

The simulation processing unit $41_2$ performs, for example, a PDP simulation process according to type information supplied from the control unit 14 to generate pseudo-PDP image data from the m'-times magnified image data from the image conversion unit $31_2$, and supplies the pseudo-PDP image data to the display control unit 13 as processed image data.

The image conversion unit $31_3$ is supplied with the check image data from the image conversion unit 11, and is also supplied with magnification factor information from the control unit 14.

The image conversion unit $31_3$ performs an image conversion process according to the magnification factor information supplied from the control unit 14 to convert the check image data from the image conversion unit 11 into m''-times magnified image data, and supplies the m''-times magnified image data to the simulation processing unit $41_3$.

The simulation processing unit $41_3$ performs, for example, a CRT simulation process according to type information supplied from the control unit 14 to generate pseudo-CRT image data from the m''-times magnified image data from the image conversion unit $31_3$, and supplies the pseudo-CRT image data to the display control unit 13 as processed image data.

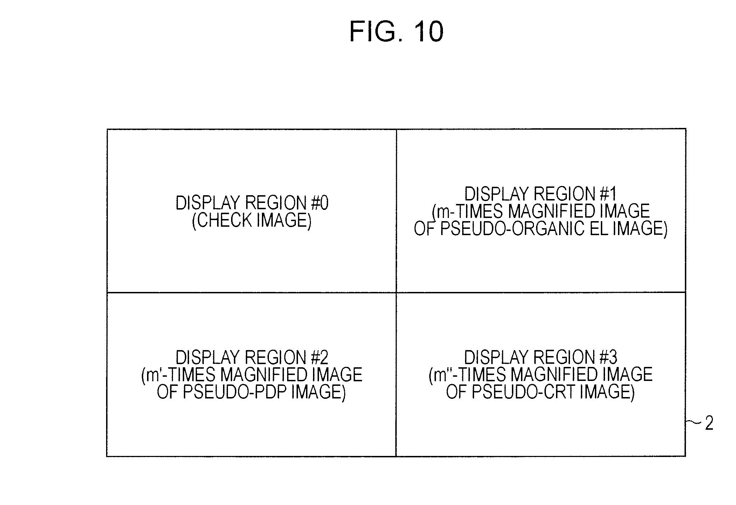

Fig. 10 illustrates an example of display on the display apparatus 2 in a case where the signal processing unit 12 is constructed as illustrated in Fig. 9.

In the display apparatus 2, the check image is displayed in the display region #0. Also, an image corresponding to the pseudo-organic EL image data generated from the m-times magnified image data, an image corresponding to the pseudo-PDP image data generated from the m'-times magnified image data, and an image corresponding to the pseudo-CRT image data generated from the m''-times magnified image data are displayed in the display region #1, the display region #2, and the display region #3, respectively.

Therefore, in a case where an image serving as a program from a broadcast station is magnified and displayed on each of a display apparatus having an organic EL display panel, a display apparatus having a PDP, and a display apparatus having a CRT among the display apparatuses on the receiving side, the state of the displayed image (the image quality or the like of a magnified image) can be checked.

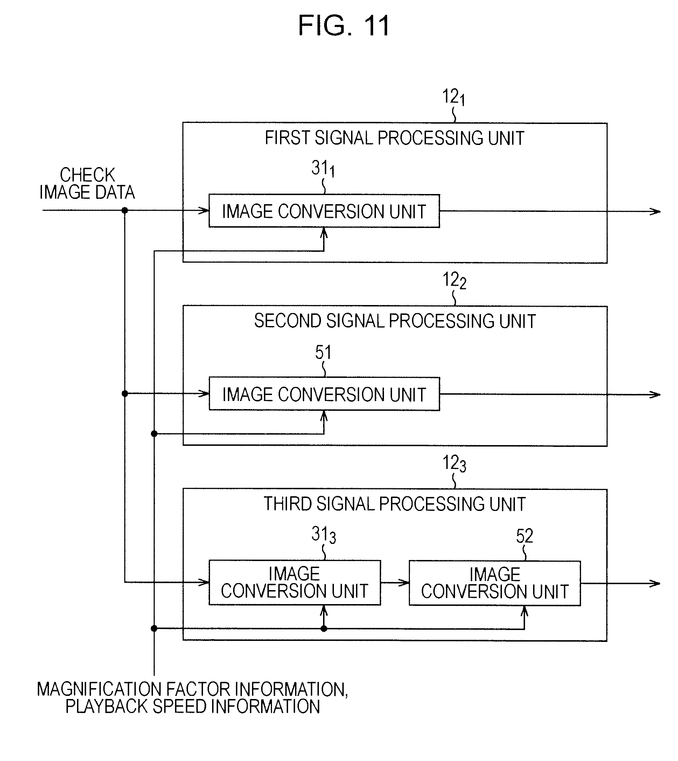

Next, Fig. 11 illustrates a fourth example structure of the signal processing unit 12 of Fig. 1.

Note that in the figure, portions corresponding to those in the case of Fig. 4 are designated by the same numerals.

In Fig. 11, the first signal processing unit $12_1$ of the signal processing unit 12 is constructed from an image conversion unit $31_1$, the second signal processing unit $12_2$ is constructed from an image conversion unit 51, and the third signal processing unit $12_3$ is constructed from image conversion units $31_3$ and 52.

As explained in Fig. 4, the image conversion unit $31_1$ performs an image conversion process according to the magnification factor information supplied from the control unit 14 to convert the check image data from the image conversion unit 11 into m-times magnified image data, and supplies the m-times magnified image data to the display control unit 13 (Fig. 1) as processed image data.

The image conversion unit 51 is supplied with the check image data from the image conversion unit 11, and is also supplied with playback speed information indicating the playback speed of slow playback from the control unit 14.

The image conversion unit 51 performs, according to the playback speed information supplied from the control unit 14, an image conversion process for converting the check image data from the image conversion unit 11 into q-times-speed slow playback image data in which the display of the check image is performed at a playback speed which is q (< 1) times less than normal speed. The image conversion unit 51 supplies the q-times-speed slow playback image data obtained by this image conversion process to the display control unit 13 (Fig. 1) as processed image data.

That is, for example, now, if it is assumed that the display rate of the display apparatus 2 (the rate at which the display is updated) and the frame rate of the check image are 30 Hz and that the playback speed indicated by the playback speed information is, for example, 1/2 times speed, the image conversion unit 51 performs an image conversion process for converting the check image data having a frame rate of 30 Hz into q-times-speed slow playback image data that is image data having a frame rate of 60 Hz which is double the original.

The image data having a frame rate of 60 Hz is displayed at a display rate of 30 Hz. Accordingly, an image that looks like an image obtained by performing slow playback at 1/2-times speed is displayed.

As explained in Fig. 4, the image conversion unit $31_3$ performs an image conversion process according to the magnification factor information supplied from the control unit 14 to convert the check image data from the image conversion unit 11 into m''-times magnified image data, and supplies the m''-times magnified image data to the image conversion unit 52.

The image conversion unit 52 is supplied with the m''-times magnified image data from the image conversion unit $31_3$, and is, in addition, supplied with playback speed information from the control unit 14.

The image conversion unit 52 performs, according to the playback speed information supplied from the control unit 14, an image conversion process for converting the m''-times magnified image data from the image conversion unit $31_3$ into q''-times-speed slow playback image data in which the display of the check image is performed at a playback speed which is q'' (< 1) times less than normal speed. The image conversion unit 52 supplies the q''-times-speed slow playback image data obtained by this image conversion process to the display control unit 13 as processed image data.

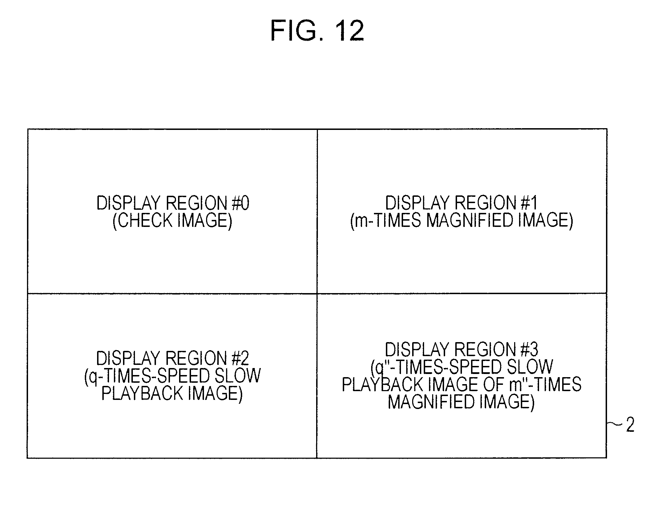

Fig. 12 illustrates an example of display on the display apparatus 2 in a case where the signal processing unit 12 is constructed as illustrated in Fig. 11.

In the display apparatus 2, the check image is displayed in the display region #0, and the image corresponding to the m-times magnified image data is displayed in the display region #1.

Also, an image corresponding to the q-times-speed slow playback image data is displayed in the display region #2, and an image that looks like an image obtained by performing slow playback of the image corresponding to the m''-times magnified image data at q''-times speed is displayed in the display region #3.

The image corresponding to the m-times magnified image data, which is displayed in the display region #1, has a higher spatial resolution than the check image displayed in the display region #0. Thus, so-called spatial image degradation, which is not pronounced in the check image displayed in the display region #0, can be checked.

Further, the image corresponding to the q-times-speed slow playback image data, which is displayed in the display region #2, has a higher temporal resolution than the check image displayed in the display region #0. Thus, so-called temporal image degradation (for example, unsmooth movement or the like), which is not pronounced in the check image displayed in the display region #0, can be checked.

Furthermore, the image that looks like an image obtained by performing q''-times-speed slow playback of the image corresponding to the m''-times magnified image data, which is displayed in the display region #3, has a higher spatial and temporal resolution than the check image displayed in the display region #0. Thus, spatial image degradation or temporal image degradation, which is not pronounced in the check image displayed in the display region #0, can be checked.

Note that what times speed slow playback would be performed on the check image data when each of the image conversion units 51 and 52 converts the check image data into image data is decided based on the playback speed information supplied to each of the image conversion units 51 and 52 from the control unit 14. What playback speed information is to be supplied from the control unit 14 to each of the image conversion units 51 and 52 can be specified by, for example, operating the remote commander 3 (Fig. 1).

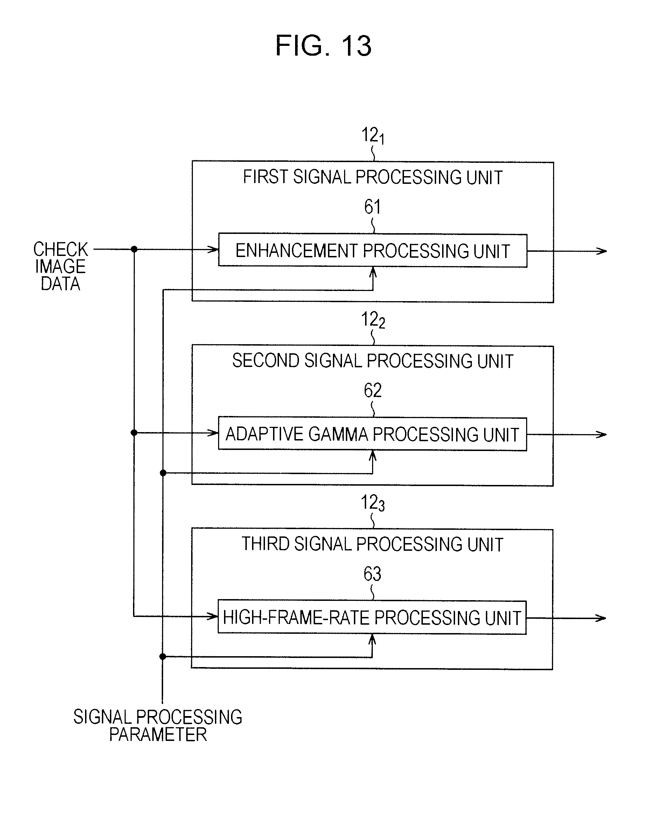

Next, Fig. 13 illustrates a fifth example structure of the signal processing unit 12 of Fig. 1.

In Fig. 13, the first signal processing unit $12_1$ of the signal processing unit 12 is constructed from an enhancement processing unit 61, the second signal processing unit $12_2$ is constructed from an adaptive gamma processing unit 62, and the third signal processing unit $12_3$ is constructed from a high-frame-rate processing unit 63.

The enhancement processing unit 61 is supplied with the check image data from the image conversion unit 11 (Fig. 1), and is also supplied with a signal processing parameter from the control unit 14 (Fig. 1).

Then, the enhancement processing unit 61 subjects the check image data from the image conversion unit 11 to a signal process equivalent to a process to which image data is subjected when a display apparatus on the receiving side displays an image corresponding to the image data.

That is, some display apparatuses on the receiving side have a function for subjecting an image serving as a program from a broadcast station to an enhancement process before displaying the image. The enhancement processing unit 61 performs an enhancement process serving as a signal process which is similar to that performed by such a display apparatus on the receiving side.

Specifically, the enhancement processing unit 61 performs, according to the signal processing parameter supplied from the control unit 14, filtering or the like of the check image data from the image conversion unit 11 to thereby perform an enhancement process of enhancing a portion of this check image data, such an edge portion, and supplies check image data obtained after the enhancement process to the display control unit 13 (Fig. 1) as processed image data.

Here, the degree to which the check image data is to be enhanced in the enhancement processing unit 61 by using the enhancement process is decided according to an enhancement processing parameter included in the signal processing parameter supplied from the control unit 14. The enhancement processing parameter can be specified by, for example, operating the remote commander 3 (Fig. 1).

The adaptive gamma processing unit 62 is supplied with the check image data from the image conversion unit 11, and is also supplied with the signal processing parameter from the control unit 14.

Then, the adaptive gamma processing unit 62 subjects the check image data from the image conversion unit 11 to a signal process equivalent to a process to which image data is subjected when a display apparatus on the receiving side displays an image corresponding to the image data.

That is, currently, a display apparatus performs a gamma (γ) correction process for homogenizing the characteristics of display devices adopted by individual vendors that manufacture display apparatuses so as to prevent the appearance of an image from varying from vendor to vendor. In the future, however, it is expected that a unique gamma correction process will be performed so that each vendor provides the appearance of an image, which is specific to the vendor, depending on the image to be displayed or the characteristics of the display device. In this case, the appearance of an image differs depending on the vendor of the display apparatus.

Thus, the adaptive gamma processing unit 62 performs an adaptive gamma correction process that is an adaptive gamma correction process so that an image equivalent to an image to be displayed on each vendor's display apparatus can be displayed (reproduced) on the display apparatus 2 of an LCD.

That is, the adaptive gamma processing unit 62 subjects the check image data from the image conversion unit 11 to an adaptive gamma correction process so that image data for displaying on the display apparatus 2 of an LCD an image equivalent to the check image to be displayed on a display apparatus on the receiving side, which is subjected to a vendor-unique gamma correction process, can be obtained, and supplies check image data obtained after the adaptive gamma correction process to the display control unit 13 as processed image data.

Here, what characteristic of adaptive gamma correction process is to be performed by the adaptive gamma processing unit 62 is decided according to an adaptive gamma correction processing parameter included in the signal processing parameter supplied from the control unit 14. The adaptive gamma correction processing parameter can be specified by, for example, operating the remote commander 3.

Also, as an adaptive gamma correction process, for example, the gamma correction process described in Japanese Unexamined Patent Application Publication No. 08-023460, Japanese Unexamined Patent Application Publication No. 2002-354290, Japanese Unexamined Patent Application Publication No. 2005-229245, or the like can be adopted.

Japanese Unexamined Patent Application Publication No. 08-023460 describes that when an image signal having a large amount of APL (Average Picture Level) fluctuation is displayed on a device that has difficulty in providing good luminance contrast, such as an LCD or a PDP, a gamma correction process for performing optimum gamma correction in accordance with a figure pattern of an image signal is performed. That is, the luminance level of the image signal is sectioned into a plurality of segments; a frequency is taken at each of the segments; a plurality of frequency levels are provided for each segment of luminance level so that the frequency distribution is segmented on the basis of that frequency level, a result of which is used as a selection signal of a gamma correction characteristic to select a gamma correction characteristic; and dynamic gamma correction adapted to the image signal is performed.

Japanese Unexamined Patent Application Publication No. 2002-354290 describes that a gamma correction process in which an operation point of gamma correction is changed to improve gradation-level reproducibility so that gamma correction is always applied. That is, an operation point adapted to an APL is determined from the APL and an initial value of the operation point; and gamma correction is applied to a luminance signal on the side of white with respect to the operation point.

Japanese Unexamined Patent Application Publication No. 2005-229245 describes a method of reducing saturation of colors and performing gradation-level increase control adapted to an image signal. That is, a method is described in which a maximum value of each of RGB colors of an image signal is detected, a maximum value is detected among values obtained by multiplying each of the maximum values of the individual RGB colors by a weighted coefficient, this maximum value is compared with a maximum value of luminance levels of the image signal, and either of them which is greater is used as a maximum value of luminance levels of the image signal, thereby performing signal control of the image signal.

The high-frame-rate processing unit 63 is supplied with the check image data from the image conversion unit 11, and is also supplied with the signal processing parameter from the control unit 14.

Then, the high-frame-rate processing unit 63 subjects the check image data from the image conversion unit 11 to a signal process equivalent to a process to which image data is subjected when a display apparatus on the receiving side displays an image corresponding to this image data.

That is, some display apparatuses on the receiving side have a high-rate display function for converting the frame rate of an image serving as a program from a broadcast station to produce an image having a high frame rate such as double rate and providing the display at a display rate corresponding to that high frame rate. The high-frame-rate processing unit 63 performs a high-frame-rate process serving as a signal process which is similar to that performed by such a display apparatus on the receiving side.

Specifically, the high-frame-rate processing unit 63 performs, according to the signal processing parameter supplied from the control unit 14, a high-frame-rate process such as a double speed process in which a frame is interpolated between frames of the check image data from the image conversion unit 11 to generate image data whose frame rate is double that of the original check image data, and supplies check image data obtained after the high-frame-rate process to the display control unit 13 as processed image data.

Here, what times the frame rate of the check image data is increased in the high-frame-rate processing unit 63 by using the high-frame-rate process is decided according to the high-frame-rate processing parameter included in the signal processing parameter supplied from the control unit 14.
The high-frame-rate processing parameter can be specified by, for example, operating the remote commander 3 (Fig. 1).

Note that, for example, now, in a case where it is assumed that the display rate of the display apparatus 2 and the frame rate of the check image are 30 Hz and that the frame rate of the image data obtained through the high-frame-rate process of the high-frame-rate processing unit 63 is double the frame rate of the check image, namely, 60 Hz, an image having a frame rate of 60 Hz will be displayed at a display rate of 30 Hz on the display apparatus 2. In this case, an image that looks like an image obtained by performing slow playback at 1/2-times speed is displayed.

Thus, here, it is assumed that the display apparatus 2 is designed to be capable of displaying an image at, in addition to 30 Hz, display rates higher than 30 Hz, such as, for example, 60 Hz, 120 Hz, and 240 Hz, and that the display control unit 13 (Fig. 1) is designed to be capable of controlling the display apparatus 2 so that an image is displayed at a high display rate other than 30 Hz.

The display control unit 13 controls the display apparatus 2 so that in a case where the frame rate of the image data obtained by the high-frame-rate process of the high-frame-rate processing unit 63 (hereinafter referred to as high-frame-rate image data, as desired) is, for example, double the frame rate of the check image, namely, 60 Hz, an image corresponding to the high-frame-rate image data is displayed at a display rate of 60 Hz, which is the same as the frame rate of the high-frame-rate image data.

Accordingly, the image corresponding to the high-frame-rate image data is displayed at a display rate equivalent to (identical to) the frame rate of the high-frame-rate image data.

Note that in the display apparatus 2, an image corresponding to high-frame-rate image data having a frame rate of, for example, 60 Hz, which is obtained using a high-frame-rate process by the high-frame-rate processing unit 63 constituting the third signal processing unit $12_3$, is displayed in the display region #3. However, in a case where the frame rate of the check image displayed in a display region other than the display region #3, for example, in the display region #0, is 30 Hz, if the display rate of the display apparatus 2 is set to be the same as the frame rate of the high-frame-rate image data, namely, 60 Hz, the check image displayed in the display region #0 becomes an image that looks like an image obtained by performing playback at double speed.

To this end, in a case where, for example, the display rate of the display apparatus 2 is set to 60 Hz and an image corresponding to high-frame-rate image data having a frame rate of 60 Hz is displayed in the display region #3, the display of the display region #0 where the check image having a frame rate of 30 Hz is displayed is updated substantially once for a period during which two frames are displayed.

That is, for example, now, if it is assumed that the check image of a certain frame #f is being displayed in the display region #0, the check image of the frame #f is displayed again next time the display of the display region #0 is updated, and the check image of the next frame #f+1 is displayed further next time the display is updated. The display of the display regions #1 and #2 where images having a frame rate or 30 Hz are displayed is also updated in a similar manner.

Here, the display rate of the display apparatus 2 to be set using the display control unit 13 is controlled by the control unit 14 in accompanying with what times the frame rate of the check image data is increased by using the high-frame-rate process of the high-frame-rate processing unit 63.

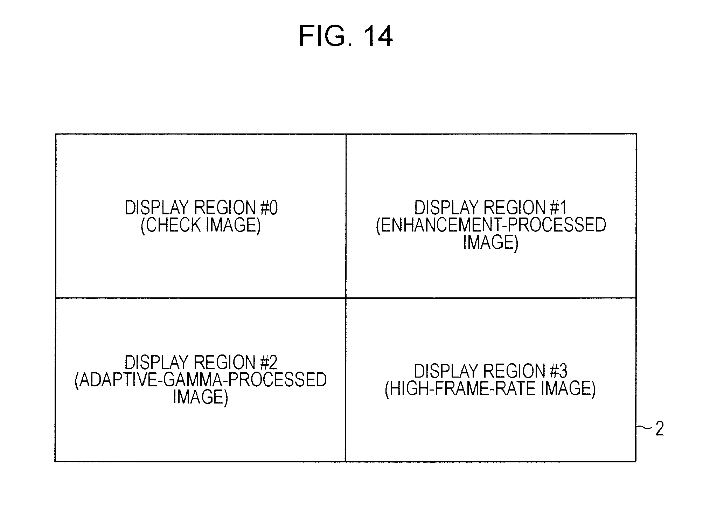

Fig. 14 illustrates an example of display on the display apparatus 2 in a case where the signal processing unit 12 is constructed as illustrated in Fig. 13.

In the display apparatus 2, the check image is displayed in the display region #0, and an image corresponding to the check image data obtained after the enhancement process is displayed in the display region #1. Further, an image corresponding to the check image data obtained after the adaptive gamma correction process is displayed in the display region #1, and an image corresponding to the check image data obtained after the high-frame-rate process is displayed in the display region #2.

Therefore, in a case where a display apparatus among display apparatuses on the receiving side having a function for subjecting an image to an enhancement process before displaying the image displays the image corresponding to the image data obtained after the enhancement process, the image quality or the like of the image can be checked.

Further, in a case where a display apparatus among display apparatuses on the receiving side that subjects an image to a vendor-unique gamma correction process before displaying the image displays the image corresponding to the image data obtained after this unique gamma correction process, the image quality or the like of the image can be checked.

Moreover, in a case where a display apparatus among display apparatuses having a high-rate display function on the receiving side displays the image corresponding to the image data obtained after the high-frame rate-process, the image quality or the like of the image can be checked.

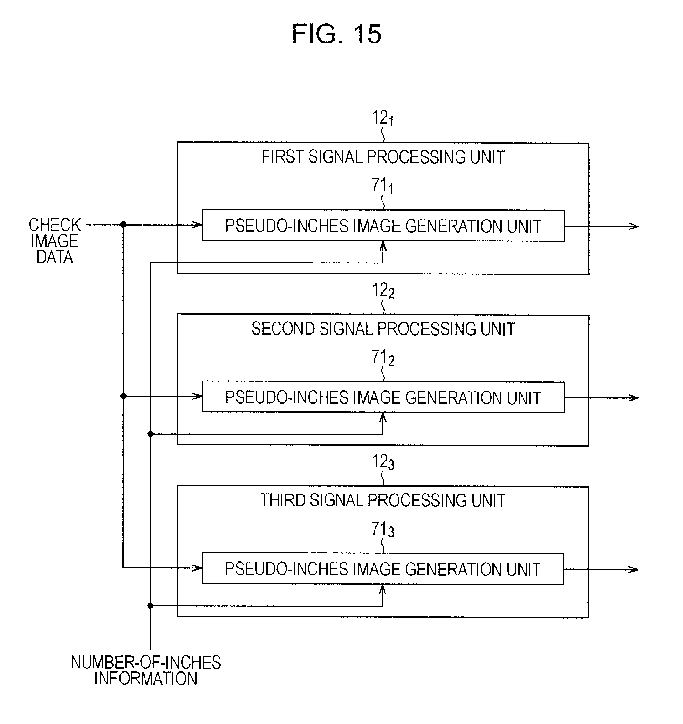

Next, Fig. 15 illustrates a sixth example structure of the signal processing unit 12 of Fig. 1.

In Fig. 15, the first signal processing unit $12_1$ of the signal processing unit 12 is constructed from a pseudo-inches image generation unit $71_1$, the second signal processing unit $12_2$ is constructed from a pseudo-inches image generation unit $71_2$, and the third signal processing unit $12_3$ is constructed from a pseudo-inches image generation unit $71_3$.

A pseudo-inches image generation unit $71_i$ (i = 1, 2, 3) is supplied with the check image data from the image conversion unit 11 (Fig. 1), and is also supplied with number-of-inches information, from the control unit 14 (Fig. 1), indicating the numbers of inches n, n', and n" (> 1) each of which is the size of a screen where an image is displayed.

Then, the pseudo-inches image generation unit $71_i$ performs, according to the number-of-inches information supplied from the control unit 14, a signal process on the check image data from the image conversion unit 11 for generating, as processed image data, image data for displaying in the display region #i of the display apparatus 2 an image equivalent to an image to be displayed on a display apparatus having a certain number of inches on the receiving side when the check image is displayed on this display apparatus.

That is, display apparatuses having various numbers of inches exist as display apparatuses on the receiving side. Thus, the pseudo-inches image generation unit $71_1$ performs a signal process for generating, as processed image data, image data for displaying in the display region #1 of the display apparatus 2 an image equivalent to the check image to be displayed on a display apparatus having certain n inches on the receiving side. Likewise, the pseudo-inches image generation units $71_2$ and $71_3$ also perform signal processes for generating, as processed image data, image data for displaying in the display region #1 of the display apparatus 2 an image equivalent to the check image to be displayed on an n'-inch display apparatus on the receiving side and image data for displaying in the display region #1 of the display apparatus 2 an image equivalent to the check image to be displayed on an n''-inch display apparatus on the receiving side, respectively.

Here, image data for displaying in the display region #i of the display apparatus 2 an image equivalent to the check image to be displayed on a display apparatus having a certain number of inches on the receiving side is also referred to as pseudo-inches image data. Further, a signal process for generating pseudo-inches image data from check image data is also referred to as a pseudo-inches image generation process.

In the pseudo-inches image generation unit $71_1$, a pseudo-inches image generation process for generating n-inch pseudo-inches image data from the check image data from the image conversion unit 11 according to the number-of-inches information supplied from the control unit 14 is performed. Resulting n-inch pseudo-inches image data is supplied to the display control unit 13 (Fig. 1) as processed image data.

Likewise, in the pseudo-inches image generation unit $71_2$ and $71_3$, a pseudo-inches image generation process for generating n'-inch pseudo-inches image data and a pseudo-inches image generation process for generating n''-inch pseudo-inches image data from the check image data from the image conversion unit 11 according to the number-of-inches information supplied from the control unit 14 are performed. Resulting n'-inch pseudo-inches image data and n''-inch pseudo-inches image data are supplied to the display control unit 13 as processed image data.

Note that in the pseudo-inches image generation processes, the process of increasing or decreasing the number of pixels of check image data is performed to thereby generate pseudo-inches image data. As the process of increasing the number of pixels of image data, for example, a process of interpolating a pixel, an image conversion process for converting image data into image data having a larger number of pixels than the image data, or the like can be adopted. Further, as the process of decreasing the number of pixels of image data, for example, a process of thinning out a pixel, an averaging process for regarding an average value or the like of a plurality of pixels as the pixel value of one pixel, or the like can be adopted.

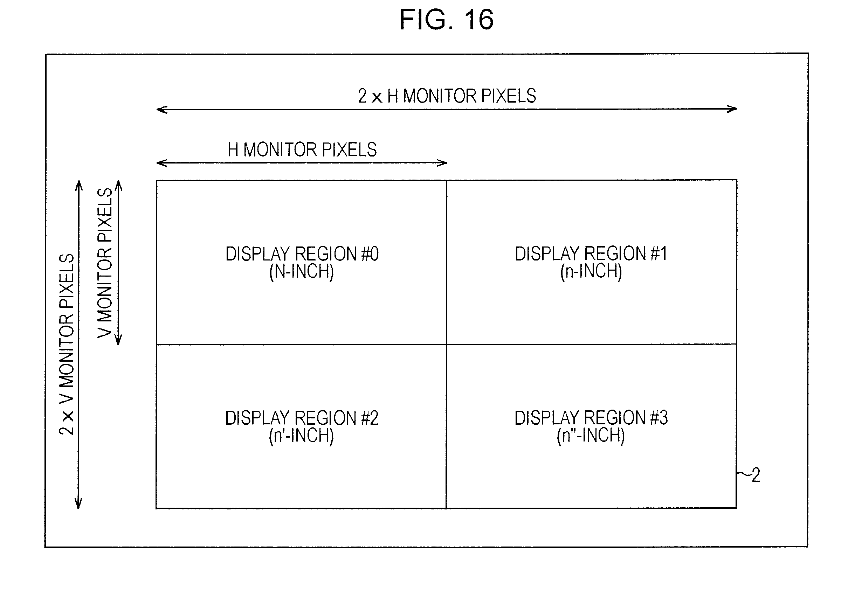

Fig. 16 illustrates an example of display on the display apparatus 2 in a case where the signal processing unit 12 is constructed as illustrated in Fig. 15.

In the display apparatus 2, the check image is displayed in the display region #0. Also, an image corresponding to the n-inch pseudo-inches image data, an image corresponding to the n'-inch pseudo-inches image data, and an image corresponding to the n''-inch pseudo-inches image data are displayed in the display region #1, the display region #2, and the display region #3, respectively.

Therefore, in a case where an image serving as a program from a broadcast station is displayed on display apparatuses having various numbers of inches on the receiving side, states of the displayed image can be checked.

Note that the numbers of inches n, n', and n" can be specified by, for example, operating the remote commander 3 (Fig. 1).

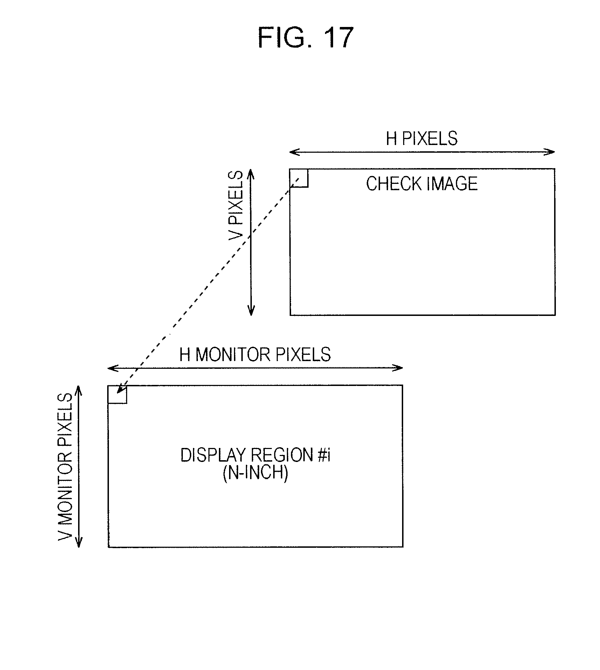

Next, the pseudo-inches image generation process performed by the pseudo-inches image generation unit $71_i$ of Fig. 15 will further be explained with reference to Figs. 17 to 19.

As described above, a display region #i is constructed with H $\times$ V monitor pixels, and the check image data is also constructed with H $\times$ V pixels, the number of which is the same as the number of pixels of the display region #i.

Fig. 17 illustrates a manner in which the check image data with the H $\times$ V pixels is displayed in the display region #i with the H $\times$ V monitor pixels.

In a case where the check image data with H $\times$ V pixels is directly displayed in the display region #i with H x V monitor pixels, (the pixel value of) one pixel of the check image data is displayed in one monitor pixel of the display region #i.

Therefore, in a case where the display region #i with $H \times V$ monitor pixels has, for example, N inches such as 30 inches, the check image data with $H \times V$ pixels is directly displayed in the display region #i with $H \times V$ monitor pixels. Accordingly, an image equivalent to the check image to be displayed on the N-inch display apparatus is displayed.

In the display region #0 among the display regions #0 to #3 of the display apparatus 2, the check image with $H \times V$ pixels is directly displayed, and thus an image equivalent to the check image to be displayed on an N-inch display apparatus is displayed. Here, this N-inch is referred to as a basic inch.

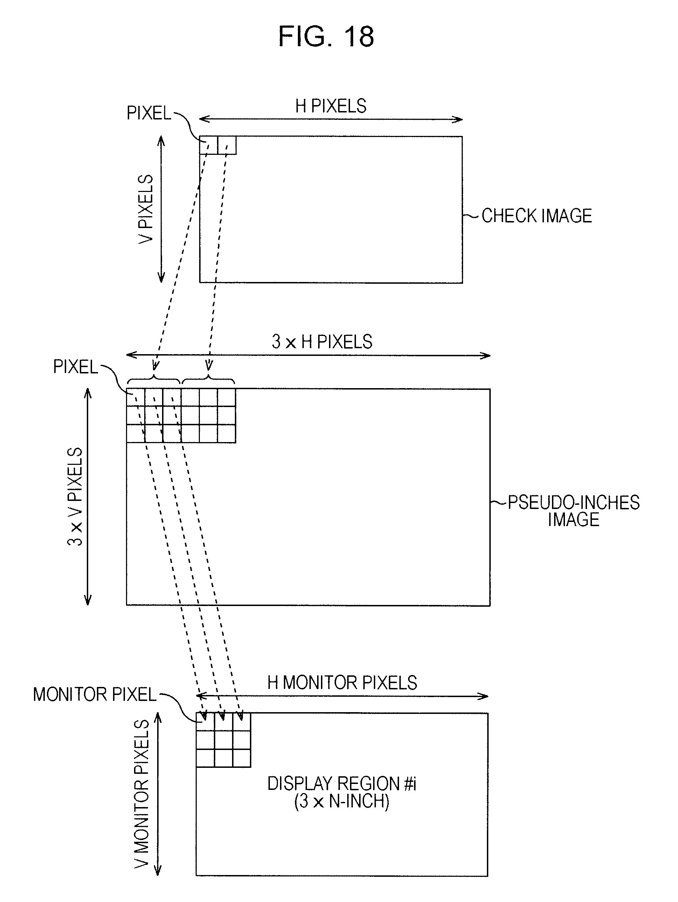

Next, Fig. 18 illustrates a manner in which pseudo-inches image data obtained in a pseudo-inches image generation process by increasing the number of pixels of the check image data is displayed in a display region #i with $H \times V$ monitor pixels.

In Fig. 18, a pseudo-inches image generation process of performing interpolation so as to increase one pixel of the check image data with $H \times V$ pixels to $3 \times 3$ pixels is performed to generate pseudo-inches image data with $3H \times 3V$ pixels, and $H \times V$ pixels in the pseudo-inches image data are displayed in a display region #i with $H \times V$ monitor pixels.

In this case, equivalently, one pixel of the original check image data with $H \times V$ pixels is displayed in $3 \times 3$ monitor pixels of the display region #i. Consequently, an image corresponding to $(3 \times N)$-inch pseudo-inches image data, i.e., an image equivalent to the check image to be displayed on a $(3 \times N)$-inch display apparatus, is displayed in the display region #i.

Note that since the display region #i with $H \times V$ monitor pixels cannot provide the display of the entirety of the image corresponding to the pseudo-inches image data with $3H \times 3V$ pixels, the number of which is larger than the number of pixels of the display region #i, similarly to the case explained in Fig. 6 where the image corresponding to the m-times magnified image data is displayed in the display region #1, a portion of the image corresponding to the pseudo-inches image data with $3H \times 3V$ pixels is displayed in the display region #i. Which portion of the image corresponding to the pseudo-inches image data with $3H \times 3V$ pixels is to be displayed in the display region #i can be specified by, for example, operating the remote commander 3. The display control unit 13 causes a portion of the image corresponding to the pseudo-inches image data with $3H \times 3V$ pixels to be displayed in the display region #i according to the specified portion.

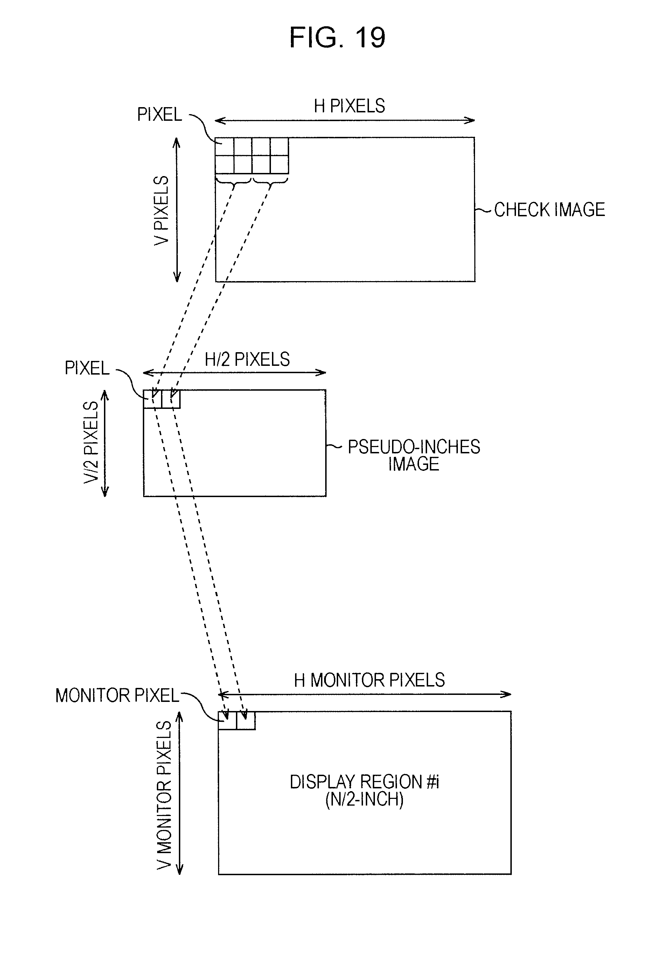

Next, Fig. 19 illustrates a manner in which pseudo-inches image data obtained in a pseudo-inches image generation process by decreasing the number of pixels of the check image data is displayed in a display region #i with $H \times V$ monitor pixels.

In Fig. 19, a pseudo-inches image generation process of performing thinning-out so as to decrease $2 \times 2$ pixels of the check image data with $H \times V$ pixels to one pixel is performed to generate pseudo-inches image data with $H/2 \times V/2$ pixels. This pseudo-inches image data is displayed in the display region #i with $H \times V$ monitor pixels.

In this case, equivalently, $2 \times 2$ pixels of the original check image data with $H \times V$ pixels are displayed in one monitor pixel of the display region #i. Consequently, an image equivalent to N/2-inch pseudo-inches image data, i.e., an image equivalent to the check image displayed on an N/2-inch display apparatus, is displayed in the display region #i.

Note that an image corresponding to pseudo-inches image data with $H/2 \times V/2$ pixels is displayed in a region of $H/2 \times V/2$ monitor pixels within the display region #i with $H \times V$ monitor pixels. The region of $H/2 \times V/2$ monitor pixels within the display region #i with $H \times V$ monitor pixels where the image corresponding to the pseudo-inches image data with $H/2 \times V/2$ pixels is displayed can be specified by, for example, operating the remote commander 3. The display control unit 13 causes the image corresponding to the pseudo-inches image data with $H/2 \times V/2$ pixels to be displayed in the display region #i according to the specified region.

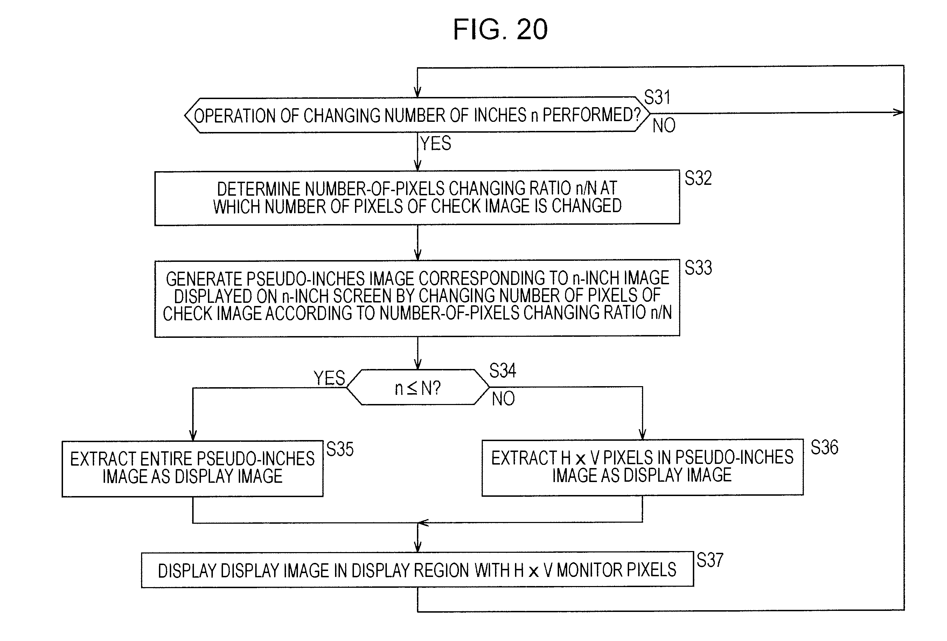

Next, a process of the display control apparatus 1 of Fig. 1 in a case where an image corresponding to n-inch pseudo-inches image data is displayed in the display region #1 will be explained with reference to a flowchart of Fig. 20.

Note that also in a case where the image corresponding to the n'-inch pseudo-inches image data is displayed in the display region #2 and in a case where the image corresponding to the n''-inch pseudo-inches image data is displayed in the display region #3, a process similar to that in a case where the image corresponding to the n-inch pseudo-inches image data is displayed in the display region #1 is performed.

In step S31, the control unit 14 determines whether or not the remote commander 3 has been operated so as to change (specify) the number of inches n.

In a case where it is determined in step S31 that the remote commander 3 has not been operated so as to change the number of inches n, the process returns to step S31.

Further, in a case where it is determined in step S31 that the remote commander 3 has been operated so as to change the number of inches n, that is, in a case where the remote commander 3 has been operated so as to change the number of inches n and an operation signal corresponding to this operation has been received by the control unit 14, the process proceeds to step S32, in which the control unit 14 recognizes the changed number of inches n from the operation signal from the remote commander 3, and determines, on the basis of the number of inches n and the basic inch N, a number-of-pixels changing ratio n/N indicating a rate at which the pseudo-inches image generation unit $71_1$

(Fig. 15) changes the number of pixels of the check image data. Furthermore, the control unit 14 supplies number-of-inches information including the number-of-pixels changing ratio n/N to the pseudo-inches image generation unit $71_1$. The process proceeds from step S32 to step S33.

In step S33, the pseudo-inches image generation unit $71_1$ performs a pseudo-inches image generation process of changing (increasing or decreasing) each of the number of horizontal pixels and the number of vertical pixels of the check image data from the image conversion unit 11 to the number of pixels, which is the number-of-pixels changing ratio n/N times greater, according to the number-of-inches information from the control unit 14, to thereby generate n-inch pseudo-inches image data for displaying in the display region #1 an image equivalent to the check image to be displayed on an n-inch display apparatus on the receiving side, and supplies the n-inch pseudo-inches image data to the display control unit 13.

Thereafter, the process proceeds from step S33 to step S34, in which the control unit 14 determines whether or not the number of inches n is less than or equal to the basic inch N.

In a case where it is determined in step S34 that the number of inches n is less than or equal to the basic inch N, that is, in a case where the entirety of the image corresponding to the n-inch pseudo-inches image data can be displayed in the display region #1, the process proceeds to step S35, in which the display control unit 13 extracts, from the n-inch pseudo-inches image data from the pseudo-inches image generation unit $71_1$, the entirety thereof as display image data to be displayed in the display region #1. The process proceeds to step S37.

In step S37, the display control unit 13 causes an image corresponding to the display image data to be displayed in the display region #1, and returns to step S31. In this case, the entirety of the image corresponding to the n-inch pseudo-inches image data is displayed in the display region #1.

In contrast, in a case where it is determined in step S34 that the number of inches n is not less than or equal to the basic inch N, that is, in a case where the entirety of the image corresponding to the n-inch pseudo-inches image data cannot be displayed in the display region #1, the process proceeds to step S36, in which the display control unit 13 extracts, from the n-inch pseudo-inches image data from the pseudo-inches image generation unit $71_1$, H × V pixels that can be displayed in the display region #1 as display image data. The process proceeds to step S37.

In step S37, as described above, the display control unit 13 causes the image corresponding to the display image data to be displayed in the display region #1, and returns to step S31. In this case, the image corresponding to the H × V pixels extracted in step S36 within the image corresponding to the n-inch pseudo-inches image data is displayed in the display region #1.

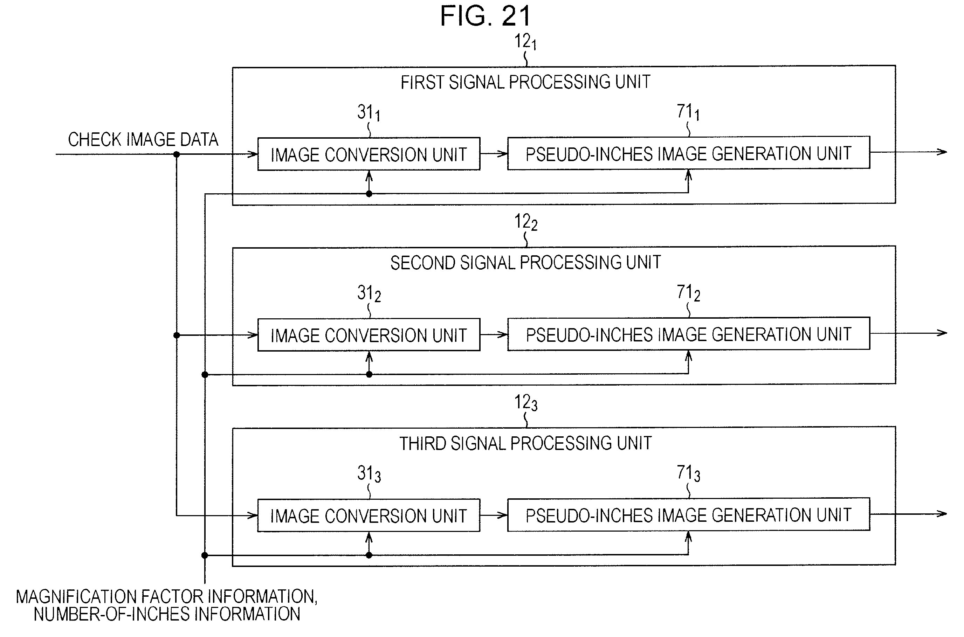

Next, Fig. 21 illustrates a seventh example structure of the signal processing unit 12 of Fig. 1.

Note that in the figure, portions corresponding to those of Fig. 4 or 15 are designated by the same numerals.

In Fig. 21, the first signal processing unit $12_1$ of the signal processing unit 12 is constructed from an image conversion unit $31_1$ and a pseudo-inches image generation unit $71_1$, the second signal processing unit $12_2$ is constructed from an image conversion unit $31_2$ and a pseudo-inches image generation unit $71_2$, and the third signal processing unit $12_3$ is constructed from an image conversion unit $31_3$ and a pseudo-inches image generation unit $71_3$.

The image conversion unit $31_1$ is supplied with the check image data from the image conversion unit 11 (Fig. 1), and is also supplied with magnification factor information from the control unit 14 (Fig. 1).

The image conversion unit $31_1$ performs an image conversion process according to the magnification factor information supplied from the control unit 14 to convert the check image data from the image conversion unit 11 into m-times magnified image data, and supplies the m-times magnified image data to the pseudo-inches image generation unit $71_1$.

The pseudo-inches image generation unit $71_1$ performs a pseudo-inches image generation process according to number-of-inches information supplied from the control unit 14 to generate n-inch pseudo-inches image data from the m-times magnified image data from the image conversion unit $31_1$, and supplies the n-inch pseudo-inches image data to the display control unit 13 (Fig. 1) as processed image data.

The image conversion unit $31_2$ is supplied with the check image data from the image conversion unit 11, and is also supplied with magnification factor information from the control unit 14.

The image conversion unit $31_2$ performs an image conversion process according to the magnification factor information supplied from the control unit 14 to convert the check image data from the image conversion unit 11 into m'-times magnified image data, and supplies the m'-times magnified image data to the pseudo-inches image generation unit $71_2$.

The pseudo-inches image generation unit $71_2$ performs a pseudo-inches image generation process according to number-of-inches information supplied from the control unit 14 to generate n'-inch pseudo-inches image data from the m'-times magnified image data from the image conversion unit $31_2$, and supplies the n'-inch pseudo-inches image data to the display control unit 13 as processed image data.

The image conversion unit $31_3$ is supplied with the check image data from the image conversion unit 11, and is also supplied with magnification factor information from the control unit 14.

The image conversion unit $31_3$ performs an image conversion process according to the magnification factor information supplied from the control unit 14 to convert the check image data from the image conversion unit 11 into m''-times magnified image data, and supplies the m''-times magnified image data to the pseudo-inches image generation unit $71_3$.

The pseudo-inches image generation unit $71_3$ performs a pseudo-inches image generation process according to number-of-inches information supplied from the control unit 14 to generate n''-inch pseudo-inches image data from the m''-times magnified image data from the image conversion unit $31_3$, and supplies the n''-inch pseudo-inches image data to the display control unit 13 as processed image data.

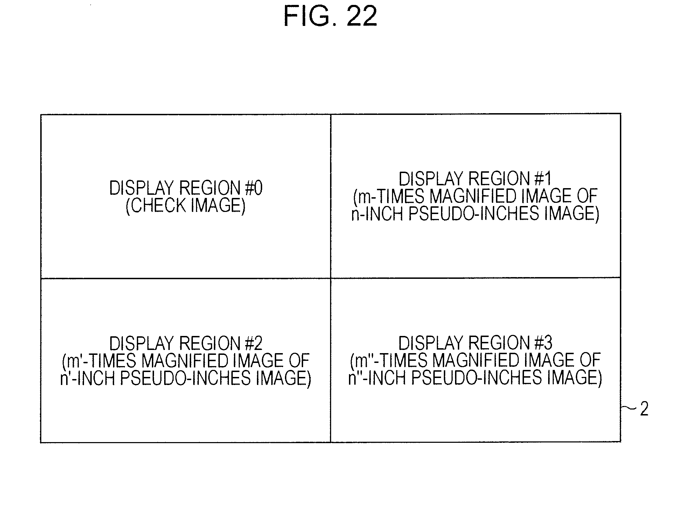

Fig. 22 illustrates an example of display on the display apparatus 2 in a case where the signal processing unit 12 is constructed as illustrated in Fig. 21.

In the display apparatus 2, a check image with the basic inch N is displayed in the display region #0. Also, an image obtained by magnifying the image corresponding to the n-inch pseudo-inches image data m times, an image obtained by magnifying the image corresponding to the n'-inch pseudo-inches image data m' times, and an image obtained by magnifying the image corresponding to the n''-inch pseudo-inches image data m'' times are displayed in the display region #1, the display region #2, and the display region #3, respectively.

Therefore, in a case where display apparatuses having various numbers of inches on the receiving side have a magnification function, in a case where an image serving as a program from a broadcast station is magnified and displayed, states of the displayed image can be checked.

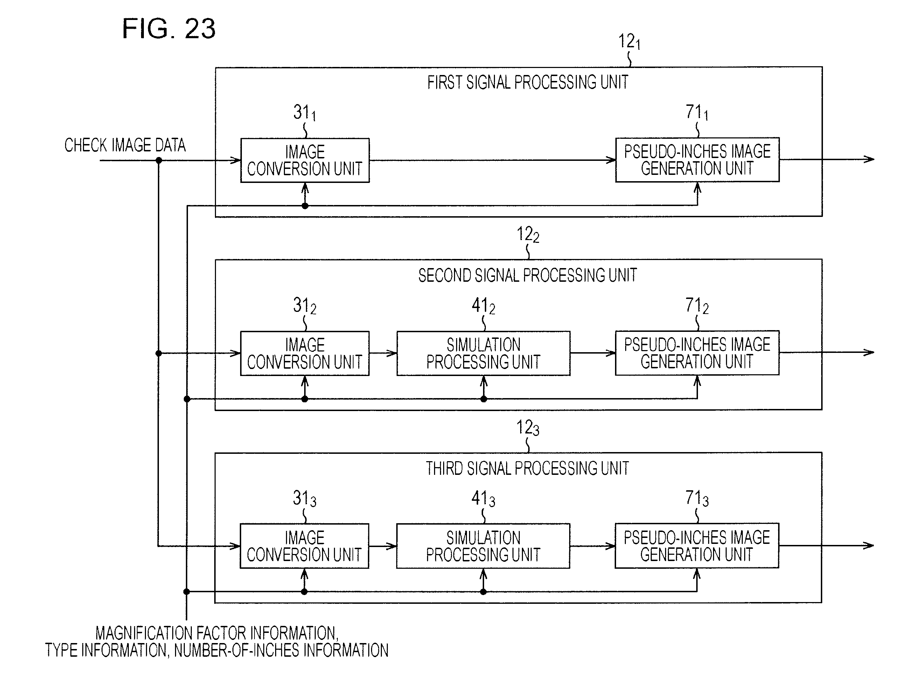

Next, Fig. 23 illustrates an eighth example structure of the signal processing unit 12 of Fig. 1.

Note that in the figure, portions corresponding to those of Fig. 4, 7, or 15 are designated by the same numerals.

In Fig. 23, the first signal processing unit $12_1$ of the signal processing unit 12 is constructed from an image conversion unit $31_1$ and a pseudo-inches image generation unit $71_1$, the second signal processing unit $12_2$ is constructed from an image conversion unit $31_2$, a simulation processing unit $41_2$, and a pseudo-inches image generation unit $71_2$, and the third signal processing unit $12_3$ is constructed from an image conversion unit $31_3$, a simulation processing unit $41_3$, and a pseudo-inches image generation unit $71_3$.

The image conversion unit $31_1$ performs an image conversion process according to magnification factor information supplied from the control unit 14 (Fig. 1) to convert the check image data from the image conversion unit 11 (Fig. 1) into m-times magnified image data, and supplies the m-times magnified image data to the pseudo-inches image generation unit $71_1$.

The pseudo-inches image generation unit $71_1$ performs a pseudo-inches image generation process according to number-of-inches information supplied from the control unit 14 to generate n-inch pseudo-inches image data having any value in a range of, for example, 20 to 103 inches from the m-times magnified image data from the image conversion unit $31_1$, and supplies the n-inch pseudo-inches image data to the display control unit 13 (Fig. 1) as processed image data.

The image conversion unit $31_2$ performs an image conversion process according to magnification factor information supplied from the control unit 14 to convert the check image data from the image conversion unit 11 into m'-times magnified image data, and supplies the m'-times magnified image data to the simulation processing unit $41_2$.

The simulation processing unit $41_2$ performs, for example, a PDP simulation process according to type information supplied from the control unit 14 to generate pseudo-PDP image data from the m'-times magnified image data from the image conversion unit $31_2$, and supplies the pseudo-PDP image data to the pseudo-inches image generation unit $71_2$.

The pseudo-inches image generation unit $71_2$ performs a pseudo-inches image generation process according to number-of-inches information supplied from the control unit 14 to generate n'-inch pseudo-inches image data having any value in a range of, for example, 20 to 103 inches from the pseudo-PDP image data from the simulation processing unit $41_2$, and supplies the n'-inch pseudo-inches image data to the display control unit 13 as processed image data.

The image conversion unit $31_3$ performs an image conversion process according to magnification factor information supplied from the control unit 14 to convert the check image data from the image conversion unit 11 into m''-times magnified image data, and supplies the m''-times magnified image data to the simulation processing unit $41_3$.

The simulation processing unit $41_3$ performs, for example, a CRT simulation process according to type information supplied from the control unit 14 to generate pseudo-CRT image data from the m''-times magnified image data from the image conversion unit $31_3$, and supplies the pseudo-CRT image data to the pseudo-inches image generation unit $71_3$.

The pseudo-inches image generation unit $71_3$ performs a pseudo-inches image generation process according to number-of-inches information supplied from the control unit 14 to generate n''-inch pseudo-inches image data having any value in a range of, for example, 20 to 40 inches from the pseudo-CRT image data from the simulation processing unit $41_3$, and supplies the n''-inch pseudo-inches image data to the display control unit 13 as processed image data.

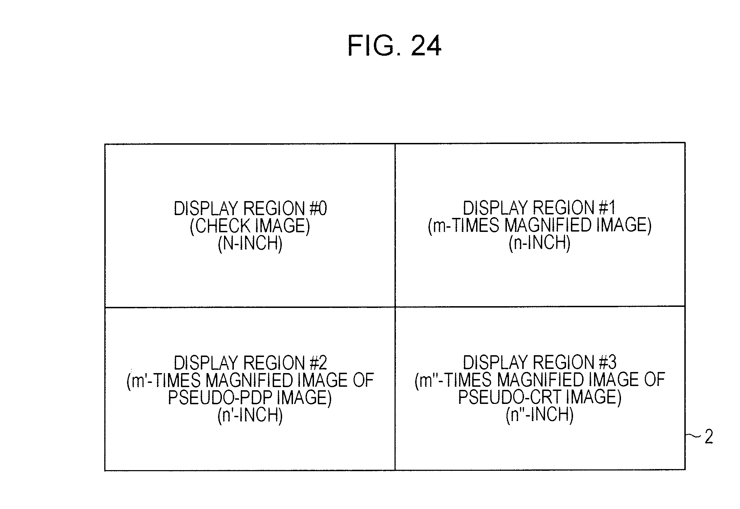

Fig. 24 illustrates an example of display on the display apparatus 2 in a case where the signal processing unit 12 is constructed as illustrated in Fig. 23.

In the display apparatus 2 of an LCD, a check image with basic inch N is displayed in the display region #0. Also, an image obtained by magnifying the image corresponding to the n-inch pseudo-inches image data m times, an image equivalent to an image obtained by displaying on a PDP an image obtained by magnifying the image corresponding to the n'-inch pseudo-inches image data m' times, and an image equivalent to an image obtained by displaying on a CRT an image obtained by magnifying the image corresponding to the n''-inch pseudo-inches image data m'' times are displayed in the display region #1, the display region #2, and the display region #3, respectively.

Therefore, in a case where an image serving as a program from a broadcast station is magnified and displayed on each of a display apparatus having an LCD, a display apparatus having a PDP, and a display apparatus having a CRT, which have various numbers of inches, among display apparatuses on the receiving side, the state of the displayed image can be checked.

As above, according to the monitor system of Fig. 1, simulation of the display of images on various display apparatuses on the receiving side can be performed, and how the images are displayed on various display apparatuses on the receiving side can be checked.

Incidentally, the image conversion process described above is, for example, a process of converting image data into image data having a larger number of pixels than the image data, image data having a higher frame rate, or the like, i.e., a process of converting first image data into second image data. The image conversion process of converting first image data into second image data can be performed using, for example, a class classification adaptive process.

Here, the image conversion process of converting first image data into second image data is performed in various processes by the definition of the first and second image data.

That is, for example, if the first image data is set as low spatial resolution image data and the second image data is set as high spatial resolution image data, the image conversion process can be said to be a spatial resolution creation (improvement) process for improving the spatial resolution.

Further, for example, if the first image data is set as low S/N (Siginal/Noise) image data and the second image data is set as high S/N image data, the image conversion process can be said to be a noise removal process for removing noise.

Furthermore, for example, if the first image data is set as image data having a predetermined number of pixels (size) and the second image data is set as image data having a larger or smaller number of pixels than the first image data, the image conversion process can be said to be a resizing process for changing the number of pixels of an image (resizing (increasing or decreasing the scale of) an image).

Moreover, for example, if the first image data is set as low temporal resolution image data and the second image data is set as high temporal resolution image data, the image conversion process can be said to be a temporal resolution creation (improvement) process for improving the temporal resolution (frame rate).

Note that in the spatial resolution creation process, when first image data that is low spatial resolution image data is converted into second image data that is high spatial resolution image data, the second image data can be set as image data having the same number of pixels as the first image data or image data having a larger number of pixels than the first image data. In a case where the second image data is set as image data having a larger number of pixels than the first image data, the spatial resolution creation process is a process for improving the spatial resolution and is also a resizing process for increasing the image size (the number of pixels).

As above, according to the image conversion process, various processes can be realized depending on how first and second image data are defined.

In a case where the image conversion process as above is performed using a class classification adaptive process, computation is performed using a tap coefficient of a class obtained by class-classifying (the pixel value of) a pixel of interest to which attention is directed within the second image data into one class among a plurality of classes and using (the pixel value of) a pixel of the first image data that is selected relative to the pixel of interest. Accordingly, (the pixel value of) the pixel of interest is determined.

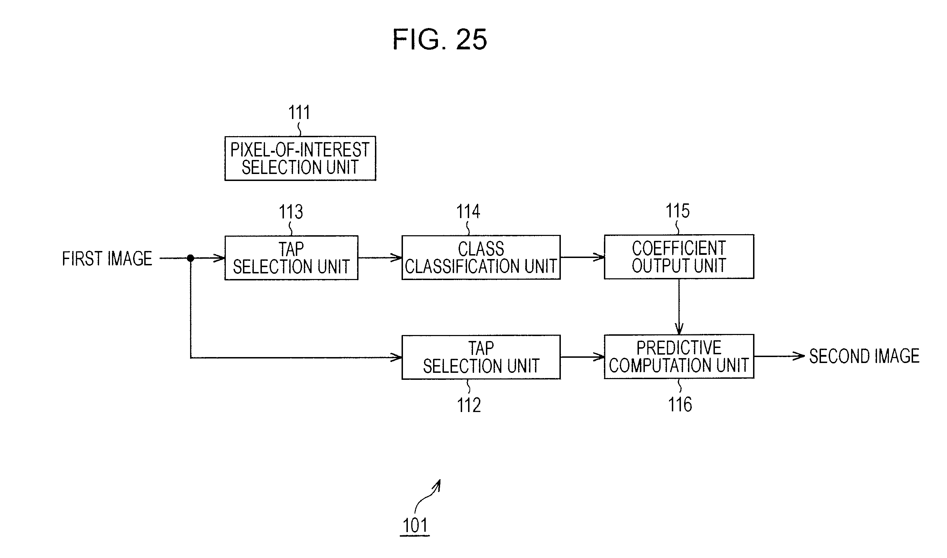

That is, Fig. 25 illustrates an example structure of an image conversion device 101 that performs an image conversion process using the class classification adaptive process.

In the image conversion device 101, image data supplied thereto is supplied to tap selection units 112 and 113 as first image data.

A pixel-of-interest selection unit 111 sequentially sets pixels constituting second image data as pixels of interest, and supplies information indicating the pixels of interest to a necessary block.

The tap selection unit 112 selects, as prediction taps, some of (the pixel values of) the pixels constituting the first image data which are used for predicting (the pixel value of) a pixel of interest.

Specifically, the tap selection unit 112 selects, as prediction taps, a plurality of pixels of the first image data which are spatially or temporally located near the time-space position of a pixel of interest.

The tap selection unit 113 selects, as class taps, some of the pixels constituting the first image data which are used for class classification for separating the pixel of interest into one of several classes. That is, the tap selection unit 113 selects class taps in a manner similar to that in which the tap selection unit 112 selects prediction taps.

Note that the prediction taps and the class taps may have the same tap configuration or may have different tap configurations.

The prediction taps obtained by the tap selection unit 112 are supplied to a predictive computation unit 116, and the class taps obtained by the tap selection unit 113 are supplied to a class classification unit 114.

The class classification unit 114 performs class classification of the pixel of interest into a class on the basis of the class taps from the tap selection unit 113, and supplies a class code corresponding to the class obtained as a result of the class classification to a coefficient output unit 115.

Here, for example, ADRC (Adaptive Dynamic Range Coding) or the like can be adopted as a method of performing class classification.

In a method using ADRC, (the pixel values of) the pixels constituting the class taps are ADRC-processed to obtain an ADRC code according to which the class of the pixel of interest is decided.

Note that in K-bit ADRC, for example, a maximum value MAX and a minimum value MIN of the pixel values of pixels constituting class taps are detected and DR = MAX - MIN is set as a local dynamic range of the set. Based on this dynamic range DR, the pixel values of the pixels constituting the class taps are re-quantized to K bits. That is, the minimum value MIN is subtracted from the pixel value of each of the pixels constituting the class taps, and the subtraction value is divided (re-quantized) by $DR/2^K$. Then, a bit string in which the pixel values of the individual K-bit pixels constituting the class taps, which are obtained in the manner as above, are arranged in a predetermined order is output as an ADRC code. Therefore, for example, in a case where the class taps are one-bit ADRC-processed, the pixel value of each of the pixels constituting the class taps is divided by the average value of the maximum value MAX and the minimum value MIN (truncating decimal places) so that the pixel value of each of the pixels is formed into one bit (binarized). Then, a bit string in which the 1-bit pixel values are arranged in a predetermined order is output as an ADRC code.

Note that the class classification unit 114 can be caused to directly output as a class code, for example, the level distribution pattern of the pixel values of the pixels constituting the class taps. However, in this case, if the class taps are constituted by the pixel values of N pixels and the pixel value of each pixel is assigned K bits, the number of class codes to be output from the class classification unit 114 becomes equal to $(2^N)^K$, which is an significant number and is exponentially proportional to the number of bits K of the pixel values of the pixels.

Therefore, in the class classification unit 114, preferably, class classification is performed by compressing the information amount of the class taps using the ADRC process described above, vector quantization, or the like.

The coefficient output unit 115 stores tap coefficients for individual classes, which are determined by learning described below. Further, the coefficient output unit 115 outputs a tap coefficient (tap coefficient of the class indicated by the class code supplied from the class classification unit 114) stored at an address corresponding to the class code supplied from the class classification unit 114 among the stored tap coefficients. The tap coefficient is supplied to the predictive computation unit 116.

Here, the term tap coefficient is equivalent to a coefficient to be multiplied with input data at a so-called tap of a digital filter.

The predictive computation unit 116 obtains the prediction taps output from the tap selection unit 112 and the tap coefficients output from the coefficient output unit 115, and performs predetermined predictive computation for determining a prediction value of the true value of the pixel of interest using the prediction taps and the tap coefficients. Accordingly, the predictive computation unit 116 determines and outputs (the prediction value of) the pixel value of the pixel of interest, that is, the pixel values of the pixels constituting the second image data.

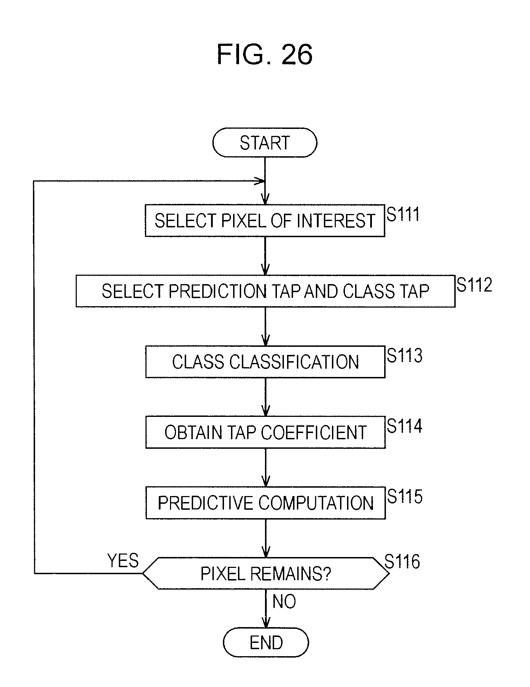

Next, an image conversion process performed by the image conversion device 101 of Fig. 25 will be explained with reference to a flowchart of Fig. 26.

In step S111, the pixel-of-interest selection unit 111 selects, as a pixel of interest, one of pixels unselected as pixels of interest among the pixels constituting the second image data relative to the first image data input to the image conversion device 101, and proceeds to step S112.

That is, the pixel-of-interest selection unit 111 selects, for example, pixels unselected as pixels of interest among the pixels constituting the second image data in raster scan order as pixels of interest.

In step S112, the tap selection units 112 and 113 select prediction taps and class taps for the pixel of interest, respectively, from the first image data supplied thereto. Then, the prediction taps are supplied from the tap selection unit 112 to the predictive computation unit 116, and the class taps are supplied from the tap selection unit 113 to the class classification unit 114.

The class classification unit 114 receives the class taps for the pixel of interest from the tap selection unit 113, and, in step S113, performs class classification of the pixel of interest on the basis of the class taps. Further, the class classification unit 114 outputs the class code indicating the class of the pixel of interest obtained as a result of the class classification to the coefficient output unit 115, and proceeds to step S114.

In step S114, the coefficient output unit 115 obtains and outputs the tap coefficients stored at the address corresponding to the class code supplied from the class classification unit 114. Further, in step S114, the predictive computation unit 116 obtains the tap coefficients output from the coefficient output unit 115, and proceeds to step S115.

In step S115, the predictive computation unit 116 performs predetermined predictive computation using the prediction taps output from the tap selection unit 112 and the tap coefficients obtained from the coefficient output unit 115. Accordingly, the predictive computation unit 116 determines and outputs the pixel value of the pixel of interest, and proceeds to step S116.

In step S116, the pixel-of-interest selection unit 111 determines whether or not there remains second image data unselected as a pixel of interest. In a case where it is determined in step S116 that there remains second image data unselected as a pixel of interest, the process returns to step S111 and subsequently a similar process is repeated.

Also, in a case where it is determined in step S116 that there remains no second image data unselected as a pixel of interest, the process ends.

Next, an explanation will be given of the predictive computation in the predictive computation unit 116 of Fig. 25 and the learning of tap coefficients stored in the coefficient output unit 115.

It is now considered that, for example, image data with high image quality (high-image-quality image data) is used as second image data and image data with low image quality (low-image-quality image data) obtained by reducing the image quality (resolution) of the high-image-quality image data by filtering or the like using an LPF (Low Pass Filter) is used as first image data to select prediction taps from the low-image-quality image data, and that the pixel values of the pixels of the high-image-quality image data (high-image-quality pixels) are determined (predicted) using the prediction taps and tap coefficients by using predetermined predictive computation.

For example, if linear first-order predictive computation is adopted as the predetermined predictive computation, a pixel value y of a high-image-quality pixel can be determined by the following linear first-order equation.

[Math. 1]

$$y = \sum_{n=1}^{N} w_n x_n$$

$$... (1)$$

In this regard, in Equation (1), $x_n$ represents the pixel value of the n-th pixel of the low-image-quality image data (hereinafter referred to as a low-image-quality pixel, as desired) constituting the prediction taps for the high-image-quality pixel y, and $w_n$ represents the n-th tap coefficient to be multiplied with (the pixel value of) the n-th low-image-quality pixel. Note that in Equation (1), the prediction taps are constituted by N low-image-quality pixels $x_1$, $x_2$, ..., $x_N$.

Here, the pixel value y of the high-image-quality pixel can also be determined by a second- or higher-order equation rather than the linear first-order equation given in Equation (1).

Now, the true value of the pixel value of the high-image-quality pixel of the k-th sample is represented by $y_k$, and the prediction value of the true value $y_k$ thereof, which is obtained by Equation (1), is represented by $y_k'$. Then, a prediction error $e_k$ therebetween is expressed by the following equation.

[Math. 2]

$$e_k = y_k - y_k'$$

$$... (2)$$

Now, the prediction value $y_k'$ in Equation (2) is determined according to Equation (1). Thus, replacing $y_k'$ in Equation (2) according to Equation (1) yields the following equation.

[Math. 3]

$$e_k = y_k - \left( \sum_{n=1}^{N} w_n x_{n,k} \right)$$

$$\ldots \quad (3)$$

In this regard, in Equation (3), $x_{n,k}$ represents the n-th low-image-quality pixel constituting the prediction taps for the high-image-quality pixel of the k-th sample.

The tap coefficient $w_n$ that allows the prediction error $e_k$ in Equation (3) (or Equation (2)) to be 0 becomes optimum to predict the high-image-quality pixel. In general, however, it is difficult to determine the tap coefficient $w_n$ for all the high-image-quality pixels.

Thus, for example, if the least squares method is adopted as a standard indicating that the tap coefficient $w_n$ is optimum, the optimum tap coefficient $w_n$ can be determined by minimizing the sum total E of square errors expressed by the following equation.

[Math. 4]

$$E = \sum_{k=1}^{K} e_k^2$$

$$\ldots \quad (4)$$

In this regard, in Equation (4), K represents the number of samples (the number of learning samples) of sets of the high-image-quality pixel $y_k$, and the low-image-quality pixels $x_{1,k}$, $x_{2,k}$, ...,$x_{N,k}$ that constitute the prediction taps for the high-image-quality pixel $y_k$.

The minimum value (local minimum value) of the sum total E of square errors in Equation (4) is given by $w_n$ that allows the value obtained by partially differentiating the sum total E with the tap coefficient $w_n$ to be 0, as given in Equation (5).

[Math. 5]

$$\frac{\partial E}{\partial w_n} = e_1 \frac{\partial e_1}{\partial w_n} + e_2 \frac{\partial e_2}{\partial w_n} + \cdots + e_k \frac{\partial e_k}{\partial w_n} = 0 \quad (n=1, 2, \cdots, N)$$

$$\ldots \quad (5)$$

Then, partially differentiating Equation (3) described above with the tap coefficient $w_n$ yields the following equations.

[Math. 6]

$$\frac{\partial e_k}{\partial w_1} = -x_{1,k}, \quad \frac{\partial e_k}{\partial w_2} = -x_{2,k}, \cdots, \quad \frac{\partial e_k}{\partial w_N} = -x_{N,k}, \quad (k=1, 2, \cdots, K)$$

$$\cdots \ (6)$$

The equations below are obtained from Equations (5) and (6).
[Math. 7]

$$\sum_{k=1}^{K} e_k x_{1,k} = 0, \quad \sum_{k=1}^{K} e_k x_{2,k} = 0, \cdots \sum_{k=1}^{K} e_k x_{N,k} = 0$$

$$\cdots \ (7)$$

By substituting Equation (3) into $e_k$ in Equation (7), Equation (7) can be expressed by normal equations given in Equation (8).
[Math. 8]

$$\begin{bmatrix} (\sum_{k=1}^{K} x_{1,k}x_{1,k}) & (\sum_{k=1}^{K} x_{1,k}x_{2,k}) & \cdots & (\sum_{k=1}^{K} x_{1,k}x_{N,k}) \\ (\sum_{k=1}^{K} x_{2,k}x_{1,k}) & (\sum_{k=1}^{K} x_{2,k}x_{2,k}) & \cdots & (\sum_{k=1}^{K} x_{2,k}x_{N,k}) \\ \vdots & \vdots & \ddots & \vdots \\ (\sum_{k=1}^{K} x_{N,k}x_{1,k}) & (\sum_{k=1}^{K} x_{N,k}x_{2,k}) & \cdots & (\sum_{k=1}^{K} x_{N,k}x_{N,k}) \end{bmatrix} \begin{bmatrix} w_1 \\ w_2 \\ \vdots \\ w_N \end{bmatrix} = \begin{bmatrix} (\sum_{k=1}^{K} x_{1,k}y_k) \\ (\sum_{k=1}^{K} x_{2,k}y_k) \\ \vdots \\ (\sum_{k=1}^{K} x_{N,k}y_k) \end{bmatrix}$$

$$\cdots \ (8)$$

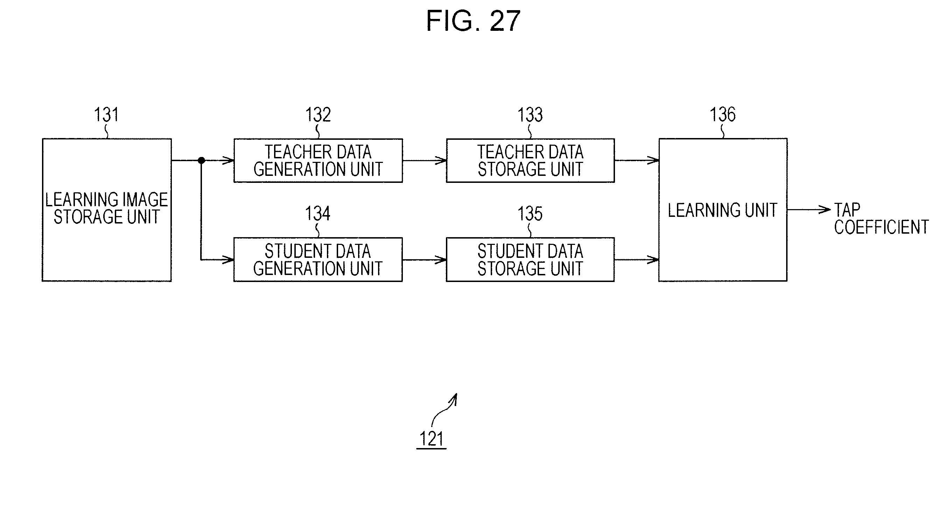

The normal equations in Equation (8) can be solved for the tap coefficient $w_n$ by using, for example, a sweeping-out method (elimination method of Gauss-Jordan) or the like.
By formulating and solving the normal equations in Equation (8) for each class, the optimum tap coefficient (here, tap coefficient that minimizes the sum total E of square errors) $W_n$ can be determined for each class.
Next, Fig. 27 illustrates an example structure of a learning device 121 that performs learning for determining the tap coefficient $W_n$ by formulating and solving the normal equations in Equation (8).
A learning image storage unit 131 stores learning image data used for learning the tap coefficient $W_n$. Here, for example, high-image-quality image data having high resolution can be used as the learning image data.
A teacher data generation unit 132 reads the learning image data from the learning image storage unit 131. Further, the teacher data generation unit 132 generates a teacher (true value) of the learning of a tap coefficient, that is, teacher data which is a mapped pixel value of mapping as the predictive computation given by Equation (1), from the learning image data, and supplies the teacher data to a teacher data storage unit 133. Herein, the teacher data generation unit 132 supplies, for example, high-image-quality image data serving as the learning image data directly to the teacher data storage unit 133 as teacher data.

The teacher data storage unit 133 stores the high-image-quality image data as teacher data supplied from the teacher data generation unit 132.

A student data generation unit 134 reads the learning image data from the learning image storage unit 131. Further, the student data generation unit 134 generates a student of the learning of a tap coefficient, that is, student data which is a pixel value to be converted by mapping as the predictive computation given by Equation (1), from the learning image data, and supplies the student data to a student data storage unit 135. Herein, for example, the student data generation unit 134 filters high-image-quality image data serving as the learning image data to reduce the resolution thereof to generate low-image-quality image data, and supplies this low-image-quality image data to the student data storage unit 135 as student data.

The student data storage unit 135 stores the student data supplied from the student data generation unit 134.

A learning unit 136 sequentially sets, as pixels of interest, pixels constituting the high-image-quality image data serving as the teacher data stored in the teacher data storage unit 133, and selects, for each pixel of interest, as prediction taps, low-image-quality pixels having the same tap configuration as those selected by the tap selection unit 112 of Fig. 25 among the low-image-quality pixels constituting the low-image-quality image data serving as the student data stored in the student data storage unit 135. Further, the learning unit 136 formulates and solves the normal equations in Equation (8) for each class using each of the pixels constituting the teacher data and the prediction taps selected when this pixel is set as a pixel of interest, thereby determining tap coefficients for each class.

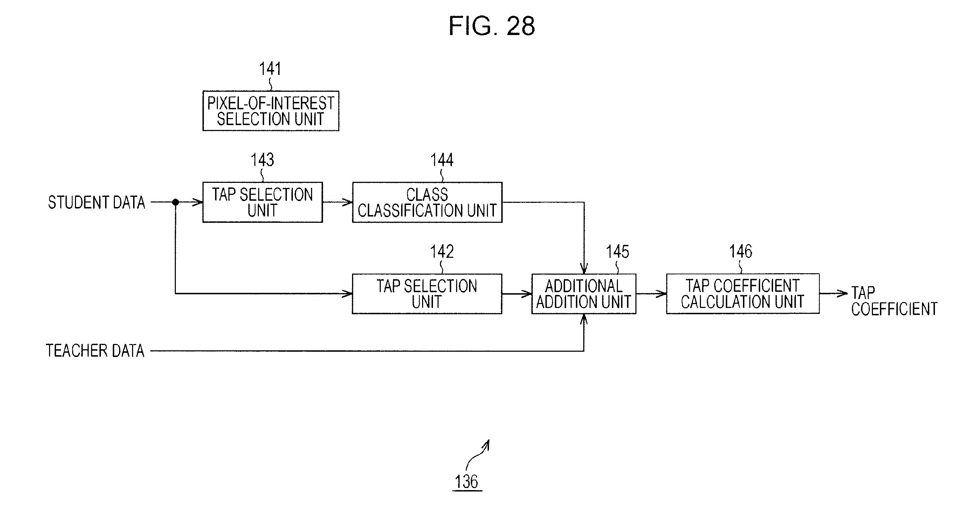

That is, Fig. 28 illustrates an example structure of the learning unit 136 of Fig. 27.

A pixel-of-interest selection unit 141 sequentially selects, as pixels of interest, pixels constituting the teacher data stored in the teacher data storage unit 133, and supplies information indicating each pixel of interest to a necessary block.

A tap selection unit 142 selects, for each pixel of interest, the same pixels as those selected by the tap selection unit 112 of Fig. 25 from the low-image-quality pixels constituting the low-image-quality image data serving as the student data stored in the student data storage unit 135. Accordingly, the tap selection unit 142 obtains prediction taps having the same tap configuration as those obtained by the tap selection unit 112, and supplies the prediction taps to an additional addition unit 145.

The tap selection unit 143 selects, for each pixel of interest, the same pixels as those selected by the tap selection unit 113 of Fig. 25 from the low-image-quality pixels constituting the low-image-quality image data serving as the student data stored in the student data storage unit 135. Accordingly, the tap selection unit 143 obtains class taps having the same tap configuration as those obtained by the tap selection unit 113, and supplies the class taps to a class classification unit 144.

The class classification unit 144 performs the same class classification as that of the class classification unit 114 of Fig. 25 on the basis of the class taps output from the tap selection unit 143, and outputs the class code corresponding to a resulting class to the additional addition unit 145.

The additional addition unit 145 reads teacher data (pixel) which is a pixel of interest from the teacher data storage unit 133, and performs, for each class code supplied from the class classification unit 144, additional addition on this pixel of interest and the student data (pixels) constituting the prediction taps for the pixels of interest supplied from the tap selection unit 142.

That is, the additional addition unit 145 is supplied with the teacher data $y_k$ stored in the teacher data storage unit 133, the prediction tap $X_{n,k}$ output from the tap selection unit 142, and the class code output from the class classification unit 144.

Then, the additional addition unit 145 performs computation equivalent to the multiplication $(X_{n,k}X_{n',k})$ of student data items in the matrix in the left side of Equation (8) and the summation ($\Sigma$), for each class corresponding to the class code supplied from the class classification unit 144, using the prediction tap (student data) $X_{n,k}$.

Further, the additional addition unit 145 also performs computation equivalent to the multiplication $(X_{n,k}Y_k)$ of the student data $X_{n,k}$ and teacher data $y_k$ in the vector in the right side of Equation (8) and the summation ($\Sigma$), for each class corresponding to the class code supplied from the class classification unit 144, using the prediction tap (student data) $X_{n,k}$ and the teacher data $y_k$.

That is, the additional addition unit 145 stores in a memory incorporated therein (not illustrated) the component $(\Sigma X_{n,k}X_{n,k})$ in the matrix in the left side of Equation (8) and the component $(\Sigma X_{n,k}y_k)$ in the vector in the right side thereof determined for the teacher data which is the previous pixel of interest, and additionally adds (performs addition expressed by the summation in Equation (8)) the corresponding component $X_{n,k+1}X_{n',k+1}$ or $X_{n,k+1}y_{k+1}$, which is calculated for teacher data which is a new pixel of interest using the teacher data $y_{k+1}$ thereof and the student data $X_{n,k+1}$, to the component $(\Sigma X_{n,k}X_{n',k})$ in the matrix or the component $(\Sigma X_{n,k}y_k)$ in the vector.

And the additional addition unit 145 performs the additional addition described above for all the teacher data stored in the teacher data storage unit 133 (Fig. 27) as pixels of interest so that the normal equations given in Equation (8) are formulated for each class, and then supplies the normal equations to a tap coefficient calculation unit 146.

The tap coefficient calculation unit 146 solves the normal equations for each class supplied from the additional addition unit 145, thereby determining and outputting an optimum tap coefficient $W_n$ for each class.

The coefficient output unit 115 in the image conversion device 101 of Fig. 25 stores the tap coefficient $W_n$ for each class determined as above.

Here, as described above, tap coefficients for performing various image conversion processes can be obtained depending on how to select image data which is the student data corresponding to the first image data and image data which is the teacher data corresponding to the second image data.

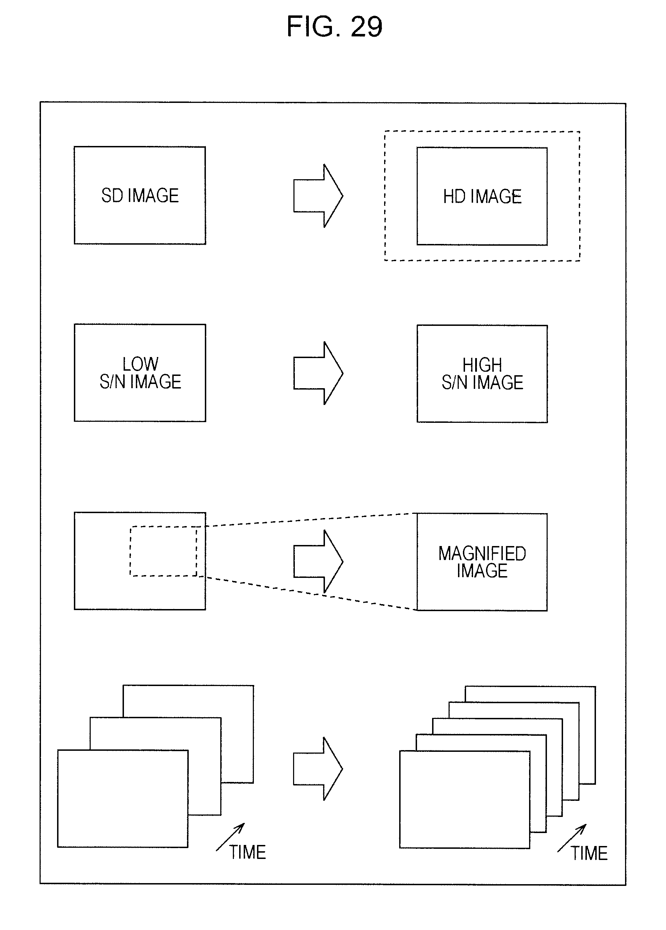

That is, as described above, learning of a tap coefficient is performed using high-image-quality image data as the teacher data corresponding to the second image data and low-image-quality image data obtained by degrading the spatial resolution of the high-image-quality image data as the student data corresponding to the first image data. Accordingly, a tap coefficient for performing, as illustrated in the top part of Fig. 29, an image conversion process as a spatial resolution creation process for converting first image data which is the low-image-quality image data (SD (Standard Definition) image) into second image data which is the high-image-quality image data (HD (High Definition) image data) with improved spatial resolution can be obtained.

Note that in this case, the number of pixels of the first image data (student data) may be the same as or smaller than that of the second image data (teacher data).

Also, for example, learning of a tap coefficient is performed using high-image-quality image data serving as the teacher data and image data, which is obtained by superimposing noise onto this high-image-quality image data serving as the teacher data, as student data. Accordingly, a tap coefficient for performing, as illustrated in the second part from the top of Fig. 29, an image conversion process as a noise removal process for converting first image data which is low S/N image data into second image data which is high S/N image data from which the noise contained in the first image data is removed (reduced) can be obtained.

Further, for example, learning of a tap coefficient is performed using certain image data serving as the teacher data and image data, which is obtained by thinning out the number of pixels of this image data serving as the teacher data, as student data. Accordingly, a tap coefficient for performing, as illustrated in the third part from the top of Fig. 29, an image conversion process as a resizing process (process for changing the number of pixels) for converting first image data which is all or part of the certain image data into second image data which is magnified image data obtained by magnifying the first image data can be obtained.

Note that the tap coefficient for performing the resizing process can also be obtained by learning tap coefficients using high-image-quality image data as the teacher data and low-image-quality image data, which is obtained by degrading the spatial resolution of the high-image-quality image data by thinning out the number of pixels, as student data.

Further, for example, learning of a tap coefficient is performed using high-frame-rate image data as the teacher data and image data, which is obtained by thinning out the frames of the high-frame-rate image data serving as the teacher data, as the student data. Accordingly, a tap coefficient for performing, as illustrated in the fourth (bottom) part from the top of Fig. 29, an image conversion process as a temporal resolution creation process for converting first image data having a predetermined frame rate into second image data having a higher frame rate can be obtained.

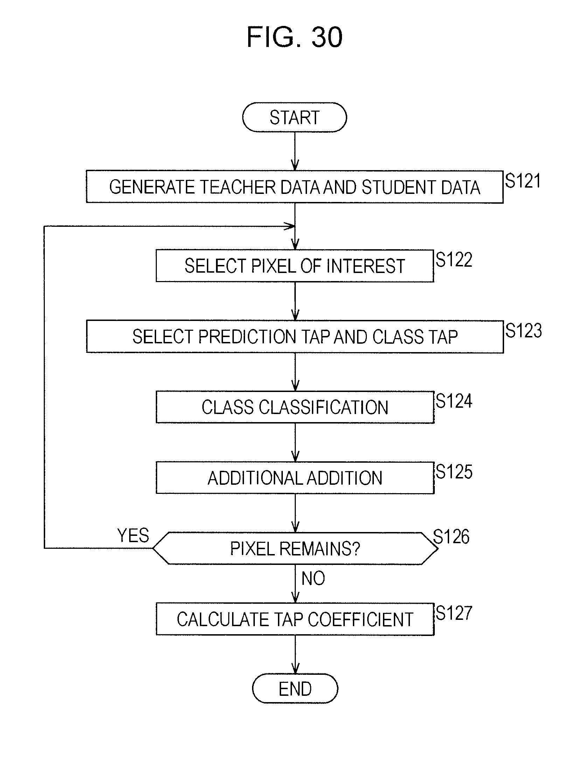

Next, the process (learning process) of the learning device 121 of Fig. 27 will be explained with reference to a flowchart of Fig. 30.

First, in step S121, the teacher data generation unit 132 and the student data generation unit 134 generate teacher data corresponding (equivalent) to the second image data to be obtained in the image conversion process and student data corresponding to the first image data to be subjected to the image conversion process, respectively, from the learning image data stored in the learning image storage unit 131, and supply the teacher data and the student data to the teacher data storage unit 133 and the student data generation unit 134, respectively, for storage.

Note that what kind of student data and teacher data are generated in the teacher data generation unit 132 and the student data generation unit 134, respectively, varies depending on which of the types of image conversion processes as described above is used to learn a tap coefficient.

Thereafter, the process proceeds to step S122, in which in the learning unit 136 (Fig. 28), the pixel-of-interest selection unit 141 selects, as a pixel of interest, teacher data unselected as a pixel of interest from the teacher data stored in the teacher data storage unit 133. The process proceeds to step S123. In step S123, the tap selection unit 142 selects, for the pixel of interest, a pixel as student data, which is a prediction tap, from the student data stored in the student data storage unit 135, and supplies it to the additional addition unit 145. In addition, the tap selection unit 143 also selects, for the pixel of interest, student data forming a class tap from the student data stored in the student data storage unit 135, and supplies it to the class classification unit 144.

Then, the process proceeds to step S124, in which the class classification unit 144 performs class classification of the pixel of interest on the basis of the class tap for the pixel of interest, and outputs the class code corresponding to the class obtained as a result of the class classification to the additional addition unit 145. The process proceeds to step S125.

In step S125, the additional addition unit 145 reads a pixel of interest from the teacher data storage unit 133, and performs, for each class code supplied from the class classification unit 144, additional addition given in Equation (8) on this pixel of interest and the student data constituting the prediction tap selected for the pixel of interest, which is supplied from the tap selection unit 142. The process proceeds to step S126.

In step S126, the pixel-of-interest selection unit 141 determines whether or not teacher data unselected as a pixel of interest is still stored in the teacher data storage unit 133. In a case where it is determined in step S126 that teacher data unselected as a pixel of interest is still stored in the teacher data storage unit 133, the process returns to step S122, and subsequently a similar process is repeated.

Also, in a case where it is determined in step S126 that teacher data unselected as a pixel of interest is not stored in the teacher data storage unit 133, the additional addition unit 145 supplies the matrices in the left side and the vectors in the right side of Equation (8) for the individual classes obtained in the foregoing processing of steps S122 to S126 to the tap coefficient calculation unit 146. The process proceeds to step S127.

In step S127, the tap coefficient calculation unit 146 solves the normal equations for each class, which are constituted by the matrix in the left side and the vector in the right side of Equation (8) for each class supplied from the additional addition unit 145, thereby determining and outputting a tap coefficient $w_n$ for each class. The process ends.

Note that there can be a class for which a required number of normal equations for determining a tap coefficient cannot be obtained due to an insufficient number of learning image data items or the like. For such a class, the tap coefficient calculation unit 146 is configured to output, for example, a default tap coefficient.

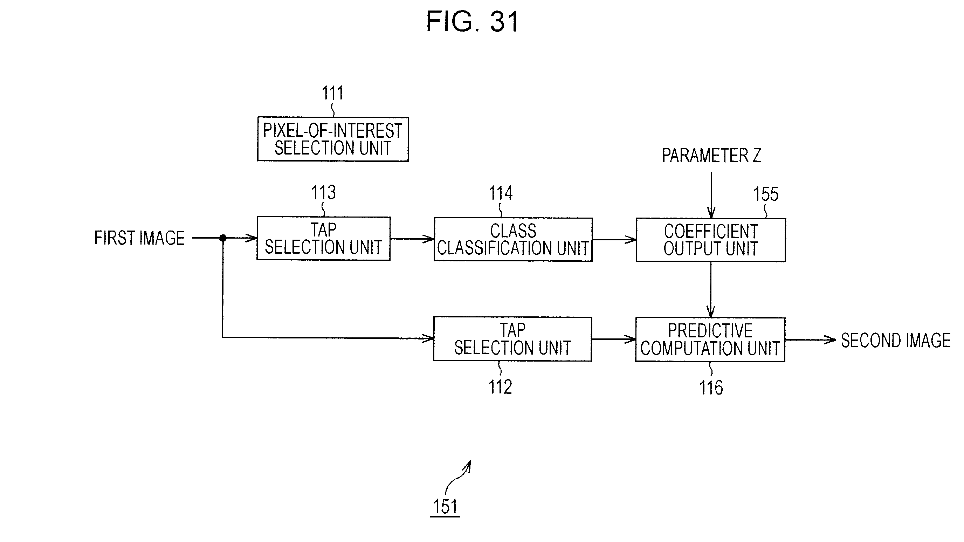

Next, Fig. 31 illustrates an example structure of an image conversion device 151, which is another image conversion device that performs an image conversion process using the class classification adaptive process.

Note that in the figures, portions corresponding to those in the case of Fig. 25 are designated by the same numerals, and explanations thereof are omitted hereinafter, as desired. That is, the image conversion device 151 is constructed in a manner similar to that of the image conversion device 101 of Fig. 25, except that a coefficient output unit 155 is provided in place of the coefficient output unit 115.

The coefficient output unit 155 is configured to be supplied with, in addition to a class (class code) from the class classification unit 114, for example, a parameter z input from outside in accordance with a user operation. The coefficient output unit 155 generates a tap coefficient for each class corresponding to the parameter z in a manner described below, and outputs the tap coefficient for the class from the class classification unit 114 among the tap coefficients for the individual classes to the predictive computation unit 116.

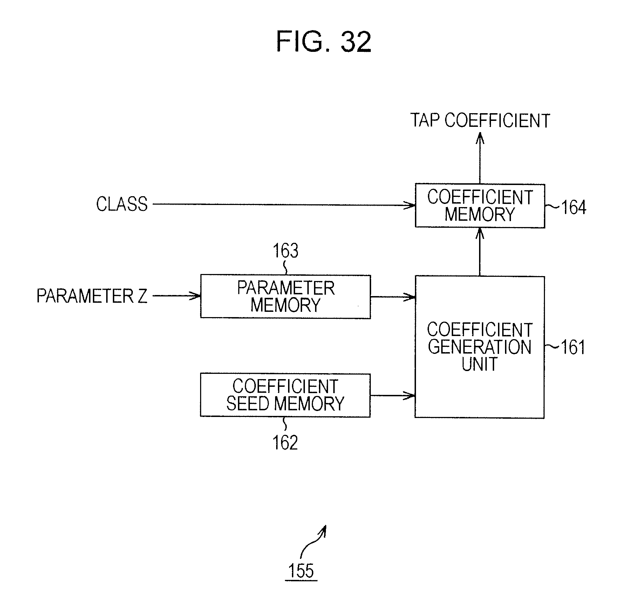

Fig. 32 illustrates an example structure of the coefficient output unit 155 of Fig. 31.

A coefficient generation unit 161 generates a tap coefficient for each class on the basis of coefficient seed data stored in a coefficient seed memory 162 and the parameter z stored in a parameter memory 163, and supplies the tap coefficient to a coefficient memory 164 for storage in overwriting form.

The coefficient seed memory 162 stores coefficient seed data for the individual classes obtained by learning coefficient seed data described below. Here, the coefficient seed data is data that becomes a so-called seed for generating a tap coefficient.

The parameter memory 163 stores the parameter z input from outside in accordance with a user operation or the like in overwriting form.

The coefficient memory 164 stores a tap coefficient for each class supplied from the coefficient generation unit 161 (tap coefficient for each class corresponding to the parameter z). Then, the coefficient memory 164 reads the tap coefficient for the class supplied from the class classification unit 114 (Fig. 31), and outputs the tap coefficient to the predictive computation unit 116 (Fig. 31).

In the image conversion device 151 of Fig. 31, when the parameter z is input from outside to the coefficient output unit 155, the parameter z is stored in the form of overwriting the parameter memory 163 of the coefficient output unit 155 (Fig. 32) therewith.

When the parameter z is stored in the parameter memory 163 (the content stored in the parameter memory 163 is updated), the coefficient generation unit 161 reads coefficient seed data for each class from the coefficient seed memory 162 and also reads the parameter z from the parameter memory 163 to determine a tap coefficient for each class on the basis of the coefficient seed data and the parameter z. Then, the coefficient generation unit 161 supplies the tap coefficient for each individual class to the coefficient memory 164 for storage in overwriting form.

In the image conversion device 151, a process similar to the process according to the flowchart of Fig. 26 performed by the image conversion device 101 of Fig. 25 is performed, except that the coefficient output unit 155 provided in place of the coefficient output unit 115 that stores tap coefficients and that outputs the tap coefficients generates and outputs the tap coefficient corresponding to the parameter z.

Next, an explanation will be given of the predictive computation performed in the predictive computation unit 116 of Fig. 31, and the generation of a tap coefficient and the learning of coefficient seed data to be stored in the coefficient seed memory 162 in the coefficient generation unit 161 of Fig. 32.

As in the case in the embodiment of Fig. 25, it is considered that image data with high image quality (high-image-quality image data) is used as second image data and image data with low image quality (low-image-quality image data) obtained by reducing the spatial resolution of the high-image-quality image data is used as first image data to select prediction taps from the low-image-quality image data, and that the pixel values of high-image-quality pixels which are pixels of the high-image-quality image data are determined (predicted) using the prediction taps and tap coefficients by using, for example, the linear first-order predictive computation in Equation (1).

Here, the pixel value y of the high-image-quality pixel can also be determined by a second- or higher-order equation rather than the linear first-order equation given in Equation (1).

In the embodiment of Fig. 32, in the coefficient generation unit 161, a tap coefficient $w_n$ is generated from the coefficient seed data stored in the coefficient seed memory 162 and the parameter z stored in the parameter memory 163. The generation of the tap coefficient $w_n$ in the coefficient generation unit 161 is assumed to be performed by using the equation below using, for example, the coefficient seed data and the parameter z.

[Math. 9]

$$w_n = \sum_{m=1}^{M} \beta_{m,n} z^{m-1}$$

$$\cdots \quad (9)$$

In this regard, in Equation (9), $\beta_{m,n}$ represents the m-th coefficient seed data used for determining the n-th tap coefficient $w_n$. Note that in Equation (9), the tap coefficient $w_n$ can be determined using M coefficient seed data items $\beta_{1,n}, \beta_{2,n}, \ldots, \beta_{M,n}$.

Here, the equation for determining the tap coefficient $w_n$ from the coefficient seed data $\beta_{m,n}$ and the parameter z is not to be limited to Equation (9).

Now, the value $z^{m-1}$ determined by the parameter z in Equation (9) is defined in the equation below by introducing a new variable $t_m$.

[Math. 10]

$$t_m = z^{m-1} \quad (m=1, 2, \cdots, M)$$

$$\cdots \quad (10)$$

Substituting Equation (10) into Equation (9) yields the following equation.

[Math. 11]

$$w_n = \sum_{m=1}^{M} \beta_{m,n} t_m$$

$$\cdots \quad (11)$$

According to Equation (11), the tap coefficient $w_n$ can be determined by a linear first-order equation of the coefficient seed data $\beta_{m,n}$ and the variable $t_m$.

Incidentally, now, the true value of the pixel value of the high-image-quality pixel of the k-th sample is represented by $y_k$, and the prediction value of the true value $y_k$ thereof obtained by Equation (1) is represented by $y_k'$. Then, a prediction error $e_k$ therebetween is expressed by the following equation.

[Math. 12]

$$e_k = y_k - y_k'$$

$$\ldots (12)$$

Now, the prediction value $y_k'$ in Equation (12) is determined according to Equation (1). Thus, replacing $y_k'$ in Equation (12) according to Equation (1) yields the following equation.
[Math. 13]

$$e_k = y_k - \left( \sum_{n=1}^{N} w_n x_{n,k} \right)$$

$$\ldots (13)$$

In this regards, in Equation (13), $x_{n,k}$ represents the n-th low-image-quality pixel constituting the prediction taps for the high-image-quality pixel of the k-th sample.
Substituting Equation (11) into $w_n$ in Equation (13) yields the following equation.
[Math. 14]

$$e_k = y_k - \left( \sum_{n=1}^{N} \left( \sum_{m=1}^{M} \beta_{m,n} t_m \right) x_{n,k} \right)$$

$$\ldots (14)$$

The coefficient seed data $\beta_{m,n}$ that allows the prediction error $e_k$ in Equation (14) to be 0 becomes optimum to predict the high-image-quality pixel. In general, however, it is difficult to determine the coefficient seed data $\beta_{m,n}$ for all the high-image-quality pixels.
Thus, for example, if the least squares method is adopted as the standard indicating that the coefficient seed data $\beta_{m,n}$ is optimum, the optimum coefficient seed data $\beta_{m,n}$ can be determined by minimizing the sum total E of square errors expressed by the following equation.
[Math. 15]

$$E = \sum_{k=1}^{K} e_k^2$$

$$\ldots (15)$$

In this regard, in Equation (15), K represents the number of samples (the number of learning samples) of sets of the high-image-quality pixel $y_k$, and the low-image-quality pixel $x_{1,k}$, $X_{2,k}$, ... , $x_{N,k}$ constituting the prediction taps for the high-image-quality pixel $y_k$.

The minimum value (local minimum value) of the sum total E of square errors in Equation (15) is given by $\beta_{m,n}$ that allows the value obtained by partially differentiating the sum total E with the coefficient seed data $\beta_{m,n}$ to be 0, as given in Equation (16).

[Math. 16]

$$\frac{\partial E}{\partial \beta_{m,n}} = \sum_{k=1}^{K} 2 \cdot \frac{\partial e_k}{\partial \beta_{m,n}} \cdot e_k = 0$$

$$\cdots (16)$$

Substituting Equation (13) into Equation (16) yields the following equation.

[Math. 17]

$$\sum_{k=1}^{K} t_m x_{n,k} e_k = \sum_{k=1}^{K} t_m x_{n,k} \left( y_k - \left( \sum_{n=1}^{N} \left( \sum_{m=1}^{M} \beta_{m,n} t_m \right) x_{n,k} \right) \right) = 0$$

$$\cdots (17)$$

Now, $X_{i,p,j,q}$ and $Y_{i,p}$ are defined as given in Equations (18) and (19).

[Math. 18]

$$X_{i,p,j,q} = \sum_{k=1}^{K} x_{i,k} t_p x_{j,k} t_q$$

$$(i = 1, 2, \cdots, N : j = 1, 2, \cdots, N : p = 1, 2, \cdots, M : q = 1, 2, \cdots, M)$$

$$\cdots (18)$$

[Math. 19]

$$Y_{i,p} = \sum_{k=1}^{K} x_{i,k} t_p y_k$$

$$\cdots (19)$$

In this case, Equation (17) can be expressed by the normal equations given in Equation (20) using $X_{i,p,j,q}$ and $Y_{i,p}$.

[Math. 20]

$$
\begin{bmatrix}
X_{1,1,1,1} & X_{1,1,1,2} & \cdots & X_{1,1,1,M} & X_{1,1,2,1} & \cdots & X_{1,1,N,M} \\
X_{1,2,1,1} & X_{1,2,1,2} & \cdots & X_{1,2,1,M} & X_{1,2,2,1} & \cdots & X_{1,2,N,M} \\
\vdots & \vdots & \ddots & \vdots & \vdots & & \vdots \\
X_{1,M,1,1} & X_{1,M,1,2} & \cdots & X_{1,M,1,M} & X_{1,M,2,1} & \cdots & X_{1,M,N,M} \\
X_{2,1,1,1} & X_{2,1,1,2} & \cdots & X_{2,M,1,M} & X_{2,M,2,1} & \cdots & X_{2,M,N,M} \\
\vdots & \vdots & & \vdots & \vdots & \ddots & \vdots \\
X_{N,M,1,1} & X_{N,M,1,2} & \cdots & X_{N,M,1,M} & X_{N,M,2,M} & \cdots & X_{N,M,N,M}
\end{bmatrix}
\begin{bmatrix}
\beta_{1,1} \\
\beta_{2,1} \\
\vdots \\
\beta_{M,1} \\
\beta_{1,2} \\
\vdots \\
\beta_{M,N}
\end{bmatrix}
=
\begin{bmatrix}
Y_{1,1} \\
Y_{1,2} \\
\vdots \\
Y_{1,M} \\
Y_{2,1} \\
\vdots \\
Y_{N,M}
\end{bmatrix}
$$

$$\cdots \quad (20)$$

The normal equations in Equation (20) can be solved for the coefficient seed data $\beta_{m,n}$ by using, for example, a sweeping-out method (elimination method of Gauss-Jordan) or the like.

In the image conversion device 151 of Fig. 31, learning by formulating and solving the normal equations in Equation (20) for each class is performed using a large number of high-image-quality pixels $y_1$, $y_2$, ..., $y_k$ as the teacher data which becomes a teacher of the learning and using low-image-quality pixels $x_{1,k}$, $x_{2,k}$, ... , $x_{N,k}$ constituting prediction taps for each high-image-quality pixel $y_k$ as the student data which forms a student of the learning to thereby determine coefficient seed data $\beta_{m,n}$ for each class, which is stored in the coefficient seed memory 162 of the coefficient output unit 155 (Fig. 32). In the coefficient generation unit 161, a tap coefficient $w_n$ for each class is generated according to Equation (9) from the coefficient seed data $\beta_{m,n}$ and the parameter z stored in the parameter memory 163. Then, in the predictive computation unit 116, Equation (1) is calculated using its tap coefficient $w_n$ and the low-image-quality pixels (pixels of the first image data) $x_n$ constituting the prediction taps for the pixel of interest as the high-image-quality pixel. Accordingly, (the prediction value close to) the pixel value of the pixel of interest as the high-image-quality pixel can be determined.

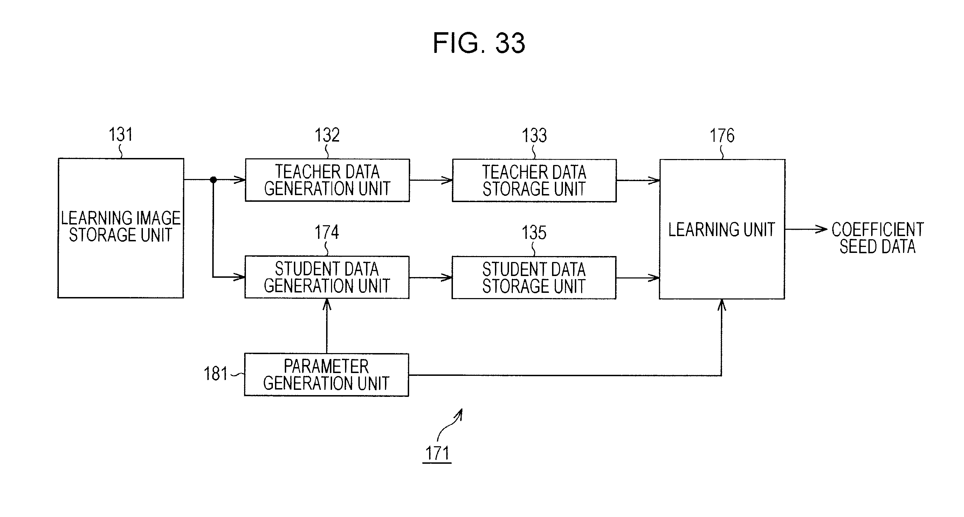

Next, Fig. 33 illustrates an example structure of a learning device 171 that performs learning for determining coefficient seed data $\beta_{m,n}$ for each class by formulating and solving the normal equations in Equation (20) for each class.

Note that in the figure, portions corresponding to the case of the learning device 121 of Fig. 27 are designated by the same numerals, and explanations thereof are omitted hereinafter, as desired. That is, the learning device 171 is constructed in a manner similar to that of the learning device 121 of Fig. 27, except that a student data generation unit 174 and a learning unit 176 are provided in place of the student data generation unit 134 and the learning unit 136, respectively, and that a parameter generation unit 181 is newly provided.

Like the student data generation unit 134 of Fig. 27, the student data generation unit 174 generates student data from the learning image data, and supplies the student data to the student data storage unit 135 for storage.

In this regard, the student data generation unit 174 is configured to be supplied with, in addition to the learning image data, several values within a range that the parameter z supplied to the parameter memory 163 of Fig. 32 can take, from the parameter generation unit 181. That is, now, if the value that the parameter z can take is a real number in a range from 0 to Z, the student data generation unit 174 is configured to be supplied with, for example, z = 0, 1, 2, ..., Z from the parameter generation unit 181.

The student data generation unit 174 generates low-image-quality image data as the student data by, for example, filtering high-image-quality image data serving as the learning image data using an LPF having the cut-off frequency corresponding to the parameter z supplied thereto.

Therefore, in the student data generation unit 174, (Z+1) types of low-image-quality image data having different spatial resolutions, which serve as the student data, are generated for the high-image-quality image data as the learning image data.

Note that, here, it is assumed that, for example, as the value of the parameter z increases, an LPF having a higher cut-off frequency is used to filter the high-image-quality image data to generate low-image-quality image data as the student data. Therefore, here, low-image-quality image data corresponding to a parameter z having a larger value has a higher spatial resolution.

Further, in the present embodiment, for simplicity of explanation, it is assumed that the student data generation unit 174 generates low-image-quality image data by reducing both the horizontal and vertical spatial resolutions of the high-image-quality image data by an amount corresponding to the parameter z.

The learning unit 176 determines and outputs coefficient seed data for each class using the teacher data stored in the teacher data storage unit 133, the student data stored in the student data storage unit 135, and the parameter z supplied from the parameter generation unit 181.

The parameter generation unit 181 generates, for example, z = 0, 1, 2, ..., Z as described above as several values in the range that the parameter z can take, and supplies them to the student data generation unit 174 and the learning unit 176.

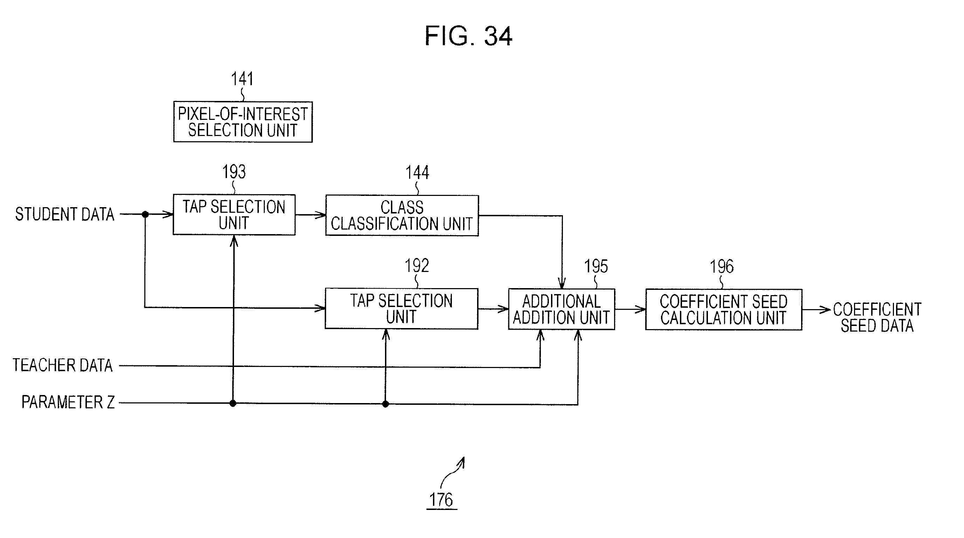

Next, Fig. 34 illustrates an example structure of the learning unit 176 of Fig. 33. Note that in the figure, portions corresponding to those in the case of the learning unit 136 of Fig. 28 are designated by the same numerals, and explanations thereof are omitted hereinafter, as desired.

Like the tap selection unit 142 of Fig. 28, a tap selection unit 192 selects, for a pixel of interest, prediction taps having the same tap configuration as those selected by the tap selection unit 112 of Fig. 31 from low-image-quality pixels constituting low-image-quality image data serving as the student data stored in the student data storage unit 135, and supplies the prediction taps to an additional addition unit 195.

Like the tap selection unit 143 of Fig. 28, the tap selection unit 193 also selects, for the pixel of interest, class taps having the same tap configuration as those selected by the tap selection unit 113 of Fig. 31 from the low-image-quality pixels constituting the low-image-quality image data serving as the student data stored in the student data storage unit 135, and supplies the class taps to the class classification unit 144.

In Fig. 34, however, the tap selection units 192 and 193 are configured to be supplied with the parameter z generated by the parameter generation unit 181 of Fig. 33. The tap selection units 192 and 193 select prediction taps and class taps, respectively, from the student data generated in correspondence with the parameter z supplied from the parameter generation unit 181 (here, from the low-image-quality image data serving as the student data generated using an LPF having the cut-off frequency corresponding to the parameter z).

The additional addition unit 195 reads the pixel of interest from the teacher data storage unit 133 of Fig. 33, and performs, for each class supplied from the class classification unit 144, additional addition on this pixel of interest, the student data constituting the prediction taps configured for the pixel of interest supplied from the tap selection unit 192, and the parameter z obtained when this student data is generated.

That is, the additional addition unit 195 is supplied with the teacher data $y_k$ serving as the pixel of interest stored in the teacher data storage unit 133, the prediction tap $x_{i,k}$ $(x_{j,k})$ for the pixel of interest output from the tap selection unit 192, and the class of the pixel of interest output from the class classification unit 144. The additional addition unit 195 is also supplied with the parameter z obtained when the student data constituting the prediction taps for the pixel of interest is generated, from the parameter generation unit 181.

Then, the additional addition unit 195 performs computation equivalent to the multiplication $(x_{i,k}t_p x z_{j,k}t_q)$ of the student data and parameter z for determining the component $X_{i,p,j,q}$ defined in Equation (18) and the summation ($\Sigma$) in the matrix in the left side of Equation (20), for each class supplied from the class classification unit 144, using the prediction tap (student data) $x_{i,k}$ $(x_{j,k})$ and the parameter z. Note that $t_p$ in Equation (18) is calculated from the parameter z according to the Equation (10). Similarity applies to tq in Equation (18).

Further, the additional addition unit 195 also performs computation equivalent to the multiplication $(x_{i,k}t_p y_k)$ of the student data $x_{i,k}$, teacher data $y_k$, and parameter z for determining the component $Y_{i,p}$ defined in Equation (19) and the summation($\Sigma$) in the vector in the right side of Equation (20), for each class corresponding to the class code supplied from the class classification unit 144, using the prediction tap (student data) $x_{i,k}$, the teacher data $y_k$, and the parameter z. Note that $t_p$ in Equation (19) is calculated from the parameter z according to Equation (10).

That is, the additional addition unit 195 stores in a memory incorporated therein (not illustrated) the component $X_{i,p,j,q}$ in the matrix in the left side and the component $Y_{i,p}$ in the vector in the right side of Equation (20) determined for the teacher data which is the previous pixel of interest, and additionally adds (performs addition expressed by summation of the component $X_{i,p,j,q}$ in Equation (18) of the component $Y_{i,p}$ in Equation (19)) the corresponding component $x_{i,k}t_p x_{j,k}t_q$ or $x_{i,k}t_p y_k$, which is calculated for teacher data which is a new pixel of interest using the teacher data $y_k$ thereof, the student data $x_{i,k}$ $(x_{j,k})$, and the parameter z, to the component $X_{i,p,j,q}$ in the matrix or the component $Y_{i,p}$ in the vector.

And the additional addition unit 195 performs the additional addition described above for the parameters z of all values 0, 1, ..., Z using all the teacher data stored in the teacher data storage unit 133 as pixels of interest so that the normal equations given in Equation (20) are formulated for each class, and then supplies the normal equations to a coefficient seed calculation unit 196.

The coefficient seed calculation unit 196 solves the normal equations for each class supplied from the additional addition unit 195, thereby determining and outputting coefficient seed data $\beta_{m,n}$ for each class.

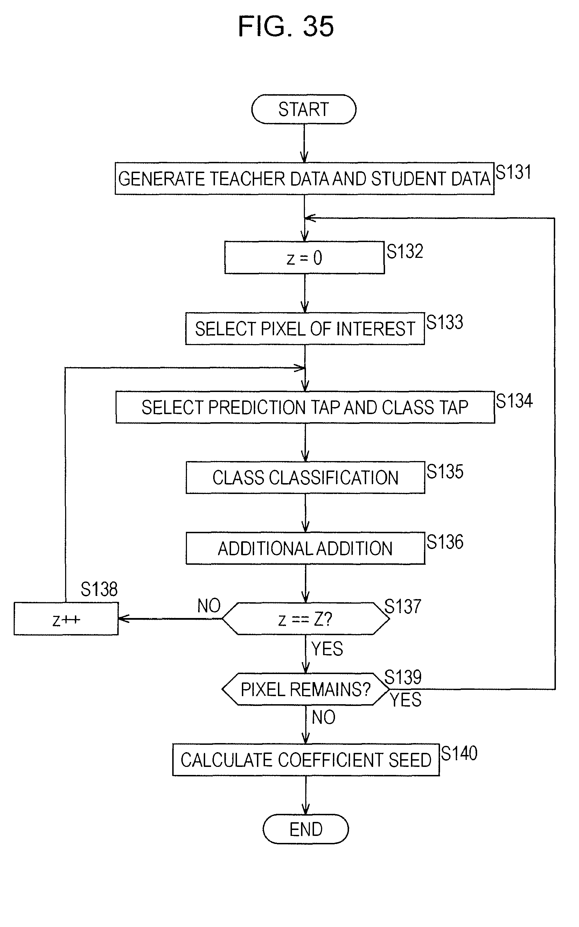

Next, the process (learning process) of the learning device 171 of Fig. 33 will be explained with reference to a flowchart of Fig. 35.

First, in step S131, the teacher data generation unit 132 and the student data generation unit 174 generate and output teacher data and student data from the learning image data stored in the learning image storage unit 131, respectively. That is, for example, the teacher data generation unit 132 directly outputs the learning image data as teacher data. Further, the parameter z having (Z+1) values that are generated by the parameter generation unit 181 is supplied to the student data generation unit 174.

The student data generation unit 174 generates and outputs (Z+1) frames of student data for each frame of teacher data (learning image data) by, for example, filtering the learning image data using LPFs having cut-off frequencies corresponding to the parameter z having the (Z+1) values (0, 1, ..., Z) from the parameter generation unit 181.

The teacher data output from the teacher data generation unit 132 is supplied to the teacher data storage unit 133 and is stored therein. The student data output from the student data generation unit 174 is supplied to the student data storage unit 135 and is stored therein.

Thereafter, the process proceeds to step S132, in which the parameter generation unit 181 sets the parameter z to an initial value, namely, for example, 0, and supplies the parameter z to the tap selection units 192 and 193 and additional addition unit 195 of the learning unit 176 (Fig. 34). The process proceeds to step S133. In step S133, the pixel-of-interest selection unit 141 sets, as a pixel of interest, teacher data unselected as a pixel of interest from the teacher data stored in the teacher data storage unit 133. The process proceeds to step S134.

In step S134, the tap selection unit 192 selects, for the pixel of interest, prediction taps from the student data stored in the student data storage unit 135 for the parameter z output from the parameter generation unit 181 (from the student data generated by filtering the learning image data corresponding to the teacher data which is the pixel of interest using an LPF having the cut-off frequency corresponding to the parameter z), and supplies the prediction taps to the additional addition unit 195. In step S134, furthermore, the tap selection unit 193 also selects, for the pixel of interest, class taps from the student data stored in the student data storage unit 135 for the parameter z output from the parameter generation unit 181, and supplies the class taps to the class classification unit 144.

Then, the process proceeds to step S135, in which the class classification unit 144 performs class classification of the pixel of interest on the basis of the class taps for the pixel of interest, and outputs the class of the pixel of interest obtained as a result of the class classification to the additional addition unit 195. The process proceeds to step S136.

In step S135, the additional addition unit 195 reads the pixel of interest from the teacher data storage unit 133, and calculates the component $x_{i,k}t_p x_{j,k}t_q$ in the matrix in the left side of Equation (20) and the component $x_{i,k}t_p y_k$ in the vector in the right side thereof using this pixel of interest, the prediction taps supplied from the tap selection unit 192, and the parameter z output from the parameter generation unit 181. Further, the additional addition unit 195 additionally adds the component $x_{i,k}t_p x_{j,k}t_q$ in the matrix and the component $x_{i,k}t_p y_k$ in the vector determined from the pixel of interest, the prediction taps, and the parameter z in correspondence with the class of the pixel of interest from the class classification unit 144 among the already obtained components in the matrices and the already obtained components in the vectors. The process proceeds to step S137.

In step S137, the parameter generation unit 181 determines whether or not the parameter z output therefrom is equal to a maximum value Z that the parameter z can take. In a case where it is determined in step S136 that the parameter z output from the parameter generation unit 181 is not equal to the maximum value Z (less than the maximum value Z), the process proceeds to step S138, in which the parameter generation unit 181 adds 1 to the parameter z, and outputs the addition value to the tap selection units 192 and 193 and additional addition unit 195 of the learning unit 176 (Fig. 34) as a new parameter z. Then, the process returns to step S134, and subsequently a similar process is repeated.

Further, in a case where it is determined in step S137 that the parameter z is equal to the maximum value Z, the process proceeds to step S139, in which the pixel-of-interest selection unit 141 determines whether or not teacher data unselected as a pixel of interest is still stored in the teacher data storage unit 133. In a case where it is determined in step S138 that teacher data unselected as a pixel of interest is still stored in the teacher data storage unit 133, the process returns to step S132, and subsequently a similar process is repeated.

Further, in a case where it is determined in step S139 that teacher data unselected as a pixel of interest is not stored in the teacher data storage unit 133, the additional addition unit 195 supplies the matrices in the left side and the vectors in the right side of Equation (20) for the individual classes obtained in the foregoing processing to the coefficient seed calculation unit 196. The process proceeds to step S140.

In step S140, the coefficient seed calculation unit 196 solves the normal equations for each class, which are constituted by the matrix in the left side and the vector in the right side of Equation (20) for each class supplied from the additional addition unit 195, thereby determining and outputting coefficient seed data $\beta_{m,n}$ for each class. The process ends.

Note that there can be a class for which a required number of normal equations for determining coefficient seed data cannot be obtained due to an insufficient number of learning image data items or the like. For such a class, the coefficient seed calculation unit 196 is configured to output, for example, default coefficient seed data.

Note that also in the learning of coefficient seed data, similarly to the case of the learning of tap coefficients explained in Fig. 29, coefficient seed data for performing various image conversion processes can be obtained depending on how to select image data which is the student data corresponding to the first image data and the teacher data corresponding to the second image data.

That is, in the case described above, coefficient seed data is learned using the learning image data directly as the teacher data corresponding to the second image data and low-image-quality image data obtained by degrading the spatial resolution of the learning image data as the student data corresponding to the first image data. Thus, coefficient seed data for performing an image conversion process as a spatial resolution creation process for converting first image data into second image data with improved spatial resolution can be obtained.

In this case, in the image conversion device 151 of Fig. 31, the horizontal resolution and vertical resolution of image data can be improved to the resolution corresponding to the parameter z.

Also, for example, learning of coefficient seed data is performed using high-image-quality image data as the teacher data and image data, which is obtained by superimposing noise having the level corresponding to the parameter z onto this high-image-quality image data serving as the teacher data, as the student data. Accordingly, coefficient seed data for performing an image conversion process as a noise removal process for converting first image data into second image data from which the noise contained in the first image data is removed (reduced) can be obtained. In this case, the image conversion device 151 of Fig. 31 can obtain image data having S/N corresponding to the parameter z.

Further, for example, learning of coefficient seed data is performed using certain image data as the teacher data and image data, which is obtained by thinning out the number of pixels of this image data serving as the teacher data in correspondence with the parameter z, as the student data, or using image data having a predetermined size as the student data and image data, which is obtained by thinning out a pixel of this image data serving as the student data at the thinning-out rate corresponding to the parameter z, as the teacher data. Accordingly, coefficient seed data for performing an image conversion process as a resizing process for converting first image data into second image data obtained by increasing or decreasing the size of the first image data can be obtained. In this case, in the image conversion device 151 of Fig. 31, image data whose size (the number of pixels) is changed so as to correspond to the parameter z can be obtained.

Note that in the case described above, as given in Equation (9), a tap coefficient $w_n$ is defined by $\beta_{1,n}z^0 + \beta_{2,n}z^1 + ... + \beta_{M,n}z^{M-1}$, and a tap coefficient $w_n$ for improving both the horizontal and vertical spatial resolutions in correspondence with the parameter z is determined by Equation (9). However, a tap coefficient $w_n$ for independently improving the horizontal resolution and the vertical resolution in correspondence with the independent parameters $z_x$ and $z_y$, respectively, can be determined.

That is, a tap coefficient $w_n$ is defined by, in place of Equation (9), for example, the third-order equation $\beta_{1,n}z_x^0z_y^0 + \beta_{2,n}z_x^1z_y^0 + \beta_{3,n}z_x^2z_y^0 + \beta_{4,n}z_x^3z_y^0 + \beta_{5,n}z_x^0z_y^1 + \beta_{6,n}z_x^0z_y^2 + \beta_{7,n}z_x^0z_y^3 + \beta_{8,n}z_x^1z_y^1 + \beta_{9,n}z_x^2z_y^1 + \beta_{10,n}z_x^1z_y^2$, and the variable $t_m$ defined in Equation (10) is defined by, in place of Equation (10), for example, $t_1 = z_x^0z_y^0$, $t_2 = z_x^1z_y^0$, $t_3 = z_x^2z_y^0$, $t_4 = z_x^3z_y^0$, $t_5 = z_x^0z_y^1$, $t_6 = z_x^0z_y^2$, $t_7 = z_x^0z_y^3$, $t_8 = z_x^1z_y^1$, $t_9 = z_x^2z_y^1$, and $t_{10} = z_x^1z_y^2$, Also in this case, the tap coefficient $w_n$ can finally be expressed by Equation (11). Therefore, image data obtained by degrading the horizontal resolution and vertical resolution of the teacher data in correspondence with the learning device 171 of Fig. 33 or the parameters $z_x$ and $z_y$, respectively, is used as the student data to perform learning to determine coefficient seed data $\beta_{m,n}$. Accordingly, a tap coefficient $w_n$ for independently improving the horizontal resolution and the vertical resolution in correspondence with the independent parameters $z_x$ and $z_y$, respectively, can be determined.

Other, in addition to the parameters $z_x$ and $z_y$ corresponding to the horizontal resolution and the vertical resolution, respectively, for example, by further introducing a parameter $z_t$ corresponding to the resolution in the time direction, a tap coefficient $w_n$ for independently improving the horizontal resolution, the vertical resolution, and the temporal resolution in correspondence with the independent parameters $z_x$, $z_y$, and $z_t$, respectively, can be determined.

Further, also for the resizing process, similarly to the case in the spatial resolution creation process, in addition to a tap coefficient $w_n$ for resizing both the horizontal and vertical directions at the magnification factor (or reduction factor) corresponding to the parameter z, a tap coefficient $w_n$ for independently resizing the horizontal and vertical directions at the magnification factors corresponding to the parameters $z_x$ and $z_y$, respectively, can be determined.

Furthermore, in the learning device 171 of Fig. 33, coefficient seed data $\beta_{m,n}$ is determined by performing learning using image data, which is obtained by degrading the horizontal resolution and vertical resolution of the teacher data in correspondence with the parameter $z_x$ and by adding noise to the teacher data in correspondence with the parameter $z_y$, as the student data. Accordingly, a tap coefficient $w_n$ for improving the horizontal resolution and the vertical resolution in correspondence with the parameter $z_x$ and performing noise removal in correspondence with the parameter $z_y$ can be determined.

The image conversion processes described above can be performed using the class classification adaptive process as above.

That is, for example, in the image conversion unit $31_1$ of Fig. 4, in a case where an image conversion process for converting check image data into m-times magnified image data whose size (the number of pixels) is increased m times is performed using the class classification adaptive process, the learning device 171 of Fig. 33 performs learning of coefficient seed data using image data having pixels, the number of which is $m_1$ times, $m_2$ times, ... the check image data in the horizontal and vertical dimensions, as the teacher data corresponding to the m-times magnified image data and using image data having the same number of pixels as that of the check image data, which is produced by thinning out the number of pixels of this image data serving as the teacher data to $1/m_1$, $1/m_2$, ... in correspondence with the parameter z, as the student data corresponding to the check image data.

Then, the image conversion unit $31_1$ is constructed by the image conversion device 151 of Fig. 31, and coefficient seed data determined by learning is stored in the coefficient seed memory 162 (Fig. 32) constituting the coefficient output unit 155 of the image conversion device 151 (Fig. 31) serving as the image conversion unit $31_1$.

In this case, the value corresponding to a magnification factor m is applied as the parameter z to the image conversion device 151 serving as the image conversion unit $31_1$ so that the image conversion device 151 serving as the image conversion unit $31_1$ can perform an image conversion process for converting the check image data into the m-times magnified image data whose the number of pixels is increased m times by using the class classification adaptive process.

Next, the series of processes described above can be performed by hardware or software. In a case where the series of processes is performed by software, a program constituting the software is installed into a general-purpose computer or the like.

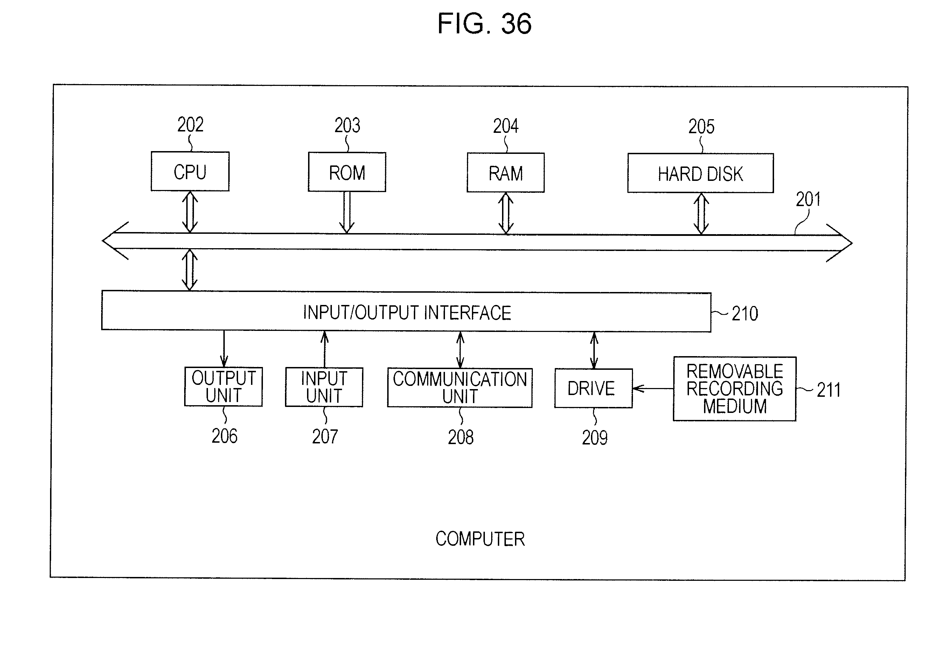

Thus, Fig. 36 illustrates an example structure of an embodiment of a computer into which a program that executes the series of processes described above is installed.

The program can be recorded in advance on a hard disk 205 or a ROM 203 serving as a recording medium incorporated in a computer.

Alternatively, the program can be temporarily or permanently stored (recorded) on a removable recording medium 211 such as a flexible disk, a CD-ROM (Compact Disc Read Only Memory), an MO (Magneto Optical) disk, a DVD (Digital Versatile Disc), a magnetic disk, or a semiconductor memory. The removable recording medium 211 of this type can be provided as so-called packaged software.

Note that the program can be, as well as installed into the computer from the removable recording medium 211 as described above, transferred to the computer from a download site in a wireless fashion via a satellite for digital satellite broadcasting or transferred to the computer in a wired fashion via a network such as a LAN (Local Area Network) or the Internet. In the computer, the program transferred in such a manner can be received by a communication unit 208 and installed into the hard disk 205 incorporated therein.

The computer incorporates therein a CPU (Central Processing Unit) 202. The CPU 202 is connected to an input/output interface 210 via a bus 201. When an instruction is input from a user through an operation or the like of an input unit 207 constructed with a keyboard, a mouse, a microphone, and the like via the input/output interface 210, the CPU 202 executes a program stored in the ROM (Read Only Memory) 203 according to the instruction. Alternatively, the CPU 202 loads onto a RAM (Random Access Memory) 204 a program stored in the hard disk 205, a program that is transferred from a satellite or a network, received by the communication unit 208, and installed into the hard disk 205, or a program that is read from the removable recording medium 211 mounted in a drive 209 and installed into the hard disk 205, and executes the program. Accordingly, the CPU 202 performs the processes according to the flowcharts described above or the processes performed by the structure of the block diagrams described above. Then, the CPU 202 causes this processing result to be, according to necessity, for example, output from an output unit 206 constructed with an LCD (Liquid Crystal Display), a speaker, and the like via the input/output interface 210, sent from the communication unit 208, or recorded or the like onto the hard disk 205.

Note that, for example, in the present embodiment, the display apparatus 2 is configured to display three images, in addition to a check image, at the same time. The number of images displayed at the same time as a check image may be one, two, or more than three.

That is, in Fig. 2, the screen of the display apparatus 2 is equally horizontally and vertically divided to produce four display regions #0 to #3 so that an image is displayed in each of the display regions #0 to #3. Alternatively, the screen of the display apparatus 2 can be divided into any other number, for example, 2, 8, 16, or any other number of a plurality of display regions, and an image can be displayed in each display region.

Further, the arrangement of display regions is not to be limited to a matrix arrangement as illustrated in Fig. 2, and a display region can be arranged at an arbitrary position on the screen of the display apparatus 2.

Further, in Fig. 1, the display apparatus 2 is an LCD. Alternatively, any other display apparatus such as, for example, a CRT, a PDP, an organic EL, a projector (including both a front projector that radiates light from the front of a screen and a rear projector that radiates light from the rear of a screen), or an FED can be adopted.

Furthermore, in Figs. 7 and 8, the signal processing unit 12 is configured to perform a signal process of generating each of processed image data for displaying on the display apparatus 2, which is an LCD, images equivalent to images to be displayed on an organic EL, a PDP, and a CRT and to display images on the display apparatus 2. Alternatively, the signal processing unit 12 can perform, for example, a signal process of generating processed image data for displaying on the display apparatus 2, which is an LCD, an image equivalent to an image to be displayed on an FED, a front projector, a rear projector, or the like, and an image can be displayed on the display apparatus 2.

[Embodiment in which a signal process for an FPD (Flat Panel Display) including an ABL (Automatic Beam current Limiter) process, a VM (Velocity Modulation) process, and a γ process for a CRT (Cathode Ray Tube) is performed so that an FPD display apparatus that is a display apparatus of an FPD provides a natural display equivalent to that of a CRT display apparatus that is a display apparatus of a CRT]

Next, an explanation will be given of an embodiment in which an FPD display apparatus provides a natural display equivalent to that of a CRT display apparatus.

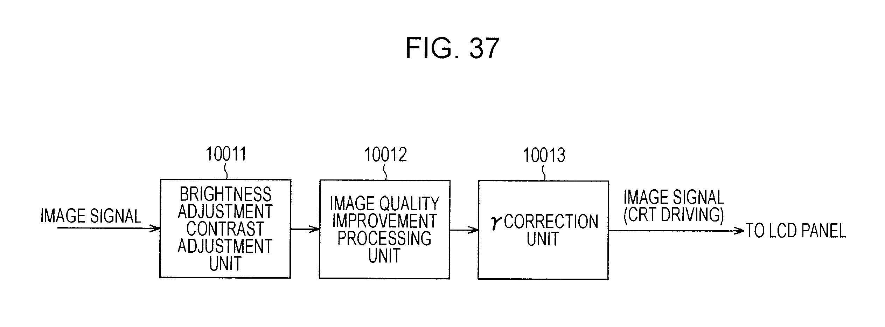

Fig. 37 illustrates a structure of an example of a display apparatus of an FPD (FPD display apparatus), such as, for example, an LCD (Liquid Crystal Display), of the related art.

A brightness adjustment contrast adjustment unit 10011 applies an offset to an input image signal to perform brightness adjustment of the image signal, and adjusts the gain to perform contrast adjustment of the image signal. The brightness adjustment contrast adjustment unit 10011 supplies a resulting image signal to an image quality improvement processing unit 10012.

The image quality improvement processing unit 10012 performs an image quality improvement process such as DRC (Digital Reality Creation). That is, the image quality improvement processing unit 10012 is a processing block for obtaining a high-quality image. The image quality improvement processing unit 10012 performs an image signal process including number-of-pixels conversion and the like on the image signal from the brightness adjustment contrast adjustment unit 10011, and supplies a resulting image signal to a γ correction unit 10013.

Here, DRC is described in, for example, Japanese Unexamined Patent Application Publication No. 2005-236634, Japanese Unexamined Patent Application Publication No. 2002-223167, or the like as a class classification adaptive process.

The γ correction unit 10013 is a processing block for performing a gamma correction process of adjusting the signal level of a dark portion using a signal process, in addition to γ characteristics inherent to fluorescent materials (light-emitting units of a CRT), for reasons such as poor viewing of a dark portion on a CRT display apparatus.

Here, an LCD also contains in an LCD panel thereof a processing circuit for adjusting the photoelectric conversion characteristics (transmission characteristics) of liquid crystal to the γ characteristics of the CRT. Thus, an FPD display apparatus of the related art performs a γ correction process in a manner similar to that of a CRT display apparatus.

The γ correction unit 10013 subjects the image signal from the image quality improvement processing unit 10012 to a gamma correction process, and supplies the image signal obtained as a result of the gamma correction process to an FPD (not illustrated), for example, an LCD. Accordingly, an image is displayed on the LCD.

As above, in an FPD display apparatus of the related art, after a contrast or brightness adjustment process is performed, an image signal is directly input to an FPD through the performance of an image quality improvement process and a gamma correction process.

To achieve this, in the FPD display apparatus, the brightnesses of an input and a displayed image have a proportional relationship according to gamma. The displayed image, however, becomes an image that seems brighter and more glaring than that of a CRT display apparatus.

Thus, a method for adaptively improving the gradation representation capability without using a separate ABL circuit in a display apparatus having lower panel characteristics than a CRT in terms of the gradation representation capability for a dark portion is described in, for example, Japanese Unexamined Patent Application Publication No. 2005-39817.

Incidentally, as described above, an image displayed on an FPD display apparatus becomes an image that seems brighter and more glaring than that of a CRT display apparatus because only an image signal processing system incorporated in a CRT display apparatus of the related art for performing a process only on an image signal is modified for use in an FPD and is incorporated in an FPD display apparatus. This results from no consideration of a system structure in which a CRT display apparatus is a display apparatus based on comprehensive signal processing, including not only an image signal processing system but also response characteristics specific to a driving system itself and the driving system.

Thus, in the following, an explanation will be given of an embodiment that can provide a natural display equivalent to that of a CRT display apparatus such that an image obtained when an image signal is displayed on a display apparatus of a display type other than that of a CRT display apparatus, for example, on an FPD display apparatus, can look like an image displayed on a CRT display apparatus.

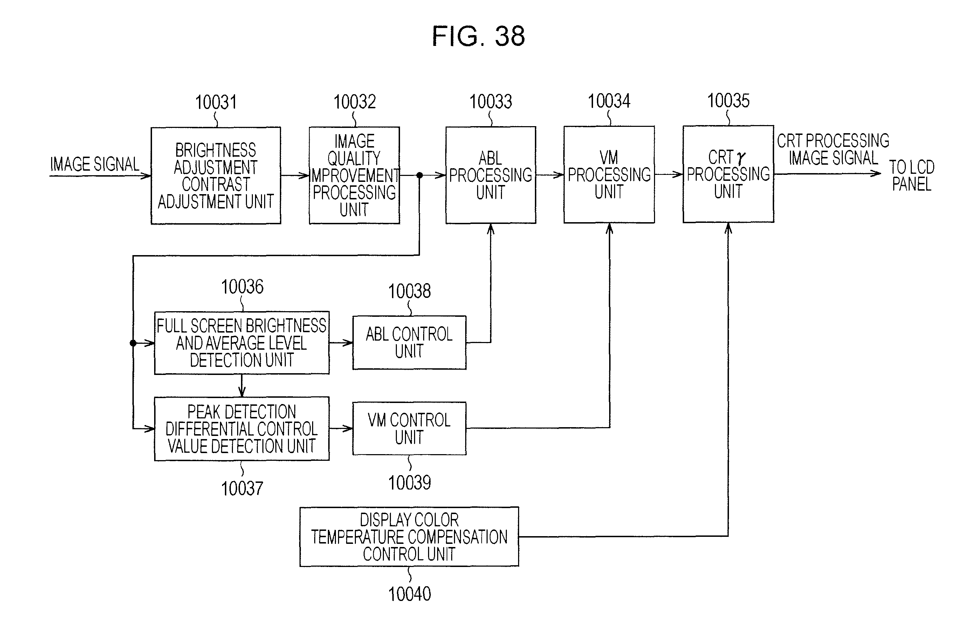

Fig. 38 illustrates an example structure of an embodiment of an image signal processing device included in an FPD display apparatus capable of providing a natural display equivalent to that of a CRT display apparatus.

The image signal processing device of Fig. 38 processes an image signal so that an image obtained when the image signal is displayed on a display apparatus of a display type other than that of a CRT display apparatus, i.e., here, for example, an FPD display apparatus having an FPD such as an LCD, can look like an image displayed on a CRT display apparatus.

Here, before the image signal processing device of Fig. 38 is explained, a CRT display apparatus that displays an image to be displayed on the image signal processing device of Fig. 38, i.e., a CRT display apparatus emulated (simulated) by the image signal processing device of Fig. 38, will be explained.

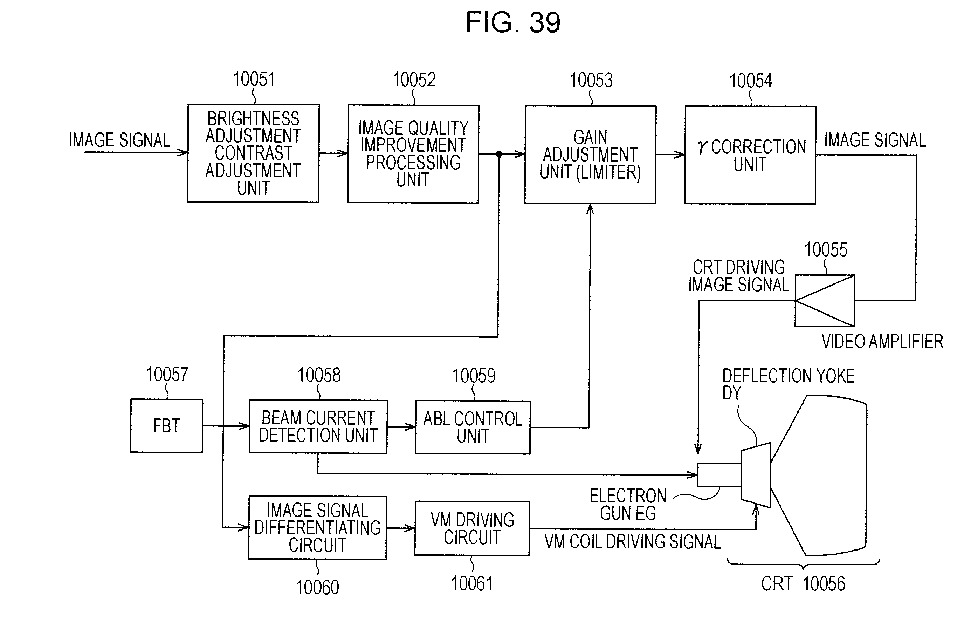

Fig. 39 illustrates an example structure of a CRT display apparatus.

In the CRT display apparatus, in a brightness adjustment contrast adjustment unit 10051 and an image quality improvement processing unit 10052, an image signal is subjected to processes similar to those of the brightness adjustment contrast adjustment unit 10011 and image quality improvement processing unit 10012 of Fig. 37, respectively, and the processed image signal is supplied to a gain adjustment unit 10053 and an image signal differentiating circuit 10060.

The gain adjustment unit (limiter) 10053 limits the signal level of the image signal from the image quality improvement processing unit 10052 according to an ABL control signal from an ABL control unit 10059 which will be described below, and supplies a resulting image signal to a γ correction unit 10054. That is, the gain adjustment unit 10053 adjusts the gain of the image signal from the image quality improvement processing unit 10052 instead of directly limiting the amount of current of an electron beam of a CRT 10056 which will be described below.

The γ correction unit 10054 subjects the image signal from the gain adjustment unit 10053 to a γ correction process which is similar to that of the γ correction unit 10013 of Fig. 37, and supplies the image signal obtained as a result of the γ correction process to a video (Video) amplifier 10055.

The video amplifier 10055 amplifies the image signal from the γ correction unit 10054, and supplies a resulting image signal to the CRT 10056 as a CRT driving image signal.

In contrast, an FBT (Flyback Transformer) 10057 is a transformer for generating a horizontal deflection drive current for providing horizontal scanning of an electron beam and an anode voltage of the CRT (Braun tube) 10056 in the CRT display apparatus, the output of which is supplied to a beam current detection unit 10058.

The beam current detection unit 10058 detects the amount of current of an electron beam necessary for ABL control from the output of the FBT 10057, and supplies the amount of current to the CRT 10056 and an ABL control unit 10059.

The ABL control unit 10059 measures a current value of the electron beam from the beam current detection unit 10058, and outputs an ABL control signal for ABL control for controlling the signal level of the image signal to the gain adjustment unit 10053.

In contrast, the image signal differentiating circuit 10060 differentiates the image signal from the image quality improvement processing unit 10052 and supplies the differentiated value of the image signal obtained as a result of the differentiation to a VM driving circuit 10061.

The VM (Velocity Modulation) driving circuit 10061 performs a VM process of partially changing the deflection (horizontal deflection) velocity of an electron beam in the CRT display apparatus so that the display luminance of even the same image signal is changed. In the CRT display apparatus, the VM process is implemented using a dedicated VM coil (not illustrated) and the VM driving circuit 10061 separate from a main horizontal deflection circuit (which is constituted by a deflection yoke DY, the FBT 10057, a horizontal driving circuit (not illustrated), and the like).

That is, the VM driving circuit 10061 generates a VM coil driving signal for driving the VM coil on the basis of the differentiated value of the image signal from the image signal differentiating circuit 10060, and supplies the VM coil driving signal to the CRT 10056.

The CRT 10056 is constituted by an electron gun EG, the deflection yoke DY, and the like. In the CRT 10056, the electron gun EG emits an electron beam in accordance with the output of the beam current detection unit 10058 or the CRT driving image signal from the video amplifier 10055. The electron beam is changed (and scanned) in the horizontal and vertical directions in accordance with magnetic fields generated by the deflection yoke DY serving as a coil, and impinges on a fluorescent surface of the CRT 10056. Accordingly, an image is displayed.

Further, in the CRT 10056, the VM coil is driven in accordance with the VM coil driving signal from the VM driving circuit 10061. Accordingly, the deflection velocity of the electron beam is partially changed, thereby providing, for example, enhancement or the like of edges of an image to be displayed on the CRT 10056.

As can be seen from Fig. 39, in the CRT display apparatus, the VM process of partially changing the deflection velocity and the ABL process (ABL control) of limiting the amount of current of the electron beam are performed on a path other than the path on which the image signal is processed, and a control signal that has the influence on the image quality of the image to be displayed on the CRT 10056 is produced.

In order to display on an FPD such an image in which the influence by the VM process and the ABL process appears, it is necessary to take the form of performing processes equivalent to the VM process and the ABL process over the path over which the image signal is processed because the driving method of the FPD is completely different from that of a CRT.

Thus, the image signal processing device of Fig. 38 converts the image signal in the processing order as illustrated in Fig. 38, thereby enabling adaptation to the driving method of the FPD and natural display similar to that of a CRT display apparatus.

That is, in the image signal processing device of Fig. 38, in a brightness adjustment contrast adjustment unit 10031 and an image quality improvement processing unit 10032, an image signal is subjected to processes similar to those of the brightness adjustment contrast adjustment unit 10011 and image quality improvement processing unit 10012 of Fig. 37, respectively, and a resulting image signal is supplied to an ABL processing unit 10033, a full screen brightness average level detection unit 10036, and a peak detection differential control value detection unit 10037.

In order to obtain, at the LCD, brightness characteristics similar to those of a CRT, the ABL processing unit 10033 performs an ABL emulation process of limiting the level of the image signal from the image quality improvement processing unit 10032 according to the control from an ABL control unit 10038 in a case where an image having a brightness (luminance and its area) of a certain value or more is obtained.

Here, the ABL emulation process in Fig. 38 is a process that emulates the ABL process in Fig. 39.

That is, an ABL process performed in a CRT display apparatus is a process of limiting a current, in a case where a brightness (luminance and its area) of a certain value of more is obtained in a CRT, so as not to cause an excessive amount of electron beam (current). The ABL processing unit 10033, however, performs emulation of the ABL process in Fig. 39.

In Fig. 38, the ABL processing unit 10033 perform a process (ABL emulation process) of limiting a current of an electron beam in the CRT to keep the actual display luminance low, in a case where a bright image having a large area is to be displayed, as a process of limiting the signal level of the image signal, by using a non-linear computation process.

That is, in Fig. 38, the full screen brightness average level detection unit 10036 detects the brightness or average level of the screen on the basis of the image signal from the image quality improvement processing unit 10032, and supplies the brightness or average level of the screen to the peak detection differential control value detection unit 10037 and the ABL control unit 10038. The ABL control unit 10038 detects the brightness of the screen and the area thereof from the detected brightness or average level of the screen from the full screen brightness average level detection unit 10036. The ABL control unit 10038 accordingly generates a control signal for limiting the brightness on the screen, and supplies the control signal to the ABL processing unit 10033. The ABL processing unit 10033 implements (emulates) the ABL process by performing the non-linear computation described above on the image signal from the image quality improvement processing unit 10032 on the basis of the control signal from the ABL control unit 10038.

The image signal subjected to the ABL process in the ABL processing unit 10033 is supplied to a VM processing unit 10034.

The VM processing unit 10034 is a processing block for performing a process equivalent to the VM process in the CRT display apparatus of Fig. 39 on the image signal. The VM processing unit 10034 emulates the VM process performed by the CRT display apparatus of Fig. 39.

That is, in Fig. 38, the peak detection differential control value detection unit 10037 determines a partial peak signal of the image signal or an edge signal obtained by the differentiation of the image signal from the image signal from the image quality improvement processing unit 10032, and supplies the result to a VM control unit 10039 together with the brightness or average level of the screen from the full screen brightness average level detection unit 10036. The VM control unit 10039 generates a VM control signal for partially changing the level of the image signal, which is equivalent to the VM coil driving signal in the CRT display apparatus, based on the partial peak signal of the image signal, the edge signal obtained by the differentiation of the image signal, the brightness of the screen, or the like from the peak detection differential control value detection unit 10037, and supplies the VM control signal to the VM processing unit 10034.

The VM processing unit 10034 performs a process for partially changing the level of the image signal from the ABL processing unit 10033 according to the VM control signal generated by the VM control unit 10039. That is, the VM processing unit 10034 performs a process such as partial correction of the image signal or enhancement of an edge portion or a peak of the image signal.

Here, in the CRT display apparatus of Fig. 39, a VM process is performed in order to supplement insufficient change in luminance at a rising edge of the signal in the CRT 10056. Instead of applying correction to the image signal itself, the deflection velocity (time) of horizontal deflection which is specific to the CRT 10056 is changed using the VM coil located in the deflection yoke DY. Consequently, the luminance is changed.

The VM processing unit 10034 performs a computation process of computing a correction value equivalent to the amount of change in luminance caused by the VM process performed in the CRT display apparatus and correcting the image signal using this correction value. Accordingly, the VM process performed in the CRT display apparatus is emulated.

A CRT $\gamma$ processing unit 10035 performs a process of adjusting the level of each color signal (component signal) in order to perform, in the LCD, a $\gamma$ correction process including a process performed in a processing circuit (conversion circuit) for obtaining $\gamma$ characteristics equivalent to those of a CRT, which is provided in an LCD panel of the related art inside the panel, and a color temperature compensation process.

Here, the CRT $\gamma$ processing unit 10035 in Fig. 38 is a section that corrects electro-optical conversion characteristics necessary for representing a plurality of display characteristics as well as the characteristics of a CRT, such as a PDP or LED display, on the same LCD screen. The CRT $\gamma$ processing unit 10035 performs, in the present embodiment, a process necessary for adjusting the input-voltage-transmittance characteristic of the LCD to the electro-luminance characteristic of a CRT.

That is, in Fig. 38, the display color temperature compensation control unit 10040 segments the display screen of the LCD into a plurality of display areas (for example, the display regions #0 to #3 of Fig. 2), and generates a control signal for displaying as a CRT color temperature a display color temperature of a display area, where an image with image quality similar to that of an image that would be displayed on a CRT in a system (for example, the monitor system of Fig. 1) for presenting, to the individual display areas, images with image quality similar to that of images that would be displayed on display devices having a plurality of different display characteristics, in order to perform control to adjust the balance between the respective color signals (component signals). The control signal is supplied to the CRT γ processing unit 10035. Then, the CRT γ processing unit 10035 also performs a process of adjusting the balance between the respective color signals of the image signal from the VM processing unit 10034 according to the control signal from the display color temperature compensation control unit 10040.

White balance, color temperature, and luminance change with respect thereto differ depending on a CRT, an LCD, and a PDP. Thus, the display color temperature compensation control unit 10040 of Fig. 38 is necessary.

The process performed by the CRT γ processing unit 10035 according to the control signal from the display color temperature compensation control unit 10040 includes a process performed by a processing circuit that has converted the gradation characteristics of each panel so as to become equivalent to those of a CRT, which has been traditionally processed within a flat panel such as an LCD. A process of absorbing the difference in characteristic from one display panel to another is performed.

Then, the CRT γ processing unit 10035 subjects the image signal from the VM processing unit 10034 to the foregoing processes. Thereafter, the CRT γ processing unit 10035 supplies the processed image signal to an LCD as an FPD (not illustrated) for display.

As above, the image signal processing device of Fig. 38 not only replaces the process performed in a CRT display apparatus with an image signal process but also takes a processing procedure (processing procedure in which the process of the VM processing unit 10034 is performed after the process of the ABL processing unit 10033 and in which the process of the CRT γ processing unit 10035 is performed after the process of the VM processing unit 10034) into account. This enables more accurate adjustment of the quality of the display on the LCD so as to be close to the image quality of an image displayed on a CRT display apparatus. According to the image signal processing device of Fig. 38, therefore, it is possible to output an image to the LCD using display characteristics equivalent to those of a CRT.

According to the image signal processing device of Fig. 38, furthermore, it is possible to emulate display characteristics caused by different characteristics of a CRT itself, and it is possible to switch between different tints or textures using the same LCD. For example, it is possible to facilitate accurate color adjustment or image quality adjustment, and the like at the sending time by comparison of the difference in color development between an EBU fluorescent material and a normal fluorescent material on the same screen.

Further, according to the image signal processing device of Fig. 38, likewise, it is possible to easily confirm the difference in display characteristics between an LCD and a CRT.

According to the image signal processing device of Fig. 38, furthermore, it is possible to display an image with "favorite image quality" in its original meaning.

Further, according to the image signal processing device of Fig. 38, it is possible to provide simultaneous viewing of images displayed on display devices having different characteristics (for example, CRTs having different fluorescent materials, an LCD and a CRT, or the like) by changing the processing range within the display screen. This facilitates utilization for purposes such as comparison and adjustment.

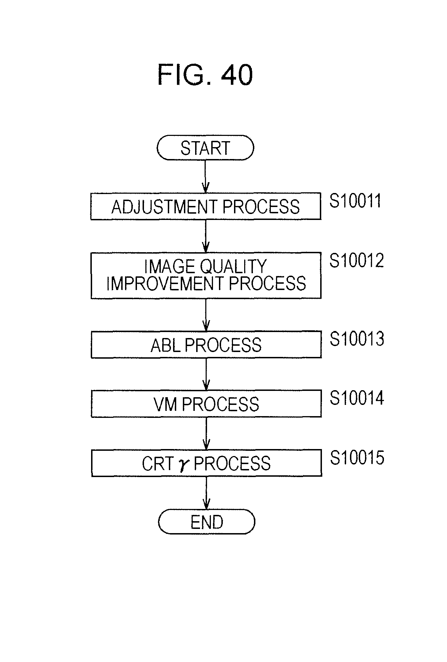

Next, the flow of a process for an image signal by the image signal processing device of Fig. 38 will be explained with reference to a flowchart of Fig. 40.

When an image signal is supplied to the brightness adjustment contrast adjustment unit 10031, in step S10011, the brightness adjustment contrast adjustment unit 10031 performs brightness adjustment of the image signal supplied thereto, followed by contrast adjustment, and supplies a resulting image signal to the image quality improvement processing unit 10032. The process proceeds to step S10012.

In step S10012, the image quality improvement processing unit 10032 performs an image signal process including number-of-pixels conversion and the like on the image signal from the brightness adjustment contrast adjustment unit 10011, and supplies an image signal obtained after the image signal process to the ABL processing unit 10033, the full screen brightness average level detection unit 10036, and the peak detection differential control value detection unit 10037. The process proceeds to step S10013.

Here, the full screen brightness average level detection unit 10036 detects the brightness or average level of the screen on the basis of the image signal from the image quality improvement processing unit 10032, and supplies the brightness or average level of the screen to the peak detection differential control value detection unit 10037 and the ABL control unit 10038. The ABL control unit 10038 generates a control signal for limiting the brightness of the screen on the basis of the detected brightness or average level of the screen from the full screen brightness average level detection unit 10036, and supplies the control signal to the ABL processing unit 10033.

Further, the peak detection differential control value detection unit 10037 determines a partial peak signal of the image signal or an edge signal obtained by the differentiation of the image signal from the image signal from the image quality improvement processing unit 10032, and supplies the result to the VM control unit 10039 together with the brightness or average level of the screen from the full screen brightness average level detection unit 10036. The VM control unit 10039 generates a VM control signal equivalent to the VM coil driving signal in the CRT display apparatus on the basis of the partial peak signal of the image signal, the edge signal obtained by the differentiation of the image signal, the brightness of the screen, or the like from the peak detection differential control value detection unit 10037, and supplies the VM control signal to the VM processing unit 10034.

In step S10033, the ABL processing unit 10033 applies a process that emulates an ABL process to the image signal from the image quality improvement processing unit 10032.

That is, the ABL processing unit 10033 performs a process (ABL emulation process) that emulates an ABL process such as limiting the level of the image signal from the image quality improvement processing unit 10032 according to the control from the ABL control unit 10038, and supplies the image signal obtained as a result of the process to the VM processing unit 10034.

Then, the process proceeds from step S10013 to step S10014, in which the VM processing unit 10034 applies a process that emulates a VM process to the image signal from the ABL processing unit 10033.

That is, in step S10014, the VM processing unit 10034 performs a process (VM emulation process) that emulates a VM process such as correcting the luminance of the image signal from the ABL processing unit 10033 according to the VM control signal supplied from the VM control unit 10039, and supplies the image signal obtained as a result of the process to the CRT γ processing unit 10035. The process proceeds to step S10015.

In step S10015, the CRT γ processing unit 10035 subjects the image signal from the VM processing unit 10034 to a γ correction process, and further performs a color temperature compensation process of adjusting the balance of the respective colors of the image signal from the VM processing unit 10034 according to the control signal from the display color temperature compensation control unit 10040. Then, the CRT γ processing unit 10035 supplies the image signal obtained as a result of the color temperature compensation process to an LCD as an FPD (not illustrated) for display.

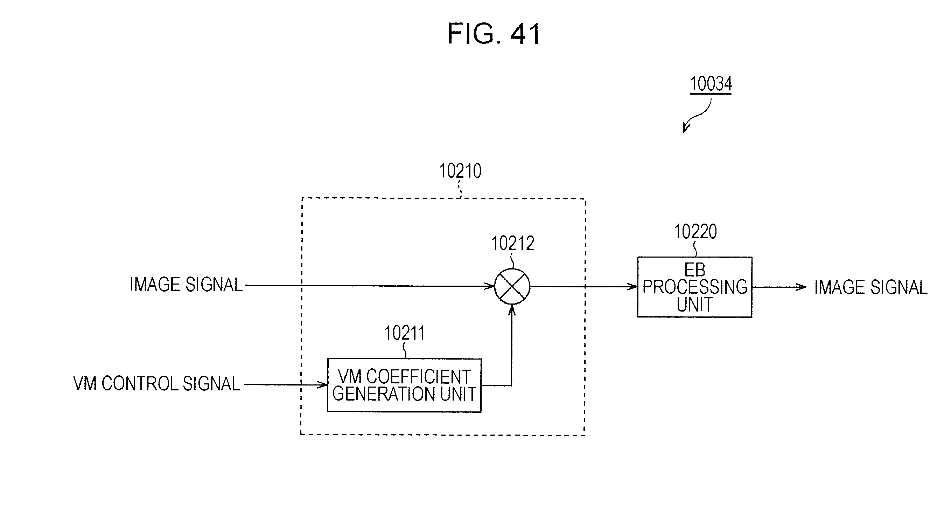

Next, Fig. 41 is a block diagram illustrating an example structure of the VM processing unit 10034 of Fig. 38.

In Fig. 41, the VM processing unit 10034 is constructed from a luminance correction unit 10210 and an EB processing unit 10220.

The luminance correction unit 10210 performs a luminance correction process, for the image signal supplied from the ABL processing unit 10033 (Fig. 38), for correcting the amount of influence of a change in deflection velocity of horizontal deflection of an electron beam of the CRT display apparatus on the luminance, and supplies the image signal obtained as a result of the luminance correction process to the EB processing unit 10220.

That is, the luminance correction unit 10210 is constructed from a VM coefficient generation unit 10211 and a computation unit 10212.

The VM coefficient generation unit 10211 is supplied with a VM control signal from the VM control unit 10039 (Fig. 38). The VM coefficient generation unit 10211 generates a VM coefficient according to the VM control signal from the VM control unit 10039, and supplies the VM coefficient to the computation unit 10212.

The computation unit 10212 is supplied with, in addition to the VM coefficient from the VM coefficient generation unit 10211, the image signal from the ABL processing unit 10033 (Fig. 38).

The computation unit 10212 multiplies the image signal from the ABL processing unit 10033 (Fig. 38) by the VM coefficient from the VM coefficient generation unit 10211 to correct this image signal for the amount of influence of a change in deflection velocity of horizontal deflection of an electron beam of the CRT display apparatus on the luminance, and supplies an image signal obtained after the correction to the EB processing unit 10220.

The EB processing unit 10220 subjects the image signal from the luminance correction unit 10210 (image signal processed by the ABL processing unit 10033 and further processed by the luminance correction unit 10210) to a process (EB (Erectron Beam) emulation process) that emulates the electron beam of the CRT display apparatus spreading out and impinging on a fluorescent material of the CRT display apparatus, and supplies a resulting image signal to the CRT γ processing unit 10035 (Fig. 38).

As above, the VM emulation process performed in the VM processing unit 10034 is composed of the luminance correction process performed in the luminance correction unit 10210 and the EB emulation process performed in the EB processing unit 10220.

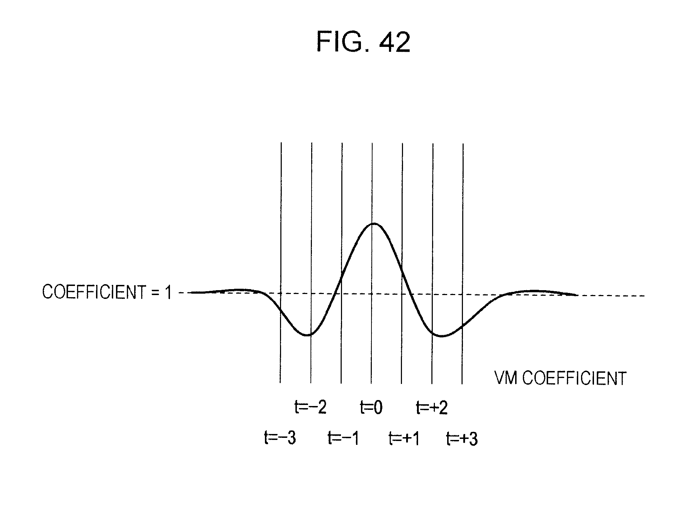

Fig. 42 illustrates an example of a VM coefficient generated in the VM coefficient generation unit 10211 of Fig. 41.

The VM coefficient is a coefficient to be multiplied with the pixel values (luminance) of pixels to be corrected for the luminance in order to delay, in the CRT display apparatus, the deflection velocity of horizontal deflection (deflection in the horizontal direction) at the position of a pixel of interest (here, a pixel to be corrected so as to enhance the luminance by a VM process) by the VM coil driving signal to equivalently emulate a VM process of increasing the luminance of the pixel of interest, where a plurality of pixels arranged in the horizontal direction with the pixel of interest as the center thereof are used as the pixels to be corrected for the luminance.

In the VM coefficient generation unit 10211, as illustrated in Fig. 42, a VM coefficient to be multiplied with the pixel value of the pixel of interest among the pixels to be corrected for the luminance is set to a value of 1 or more, and a VM coefficient to be multiplied with the other pixels is set to a value of 1 or less so that the gain at the computation unit 10212 can be 1.

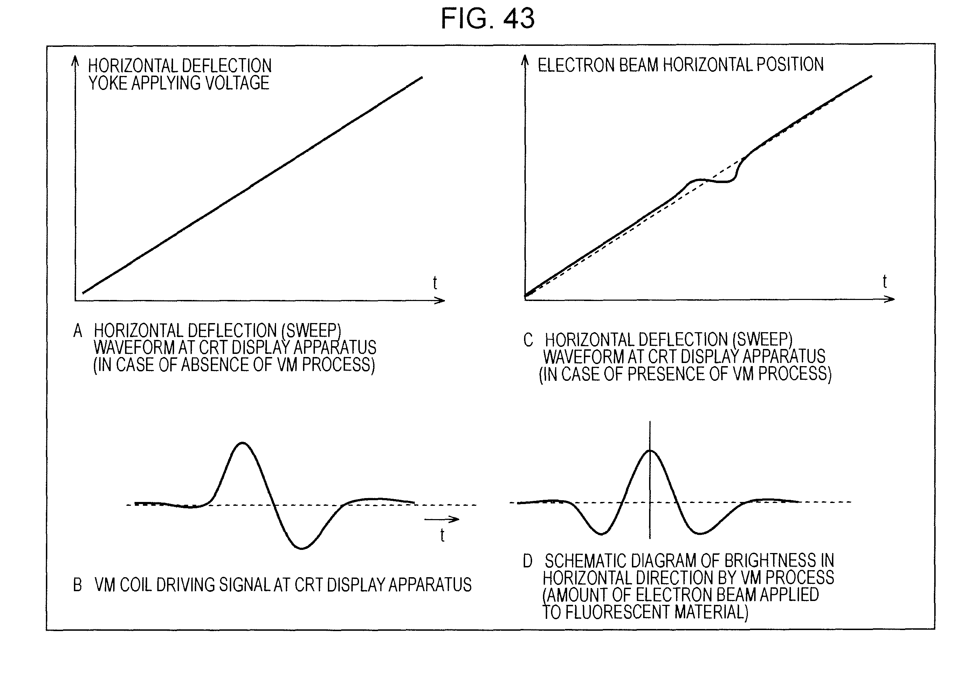

Fig. 43 illustrates a method of determining a VM coefficient generated in the VM coefficient generation unit 10211 of Fig. 41.

That is, part A of Fig. 43 illustrates the waveform of a voltage (deflection voltage) applied to the deflection yoke DY (Fig. 39) of the CRT display apparatus.

As illustrated in part A of Fig. 43, a deflection voltage that changes with a certain gradient with time t is repeatedly applied to the deflection yoke DY (Fig. 39) at horizontal scanning intervals.

Part B of Fig. 43 illustrates a VM coil driving signal generated in the VM driving circuit 10061 (Fig. 39) of the CRT display apparatus.

In the CRT display apparatus, the VM coil located in the deflection yoke DY (Fig. 39) is driven by the VM coil driving signal of part B of Fig. 43, and the deflection velocity of an electron beam is partially changed by a magnetic field generated by the VM coil, as illustrated in part C of Fig. 43.

That is, part C of Fig. 43 illustrates a temporal change of the position in the horizontal direction of an electron beam in a case where the VM coil generates a magnetic field according to the VM coil driving signal of part B of Fig. 43.

Due to the magnetic field generated by the VM coil, the temporal change of the position in the horizontal direction of the electron beam (the gradient of the graph of part C of Fig. 43), i.e., the deflection velocity of the horizontal deflection of the electron beam, is no longer constant (changes) for a period or the like during which the magnetic field is generated.

Part D of Fig. 43 illustrates a differentiated value of a subtraction value obtained by subtracting the temporal change of the position in the horizontal direction of the electron beam of part C of Fig. 43 from the temporal change of the position in the horizontal direction of the electron beam caused by the deflection voltage of part A of Fig. 43.

If a case where the horizontal deflection of the electron beam is performed only by the deflection voltage of part A of Fig. 43 is used as a reference, in a case where the VM coil generates a magnetic field according to the VM coil driving signal, the intensity (amount) of the electron beam impinging on the fluorescent materials of the CRT 10056 (Fig. 39) of the CRT display apparatus, i.e., the luminance (brightness) of the image displayed on the CRT 10056, changes in the manner illustrated in part D of Fig. 43.

The VM coefficient generation unit 10211 (Fig. 41) generates a value equivalent to the differentiated value of part D of Fig. 43 as a VM coefficient.

Note that the specific value of the VM coefficient, the range of pixels to be multiplied with the VM coefficient (the pixel value of how many pixels arranged in the horizontal direction with the pixel of interest as the center thereof is to be multiplied with the VM coefficient), the pixel value (level) of the pixel to be set as a pixel of interest, and the like are determined depending on the specification or the like of the CRT display apparatus for which the image signal processing device of Fig. 38 emulates the display.

Next, the EB emulation process performed in the EB processing unit 10220 of Fig. 41 will be explained.

In the EB emulation process, as described above, a process that emulates an electron beam of the CRT display apparatus spreading out and impinging on a fluorescent material of the CRT 10056 (Fig. 39) of the CRT display apparatus is performed.

That is, now, if it is assumed that a pixel (sub-pixel) corresponding to a fluorescent material to which an electron beam is to be radiated is set as a pixel of interest, in a case where the intensity of the electron beam is high, the shape of the spot of the electron beam becomes large so that the electron beam impinges not only on the fluorescent material corresponding to the pixel of interest but also on fluorescent materials corresponding to neighboring pixels thereto to have the influence on the pixel values of the neighboring pixels. In the EB emulation process, a process that emulates this influence is performed.

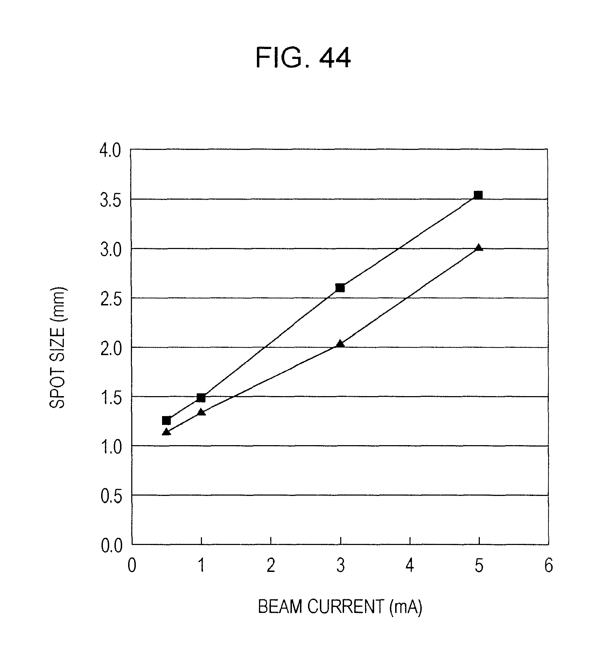

Fig. 44 illustrates a relationship between current (beam current) applied to an electron gun that radiates an electron beam and the diameter (spot size) of a spot formed by the electron beam radiated on the display screen of a CRT in correspondence with the beam current.

Note that in Fig. 44, the relationship between the beam current and the spot size for two CRT types is illustrated.

Although the relationship between the beam current and the spot size may differ depending on the CRT type, the setting of maximum luminance, or the like, the spot size increases as the beam current increases. That is, the higher the luminance, the larger the spot size.

Such a relationship between the beam current and the spot size is described in, for example, Japanese Unexamined Patent Application Publication No. 2004- 39300 or the like.

The display screen of the CRT is coated with a fluorescent materials (fluorescent substances) of three colors, namely, red, green, and blue, and electron beams (used) for red, green, and blue impinge on the red, green, and blue fluorescent materials, thereby discharging light of red, green, and blue. Accordingly, an image is displayed.

The CRT is further provided with a color separation mechanism on the display screen thereof having openings through which electron beams pass so that the electron beams of red, green, and blue are radiated on the fluorescent materials of three colors, namely, red, green, and blue.

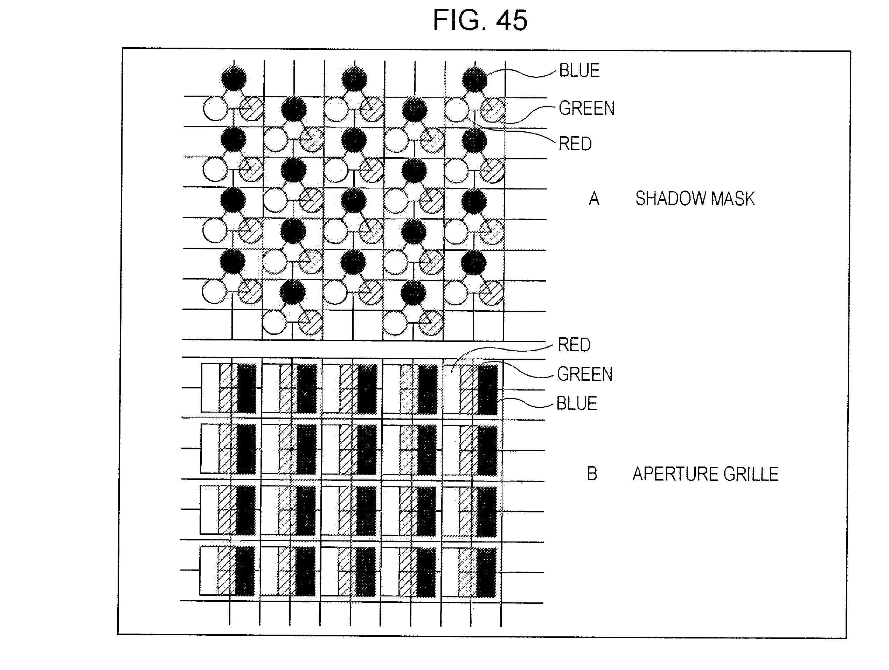

Fig. 45 illustrates the color separation mechanism.

That is, part A of Fig. 45 illustrates a shadow mask which is a color separation mechanism.

The shadow mask is provided with circular holes serving as openings, and electron beams passing through the holes are radiated on fluorescent materials.

Note that in part A of Fig. 45, a blank circle mark denotes a hole through which an electron beam is radiated on a red fluorescent material, a diagonally hatched circle mark denotes a hole through which an electron beam is radiated on a green fluorescent material, and a black circle mark denotes a hole through which an electron beam is radiated on a blue fluorescent material.

Part B of Fig. 45 illustrates an aperture grille which is another color separation mechanism.

An aperture grille is provided with slits serving as openings extending in the vertical direction, and electron beams passing through the slits are radiated on fluorescent materials.

Note that in part B of Fig. 45, a blank rectangle denotes a slit through which an electron beam is radiated on a red fluorescent material, a diagonally hatched rectangle denotes a slit through which an electron beam is radiated on a green fluorescent material, and a black rectangle denotes a slit through which an electron beam is radiated on a blue fluorescent material.

As explained in Fig. 44, the spot size of an electron beam increases as the luminance increases.

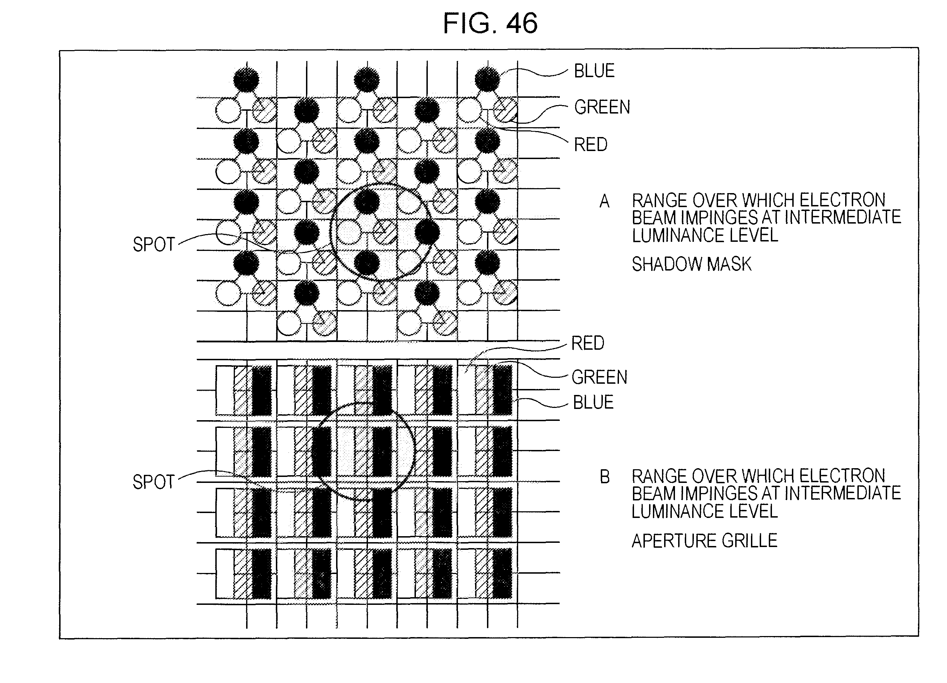

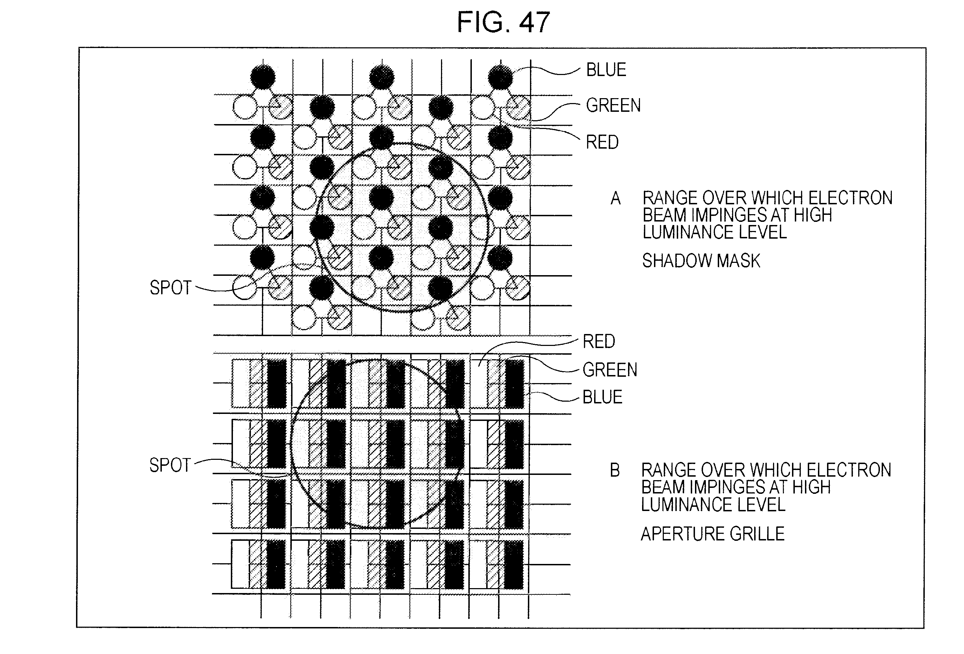

Figs. 46 and 47 schematically illustrate a spot of an electron beam formed on the color separation mechanisms in a case where the luminance level is about intermediate and a spot of an electron beam formed on the color separation mechanisms in a case where the luminance level is high, respectively.

Note that parts A of Figs. 46 and 47 illustrate, in a case where the color separation mechanism is a shadow mask, a spot of an electron beam formed on the shadow mask, and parts B of Figs. 46 and 47 illustrate, in a case where the color separation mechanism is an aperture grille, a spot of an electron beam formed on the aperture grille.

As the luminance increases, the intensity of the center portion of (the spot of) the electron beam increases, and accordingly the intensity of a portion around the electron beam also increases. Thus, the spot size of the spot of the electron beam formed on the color separation mechanism is increased. Consequently, the electron beam is radiated not only on the fluorescent material corresponding to the pixel of interest (the pixel corresponding to the fluorescent material to be irradiated with the electron beam) but also on the fluorescent materials corresponding to pixels surrounding the pixel of interest.

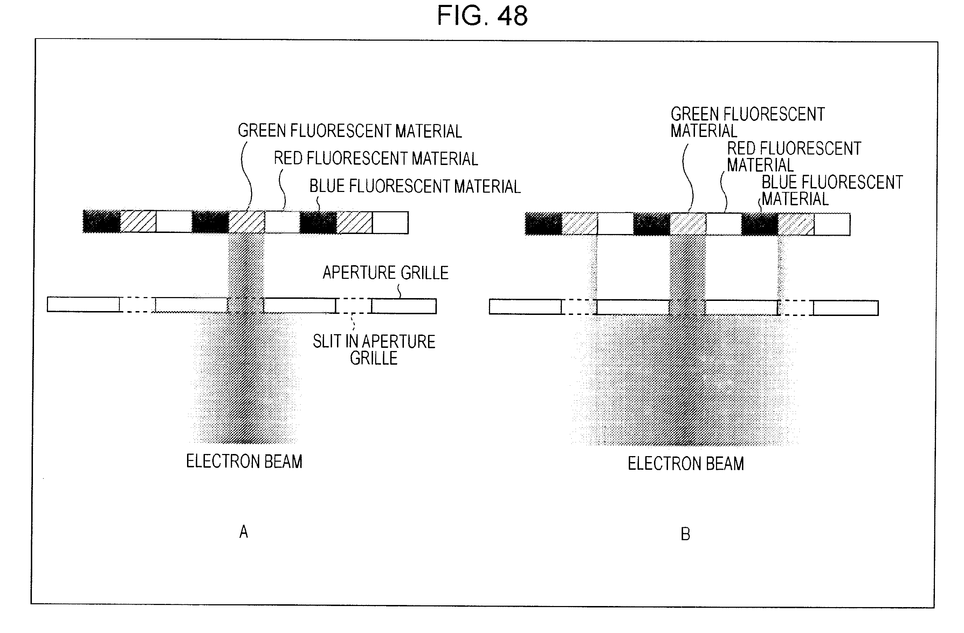

Fig. 48 is a cross-sectional view illustrating a manner in which an electron beam is radiated in a case where an aperture grille is adopted as a color separation mechanism.

That is, part A of Fig. 48 illustrates a manner in which an electron beam is radiated in a case where the beam current has a first current value, and part B of Fig. 48 illustrates a manner in which an electron beam is radiated in a case where the beam current has a second current value larger than the first current value.

In Fig. 48, a pixel corresponding to a green fluorescent material is set as a pixel of interest. In a case where the beam current has the first current value, as illustrated in part A of Fig. 48, the electron beam has a spot size which falls within a range between adjacent slits. The electron beam is radiated only on the fluorescent material corresponding to the pixel of interest, and is shut out so as not to be further radiated on any other fluorescent material.

In contrast, in a case where the beam current has the second current value, as illustrated in part B of Fig. 48, the electron beam has a spot size which falls outside a range between adjacent slits, and is also radiated on other fluorescent materials as well as the fluorescent material corresponding to the pixel of interest.

That is, in a case where the beam current has the second current value, the spot size of the electron beam becomes large enough to include other slits as well as the slit for the fluorescent material corresponding to the pixel of interest, and, consequently, the electron beam passes through the other slits and is also radiated on the fluorescent materials other than the fluorescent material corresponding to the pixel of interest.

Note that as illustrated in part B of Fig. 48, the beam current in a case where an electron beam also passes through slits other than the slit for the fluorescent material corresponding to the pixel of interest is determined based on the relationship between the spot size of the electron beam and the slit width of slits in the aperture grille.

In the EB emulation process, as above, the influence of an image caused by radiating an electron beam not only on the fluorescent material corresponding to the pixel of interest but also on other fluorescent materials is reflected in the image signal.

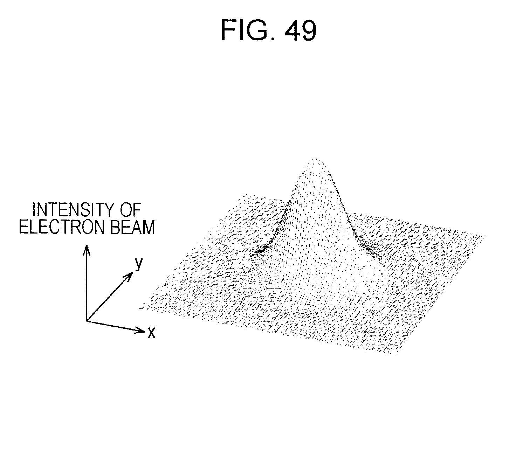

Here, Fig. 49 illustrates an intensity distribution of electron beams, which is approximated by two-dimensional normal distribution (Gaussian distribution).

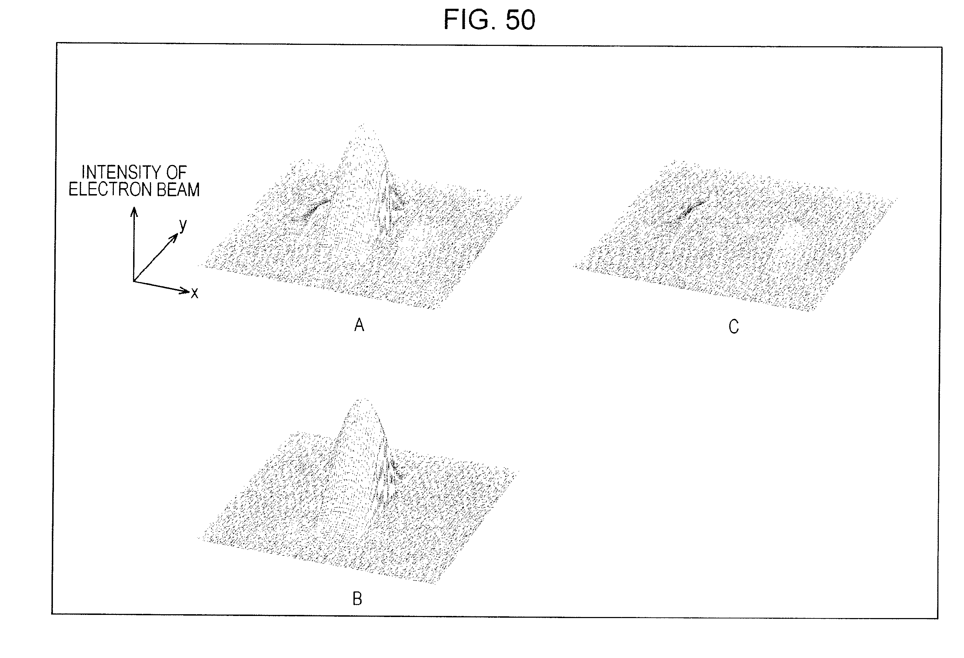

Fig. 50 illustrates an intensity distribution of electron beams passing through slits in the aperture grille among the electron beams of Fig. 49.

That is, part A of Fig. 50 illustrates an intensity distribution of the electron beams passing through the slit for the fluorescent material corresponding to the pixel of interest and the electron beams passing through left and right slits adjacent to the slit.

A majority portion of electron beams passes through the slit for the fluorescent material corresponding to the pixel of interest while a portion of the remainder of the electron beams passes through a left slit adjacent to and on the left of the slit for the fluorescent material corresponding to the pixel of interest and a right slit adjacent to and on the right of the slit for the fluorescent material corresponding to the pixel of interest. The electron beams passing therethrough have the influence on the display of the pixel corresponding to the fluorescent material of the left slit and the pixel corresponding to the fluorescent material of the right slit.

Note that part B of Fig. 50 illustrates an intensity distribution of the electron beams passing through the slit for the fluorescent material corresponding to the pixel of interest within the intensity distribution of the electron beams illustrated in part A of Fig. 50, and part C of Fig. 50 illustrates an intensity distribution of the electron beams passing through the left and right slits.

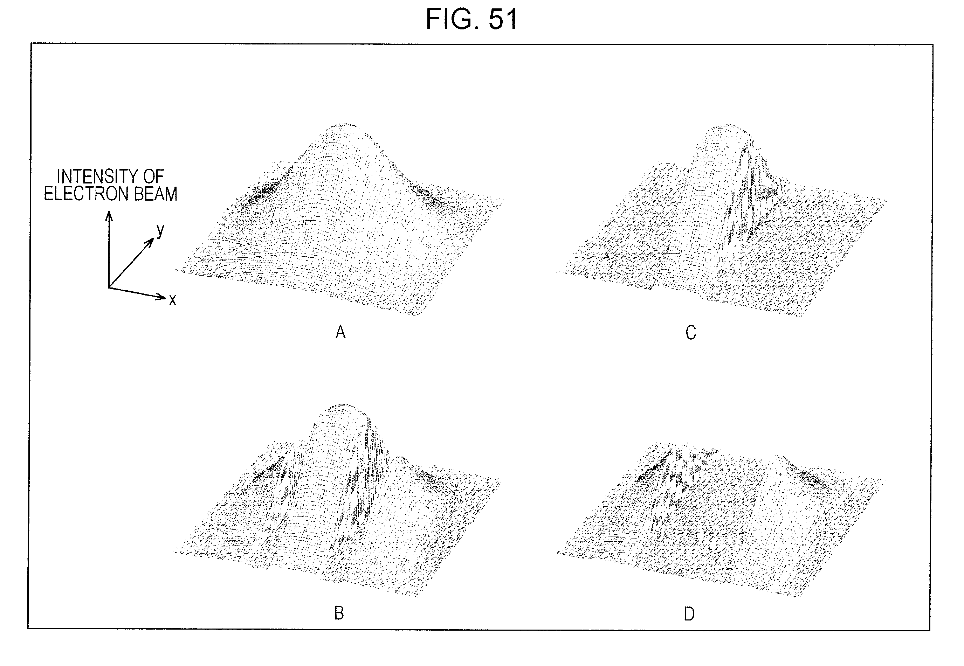

Fig. 51 illustrates an intensity distribution of electron beams having a higher intensity than that in the case of Fig. 49, and an intensity distribution of the electron beams passing through the slits in the aperture grille among the electron beams.

That is, part A of Fig. 51 illustrates an intensity distribution of electron beams having a higher intensity than that in the case of Fig. 49.

The electron beams of part A of Fig. 51 have a spot size (range having an intensity greater than or equal to a predetermined value) larger than the electron beams of Fig. 49.

Part B of Fig. 51 illustrates an intensity distribution of the electron beams passing through the slits in the aperture grille among the electron beams of part A of Fig. 51.

In part B of Fig. 51, the electron beams passing through the left and right slits have a higher intensity than those in the case of Fig. 50, and therefore have a larger influence on the display of the pixel corresponding to the fluorescent material of the left slit and the pixel corresponding to the fluorescent material of the right slit.

Note that part C of Fig. 51 illustrates, within the intensity distribution of the electron beams illustrated in part B of Fig. 51, an intensity distribution of the electron beams passing through the slit for the fluorescent material corresponding to the pixel of interest, and part D of Fig. 51 illustrates an intensity distribution of the electron beams passing through the left and right slits.

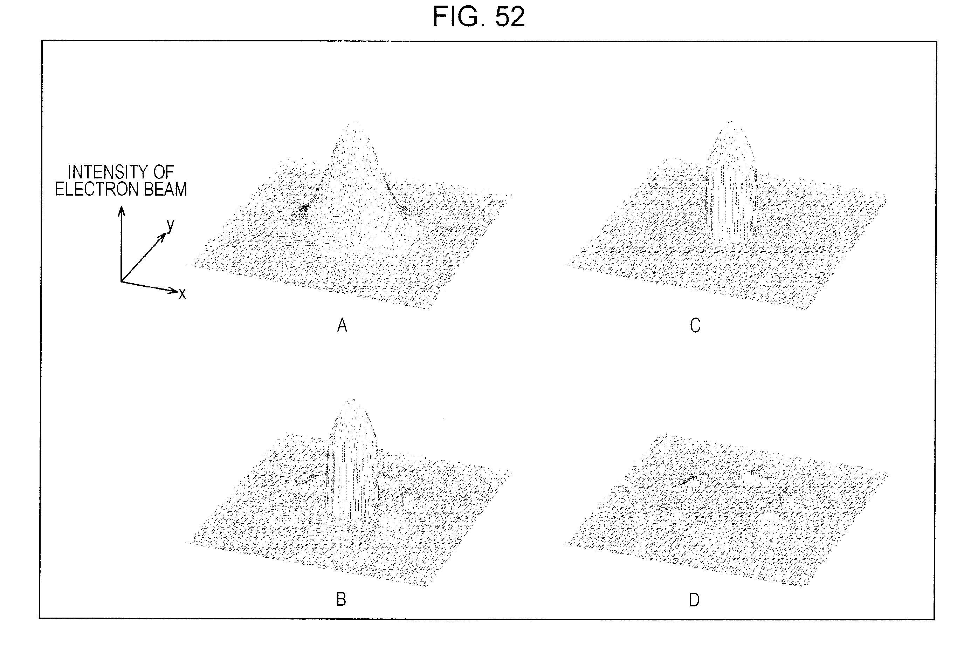

Fig. 52 illustrates the intensity distribution of the electron beams illustrated in Fig. 49 and an intensity distribution of the electron beams passing through the slits in the shadow mask among the electron beams.

That is, part A of Fig. 52 illustrates the intensity distribution of electron beams which is the same as that of Fig. 49.

Part B of Fig. 52 illustrates an intensity distribution of the electron beams passing through the holes in the shadow mask among the electron beams of part A of Fig. 52.

That is, part B of Fig. 52 illustrates an intensity distribution of the electron beams passing through the hole in the fluorescent material corresponding to the pixel of interest and the electron beams passing through holes (neighboring holes) neighboring this hole.

Part C of Fig. 52 illustrates, within the intensity distributions of the electron beams illustrated in part B of Fig. 52, an intensity distribution of the electron beams passing through the hole in the fluorescent material corresponding to the pixel of interest, and part D of Fig. 52 illustrates an intensity distribution of the electron beams passing through the neighboring holes.

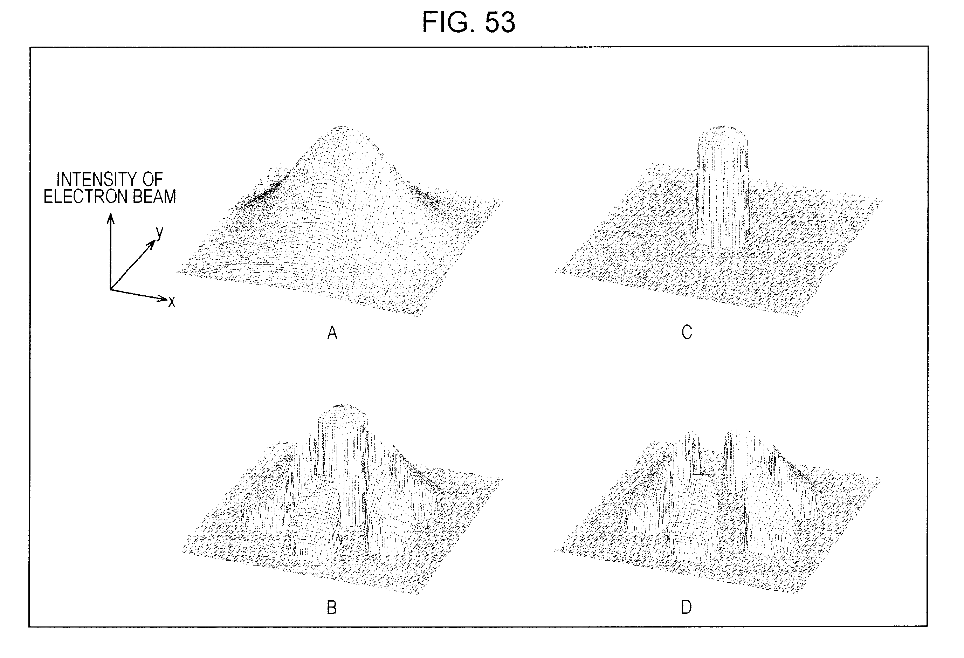

Fig. 53 illustrates an intensity distribution of electron beams having a higher intensity than that in the case of Fig. 52, and an intensity distribution of the electron beams passing through holes in the shadow mask among the electron beams.

That is, part A of Fig. 53 illustrates an intensity distribution of electron beams having a higher intensity than that in the case of Fig. 52.

The electron beams of part A of Fig. 53 have a larger spot size (range having an intensity greater than or equal to a predetermined value) than the electron beams of part A of Fig. 52.

Part B of Fig. 53 illustrates an intensity distribution of electron beams passing through holes in the shadow mask among the electron beams of part A of Fig. 53.

In part B of Fig. 53, the intensity of the electron beams passing through the neighboring holes is higher than that in the case of part B of Fig. 52, and therefore has a larger influence on the display of the pixels corresponding to the fluorescent materials of the neighboring holes compared with the case of part B of Fig. 52.

Part C of Fig. 53 illustrates, within the intensity distribution of the electron beams illustrated in part B of Fig. 53, an intensity distribution of the electron beams passing through the hole in the fluorescent material corresponding to the pixel of interest, and part D of Fig. 53 illustrates an intensity distribution of the electron beams passing through the neighboring holes.

Note that in Figs. 49 to 53, for easy understanding of the spread of a spot of an electron beam, the scale along the height direction representing the intensity of the electron beam is compressed as compared with the scale along the x and y directions representing the position.

Incidentally, the area of a certain section of the one-dimensional normal distribution (normal distribution in one dimension) can be determined by integrating the probability density function f(x) in Equation (21) representing the one-dimensional normal distribution over the section of which the area is to be determined.
[Math. 21]

$$f(x) = \frac{1}{\sqrt{2\pi}\,\sigma} \exp\left(-\frac{(x-\mu)^2}{2\sigma^2}\right)$$

$$\dots \ (21)$$

Here, in Equation (21), $\mu$ represents the average value and $\sigma^2$ represents variance.
As described above, in a case where the distribution of the intensity of an electron beam is approximated by the two-dimensional normal distribution (normal distribution in two dimensions), the intensity of the electron beam in a certain range can be determined by integrating the probability density function f(x, y) in Equation (22) representing the two-dimensional normal distribution over the range for which the intensity is to be determined.
[Math. 22]

$$f(x, y) = \frac{1}{2\pi\,\sigma_x\sigma_y\sqrt{1-\rho_{xy}^2}} \exp\left[-\frac{1}{2(1-\rho_{xy}^2)}\left\{\frac{(x-\mu_x)^2}{\sigma_x^2}\right.\right.$$

$$\left.\left.+\frac{(y-\mu_y)^2}{\sigma_y^2}-\frac{2\rho_{xy}(x-\mu_x)(y-\mu_y)}{\sigma_x\sigma_y}\right\}\right]$$

$$\dots \ (22)$$

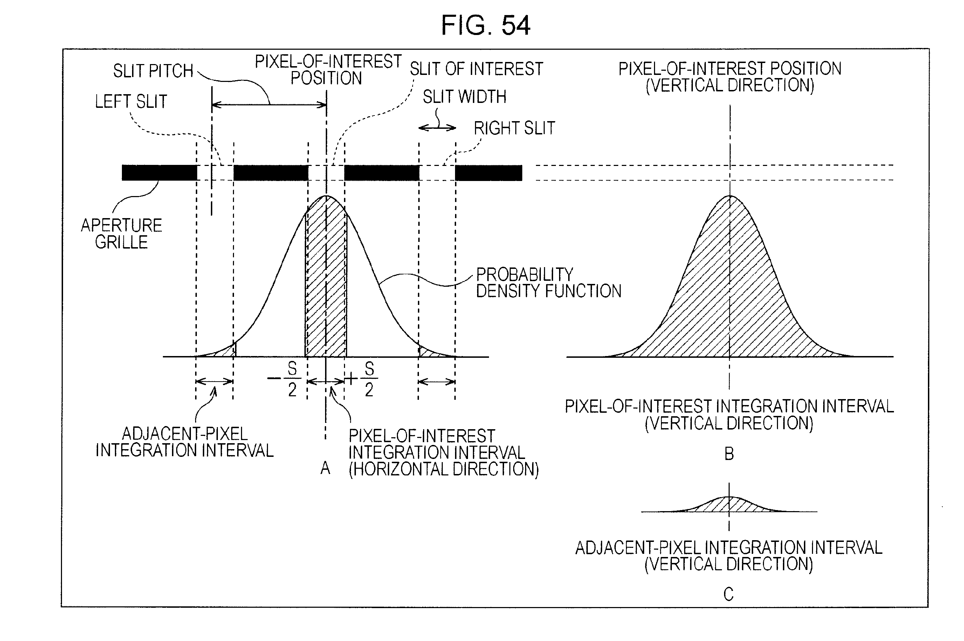

Here, in Equation (22), $\mu_x$ represents the average value in the x direction and $\mu_y$ represents the average value in the y direction. Further, $\sigma_x^2$ represents the variance in the x direction and $\sigma_y^2$ represents the variance in the x direction. $\rho_{xy}$ represents the correlation coefficient in the x and y directions (the value obtained by dividing the covariance in the x and y directions by the product of the standard deviation $\sigma_x$ in the x direction and the standard deviation $\sigma_y$ in the y direction).
The average value (average vector) $(\mu_x, \mu_y)$ ideally represents the position (x, y) of the center of the electron beam. Now, for ease of explanation, it is assumed that the position (x, y) of the center of the electron beam is (0, 0) (origin). Then, the average values $\mu_x$ and $\mu_y$ become 0.
Further, in a CRT display apparatus, since an electron gun, a cathode, and the like are designed so that a spot of an electron beam can be round, the correlation coefficient $\rho_{xy}$ is set to 0.
Now, if it is assumed that the color separation mechanism is an aperture grille, the probability density function f(x, y) in Equation (22) in which the average values $\mu_x$ and $\mu_y$ and the correlation coefficient $\rho_{xy}$ are set to 0 is integrated over the range of a slit. Accordingly, the intensity (amount) of the electron beam passing through the slit can be determined.
That is, Fig. 54 is a diagram explaining the integration for determining the intensity of an electron beam passing through a slit.
Part A of Fig. 54 illustrates the interval of integration in the x direction which is a horizontal direction.
The intensity of an electron beam passing through a slit in a fluorescent material corresponding to a pixel of interest (a slit of interest) can be determined by integrating the probability density function f(x, y) over the range from -S/2 to +S/2, where S denotes the slit width of a slit in the aperture grille in the x direction.
Further, the intensity of the electron beam passing through the left slit can be determined by, for the x direction, integrating the probability density function f(x, y) over the slit width of the left slit. The intensity of the electron beam passing through the right slit can be determined by, for the x direction, integrating the probability density function f(x, y) over the slit width of the right slit.

Parts B and C of Fig. 54 illustrate the interval of integration in the y direction which is a vertical direction.

The intensity of the electron beam passing through the slit of interest can be determined by, for the y direction, as illustrated in part B of Fig. 54, integrating the probability density function f(x, y) over the range from -∞ to +∞.

The intensities of the electron beams passing through the left and right slits can also be determined by, for the y direction, as illustrated in part C of Fig. 54, integrating the probability density function f(x, y) over the range from -∞ to +∞.

In contrast, the overall intensity of the electron beams can be determined by, for both the x and y directions, integrating the probability density function f(x, y) over the range from -∞ to +∞, the value of which is now denoted by $P_0$.

Further, it is assumed that the intensity of the electron beam passing through the slit of interest is represented by $P_1$ and the intensities of the electron beams passing through the left and right slits are represented by $P_L$ and $P_R$, respectively.

In this case, only the intensity $P_1$ within the overall intensity $P_0$ of the electron beams has the influence on the display of the pixel of interest. Due to the display of this pixel of interest, within the overall intensity $P_0$ of the electron beams, the intensity $P_L$ has the influence on the display of the pixel (left pixel) corresponding to the fluorescent material of the left slit, and the intensity $P_R$ influences the display of the pixel (right pixel) corresponding to the fluorescent material of the left slit.

That is, if the overall intensity $P_0$ of the electron beams is used as a reference, $P_1/P_0$ of the intensity of the electron beam has the influence on the display of the pixel of interest. Furthermore, $P_L/P_0$ of the intensity of the electron beam has the influence on the display of the left pixel, and $P_R/P_0$ of the intensity of the electron beam has the influence on the display of the right pixel.

Therefore, if the display of the pixel of interest is used as a reference, the display of the pixel of interest has the influence on the display of the left pixel only by $P_L/P_0/(P_1/P_0)$, and has the influence on the display of the right pixel only by $P_R/P_0/(P_1/P_0)$.

In the EB emulation process, for the left pixel, in order to reflect the influence of the display of the pixel of interest, the pixel value of the left pixel is multiplied by the amount of influence $P_L/P_0/(P_1/P_0)$ of the display of the pixel of interest as an EB coefficient used for the EB emulation process, and a resulting multiplication value is added to the (original) pixel value of the left pixel. Further, in the EB emulation process, a similar process is performed using, as an EB coefficient, the amount of influence of the display of pixels surrounding the left pixel, which has the influence on the display of the left pixel. Accordingly, the pixel value of the left pixel is determined, which takes into account the influence caused by the electron beam spreading out at the time of display of the pixels surrounding the left pixel and impinging on the fluorescent material of the left pixel.

Also for the right pixel, likewise, the pixel value of the right pixel is determined, which takes into account the influence caused by the electron beam spreading out at the time of display of the pixels surrounding the right element and impinging on the fluorescent material of the right pixel.

Note that also in a case where the color separation mechanism is a shadow mask, the EB coefficient used for the EB emulation process can be determined in a manner similar to that in the case of an aperture grille. With regard to a shadow mask, however, the complexity of integration is increased as compared with the case of an aperture grille. With regard to a shadow mask, it is easier to determine the EB coefficient using Monte Carlo Method or the like, from the position of a hole in the shadow mask and the radius of the hole, rather than using the integration described above.

As above, it is theoretically possible to determine the EB coefficient by calculation. However, as illustrated in Fig. 44, the spot size of an electron beam changes depending on the beam current. Therefore, in order to determine the EB coefficient, it is necessary to change the variances $\sigma_x^2$ and $\sigma_y^2$ of the probability density function f(x, y) in Equation (22), which approximates the intensity distribution of the electron beams, for every current value of the beam current.

Further, in the case described above, it is a reasonable premise that an electron beam is incident on a color separation mechanism (an aperture grille and a shadow mask) at a right angle. In actuality, however, the angle at which an electron beam is incident on a color separation mechanism becomes shallow as the incidence occurs apart from the center of the display screen.

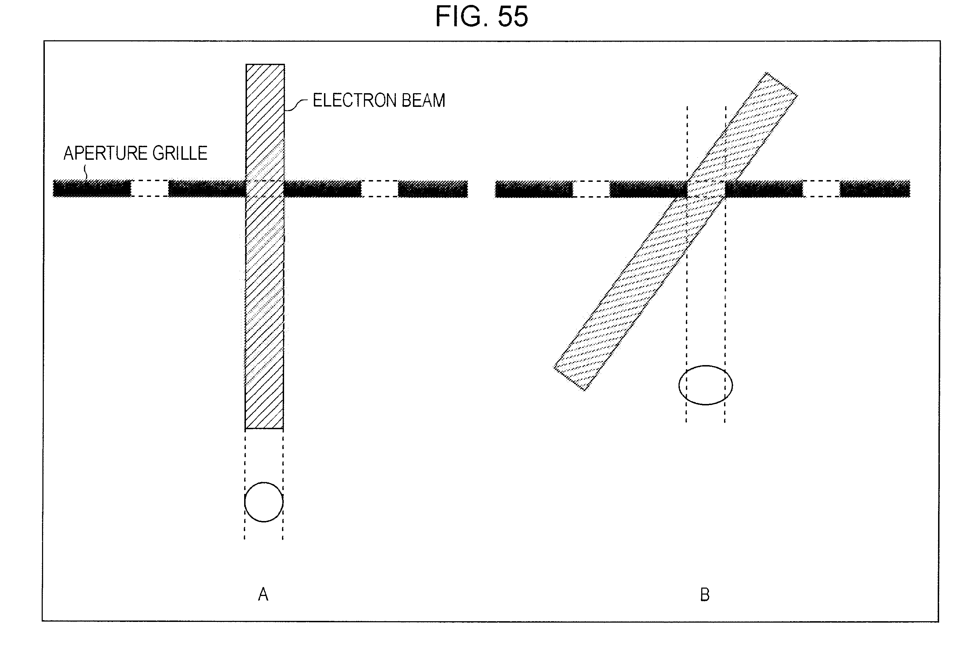

That is, Fig. 55 illustrates a manner in which an electron beam is incident on an aperture grille serving as a color separation mechanism.

Part A of Fig. 55 illustrates a manner in which an electron beam is incident on the aperture grille in the vicinity of the center of the display screen.

As illustrated in part A of Fig. 55, in the vicinity of the center of the display screen, an electron beam is incident perpendicular to the aperture grille.

Part B of Fig. 55 illustrates a manner in which an electron beam is incident on the aperture grille at a position apart from the center of the display screen

As illustrated in part B of Fig. 55, at a position apart from the center of the display screen, an electron beam is incident on the aperture grille at an angle inclined with respect to the perpendicular.

In a case where, as illustrated in part B of Fig. 55, an electron beam is incident on the aperture grille at an angle inclined with respect to the perpendicular, the intensity distribution of electron beams is far from the shape of the probability density function f(x, y) in Equation (22). Thus, if the EB coefficient is determined based on the premise that an electron beam is incident perpendicular to the aperture grille, the accuracy of the EB coefficient is degraded.

From the foregoing, it is desirable that the EB coefficient be determined not only by calculation but also using an experiment.

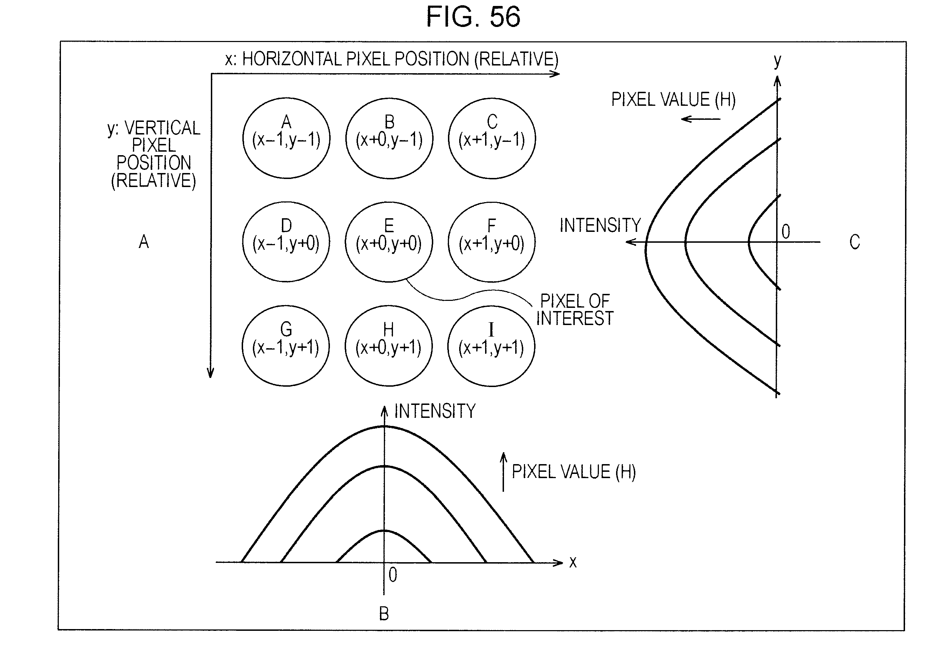

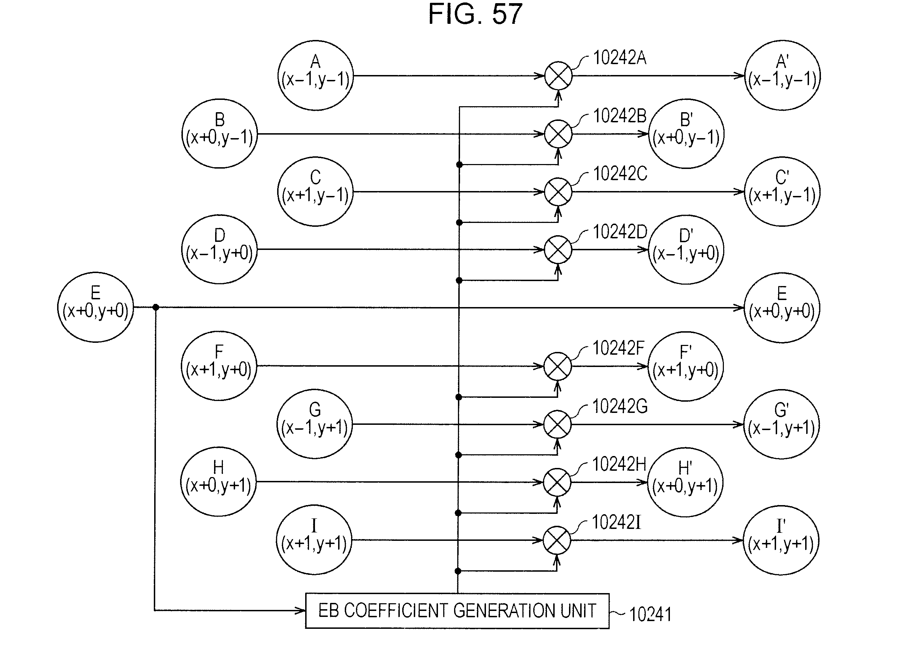

Next, the EB emulation process performed in the EB processing unit 10220 of Fig. 41 will further be explained with reference to Figs. 56 and 57.

Fig. 56 illustrates pixels and an intensity distribution of electron beams.

That is, part A of Fig. 56 illustrates 3 × 3, i.e., nine, pixels A, B, C, D, F, G, H, and I given in horizontal and vertical order, with a pixel E as the center thereof.

Now, it is assumed that in part A of Fig. 56, attention is directed to the pixel E as a pixel of interest. Further, the horizontal direction is set as the x direction and the vertical direction is set as the y direction, and that the positions of the other pixels A to D and F to I with respect to the position (x, y) of the pixel of interest E are represented.

In this case, if it is assumed that the distance between pixels is 1, the position of the pixel A is set to (x-1, y-1), the position of the pixel B to (x, y-1), the position of the pixel C to (x+1, y-1), the position of the pixel D to (x-1, y), the position of the pixel F to (x+1, y), the position of the pixel G to (x-1, y+1), the position of the pixel H to (x, y+1), and the position of the pixel I to (x+1, y+1).

Here, the pixel A is also referred to as the pixel A(x-1, y-1) also using its position (x-1, y-1), and the pixel value of the pixel A(x-1, y-1) is also referred to as a pixel value A. Similarity applies to the other pixels B to I.

Parts B and C of Fig. 56 schematically illustrate an intensity distribution of electron beams when the pixel of interest E(x, y) is displayed on a CRT display apparatus.

That is, part B of Fig. 56 represents the distribution in the x direction of the intensity of the electron beams when the pixel of interest E(x, y) is displayed, and part C of Fig. 56 represents the distribution in the y direction of the intensity of the electron beams when the pixel of interest E(x, y) is displayed.

As the pixel value E of the pixel of interest E(x, y) increases, as illustrated in parts B and C of Fig. 56, the electron beams more spread out and have the influence on the display of the other pixels A(x-1, y-1) to D(x-1, y) and F(x+1, y) to I(x+1, y+1).

Thus, the EB processing unit 10220 of Fig. 41 multiplies an EB coefficient representing the degree to which the electron beams when displaying the pixel of interest E(x, y) have the influence on the display of the other pixels A(x-1, y-1) to D(x-1, y) and F(x+1, y) to I(x+1, y+1) by the pixel values A to D and F to I of the other pixels A(x-1, y-1) to D(x-1, y) and F(x+1, y) to I(x+1, y+1) to thereby determine the amount of influence of the electron beams on the display of the other pixels A(x-1, y-1) to D(x-1, y) and F(x+1, y) to I(x+1, y+1) when displaying the pixel of interest E(x, y). Taking the amount of influence into account, the EB processing unit 10220 decides the pixel values, obtained after the EB emulation process, of the other pixels A(x-1, y-1) to D(x-1, y) and F(x+1, y) to I(x+1, y+1).

Fig. 57 illustrates an example structure of a circuit that determines the amount of influence of the electron beams (hereinafter referred to as an amount of EB influence, as desired) on the display of the other pixels A(x-1, y-1) to D(x-1, y) and F(x+1, y) to I(x+1, y+1) when displaying the pixel of interest E(x, y).

The pixel value A is supplied to a computation unit 10242A, the pixel value B to a computation unit 10242B, the pixel value C to a computation unit 10242C, the pixel value D to a computation unit 10242D, the pixel value E to an EB coefficient generation unit 10241, the pixel value F to a computation unit 10242F, the pixel value G to a computation unit 10242G, the pixel value H to a computation unit 10242H, and the pixel value I to a computation unit 10242I.

The EB coefficient generation unit 10241 generates EB coefficients $A_{EB}$, $B_{EB}$, $C_{EB}$, $D_{EB}$, $F_{EB}$, $G_{EB}$, $H_{EB}$, and $I_{EB}$ representing the degree to which the electron beams when displaying the pixel of interest E(x, y) have the influence on the display of the other pixels A(x-1, y-1) to D(x-1, y) and F(x+1, y) to I(x+1, y+1) on the basis of the pixel value E. The EB coefficient generation unit 10241 supplies the EB coefficients $A_{EB}$, $B_{EB}$, $C_{EB}$, $D_{EB}$, $F_{EB}$, $G_{EB}$, $H_{EB}$, and $I_{EB}$ to the computation units 10242A, 10242B, 10242C, 10242D, 10242F, 10242G, 10242H, and 10242I, respectively.

The computation units 10242A to 10242D and 10242F to 10242I multiply the pixel values A to D and F to I supplied thereto with the EB coefficients $A_{EB}$ to $D_{EB}$ and $F_{EB}$ to $I_{EB}$ from the EB coefficient generation unit 10241, respectively, and output values A' to D' and F' to I' obtained as results of the multiplications as amounts of EB influence.

The pixel value E is directly output and is added to the amount of EB influence of each of the electron beams on the display of the pixel of interest E(x, y) when displaying the other pixels A(x-1, y-1) to D(x-1, y) and F(x+1, y) to I(x+1, y+1). The resulting addition value is set as a pixel value, obtained after the EB emulation process, of the pixel of interest E(x, y).

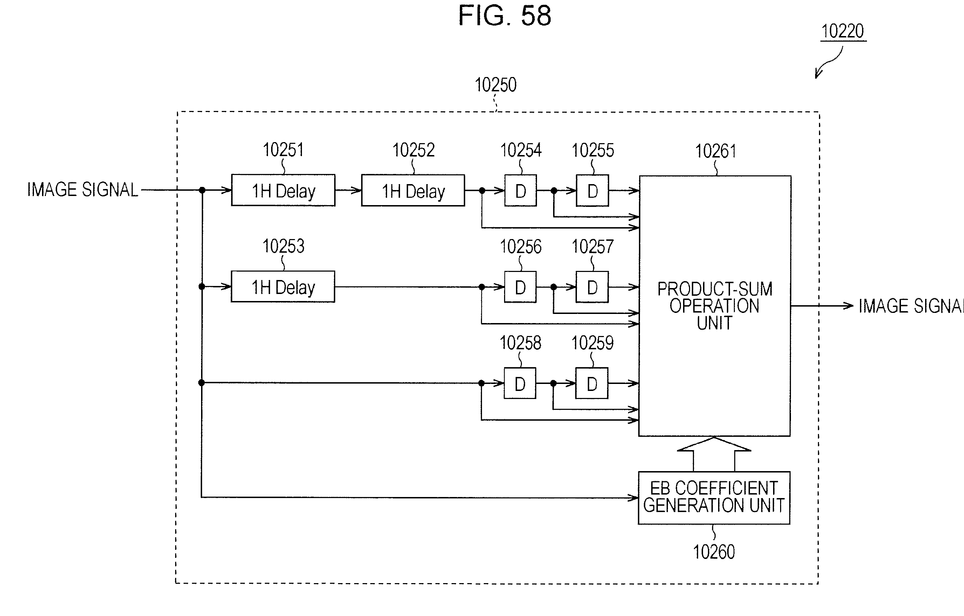

Fig. 58 is a block diagram illustrating an example structure of the EB processing unit 10220 of Fig. 41.

In Fig. 58, the EB processing unit 10220 is constructed from an EB function unit 10250, and the EB function unit 10250 is constructed from delay units 10251 to 10259, an EB coefficient generation unit 10260, and a product-sum operation unit 10261.

The EB function unit 10250 determines the pixel value, obtained after the EB emulation process, of the pixel E(x, y) by assuming that, for example, as illustrated in Fig. 56, the electron beams when displaying the display of the pixel E(x, y) have the influence on the display of the pixels A(x-1, y-1) to D(x-1, y) and F(x+1, y) to I(x+1, y+1) adjacent to the pixel E(x, y), that is, by assuming that the pixel E(x, y) has an amount of EB influence from each of the pixels A (x-1, y-1) to D(x-1, y) and F(x+1, y) to I(x+1, y+1) adjacent to the pixel E(x, y).

That is, the EB function unit 10250 is supplied with the image signal from the luminance correction unit 10210 (Fig. 41).

In the EB function unit 10250, the pixel values of pixels constituting the image signal from the luminance correction unit 10210 are supplied to the delay units 10251, 10253, and 10258, the EB coefficient generation unit 10260, and the product-sum operation unit 10261 in raster scan order.

The delay unit 10251 delays the pixel value from the luminance correction unit 10210 by an amount corresponding to one line (horizontal line) before supplying the pixel value to the delay unit 10252. The delay unit 10252 delays the pixel value from the delay unit 10251 by an amount corresponding to one line before supplying the pixel value to the delay unit 10254 and the product-sum operation unit 10261.

The delay unit 10254 delays the pixel value from the delay unit 10252 by an amount corresponding to one pixel before supplying the pixel value to the delay unit 10255 and the product-sum operation unit 10261. The delay unit 10255 delays the pixel value from the delay unit 10254 by an amount corresponding to one pixel before supplying the pixel value to the product-sum operation unit 10261.

The delay unit 10253 delays the pixel value from the luminance correction unit 10210 by an amount corresponding to one line before supplying the pixel value to the delay unit 10256 and the product-sum operation unit 10261. The delay unit 10256 delays the pixel value from the delay unit 10253 by an amount corresponding to one pixel before supplying the pixel value to the delay unit 10257 and the product-sum operation unit 10261. The delay unit 10257 delays the pixel value from the delay unit 10256 by an amount corresponding to one pixel before supplying the pixel value to the product-sum operation unit 10261.

The delay unit 10258 delays the pixel value from the luminance correction unit 10210 by an amount corresponding to one pixel before supplying the pixel value to the delay unit 10259 and the product-sum operation unit 10261. The delay unit 10259 delays the pixel value from the delay unit 10258 by an amount corresponding to one pixel before supplying the pixel value to the product-sum operation unit 10261.

The EB coefficient generation unit 10260 generates an EB coefficient as described above for determining the amount of EB influence of this pixel value on adjacent pixel values on the basis of the pixel value from the luminance correction unit 10210, and supplies the EB coefficient to the product-sum operation unit 10261.

The product-sum operation unit 10261 multiplies each of a total of eight pixel values, namely, the pixel value from the luminance correction unit 10210 and the pixel values individually from the delay units 10252 to 10255 and 10257 to 10259, with the EB coefficient from the EB coefficient generation unit 10260 to thereby determine the amount of EB influence on the pixel value delayed by the delay unit 10256 from the eight pixel values. The product-sum operation unit 10261 adds this amount of EB influence to the pixel value from the delay unit 10256, thereby determining and outputting the pixel value obtained after the EB emulation process for the pixel value from the delay unit 10256.

Therefore, for example, if it is assumed that the pixel values A to I illustrated in Fig. 56 are supplied to the EB function unit 10250 in raster scan order and that the pixel value I is now supplied to the EB function unit 10250, the output of the delay unit 10255 becomes equal to the pixel value A, the output of the delay unit 10254 to the pixel value B, the output of the delay unit 10252 to the pixel value C, the output of the delay unit 10257 to the pixel value D, the output of the delay unit 10256 to the pixel value E, the output of the delay unit 10253 to the pixel value F, the output of the delay unit 10259 to the pixel value G, and the output of the delay unit 10258 to the pixel value H, which are supplied to the product-sum operation unit 10261.

Further, the pixel value I supplied to the EB function unit 10250 is supplied to the EB coefficient generation unit 10260 and the product-sum operation unit 10261.

The pixel values A to H have been supplied to the EB coefficient generation unit 10260 before the pixel value I is supplied. Thus, in the EB coefficient generation unit 10260, an EB coefficient for determining the amount of EB influence of each of the pixel values A to I on the adjacent pixel value has been generated and supplied to the product-sum operation unit 10261.

The product-sum operation unit 10261 multiplies the pixel value E from the delay unit 10256 with each of EB coefficients from the EB coefficient generation unit 10260 for determining the amount of EB influence of each of the pixel values A to D and F to I on the pixel value E to thereby determine the amount of EB influence of each of the pixel values A to D and F to I on the pixel value E, which is added to the pixel value E from the delay unit 10256. The resulting addition value is output as the pixel value obtained after the EB emulation process for the pixel value E from the delay unit 10256.

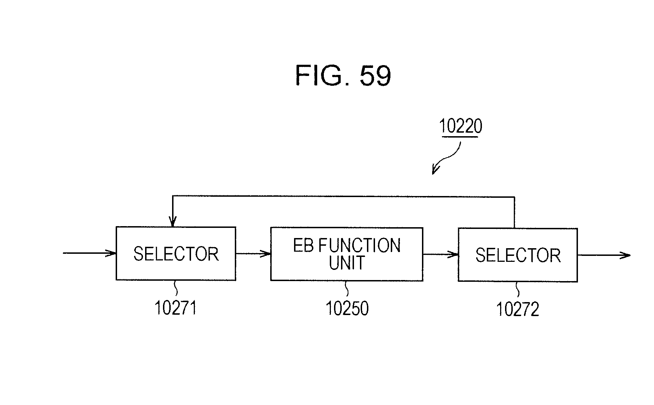

Next, Fig. 59 illustrates another example structure of the EB processing unit 10220 of Fig. 41.

Note that in the figure, portions corresponding to those in the case of Fig. 58 are designated by the same numerals and explanations thereof are omitted as desired.

That is, the EB processing unit 10220 of Fig. 59 is common to that in the case of Fig. 58 in that it has an EB function unit 10250, and is different from that in the case of Fig. 58 in that it has further selectors 10271 and 10272.

In the EB processing unit 10220 of Fig. 59, the image signal from the luminance correction unit 10210 (Fig. 41) is supplied to the selector 10271.

Further, an image signal from the selector 10272 is also supplied to the selector 10271.

The selector 10271 selects either the image signal from the luminance correction unit 10210 or the image signal from the selector 10272, and supplies the selected one to the EB function unit 10250.

The selector 10272 is supplied with the image signal obtained after the EB emulation process from the EB function unit 10250.

The selector 10272 outputs the image signal from the EB function unit 10250 as a final image signal obtained after the EB emulation process or supplies the image signal to the selector 10271.

In the EB processing unit 10220 constructed as above, the selector 10271 first selects the image signal from the luminance correction unit 10210, and supplies the selected image signal to the EB function unit 10250.

The EB function unit 10250 subjects the image signal from the selector 10271 to an EB emulation process, and supplies a resulting image signal to the selector 10272.

The selector 10272 supplies the image signal from the EB function unit 10250 to the selector 10271.

The selector 10271 selects the image signal from the selector 10272, and supplies the selected image signal to the EB function unit 10250.

In the manner as above, in the EB function unit 10250, after the image signal from the luminance correction unit 10210 is repeatedly subjected to the EB emulation process a predetermined number of times, the selector 10272 outputs the image signal from the EB function unit 10250 as a final image signal obtained after the EB emulation process.

As above, the EB emulation process can be recursively performed.

Note in Fig. 58, for ease of explanation, the electron beams when displaying the pixel E(x, y) have the influence only on the display of the pixels A(x-1, y-1) to D(x-1, y) and F(x+1, y) to I(x+1, y+1) adjacent to this pixel E(x, y). However, the range of pixels over which the electron beams when displaying the pixel E(x, y) have the influence on the display varies depending on the intensity distribution of the electron beams.

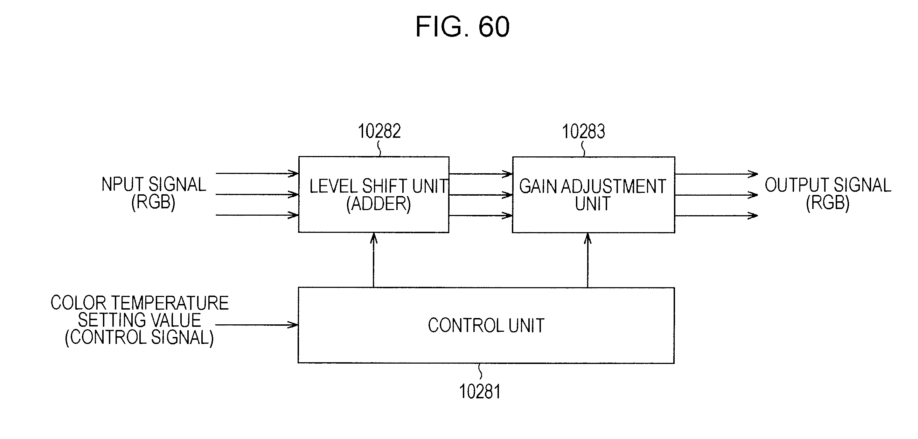

Next, Fig. 60 illustrates an example structure of a section of the CRT γ processing unit 10035 of Fig. 38 that performs a color temperature compensation process.

In Fig. 60, the control signal from the display color temperature compensation control unit 10040 (Fig. 38) is supplied to a control unit 10281, and color signals R (Red), G (Green), and B (Blue) serving as the image signal from the VM processing unit 10034 (Fig. 38) are supplied to a level shift unit 10282.

The control unit 10281 controls the level shift unit 10282 and the gain adjustment unit 10283 on the basis of the setting value of the color temperature represented by the control signal from the display color temperature compensation control unit 10040.

The level shift unit 10282 performs a shift (addition) of the level for the color signals R, G, and B from the VM processing unit 10034 according to the control from the control unit 10281 (in the CRT display apparatus, DC bias), and supplies resulting color signals R, G, and B to the gain adjustment unit 10283.

The gain adjustment unit 10283 performs adjustment of the gain of the color signals R, G, and B from the level shift unit 10282 according to the control from the control unit 10281, and outputs resulting color signals R, G, and B as color signals R, G, and B obtained after the color temperature compensation process.

Note that any other method, for example, the method described in Japanese Unexamined Patent Application Publication No. 08-163582 or 2002-232905, can be adopted as a method of the color temperature compensation process.

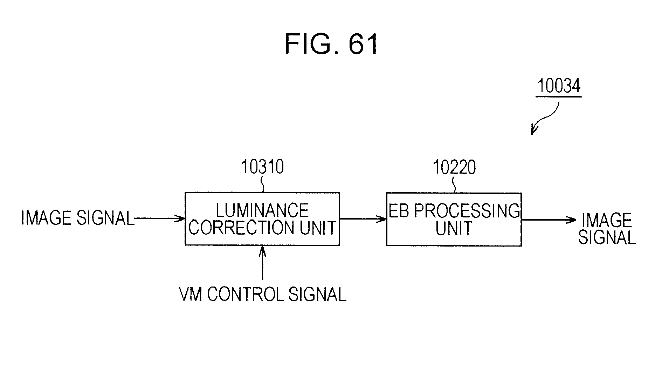

Fig. 61 illustrates another example structure of the VM processing unit 10034 of Fig. 38.

Note that in the figure, portions corresponding to those of the VM processing unit 10034 of Fig. 41 are designated by the same numerals and explanations thereof are hereinafter omitted as desired.

That is, the VM processing unit 10034 of Fig. 61 is constructed in a manner similar to that of the VM processing unit 10034 of Fig. 41, except that a luminance correction unit 10310 is provided in place of the luminance correction unit 10210 (Fig. 41).

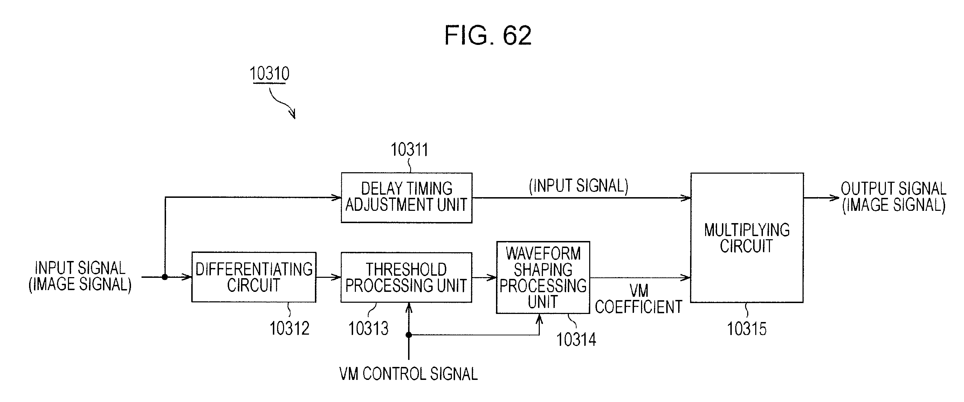

Fig. 62 illustrates an example structure of the luminance correction unit 10310 of Fig. 61.

In Fig. 62, the luminance correction unit 10310 is constructed from a delay timing adjustment unit 10311, a differentiating circuit 10312, a threshold processing unit 10313, a waveform shaping processing unit 10314, and a multiplying circuit 10315. The luminance correction unit 10310 performs luminance correction as emulation of a VM process (velocity modulation of an electron beam) in the CRT display apparatus, which is described in, for example, Japanese Unexamined Patent Application Publication No. 61-167280 (Japanese Examined Patent Application Publication No. 05-84706), International Publication No. WO00/010324, or the like.

That is, the luminance correction unit 10310 is supplied with the image signal from the ABL processing unit 10033 (Fig. 38). This image signal is supplied to the delay timing adjustment unit 10311 and the differentiating circuit 10312.

The delay timing adjustment unit 10311 delays the image signal from the ABL processing unit 10033 by an amount of time corresponding to the amount of time required for the processes performed in the differentiating circuit 10312, the threshold processing unit 10313, and the waveform shaping processing unit 10314, before supplying the image signal to the multiplying circuit 10315.

In contrast, the differentiating circuit 10312 performs first-order differentiation of the image signal from the ABL processing unit 10033 to thereby detect an edge portion of this image signal. The differentiating circuit 10312 supplies the differentiated value (differentiated value of the first-order differentiation) of this edge portion to the threshold processing unit 10313.

The threshold processing unit 10313 compares the absolute value of the differentiated value from the differentiating circuit 10312 with a predetermined threshold value, and supplies only a differentiated value of which the absolute value is greater than the predetermined threshold value to the waveform shaping processing unit 10314, thereby limiting the implementation of luminance correction for the edge portion of which the absolute value of the differentiated value is not greater than the predetermined threshold value.

The waveform shaping processing unit 10314 multiplies, based on the differentiated value from the threshold processing unit 10313, it by the pixel value of the edge portion to calculate a VM coefficient having an average value of 1.0 as a VM coefficient for performing luminance correction. The waveform shaping processing unit 10314 supplies the VM coefficient to the multiplying circuit 10315.

The multiplying circuit 10315 multiplies the pixel value of the edge portion in the image signal supplied from the delay timing adjustment unit 10311 with the VM coefficient supplied from the waveform shaping processing unit 10314 to thereby perform luminance correction of this edge portion, and supplies a resulting image signal to the EB processing unit 10220 (Fig. 61).

Note that the VM coefficient to be calculated in the waveform shaping processing unit 10314 can be adjusted in accordance with, for example, a user operation so as to allow the degree of the luminance correction of the edge portion to meet the user preference.

Further, each of the threshold processing unit 10313 and the waveform shaping processing unit 10314 sets an operation condition according to the VM control signal supplied from the VM control unit 10039 (Fig. 38).

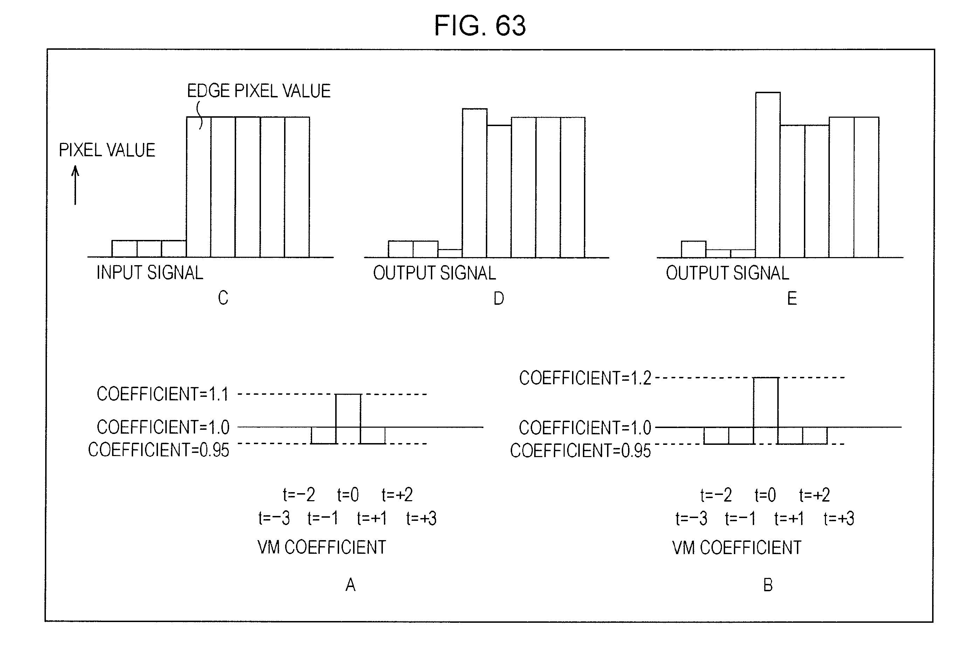

Fig. 63 illustrates an example of a VM coefficient calculated in the waveform shaping processing unit 10314 and the image signals obtained before and after the luminance correction is performed using this VM coefficient.

That is, part A of Fig. 63 illustrates a first example of a VM coefficient.

In part A of Fig. 63, a VM coefficient to be multiplied by an edge pixel value (a large pixel value among large and small pixel values constituting an edge) is set to 1.1, and VM coefficients to be individually multiplied by the left and right pixel values adjacent to the edge pixel value are 0.95.

Part B of Fig. 63 illustrates a second example of a VM coefficient.

In part B of Fig. 63, a VM coefficient to be multiplied by the edge pixel value is 1.2, and a VM coefficient to be multiplied with each of the pixel value that is left adjacent to the edge pixel value and the further left adjacent pixel value, and a VM coefficient to be multiplied each of the pixel value that is right adjacent to the edge pixel value and the further right adjacent pixel value are 0.95.

Part C of Fig. 63 illustrates an image signal obtained before the luminance correction has been performed.

In part C of Fig. 63, an edge is formed between the third pixel value and fourth pixel value from the left, and therefore, the fourth pixel value from the left serves as an edge pixel value.

Part D of Fig. 63 illustrates an image signal obtained by performing luminance correction using the VM coefficients of part A of Fig. 63 for the image signal of part C of Fig. 63.

In the image signal of part D of Fig. 63, as compared with the original image signal of part C of Fig. 63, the fourth pixel value serving as an edge pixel value is increased and the third and fifth pixel values from the left are decreased. Consequently, the edge is enhanced.

Part E of Fig. 63 illustrates an image signal obtained by performing luminance correction using the VM coefficients of part B of Fig. 63 for the image signal of part C of Fig. 63.

In the image signal of part E of Fig. 63, as compared with the original image signal of part C of Fig. 63, the fourth pixel value which is an edge pixel value is increased and the second, third, fifth, and sixth pixel values from the left are decreased. Consequently, the edge is enhanced more than that in the case of part D of Fig. 63.

Note that the VM coefficients of Fig. 63 are merely examples. Further, in Fig. 63, an edge portion that changes from a dark image to a bright image as viewed in the direction from left to right is illustrated. However, luminance correction is also performed in a similar manner for an edge portion that changes from a bright image to a dark image.

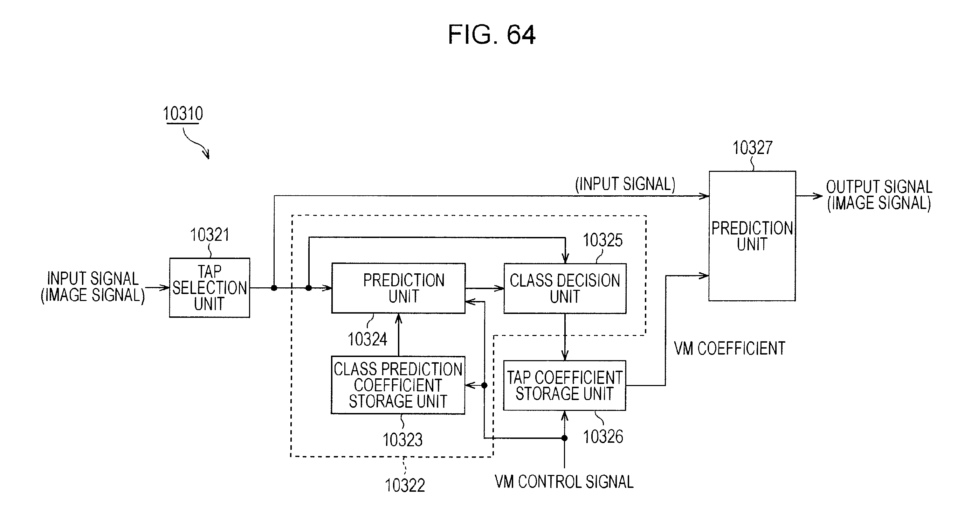

Next, Fig. 64 illustrates another example structure of the luminance correction unit 10310 of Fig. 61.

In Fig. 64, the luminance correction unit 10310 is constructed from a tap selection unit 10321, a class classification unit 10322, a tap coefficient storage unit 10326, and a prediction unit 10327. The luminance correction unit 10310 performs luminance correction using DRC (class classification adaptive process) described in, for example, Japanese Unexamined Patent Application Publication No. 07-95591 (Japanese Patent No. 3271101) or the like.

Here, DRC will be explained.

DRC is a process of converting (mapping) a first image signal into a second image signal, and various signal processes can be performed by the definition of the first and second image data.

That is, for example, if the first image signal is set as a low spatial resolution image signal and the second image signal is set as a high spatial resolution image signal, DRC can be said to be a spatial resolution creation (improvement) process for improving the spatial resolution.

Further, for example, if the first image signal is set as a low S/N (Siginal/Noise) image signal and the second image signal is set as a high S/N image signal, DRC can be said to be a noise removal process for removing noise.

Furthermore, for example, if the first image signal is set as an image signal having a predetermined number of pixels (size) and the second image signal is set as an image signal having a larger or smaller number of pixels than the first image signal, DRC can be said to be a resizing process for resizing (increasing or decreasing the scale of) an image.

Moreover, for example, if the first image signal is set as a low temporal resolution image signal and the second image signal is set as a high temporal resolution image signal, DRC can be said to be a temporal resolution creation (improvement) process for improving the temporal resolution.

Furthermore, for example, if the first image signal is set as a decoded image signal obtained by decoding an image signal encoded in units of blocks such as MPEG (Moving Picture Experts Group) and the second image signal is set as an image signal that has not been encoded, the DRC can be a said to be a distortion removal process for removing various distortions such as block distortion caused by MPEG encoding and decoding.

Note that in the spatial resolution creation process, when a first image signal that is a low spatial resolution image signal is converted into a second image signal that is a high spatial resolution image signal, the second image signal can be set as an image signal having the same number of pixels as the first image signal or can be set as an image signal having a larger number of pixels than the first image signal. In a case where the second image signal is set as an image signal having a larger number of pixels than the first image signal, the spatial resolution creation process is a process for improving the spatial resolution and is also a resizing process for increasing the image size (the number of pixels).

As above, according to DRC, various signal processes can be realized depending on how first and second image signals are defined.

In DRC, predictive computation is performed using a tap coefficient of a class obtained by class-classifying a pixel of interest to which attention is directed within the second image signal into one class among a plurality of classes and using (the pixel values of) a plurality of pixels of the first image signal that is selected relative to the pixel of interest. Accordingly, (the prediction value of) the pixel value of the pixel of interest is determined.

In Fig. 64, the image signal supplied from the ABL processing unit 10033 (Fig. 38) to the luminance correction unit 10310 of the VM processing unit 10034 is supplied to a tap selection unit 10321 as the first image signal.

The tap selection unit 10321 uses an image signal obtained by performing luminance correction of the first image signal from the ABL processing unit 10033 as the second image signal and sequentially uses the pixels constituting this second image signal as pixels of interest to select, as prediction taps, some of (the pixel values of) the pixels constituting the first image signal which are used for predicting (the pixel values of) the pixels of interest.

Specifically, the tap selection unit 10321 selects, as prediction taps, a plurality of pixels of the first image signal which are spatially or temporally located near the time-space position of a pixel of interest.

Furthermore, the tap selection unit 10321 selects, as class taps, some of the pixels constituting the first image signal which are used for class classification for separating the pixel of interest into one of a plurality of classes. That is, the tap selection unit 10321 selects class taps in a manner similar to that in which the tap selection unit 10321 selects prediction taps.

Note that the prediction taps and the class taps may have the same tap configuration (positional relationship with respect to the pixel of interest) or may have different tap configurations.

The prediction taps obtained by the tap selection unit 10321 are supplied to the prediction unit 10327, and the class taps obtained by the tap selection unit 10321 are supplied to a class classification unit 10322.

The class classification unit 10322 is constructed from a class prediction coefficient storage unit 10323, a prediction unit 10324, and a class decision unit 10325. The class classification unit 10322 performs class classification of the pixel of interest on the basis of the class taps from the tap selection unit 10321 and supplies the class code corresponding to the class obtained as a result of the class classification to the tap coefficient storage unit 10326.

Here, the details of the class classification performed in the class classification unit 10322 will be described below.

The tap coefficient storage unit 10326 stores tap coefficients for individual classes, which are determined by learning described below, as a VM coefficient. Further, the tap coefficient storage unit 10326 outputs a tap coefficient (tap coefficient of the class indicated by the class code supplied from the class classification unit 10322) stored at an address corresponding to the class code supplied from the class classification unit 10322 among the stored tap coefficients. This tap coefficient is supplied to the prediction unit 10327.

Here, the term tap coefficient is equivalent to a coefficient to be multiplied with input data at a so-called tap of a digital filter.

The prediction unit 10327 obtains the prediction taps output from the tap selection unit 10321 and the tap coefficients output from the tap coefficient storage unit 10326, and performs predetermined predictive computation for determining a prediction value of the true value of the pixel of interest using the prediction taps and the tap coefficients. Accordingly, the prediction unit 10327 determines and outputs (the prediction value of) the pixel value of the pixel of interest, that is, the pixel values of the pixels constituting the second image signal, i.e., the pixel values obtained after the luminance correction.

Note that each of the class prediction coefficient storage unit 10323, the prediction unit 10324, which constitute the class classification unit 10322, and the tap coefficient storage unit 10326 performs the setting of an operation condition or necessary selection according to the VM control signal supplied from the VM control unit 10039 (Fig. 38).

Next, the learning of tap coefficients for individual classes, which are stored in the tap coefficient storage unit 10326 of Fig. 64 as VM coefficients, will be explained.

The tap coefficients used for predetermined predictive computation of DRC are determined by learning using multiple image signals as learning image signals.

That is, for example, now, it is assumed that an image signal before luminance correction is used as the first image signal and an image signal after the luminance correction, which is obtained by performing luminance correction for the first image signal, is used as the second image signal to select in DRC a prediction tap from the first image signal, and that the pixel value of a pixel of interest of the second image signal is determined (predicted) using this prediction tap and a tap coefficient by using predetermined predictive computation.

It is assumed that as the predetermined predictive computation, for example, linear first-order predictive computation is adopted. Then, a pixel value y of the second image signal can be determined by the following linear first-order equation.

[Math. 23]

$$y = \sum_{n=1}^{N} w_n x_n \qquad \cdots (23)$$

In this regard, in Equation (23), $X_n$ represents the pixel value of the n-th pixel (hereinafter referred to as an uncorrected pixel, as desired) of the first image signal constituting the prediction taps for the pixel of interest y of the second image signal, and $W_n$ represents the n-th tap coefficient to be multiplied with (the pixel value of) the n-th uncorrected pixel. Note that in Equation (23), the prediction taps are constituted by N uncorrected pixels $x_1, X_2, \ldots, X_N$.

Here, the pixel value y of the pixel of interest of the second image signal can also be determined by a second- or higher-order equation rather than the linear first-order equation given in Equation (23).

Now, if the true value of the pixel value of the k-th sample of the second image signal is represented by $y_k$ and if the prediction value of the true value $y_k$ thereof, which is obtained by Equation (23), is represented by $y_k'$, a prediction error $e_k$ therebetween is expressed by the following equation.

[Math. 24]

$$e_k = y_k - y_k' \qquad \cdots (24)$$

Now, the prediction value $y_k'$ in Equation (24) is determined according to Equation (23). Thus, replacing $y_k'$ in Equation (24) according to Equation (23) yields the following equation.

[Math. 25]

$$e_k = y_k - \left( \sum_{n=1}^{N} w_n x_{n,k} \right)$$

$$\cdots \quad (25)$$

In this regard, in Equation (25), $x_{n,k}$ represents the n-th uncorrected pixel constituting the prediction taps for the pixel of the k-th sample of the second image signal.

The tap coefficient $w_n$ that allows the prediction error $e_k$ in Equation (25) (or Equation (24)) to be 0 becomes optimum to predict the pixel of the second image signal. In general, however, it is difficult to determine the tap coefficient $w_n$ for all the pixels of the second image signal.

Thus, for example, if the least squares method is adopted as the standard indicating that the tap coefficient $w_n$ is optimum, the optimum tap coefficient $w_n$ can be determined by minimizing the sum total E of square errors expressed by the following equation.

[Math. 26]

$$E = \sum_{k=1}^{K} e_k^2$$

$$\cdots \quad (26)$$

In this regard, in Equation (26), K represents the number of samples (the total number of learning samples) of sets of the pixel $y_k$ of the second image signal, and the uncorrected pixels $x_{1,k}, x_{2,k}, ..., x_{N,k}$ constituting the prediction taps for this pixel $y_k$ of the second image signal.

The minimum value (local minimum value) of the sum total E of square errors in Equation (26) is given by $w_n$ that allows the value obtained by partially differentiating the sum total E with the tap coefficient $w_n$ to be 0, as given in Equation (27).

[Math. 27]

$$\frac{\partial E}{\partial w_n} = e_1 \frac{\partial e_1}{\partial w_n} + e_2 \frac{\partial e_2}{\partial w_n} + \cdots + e_k \frac{\partial e_k}{\partial w_n} = 0 \quad (n = 1, 2, \cdots, N)$$

$$\cdots \quad (27)$$

Then, partially differentiating Equation (25) described above with the tap coefficient $w_n$ yields the following equations.

[Math. 28]

$$\frac{\partial e_k}{\partial w_1} = -x_{1,k}, \quad \frac{\partial e_k}{\partial w_2} = -x_{2,k}, \quad \cdots, \quad \frac{\partial e_k}{\partial w_N} = -x_{N,k}, \quad (k=1, 2, \cdots, K)$$

$$\cdots \quad (28)$$

The equations below are obtained from Equations (27) and (28).

[Math. 29]

$$\sum_{k=1}^{K} e_k x_{1,k} = 0, \quad \sum_{k=1}^{K} e_k x_{2,k} = 0, \quad \cdots \sum_{k=1}^{K} e_k x_{N,k} = 0$$

$$\cdots \quad (29)$$

By substituting Equation (25) into $e_k$ in Equation (29), Equation (29) can be expressed by normal equations given in Equation (30).

[Math. 30]

$$\begin{bmatrix} \left(\sum_{k=1}^{K} x_{1,k}x_{1,k}\right) & \left(\sum_{k=1}^{K} x_{1,k}x_{2,k}\right) & \cdots & \left(\sum_{k=1}^{K} x_{1,k}x_{N,k}\right) \\ \left(\sum_{k=1}^{K} x_{2,k}x_{1,k}\right) & \left(\sum_{k=1}^{K} x_{2,k}x_{2,k}\right) & \cdots & \left(\sum_{k=1}^{K} x_{2,k}x_{N,k}\right) \\ \vdots & \vdots & \ddots & \vdots \\ \left(\sum_{k=1}^{K} x_{N,k}x_{1,k}\right) & \left(\sum_{k=1}^{K} x_{N,k}x_{2,k}\right) & \cdots & \left(\sum_{k=1}^{K} x_{N,k}x_{N,k}\right) \end{bmatrix} \begin{bmatrix} w_1 \\ w_2 \\ \vdots \\ w_N \end{bmatrix} = \begin{bmatrix} \left(\sum_{k=1}^{K} x_{1,k}y_k\right) \\ \left(\sum_{k=1}^{K} x_{2,k}y_k\right) \\ \vdots \\ \left(\sum_{k=1}^{K} x_{N,k}y_k\right) \end{bmatrix}$$

$$\cdots \quad (30)$$

The normal equations in Equation (30) can be solved for the tap coefficient $w_n$ by using, for example, a sweeping-out method (elimination method of Gauss-Jordan) or the like.

By formulating and solving the normal equations in Equation (30) for each class, the optimum tap coefficient (here, tap coefficient that minimizes the sum total E of square errors) $w_n$ can be determined for each class.

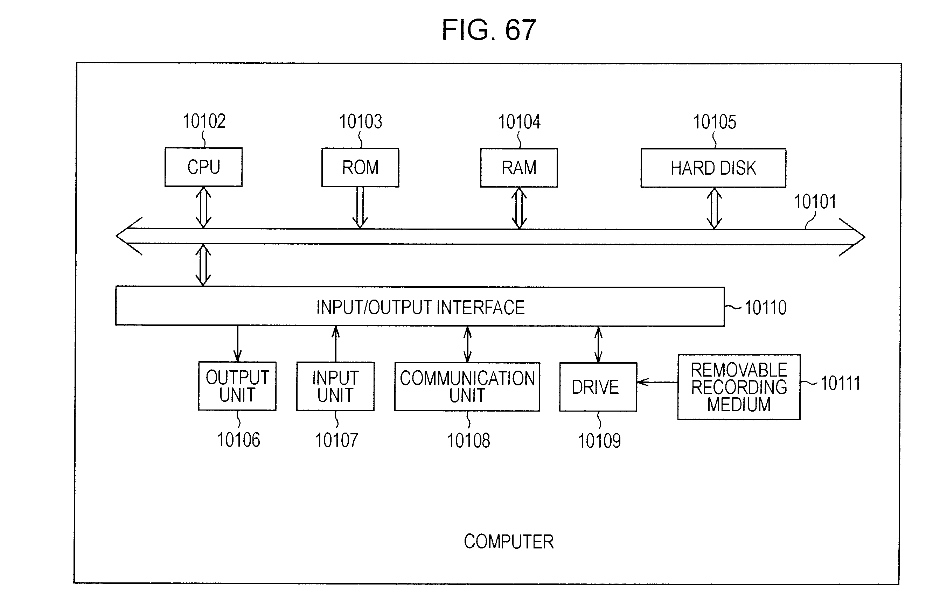

In the manner as above, learning for determining the tap coefficient $w_n$ can be performed by, for example, a computer (Fig. 67) described below.

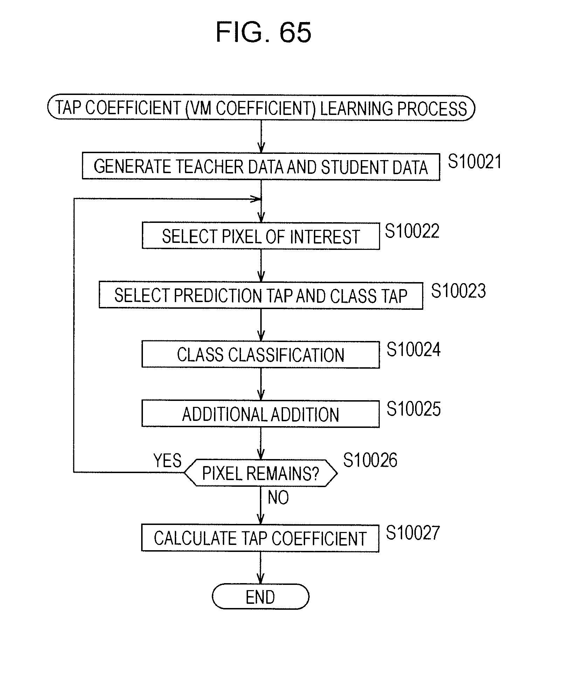

Next, a process of learning (learning process) for determining the tap coefficient $w_n$, which is performed by the computer, will be explained with reference to a flowchart of Fig. 65.

First, in step S10021, the computer generates teacher data equivalent to the second image signal and student data equivalent to the first image signal from a learning image signal prepared in advance for learning. The process proceeds to step S10022.

That is, the computer generates a mapped pixel value of mapping as the predictive computation given by Equation (23), i.e., a corrected pixel value obtained after luminance correction, as the teacher data equivalent to the second image signal, which serves as a teacher (true value) of the learning of tap coefficients, from the learning image signal.

Furthermore, the computer generates a pixel value to be converted by mapping as the predictive computation given by Equation (23), as the student data equivalent to the first image signal, which serves as a student of the learning of tap coefficients, from the learning image signal. Herein, for example, the computer directly sets the learning image signal as the student data equivalent to the first image signal.

In step S10022, the computer selects, as a pixel of interest, teacher data unselected as a pixel of interest. The process proceeds to step S10023. In step S10023, like the tap selection unit 10321 of Fig. 64, the computer selects, for the pixel of interest, a plurality of pixels, which are used as prediction taps, from the student data and also selects a plurality of pixels which are used as class taps. The process proceeds to step S10024.

In step S10024, the computer performs class classification of the pixel of interest on the basis of the class taps for the pixel of interest in a manner similar to that of the class classification unit 10322 of Fig. 64 to obtain the class code corresponding to the class of the pixel of interest. The process proceeds to step S10025.

In step S10025, the computer performs, for the class of the pixel of interest, additional addition given in Equation (30) on the pixel of interest and the student data constituting the prediction taps selected for the pixel of interest. The process proceeds to step S10026.

That is, the computer performs computation equivalent to the multiplication $(x_{n,k}x_{n',k})$ of student data items in the matrix in the left side of Equation (30) and the summation ($\Sigma$), for the class of the pixel of interest, using a prediction tap (student data) $x_{n,\,k}$.

Furthermore, the computer performs computation equivalent to the multiplication $(x_{n,k}y_k)$ of the student data $x_{n,k}$ and teacher data $y_k$ in the vector in the right side of Equation (30) and the summation ($\Sigma$), for the class of the pixel of interest, using the prediction tap (student data) $x_{n,k}$ and the teacher data $y_k$.

That is, the computer stores in a memory incorporated therein (for example, the RAM 10104 of Fig. 67) the component $(\Sigma x_{n,k}x_{n',k})$ in the matrix in the left side of Equation (30) and the component $(\Sigma x_{n,k}y_k)$ in the vector in the right side thereof determined for the teacher data which is the previous pixel of interest, in the class of the pixel of interest, and additionally adds (performs addition expressed by the summation in Equation (30)) the corresponding component $x_{n,k+1}x_{n',k+1}$ or $x_{n,k+1}y_{k+1}$, which is calculated for teacher data which is a new pixel of interest using the teacher data $y_{k+1}$ thereof and the student data $x_{n,k+1}$, to the component $(\Sigma x_{n,k}x_{n',k})$ in the matrix or the component $(\Sigma x_{n,k}y_k)$ in the vector.

In step S10026, the computer determines whether or not there remains teacher data unselected as a pixel of interest. In a case where it is determined in step S10026 that there remains teacher data unselected as a pixel of interest, the process returns to step S10022 and subsequently a similar process is repeated.

Further, in a case where it is determined in step S10026 that there remains no teacher data unselected as a pixel of interest, the process proceeds to step S10027, in which the computer solves the normal equations for each class, which are constituted by the matrix in the left side and the vector in the right side of Equation (30) for each class obtained by the preceding processing of steps S10022 to S10026, thereby determining and outputting the tap coefficient $w_n$ for each class. The process ends.

The tap coefficients $w_n$ for the individual classes determined as above are stored in the tap coefficient storage unit 10326 of Fig. 64 as VM coefficients.

Next, the class classification performed in the class classification unit 10322 of Fig. 64 will be explained.

In the class classification unit 10322, the class taps for the pixel of interest from the tap selection unit 10321 are supplied to the prediction unit 10324 and the class decision unit 10325.

The prediction unit 10324 predicts the pixel value of one pixel among a plurality of pixels constituting the tap classes from the tap selection unit 10321 using the pixel values of the other pixels and class prediction coefficients stored in the class prediction coefficient storage unit 10323. The prediction unit 10324 supplies the predicted value to the class decision unit 10325.

That is, the class prediction coefficient storage unit 10323 stores a class prediction coefficient used for predicting the pixel value of one pixel among a plurality of pixels constituting class taps for each class.

Specifically, if it is assumed that the class taps for the pixel of interest are constituted by pixel values of (M+1) pixels and that the prediction unit 10324 regards, for example, $X_{M+1}$ of (M+1) pixels constituting the class taps, the (M+1)-th pixel value $x_{M+1}$ as an object to be predicted among the pixel values $x_1, x_2, ..., x_M$, and predicts the (M+1)-th pixel value $x_{M+1}$, which is an object to be predicted, using the other M pixels $x_1, x_2, ..., x_M$, the class prediction coefficient storage unit 10323 stores, for example, M class prediction coefficients $c_j,1, cj,2, ..., c_{j,M}$ to be multiplied with each of the M pixels $x_1, x_2, ..., x_M$ for the class #j.

In this case, the prediction unit 10324 determines the prediction value $x'_{j,M,1}$ of the pixel value $x_{M+1}$, which is an object to be predicted, for the class #j according to, for example, the equation $x'j,m+1 = x_1c_{j,1} + x_2c_{j,2} + ... +, x_Mc_{j,M}$.

For example, now, if the pixel of interest is classified into any class among J classes #1 to #J by class classification, the prediction unit 10324 determines prediction values $x'_{1,M+1}$ to $x'_{j,M+1}$ for each of the classes #1 to #J, and supplies them to the class decision unit 10325.

The class decision unit 10325 compares each of the prediction values $x'_{1,M+1}$ to $x'_{J,M+1}$ from the prediction unit 10324 with the (M+1)-th pixel value (true value) $x_{M+1}$, which is an object to be predicted, of the class taps for the pixel of interest from the tap selection unit 10321, and decides the class #j of the class prediction coefficients $c_{j,1}$, $c_{j,2}$, ..., $c_{j,M}$ used for determining the prediction value $x'_{j,M+1}$ having the minimum prediction error with respect to the (M+1)-th pixel value $x_{M+1}$, which is an object to be predicted, among the prediction values $x'_{1,M+1}$ to be $x'_{J,M+1}$ to the class of the pixel of interest. The class decision unit 10325 supplies the class code representing this class #j to the tap coefficient storage unit 10326 (Fig. 64).

Here, the class prediction coefficient $c_{j,m}$ stored in the class prediction coefficient storage unit 10323 is determined by learning.

The learning for determining the class prediction coefficient $c_{j,m}$ can be performed by, for example, a computer (Fig. 67) described below.

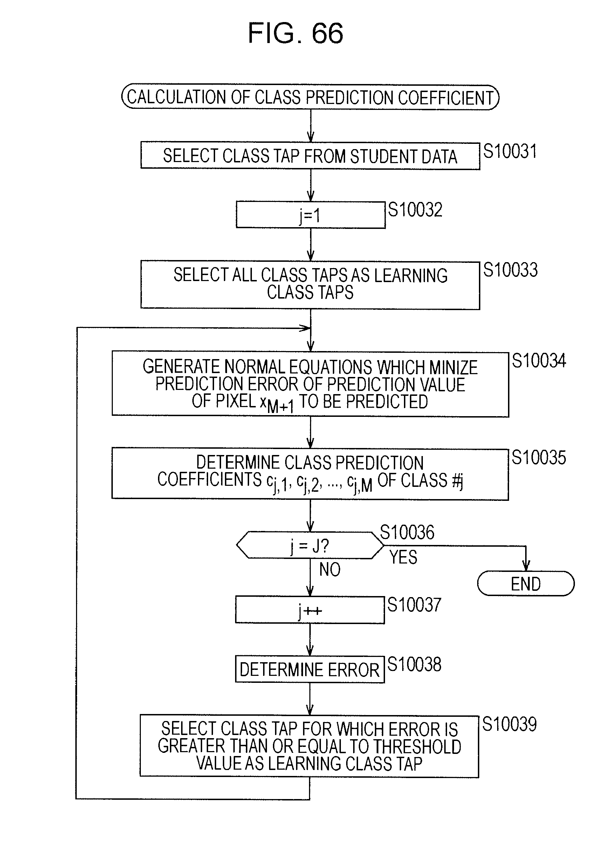

The process of the learning (learning process) for determining the class prediction coefficient $c_{j,m}$, which is performed by the computer, will be explained with reference to a flowchart of Fig. 66.

In step S10031, for example, similarly to step S10021 of Fig. 65, the computer generates teacher data equivalent to the second image signal and student data equivalent to the first image signal from learning image signal. Furthermore, in step S10031, the computer sequentially selects teacher data as a pixel of interest. Then, similarly to step S10023 of Fig. 65, the computer selects a plurality of pixels to be set as class taps from the student data for each pixel of interest. The process proceeds to step S10032.

In step S10032, the computer initializes a variable j representing a class to 1. The process proceeds to step S10033.

In step S10033, the computer selects all the class taps obtained in step S10031 as class taps for learning (learning class taps). The process proceeds to step S10034.

In step S10034, similarly to the learning of the tap coefficients of Fig. 65, the computer generates, for the learning class taps, normal equations (normal equations equivalent to Equation (30)) that minimize the prediction error with respect to the true value $x_{M+1}$ of the prediction value $x'_{j,M+1}$ of the pixel value $x_{M+1}$ which is an object to be predicted for the class #j, which is determined according to the equation $x'_{j,m+1} = x_1 c_{j,1} + x_2 c_{j,2} + ... +, x_M c_{j,M}$. The process proceeds to step S10035.

In step S10035, the computer solves the normal equations obtained in step S10034 to determine the class prediction coefficient $c_{j,m}$ for the class #j (m = 1, 2, ..., M). The process proceeds to step S10036.

In step S10036, the computer determines whether or not the variable j is equal to the total number J of classes. In a case where it is determined that they do not equal, the process proceeds to step S10037.

In step S10037, the computer increments the variable j only by 1. The process proceeds to step S10038, in which the computer determines, for the learning class taps, the prediction error when predicting the pixel $x_{M+1}$ of the object to be predicted, by using the class prediction coefficient $c_{j,m}$ obtained in step S10035. The process proceeds to step S10039.

In step S10039, the computer selects a learning class tap for which the prediction error determined in step S10038 is greater than or equal to a predetermined threshold value as a new learning class tap.

Then, the process returns from step S10039 to step S10034, and subsequently, the class prediction coefficient $c_{j,m}$ for the class #j is determined using the new learning class tap in a manner similar to that described above.

In contrast, in a case where it is determined in step S10036 that the variable j is equal to the total number J of classes, that is, in a case where the class prediction coefficients $c_{1,m}$ to $c_{J,m}$ have been determined for all the J classes #1 to #J, the process ends.

As above, in the image signal processing device of Fig. 38, in view of the CRT display apparatus providing display by allowing a fluorescent material to be illuminated by an electron beam, a process performed when the electron beam is deflected and a signal process that takes the influence of the physical shape of the electron beam and its change on the display into account are performed. Thus, in an FPD display apparatus using an LCD or the like, it is possible to display an image with image quality equivalent to that displayed on a CRT display apparatus.

According to the image signal processing device of Fig. 38, furthermore, it is possible to emulate display characteristics caused by different characteristics of a CRT itself, and it is possible to switch between different brightness characteristics or textures using the same LCD. For example, it is possible to facilitate accurate color adjustment or image quality adjustment, and the like at the sending time by comparison of the difference in color development characteristic between a professional-use CRT and a general-use (for the general public) CRT on the same screen.

Further, according to the image signal processing device of Fig. 38, likewise, it is possible to easily confirm the difference in display characteristics between an LCD and a CRT.

According to the image signal processing device of Fig. 38, furthermore, it is possible to display an image with "favorite image quality" in its original meaning.

Further, according to the image signal processing device of Fig. 38, it is possible to provide simultaneous viewing of display devices having different characteristics (for example, professional-use and general-use CRTs, an LCD and a CRT, or the like) by changing the processing range within the display screen. This facilitates utilization for purposes such as comparison and adjustment.

Next, at least a portion of the series of processes described above can be performed by dedicated hardware or can be performed by software. In a case where the series of processes is performed by software, a program constituting the software is installed into a general-purpose computer or the like.

Thus, Fig. 67 illustrates an example structure of an embodiment of a computer into which a program that executes the series of processes described above is installed.

The program can be recorded in advance on a hard disk 10105 or a ROM 10103 serving as a recording medium incorporated in a computer.

Alternatively, the program can be temporarily or permanently stored (recorded) on a removable recording medium 10111 such as a flexible disk, a CD-ROM (Compact Disc Read Only Memory), an MO (Magneto Optical) disk, a DVD (Digital Versatile Disc), a magnetic disk, or a semiconductor memory. The removable recording medium 10111 of this type can be provided as so-called packaged software.

Note that the program can be, as well as installed into the computer from the removable recording medium 10111 as described above, transferred to the computer from a download site in a wireless fashion via a satellite for digital satellite broadcasting or transferred to the computer in a wired fashion via a network such as a LAN (Local Area Network) or the Internet. In the computer, the program transferred in such a manner can be received by a communication unit 10108 and installed into the hard disk 10105 incorporated therein.

The computer incorporates therein a CPU (Central Processing Unit) 10102. The CPU 10102 is connected to an input/output interface 10110 via a bus 10101. When an instruction is input from a user through an operation or the like of an input unit 10107 constructed with a keyboard, a mouse, a microphone, and the like via the input/output interface 10110, the CPU 10102 executes a program stored in the ROM (Read Only Memory) 10103 according to the instruction. Alternatively, the CPU 10102 loads onto a RAM (Random Access Memory) 10104 a program stored in the hard disk 10105, a program that is transferred from a satellite or a network, received by the communication unit 10108, and installed into the hard disk 10105, or a program that is read from the removable recording medium 10111 mounted in a drive 10109 and installed into the hard disk 10105, and executes the program. Accordingly, the CPU 10102 performs the processes according to the flowcharts described above or the processes performed by the structure of the block diagrams described above. Then, the CPU 10102 causes this processing result to be, according to necessity, for example, output from an output unit 10106 constructed with an LCD (Liquid Crystal Display), a speaker, and the like via the input/output interface 10110, sent from the communication unit 10108, or recorded or the like onto the hard disk 10105.

[Embodiment that provides, using a first display device that displays an image, such as an LCD (Liquid Crystal Display), reproduction of a state in which an image is displayed on a second display device having characteristics different from those of the first display device, such as a PDP (Plasma Display Panel)]

Next, an explanation will be given of an embodiment that provides, using a first display device, reproduction of a state in which an image is displayed on a second display device having characteristics different from those of the first display device.

As display devices that display image signals, there exist various display devices, such as, for example, a CRT (Cathode Ray Tube), an LCD, a PDP, an organic EL (Electroluminescence), and a projector.

And for example, regarding a PDP, a method of suppressing the generation of a false contour by calculating the intensity of light entering each retina position at the time the line of sight follows a moving pixel on a display screen and, from output data thereof, generating new sub-field data has been proposed in, for example, Japanese Unexamined Patent Application Publication No. 2000-39864.

Now, display characteristics are different from display device to display device. Thus, differences in characteristics (display characteristics) of display devices become a significant problem in monitoring performed to check whether an image signal is in an appropriate viewing state (display state). That is, even when a certain image signal is displayed on an LCD and monitored, it has been difficult to check how this image signal would look when this image signal is displayed on a PDP.

Therefore, when monitoring is to be performed taking into consideration the characteristics of a plurality of display devices, it is necessary to prepare display devices as many as desired, resulting in an increase in dimensions of a monitoring system.

Also, a PDP is a display device that constitutes one field of an input image signal by a plurality of sub-fields and that realizes multi-gradation-level display by controlling each sub-field to emit or not to emit light.

Therefore, there is a characteristic that, at the time of displaying a moving image, when the line of sight of a person follows a moving object or the like within the image, the displayed image and the image seen by the eyes of the person may be different depending on a light emitting pattern of the sub-fields. However, in order to check how a moving image would actually look on a PDP, it is necessary to display the moving image on the PDP and have a person see and check the displayed moving image. This checking operation is bothersome, and furthermore, an objective evaluation is difficult to do.

Thus, in the following, an explanation will be given of, for example, an embodiment that makes it possible to reproduce, using a first display device such as an LCD, a state in which an image is displayed on a second display device having characteristics different from those of the first display device, such as a PDP.

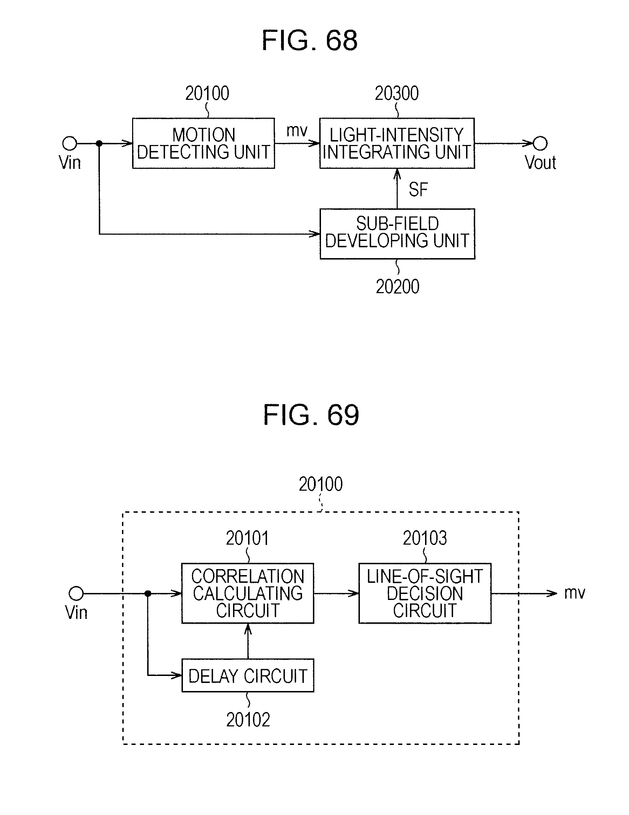

Fig. 68 illustrates an example structure of a first embodiment of an image processing device that can provide, using a first display device, reproduction of a state in which an image is displayed on a second display device having characteristics different from those of the first display device.

An input image signal Vin is supplied to a motion detecting unit 20100 and a sub-field developing unit 20200.

Fig. 69 illustrates a structure of the motion detecting unit 20100 of Fig. 68. The motion detecting unit 20100 detects, from the input image signal Vin, a motion vector of each pixel as the line of sight of a person on a pixel-by-pixel basis at the time the person sees the input image signal Vin.

The input image signal Vin is supplied to a correlation calculating circuit 20101 and a delay circuit 20102. The correlation calculating circuit 20101 performs a correlation calculation between the input image signal Vin of the current field and an input image signal of a previous field, which is delayed by one field using the delay circuit 20102.

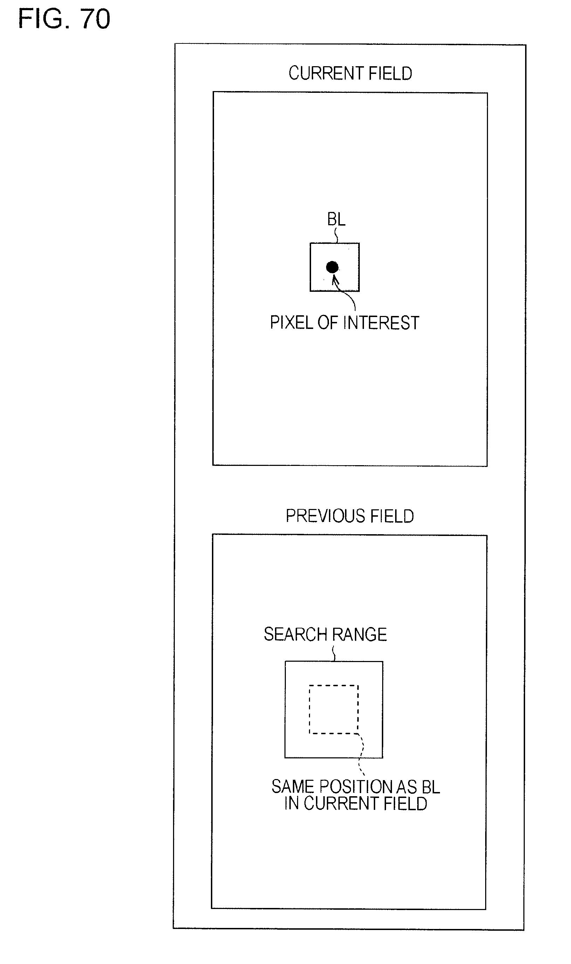

Fig. 70 illustrates a correlation calculating operation.

The correlation calculating circuit 20101 sets, for a pixel of interest in the current field, a block BL having the pixel of interest as the center. The block BL is, for example, a block of 5 x 5 pixels. Then, the correlation calculating circuit 20101 sets, in a previous field delayed using the delay circuit 20102, a search range having the same position as that of the block BL in the current field as the center. The search range is, for example, a region having -8 to +7 pixels in the horizontal and vertical directions, with reference to the same position as that of the block BL in the current field. Then, the correlation calculating circuit 20101 performs, as a correlation calculation, a calculation of determining the sum total of, for example, the absolute values of differences between pixel values of the block BL and each of candidate blocks having the same size as the block BL in the search range to obtain an evaluation value for evaluating the correlation between the block BL and each candidate block, and supplies the calculation result obtained for each candidate block to a line-of-sight decision circuit 20103.

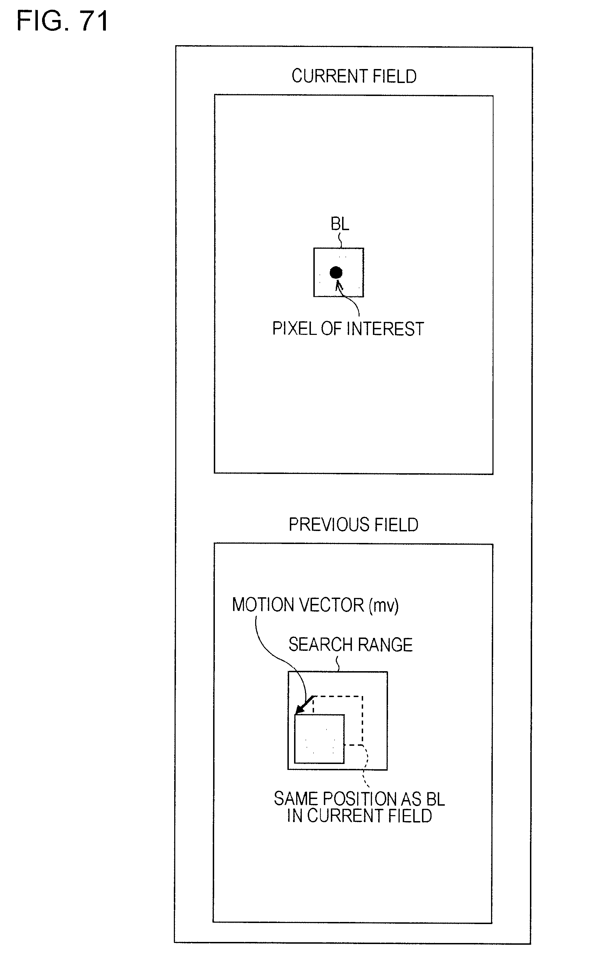

Referring back to Fig. 69, the line-of-sight decision circuit 20103 detects the position of a candidate block for which the calculation result having the minimum value is obtained, among the calculation results supplied from the correlation calculating circuit 20101, as a motion vector of the pixel of interest. Here, the position of the candidate block is, as illustrated in Fig. 71, a relative position from the block BL. The line-of-sight decision circuit 20103 decides the direction of the motion vector of the pixel of interest as the line-of-sight direction at the time a person sees the pixel of interest, that is, the direction in which the line of sight of a person who sees the current field follows a target (line-of-sight direction) mv.

The correlation calculating circuit 20101 sets the block BL for each pixel of interest. Alternatively, the correlation calculating circuit 20101 may initially divide the current field into blocks having 5 x 5 pixels, obtain the line-of-sight direction (motion vector) for each block, and apply the same line-of-sight direction to all pixels in a block. In a correlation calculation with each candidate block within the search range, an evaluation value may be determined by adding a certain weight to the absolute value of the difference at a pixel near the pixel of interest. In this case, a correlation of a pixel near the pixel of interest is heavily weighted.

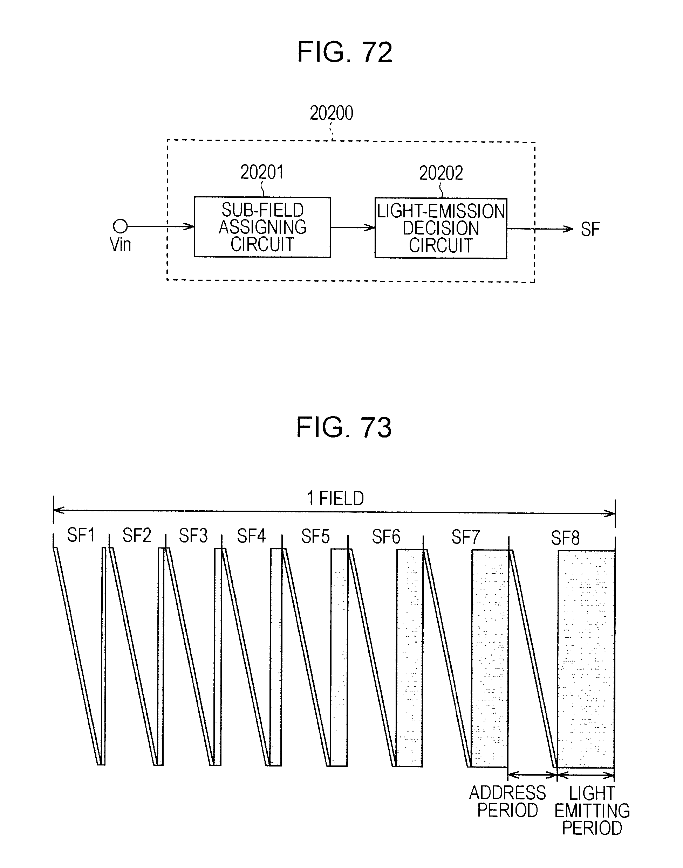

Fig. 72 illustrates an example structure of the sub-field developing unit 20200 of Fig. 68.

The sub-field developing unit 20200 generates a light emitting pattern of the individual sub-fields at the time of displaying the input image signal Vin on a PDP.

Before an operation of the sub-field developing unit 20200 is explained, a multi-gradation-level display method of a PDP will be explained. A PDP divides one field into a plurality of sub-fields and changes the weight of luminance of light emitted in each sub-field, thereby performing multi-gradation-level display.

Fig. 73 illustrates an example structure of sub-fields in a PDP. In Fig. 73, one field is divided into eight sub-fields SF1, SF2, SF3, SF4, SF5, SF6, SF7, and SF8, and the individual sub-fields SF1 to SF8 have different weights of luminance (light intensities). Each of the sub-fields SF1 to SF8 includes an address period in which the individual pixels are set to emit or not to emit light, and a light emitting period in which the pixels set to emit light in the address period are caused to emit light.

When the weights of luminance of the individual sub-fields SF1 to SF8 are, for example, 1, 2, 4, 8, 16, 32, 64, and 128, 256 gradation levels from 0 to 255 can be realized by combining the sub-fields SF1 to SF8.

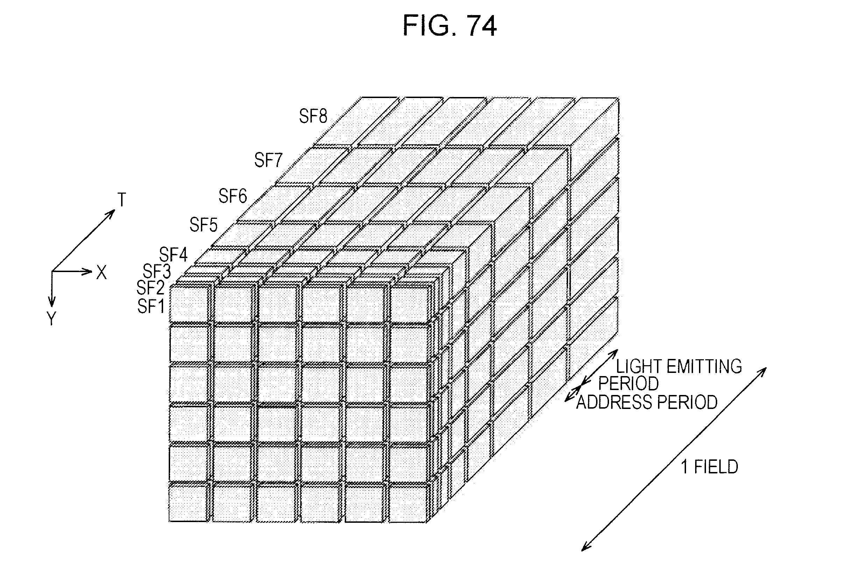

Since an actual PDP is configured on a two-dimensional plane, an image displayed on the PDP is represented by, as illustrated in Fig. 74, a three-dimensional model diagram composed of pixel positions X and Y in the PDP and sub-fields in a time direction T.

Referring back to Fig. 72, the input image signal Vin is supplied to a sub-field assigning circuit 20201. The sub-field assigning circuit 20201 expresses a pixel value in one field of the input image signal Vin using Equation (31) below, where $N_i$ is light emitting information indicating no light emission or light emission in a sub-field SF#i and is 0 or 1.

[Math. 31]

$$1 \times N_1 + 2 \times N_2 + 4 \times N_3 + 8 \times N_4 + 16 \times N_5 + 32 \times N_6 + 64 \times N_7 + 128 \times N_8$$

$$\ldots (31)$$

Note that, here, in the sub-field structure of the PDP to be displayed, as in the case illustrated in Fig. 73, one field is constituted by eight sub-fields SF1 to SF8, and weights of luminance of the individual sub-fields SF1 to SF8 are 1, 2, 4, 8, 16, 32, 64, and 128. Also, the following description is assumed to be based on this structure.

Then, the sub-field assigning circuit 20201 supplies the value of light emitting information $N_i$ regarding each pixel to a light-emission decision circuit 20202. The light-emission decision circuit 20202 generates, on the basis of determination of light emission when $N_i$ is 1 and no light emission when $N_i$ is 0, light-emission control information SF indicating a light emitting pattern of the sub-fields.

For example, when a certain pixel value in the input image signal Vin is "7", light-emission control information SF for assigning light emission to the sub-fields SF1, SF2, and SF3 and no light emission to the other sub-fields is generated. Also, for example, when a certain pixel value in the input image signal Vin is "22", light-emission control information SF for assigning light emission to the sub-fields SF2, SF3, and SF5 and no light emission to the other sub-fields is generated.

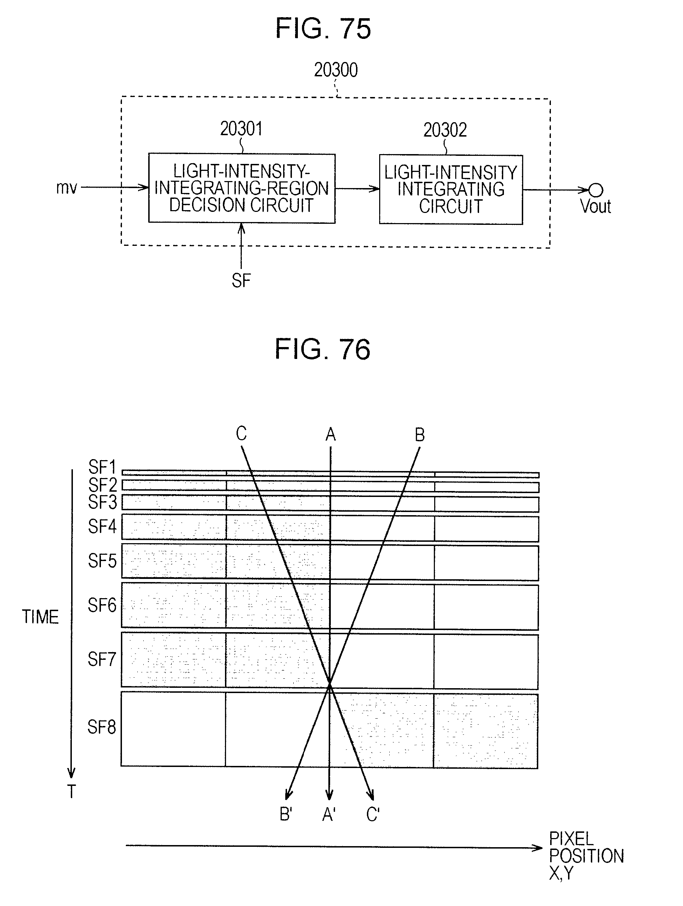

Fig. 75 illustrates a structure of a light-intensity integrating unit 20300 in Fig. 68. The light-intensity integrating unit 20300 generates and outputs an image having, as a pixel value, the light intensity integrated on the retinas of a person at the time the input image signal Vin is displayed on the PDP as a so-called simulated image seen by the eyes of the person when the input image signal is displayed on the PDP.

Before an operation of the light-intensity integrating unit 20300 is explained, how an image would look depending on the line-of-sight direction and the light emitting pattern, which are unique to the PDP, will be explained.

Fig. 76 illustrates a boundary between pixel values 127 and 128 in the sub-fields in which the pixel position X (Y) is plotted in abscissa and time T is plotted in ordinate. Shaded sub-fields represent sub-fields in which light is emitted.

When an image is not moving, the line-of-sight direction of a person becomes the direction A-A' parallel to the time direction T in ordinate, and light emission in the sub-fields is correctly integrated on the retinas of the person. Thus, the pixel values 127 and 128 are correctly recognized.

However, if an image moves one pixel to the left per field, the eyes of a person (the line of sight) follow the movement. Thus, the line-of-sight direction becomes the direction B-B', which is not parallel to the time direction T in ordinate. This causes light emission in the sub-fields not to be integrated on the retinas of the person and a black line to be recognized between the pixel values 127 and 128. Also, if an image conversely moves one pixel to the right per field, the eyes of the person follow the movement. Thus, the line-of-sight direction becomes the direction C-C', which is not parallel to the time direction T in ordinate. This causes light emission in the sub-fields to be excessively integrated on the retinas of the person and a white line to be recognized between the pixel values 127 and 128.

As above, since the PDP is of a driving type that uses sub-fields, the phenomenon in which a displayed image and an image seen by the eyes of a person are different may occur depending on the line-of-sight direction and the light emitting pattern of the sub-fields, which is generally known as a moving-image pseudo-contour.

Referring back to Fig. 75, the line-of-sight direction mv of each pixel, which is detected by the motion detecting unit 20100, and the light-emission control information SF generated by the sub-field developing unit 20200 are supplied to a light-intensity-integrating-region decision circuit 20301.

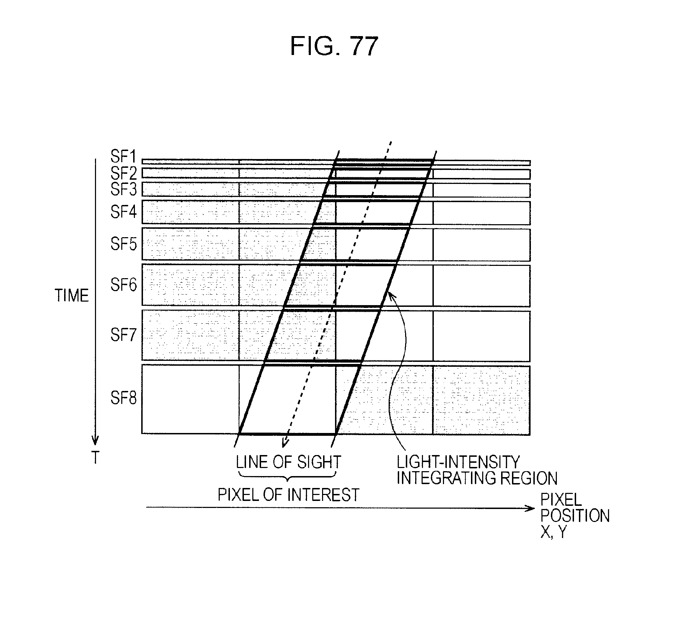

The light-intensity-integrating-region decision circuit 20301 decides, for each pixel, a light-intensity integrating region for reproducing, in a simulated manner, the light intensity integrated on the retinas of a person at the time of displaying the input image signal Vin on the PDP, from the line-of-sight direction mv detected by the motion detecting unit 20100 and the light-emission control information SF indicating the light emitting pattern of the sub-fields, which is generated by the sub-field developing unit 20200. That is, as illustrated in Fig. 77, for a pixel of interest, a light-intensity integrating region having a cross section area equivalent to one pixel in the detected line-of-sight direction is set.

Furthermore, the light-intensity-integrating-region decision circuit 20301 integrates the light intensity in each sub-field SF#i in accordance with the ratio of the light-emission region to the no-light-emission region in each sub-field within the light-intensity integrating region. For example, in the case of Fig. 77, when the ratio of the light-emission region to the no-light-emission region in the sub-field SF8 is 7:1, the light intensity integrated in the sub-field SF8 is given by $128 \times 1/(7 + 1) = 16$. The light-intensity-integrating-region decision circuit 20301 calculates the light intensities to be integrated in all the sub-fields SF1 to SF8 in a similar manner and supplies the light intensities to a light-intensity integrating circuit 20302.

The light-intensity integrating circuit 20302 obtains the sum total of the light intensities in the sub-fields SF1 to SF8, which are from the light-intensity-integrating-region decision circuit 20301, and regards the sum total as a pixel value of the pixel of interest. Then, the light-intensity integrating circuit 20302 performs a similar process for all pixels to thereby generate an output image Vout.

Also, the process of the light-intensity-integrating-region decision circuit 20301 and the light-intensity integrating circuit 20302 can be simply performed as follows.

That is, in Fig. 77, in the ratio of the light-emission region to the no-light-emission region in each sub-field, the greater quantity is adopted. In this case, the sub-field SF8 is brought into non-light-emission, and the light intensity is 0. The sub-field SF7 is brought into light emission, and the light intensity is 64. The sum total of results in all the sub-fields, which are similarly obtained, is set as a pixel value of the pixel of interest.

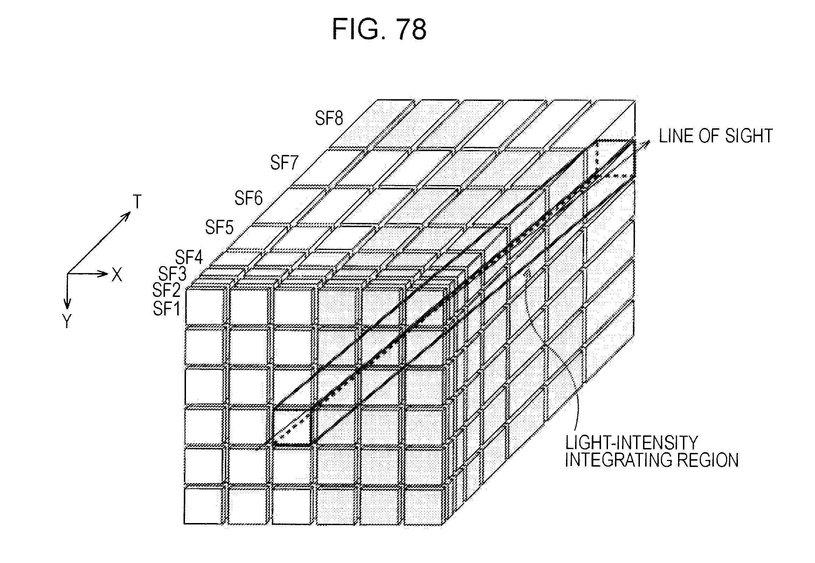

Since an actual PDP is configured on a two-dimensional plane, an image displayed on the PDP is represented by, as illustrated in Fig. 78, a three-dimensional model diagram composed of pixel positions X and Y in the PDP and sub-fields in a time direction T.

As above, the image processing device illustrated in Fig. 68 generates, from the input image signal Vin, an image having, as a pixel value, the light intensity to be integrated on the retinas of a person who sees an image displayed on the PDP, on the basis of the line-of-sight direction for each pixel and the light emitting pattern of the sub-fields at the time of displaying on the PDP, as an image seen by the eyes of the person who sees the image displayed on the PDP. Therefore, an image that is represented by the input image signal Vin displayed on the PDP, and seen by a person can be reproduced in a simulated manner.

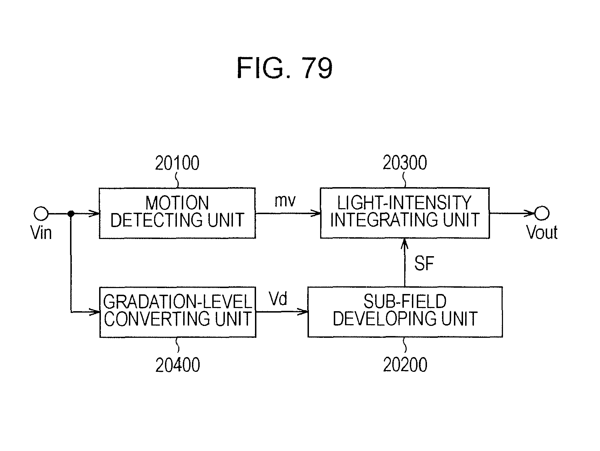

Fig. 79 illustrates an example structure of a second embodiment of an image processing device that can provide, using a first display device, reproduction of a state in which an image is displayed on a second display device having characteristics different from those of the first display device.

In general, in order to suppress the occurrence of a moving-image pseudo-contour in a PDP, usable gradation levels are limited. Furthermore, in order to realize apparent gradation levels, an error diffusing process of allocating a difference in pixel value between an input image and an image to be displayed to temporally and spatially neighboring pixels, a dithering process of representing apparent gradation levels using a time-space pattern of a plurality of pixel values, and the like are performed. The image processing device illustrated in Fig. 79 reproduces, in a simulated manner, an image seen by the eyes of a person in a case where the error diffusing process or dithering process described above is performed in a PDP that displays an input image signal Vin.

In Fig. 79, the input image signal Vin is supplied to a motion detecting unit 20100 and a gradation-level converting unit 20400. Since the structure of the motion detecting unit 20100 is similar to that of Fig. 68, an explanation thereof is omitted.

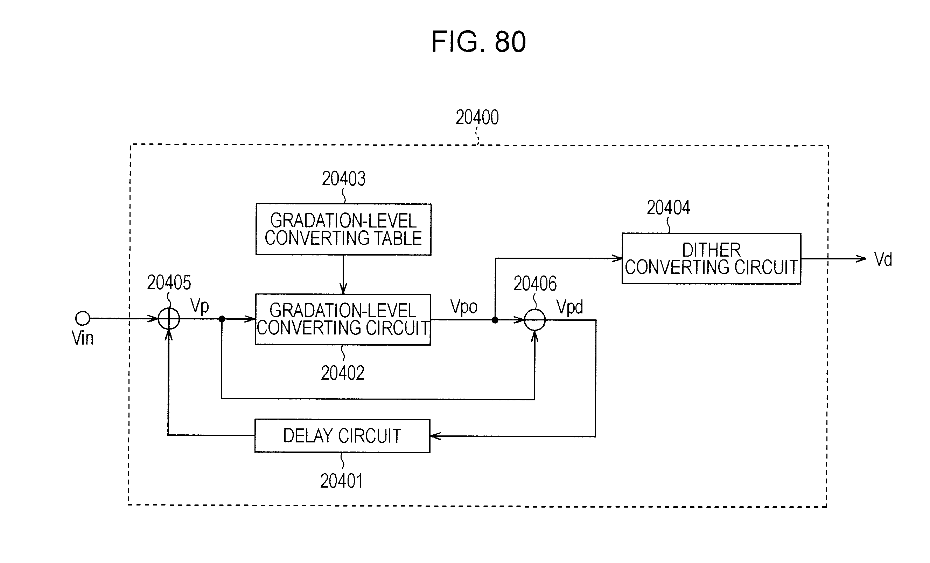

Fig. 80 illustrates an example structure of the gradation-level converting unit 20400 of Fig. 79.

The input image signal Vin is added in a computing unit 405 with a display gradation-level error Vpd described below to produce a pixel value (gradation level) Vp, which is supplied to a gradation-level converting circuit 20402.

The gradation-level converting circuit 20402 converts the input pixel gradation level (pixel value) Vp to another gradation level Vpo in accordance with a gradation-level converting table 20403. That is, in a case where 0, 1, 3, 7, 15, 31, 63, 127, and 255 are to be used as gradation levels at which a moving-image pseudo-contour is less likely to occur, the foregoing gradation levels to be used and apparent gradation levels (dither gradation levels) that are represented using a time-space distribution of the foregoing gradation levels to be used are set in the gradation-level converting table 20403.

The gradation-level converting circuit 20402 is configured to use only the gradation levels set in the gradation-level converting table 20403. The gradation-level converting circuit 20402 replaces the input gradation level Vp with, among the gradation levels in the gradation-level converting table 20403, the gradation level Vpo having the smallest difference with the gradation level Vp, and outputs the gradation level Vpo. The gradation level Vpo, which is an output of the gradation-level converting circuit 20402, is supplied to a dither converting circuit 20404. Additionally, a computing unit 406 determines the difference between the gradation level Vpo and the gradation level Vp, which is an input of the gradation-level converting circuit 20402, to produce the display gradation-level error Vpd. A delay circuit 20401 delays the display gradation-level error Vpd by one pixel in the horizontal direction, and the computing unit 405 adds the delayed display gradation-level error Vpd with the pixel value of the next input image signal Vin. Representation of the gradation-level difference, which is converted in this manner, using gradation levels of neighboring pixels is called an error diffusion process.

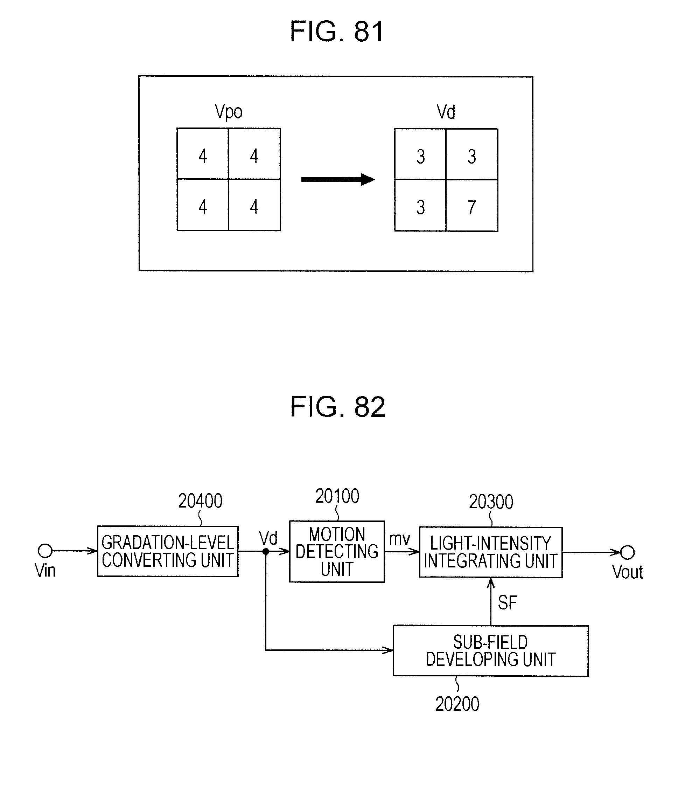

The dither converting circuit 20404 performs a dither process (dither conversion) in which apparent gradation levels are represented using a time-space distribution of gradation levels to be used. Fig. 81 illustrates an operation example of the dither converting circuit 20404. For example, if it is assumed that there is a region whose gradation level to be displayed is 4, the dither converting circuit 20404 causes the gradation level to be distributed in a manner as illustrated in, for example, Fig. 81 by using 3 and 7, which are gradation levels to be used. This would allow the eyes of a person to see the values of the gradation levels as 4 as a result of averaging the values of the gradation levels.

Referring back to Fig. 79, as above, the gradation-level converting unit 20400 converts the input image signal Vin into an image signal Vd that is actually used for display, and supplies the image signal Vd to the sub-field developing unit 20200. Since the structures of the sub-field developing unit 20200 and the light-intensity integrating unit 20300 are similar to those of Fig. 68, explanations thereof are omitted.

That is, in the image processing device of Fig. 79, the gradation-level converting unit 20400 outputs an image seen by the eyes of a person as a simulated image on the basis of the actually displayed gradation levels. In this case, the motion detecting unit 20100 detects (decides) the line of sight from the input image signal Vin. In a case where the apparent gradation level obtained by conversion performed by the gradation-level converting unit 20400 is not significantly different from the input image signal Vin, the line-of-sight direction is not significantly different either. Thus, such a structure would not cause a problem. Also, the gradation-level converting unit 20400 can be of any type that can convert the input image signal Vin into the image signal Vd that is used for display. For example, a technique described in Japanese Unexamined Patent Application Publication No. 2004-138783 or the like may be used.

Fig. 82 illustrates an example structure of a third embodiment of an image processing device that can provide, using a first display device, reproduction of a state in which an image is displayed on a second display device having characteristics different from those of the first display device.

In this image processing device, the pixel (of the image signal) Vd, which is an output of a gradation-level converting unit 20400, is supplied to a motion detecting unit 20100. In this case, the motion detecting unit 20100 is configured to detect the line of sight (line-of-sight direction) on the basis of the image signal to be actually displayed. Therefore, the line of sight in a case where limited gradation levels, diffused errors, and dither as is are visually detected is detected. Additionally, the gradation-level converting unit 20400 can output an image seen by the eyes of a person as a simulated image on the basis of the actually displayed gradation levels.

Note that in Fig. 82, since the structures of the motion detecting unit 20100, a sub-field developing unit 20200, a light-intensity integrating unit 20300, and the gradation-level converting unit 20400 are similar to those of Fig. 79, explanations thereof are omitted.

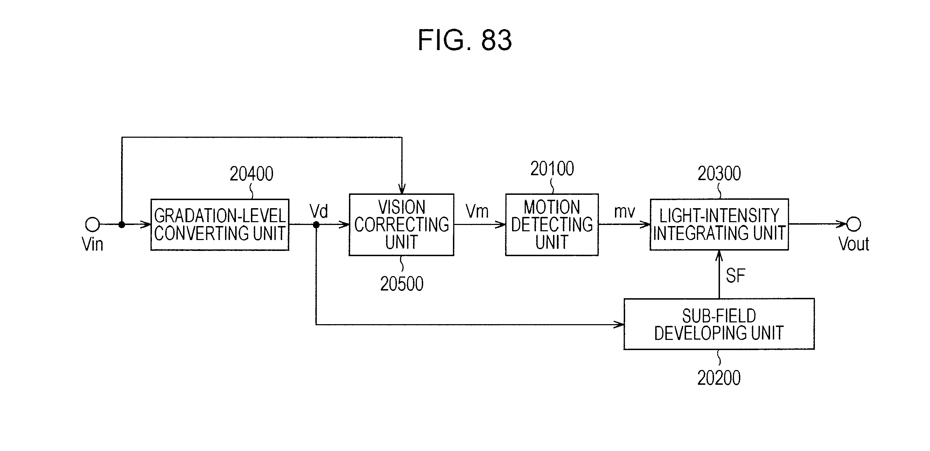

Fig. 83 illustrates an example structure of a fourth embodiment of an image processing device that can provide, using a first display device, reproduction of a state in which an image is displayed on a second display device having characteristics different from those of the first display device.

An input image signal Vin is supplied to a gradation-level converting unit 20400 and is converted into an image signal Vd that is used for display. The image signal Vd used for display is supplied to a vision correcting unit 20500.

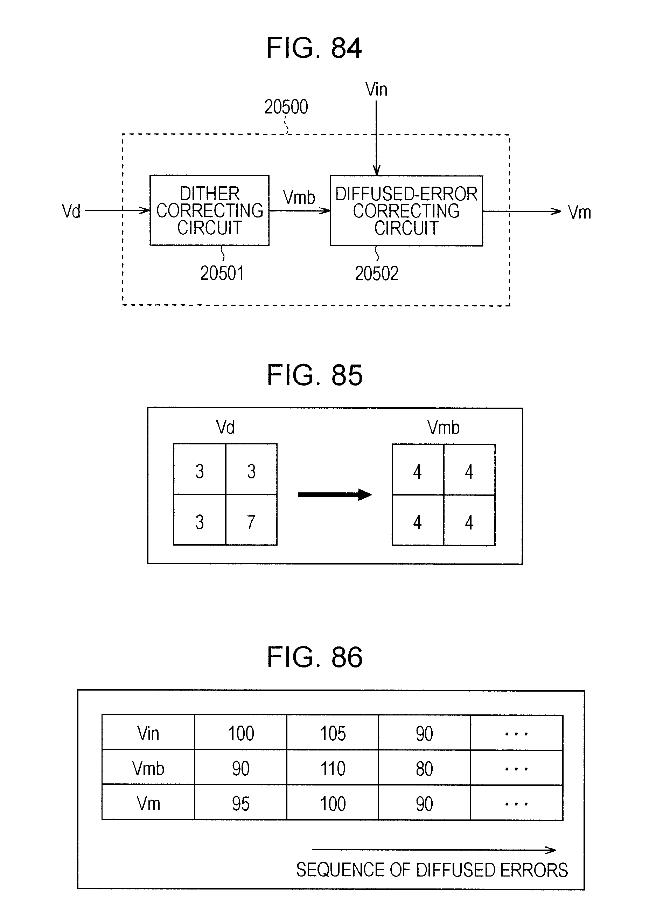

Fig. 84 illustrates an example structure of the vision correcting unit 20500. The vision correcting unit 20500 corrects the image signal Vd used for display into an apparent image (image signal) seen by a person in a simulated manner. The image signal Vd used for display is supplied to a dither correcting circuit 20501. The dither correcting circuit 20501 corrects gradation levels displayed as being dithered into apparent gradation levels in a simulated manner. That is, in a case where dither gradation levels have been used in the manner as illustrated in Fig. 81, the averaging of the values of the gradation levels is perceived to the eyes of a person and the gradation levels are corrected in a manner as illustrated in Fig. 85. Then, a dither-corrected image Vmb is supplied to a diffused-error correcting circuit 20502.

The diffused-error correcting circuit 20502 corrects an error diffused across neighboring pixels of a pixel of interest into an apparent gradation level in a simulated manner. That is, the diffused-error correcting circuit 20502 regards the difference (error) with the input image signal Vin as having been diffused in the dither-corrected image signal Vmb, and corrects the diffused error. For example, as illustrated in Fig. 86, an error of a pixel whose image signal Vmb is 90 is a difference with the input image signal Vin at the right adjacent pixel whose image signal Vmb is 110, and the value given by 110 - 105 = 5 is added as a diffused error to the image signal Vmb. Then, a vision-corrected image signal Vm is output. Similarly, the same process is performed on all pixels.

As above, the vision correcting unit 20500 corrects gradation levels obtained by conversion performed by the gradation-level converting unit 20400 into gradation levels seen by the eyes of a person in a simulated manner, and supplies the corrected image signal to the motion detecting unit 20100. Therefore, the line of sight is detected on the basis of a simulated image obtained at the time limited gradation levels, diffused errors, or dither is seen by the eyes of a person. Additionally, the gradation-level converting unit 20400 can obtain, in a simulated manner, an image seen by the eyes of a person on the basis of the actually displayed gradation levels. Note that since the structures of the motion detecting unit 20100, sub-field developing unit 20200, light-intensity integrating unit 20300, and gradation-level converting unit 20400 of Fig. 83 are similar to those of Fig. 79, explanations thereof are omitted.

As above, the image processing devices of Figs. 68, 79, 82, and 83 can obtain an image seen by the eyes of a person in a simulated manner from the sub-field light emitting pattern and the line-of-sight direction at the time an image is displayed on a PDP. Therefore, an image seen by the eyes of a person at the time an arbitrary image signal is displayed on a PDP can be displayed in a simulated manner on a display device different from the PDP. That is, a first display device such as, for example, an LCD, a CRT, an organic EL, or a projector can be used to reproduce a state in which an image is displayed on a second display device having characteristics different from those of the first display device, such as a PDP. The emulation of the display on the second display device can be performed using the first display device having characteristics different from those of the second display device.

Note that although Fig. 73 is used as an example of the structure of sub-fields in the PDP, the number of sub-fields and the weight of luminance of each sub-field may be arbitrary.

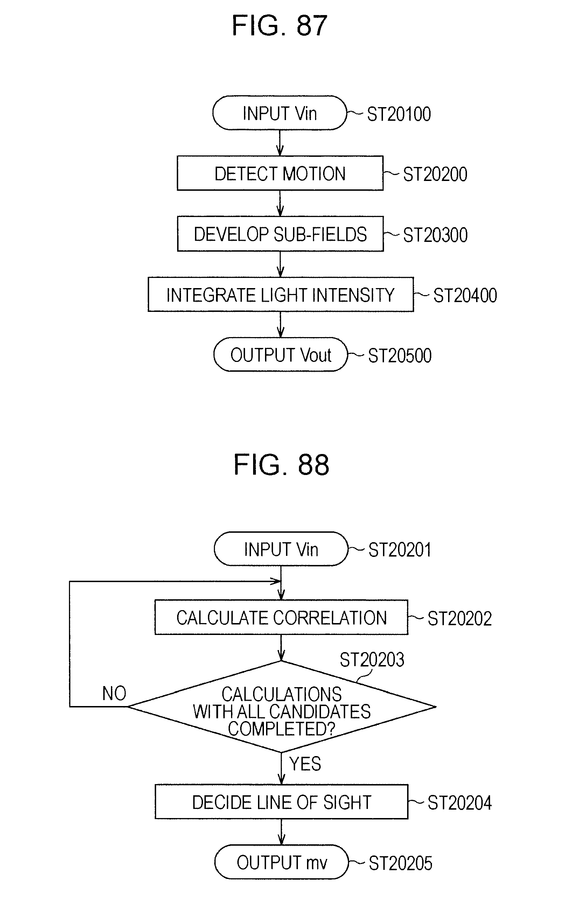

Fig. 87 illustrates a flowchart explaining the process of the image processing device of Fig. 68.

In step ST20100, the input image signal Vin is input to the image processing device. Next, in step ST20200, the motion detecting unit 20100 sequentially regards a field (or frame) of the input image signal Vin as a field of interest, detects a motion vector for each pixel in the field of interest, and decides the direction of the motion vector to be the line-of-sight direction.

Fig. 88 is a flowchart explaining the motion (vector) detecting process in step ST20200.

In step ST20201, the input image signal Vin of the field of interest is input to the motion detecting unit 20100. Next, in step ST20202, the motion detecting unit 20100 sequentially selects pixels constituting the field of interest as pixels of interest, and regards a block that surrounds each pixel of interest and has a predetermined size as a block of interest. Then, the motion detecting unit 20100 performs a correlation calculation between the block of interest in the field of interest and each of candidate blocks within a predetermined search range in the previous field. Next, in step ST20203, the motion detecting unit 20100 determines whether the calculations with all the candidate blocks have been completed. In a case where the calculations have been completed, the process proceeds to step ST20204. In a case where the calculations have not been completed, the process returns to step ST20202, and the process is continued. In step ST20204, the motion detecting unit 20100 detects the position of, among the candidate blocks, the candidate block having the highest correlation (candidate block having the smallest sum total of the absolute values of differences) as a motion vector, and decides the motion vector to be a line-of-sight direction mv at the pixel of interest. Then, in step ST20205, the motion detecting unit 20100 outputs the line-of-sight direction mv.

Referring back to Fig. 87, in the next step ST20300, the sub-field developing unit 20200 generates light-emission control information SF indicating the sub-field light emitting pattern at the time the field of interest of the input image signal Vin is displayed on a PDP.

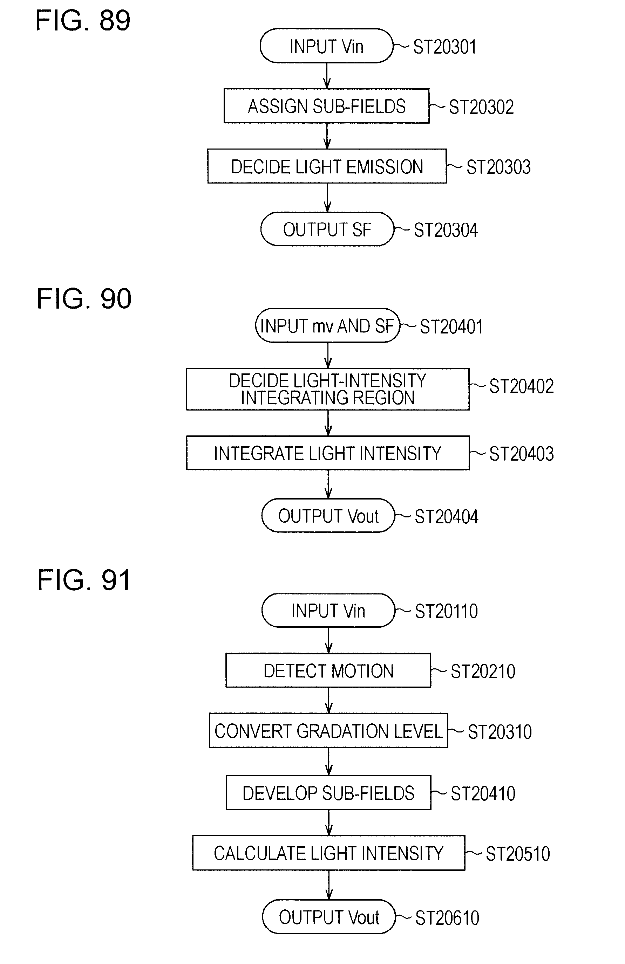

Fig. 89 is a flowchart of generating light-emission control information SF indicating the sub-field light emitting pattern in step ST20300.

In step ST20301, the field of interest of the input image signal Vin is input to the sub-field developing unit 20200. Next, in step ST20302, the sub-field developing unit 20200 represents the field of interest of the input image signal Vin using the sum total of weights of luminance of the individual sub-fields in Equation (31) and determines light-emission information Ni. Next, in step ST20303, the sub-field developing unit 20200 generates, on the basis of the light-emission information Ni, light-emission control information SF indicating a light emitting pattern of light emission and no light emission in the individual sub-fields of the field of interest. Then, in step ST20304, the sub-field developing unit 20200 outputs the light-emission control information SF indicating the sub-field light emitting pattern.

Referring back to Fig. 87, in the next step ST20400, the light-intensity integrating unit 20300 generates, in a simulated manner, an image signal Vout corresponding to the light intensity to be integrated on the retinas of a person (image seen by the eyes of the person), at the time the field of interest of the input image signal Vin is displayed on the PDP.

Fig. 90 is a flowchart illustrating integration of the light intensity in step ST20400.

In step ST20401, the line-of-sight direction mv at each pixel in the field of interest, which is detected in step ST20200, and the light-emission control information SF of the sub-fields of the field of interest, which is generated in step ST20300, are input to the light-intensity integrating unit 20300. Next, in step ST20402, in the light-intensity integrating unit 20300, individual pixels of the field of interest are sequentially selected as pixels of interest and a light-intensity integrating region in which the light intensity is integrated is decided based on the line-of-sight direction mv at each pixel of interest. Then, in step ST20403, the light-intensity integrating unit 20300 integrates the intensity of light emitted in sub-fields within the light-intensity integrating region decided in step ST20402 on the basis of the light emitting pattern indicated by the issuance control information SF, and determines a pixel value of the pixel of interest. Thus, the light-intensity integrating unit 20300 generates an output image (signal) Vout constituted by this pixel value. Then, in step ST20404, the light-intensity integrating unit 20300 outputs the output image Vout.

Referring back to Fig. 87, in the next step ST20500, for example, an LCD serving as a second display device (not illustrated) displays the generated output image Vout.

Fig. 91 illustrates a flowchart explaining the process of the image processing device of Fig. 79.

In step ST20110, similarly to step ST20100 of Fig. 87, the input image signal Vin is input. Next, in step ST20210, a motion vector, and therefore the line-of-sight direction mv, is detected for each pixel. The operation in step ST20210 is similar to that in step ST20200 of Fig. 87. Next, in step ST20310, the gradation-level converting unit 20400 performs gradation-level conversion performed at the time of displaying using a PDP.

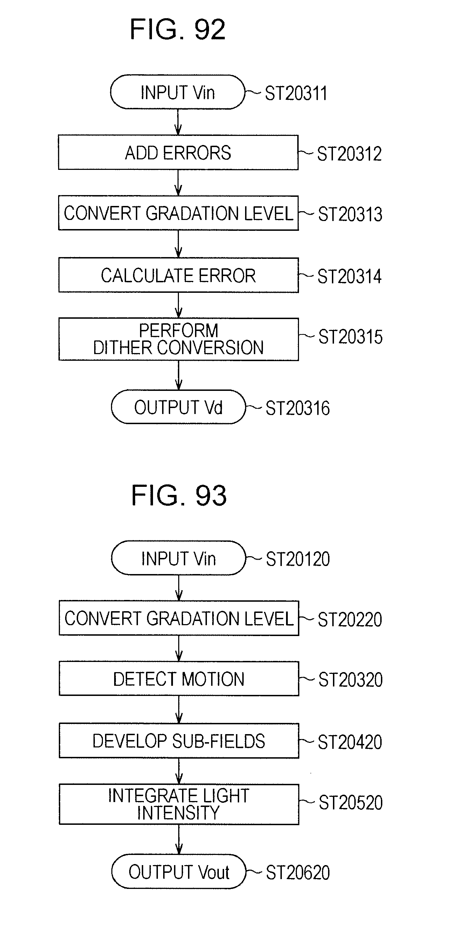

Fig. 92 is a flowchart illustrating the operation of gradation-level conversion in step ST20310.

In step ST20311, the input image signal Vin is input to the gradation-level converting unit 20400. Next, in step ST20312, the gradation-level converting unit 20400 converts the input image signal Vin into an image signal Vp by adding errors diffused from neighboring images. Next, in step ST20313, the gradation-level converting unit 20400 converts the gradation level of the image signal Vp in accordance with the gradation-level converting table 20403 (Fig. 80). Next, in step ST20314, the gradation-level converting unit 20400 calculates an error (display gradation-level error) Vpd between the image signal Vp obtained prior to gradation-level conversion and the image signal Vpo obtained after gradation-level conversion. Next, in step ST20315, the gradation-level converting unit 20400 performs dither conversion of the image signal Vpo. Then, in step ST20316, the gradation-level converting unit 20400 outputs an image signal obtained by performing dither conversion as a gradation-level-converted image signal Vd.

Referring back to Fig. 91, in the next step ST20410, a process similar to that in step ST20300 of Fig. 87 is performed on the image signal Vd obtained by conversion in step ST20310. Also, since the subsequent steps ST20510 and ST20610 are similar to steps ST20400 and ST20500 of Fig. 87, respectively, explanations thereof are omitted.

Fig. 93 illustrates a flowchart explaining the process of the image processing device of Fig. 82.

Note that in Fig. 93, besides the detection of the line-of-sight direction (motion vector) which is performed in the next step ST20320 on the image signal Vd obtained by conversion in step ST20220, processes similar to those in steps ST20110, ST20310, ST20210, ST20410, ST20510, and ST20610 of Fig. 91 are performed in steps ST20120, ST20220, ST20320, ST20420, ST20520, and ST20620, respectively.

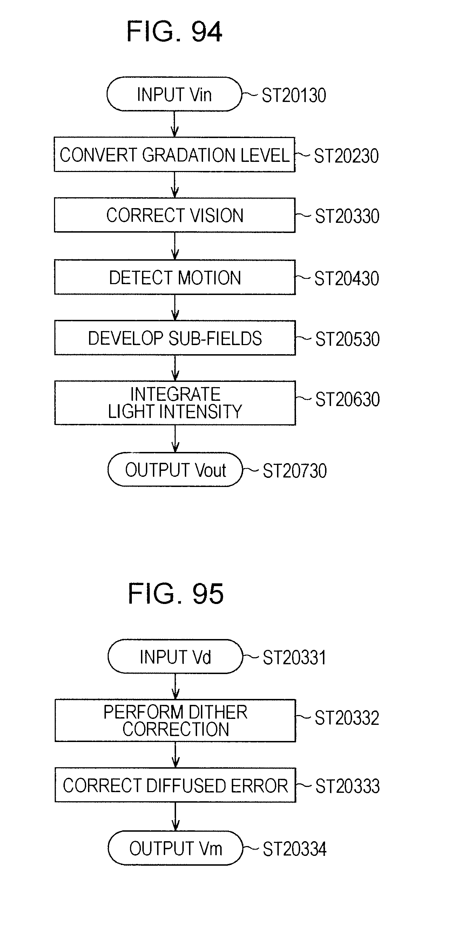

Fig. 94 illustrates a flowchart explaining the process of the image processing device of Fig. 83.

In step ST20130, similarly to step ST20120 in Fig. 93, the input image signal Vin is input. Next, in step ST20230, as in the case of Fig. 93, a gradation-level-converted image signal Vd is generated. Next, in step ST20330, vision correction of the image signal Vd obtained by conversion in step ST20320 is performed. Subsequently, processes similar to those in steps ST20320, ST20420, ST20520, and ST20620 in Fig. 93 are performed in steps ST20430, ST20530, ST20630, and ST20730, respectively.

Fig. 95 is a flowchart illustrating the operation of vision correction in step ST20330. In step ST20331, the image signal Vd is input to the vision correcting unit 20500. Next, in step ST20332, the vision correcting unit 20500 corrects the image signal Vd in accordance with dithering visual effects.
Next, in step ST20333, the vision correcting unit 20500 performs correction in a simulated manner for influences of errors diffused across neighboring pixels and generates an image signal Vm. In step ST20334, the vision correcting unit 20500 outputs the image signal Vm.

As above, the image processing devices of Figs. 68, 79, 82, and 83 generate an image seen by the eyes of a person in a simulated manner from the sub-field light emitting pattern and the line-of-sight direction at the time an image is displayed on a PDP. Therefore, an image seen by the eyes of a person at the time an arbitrary image signal is displayed on a PDP can be displayed in a simulated manner on a display device different from the PDP.

Next, the details of the process of the light-intensity integrating unit 20300 of Fig. 68 will be explained. Before that, displaying an image on a PDP will be explained again.

Displaying an image on a PDP is represented using, as illustrated in Fig. 74 or 78, a three-dimensional model diagram composed of pixel positions X and Y in the PDP and sub-fields in a time direction T.

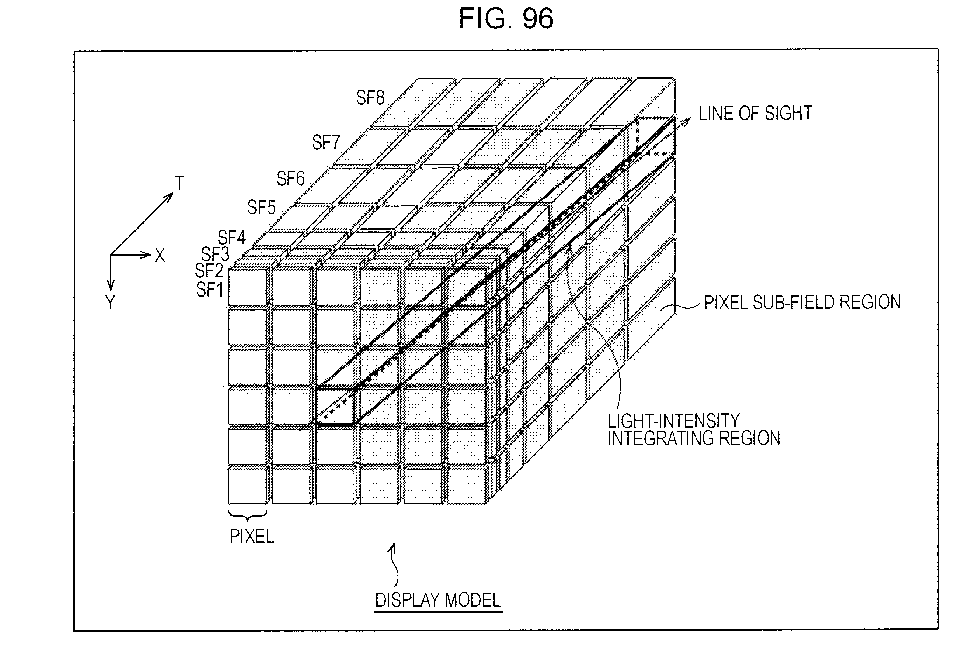

Fig. 96 illustrates a model obtained by modeling a display of an image on a PDP (hereinafter referred to as a display model as desired).

Here, Fig. 96 is a diagram similar to that of Fig. 74 or 78 described above.

In the display model, eight sub-fields SF1 to SF8 are arranged in a direction of time T, where a direction perpendicular to the XY plane serving as a display surface on which the input image signal Vin is displayed in the PDP is regarded as the direction of time T.

Note that in the XY plane serving as the display surface, for example, the upper left point on the display surface is regarded as the origin, the left-to-right direction as the X direction, and the up-to-down direction as the Y direction.

The light-intensity integrating unit 20300 (Fig. 68) sequentially selects pixels of the input image signal Vin displayed on the PDP (pixels of an image corresponding to the input image signal Vin, which is displayed on the PDP in accordance with the input image signal Vin) as pixels of interest. In the display model, a region having a region of each pixel of interest as a cross section and extending in the line-of-sight direction mv at the pixel of interest (direction of the motion vector detected for the pixel of interest) serves as a light-intensity integrating region in which the light intensity is integrated. The light intensity within the light-intensity integrating region is integrated in accordance with the sub-field light emitting pattern indicated by the light-emission control information SF. Accordingly, the pixel value of the pixel of interest is calculated.

That is, as illustrated in Fig. 96, the light-intensity integrating unit 20300 regards, as a pixel sub-field region, a rectangular prism region (space) having a region of a pixel on the display surface of the display model as a cross section and extending in the direction of time T for a length corresponding to the intensity of light emitted in the sub-field SF#i. An occupancy ratio that is a ratio at which the light-intensity integrating region occupies the pixel sub-field region is multiplied by the light intensity L of light emitted in accordance with the light emitting pattern of the sub-field SF#i corresponding to the pixel sub-field region (whether the pixel sub-field region in the sub-field SF#i emits light or does not emit light) so that the influential light intensity corresponding to the influence of the pixel sub-field region on the pixel value of the pixel of interest is determined for all pixel sub-field regions through which the light-intensity integrating region passes.

Then, the light-intensity integrating unit 20300 integrates the influential light intensities determined for all the pixel sub-field regions through which the light-intensity integrating region passes, and thereby calculates the integrated value as the pixel value of the pixel of interest.

Hereinafter, a method of calculating the pixel value of a pixel of interest using a display model, which is performed by the light-intensity integrating unit 20300, will be explained in detail.

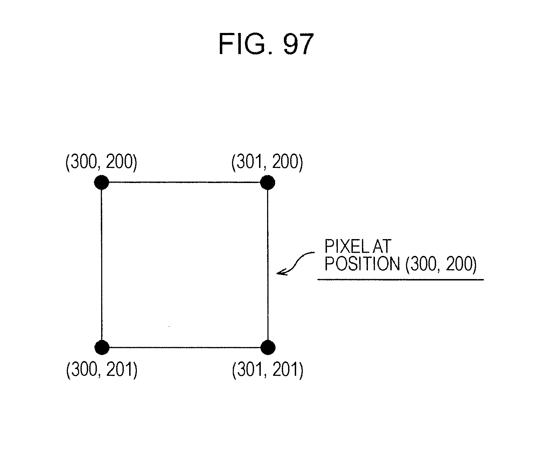

Fig. 97 illustrates an example of a pixel in a display model.

In the display model, it is assumed that a pixel is configured as a square region whose horizontal and vertical lengths are 1, for example. In this case, the area of the region of the pixel is 1 (= 1 × 1).

Also, in the display model, the position of a pixel (pixel position) is represented using the coordinates of the upper left corner of the pixel. In this case, for example, in (a square region serving as) a pixel whose pixel position (X, Y) is (300, 200), as illustrated in Fig. 97, the coordinates of the upper left point are (300, 200), and the coordinates of the upper right point are (301, 200). Also, the coordinates of the lower left point are (300, 201), and the coordinates of the lower right point are (301, 201).

Note that, for example, the upper left point of a pixel in the display model is hereinafter referred to as a reference point as desired.

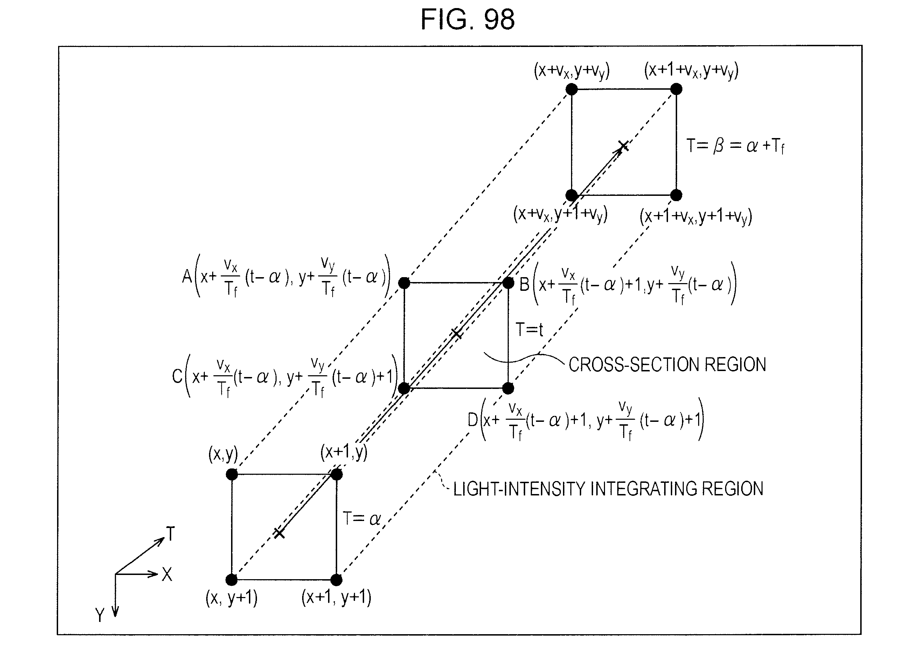

Fig. 98 illustrates a light-intensity integrating region in the display model.

For example, now, it is assumed that, letting a pixel at a pixel position $(x, y)$ be a pixel of interest, (a photographic subject appearing in) the pixel of interest moved at time $T = \alpha$ by a movement amount expressed as a motion vector $(v_x, v_y)$ during a period of time $T_f$ and moved to a position $(x+v_x, y+v_y)$ at time $T = \beta$ (= $\alpha + T_f$).

In this case, the trajectory of the square region serving as the region of the pixel of interest, which has moved from the position $(x, y)$ to the position $(x+v_x, y+v_y)$ becomes a light-intensity integrating region (space).

Now, if it is assumed that the cross section of the light-intensity integrating region, i.e., the region of the pixel of interest moving from the position $(x, y)$ to the position $(x+v_x, y+v_y)$, is referred to as a cross-section region (plane), the cross-section region is a region having the same shape as the region of the pixel. Thus, the cross-section region has four vertices.

It is assumed that, among the four vertices of the cross-section region at an arbitrary time $T = t$ ($\alpha \leq t \leq \beta$) from time $\alpha$ to $\beta$, the upper left, upper right, lower left, and lower right points (vertices) are represented by A, B, C, and D, respectively. Since the upper-left point A moves from the position $(x, y)$ to the position $(x+v_x, y+v_y)$ during the period of time $T_f$, the coordinates $(X, Y)$ of the point A at time t become $(x+v_x(t-\alpha)/T_f, y+v_y(t-\alpha)/T_f)$ .

Also, since the upper right point B is a point at a distance of +1 from the point A in the X direction, the coordinates $(X, Y)$ of the point B at time t become $(x+v_x(t-\alpha)/T_f+1, y+v_y(t-\alpha)/T_f)$. Likewise, since the lower left point C is a point at a distance of +1 from the point A in the Y direction, the coordinates $(X, Y)$ of the point C at time t become $(x+v_x(t-\alpha)/T_f, y+v_y(t-\alpha)/T_f+1)$. Since the lower right point D is a point at a distance of +1 from the point A in the X direction and at a distance of +1 from the point A in the Y direction, the coordinates $(X, Y)$ of the point D at time t become $(x+v_x(t-\alpha)/T_f+1, y+v_y(t-\alpha)/T_f+1)$.

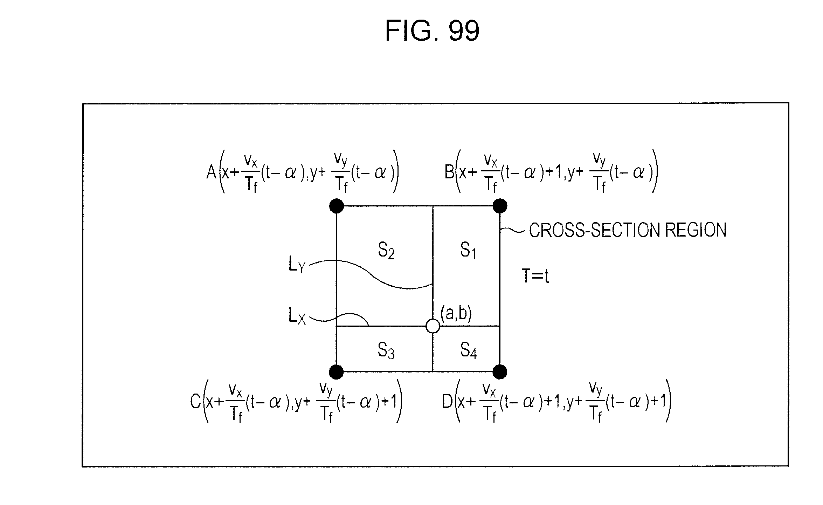

Fig. 99 illustrates the cross-section region at time $T = t$.

Since the cross-section region having the points A to D as vertices is not transformed, the cross-section region includes one or more reference points (when projected onto the XY plane) at an arbitrary time T=t. In Fig. 99, the cross-section region includes one reference point $(a, b)$.

Here, the cross-section region may include a plurality of reference points. This case will be described below.

Also, the cross-section region moves with time T and the position of a reference point included in the cross-section region changes accordingly. This can be understood that, with reference to the cross-section region, the reference point relatively moves with time T. The movement of the reference point with time T may cause the reference point in the cross-section region to be changed to (another reference point). This case will also be described below.

In the cross-section region, a straight line $L_x$ extending through the reference point $(a, b)$ and extending parallel to the X-axis and a straight line $L_y$ extending through the reference point $(a, b)$ and extending parallel to the Y-axis define the boundary of pixels constituting the display model. Thus, it is necessary to perform integration of the light intensity for each of regions obtained by dividing the cross-section region by the straight lines $L_x$ and $L_y$ (hereinafter referred to as divisional regions).

In Fig. 99, the reference point $(a, b)$ is located inside the cross-section region (portion other than the boundary), and accordingly, the cross-section region is divided into four divisional regions $S_1$, $S_2$, $S_3$, and $S_4$. Note that in Fig. 99, a region above and on the right of the reference point $(a, b)$ is set as the divisional region $S_1$, a region above and on the left of the reference point $(a, b)$ as the divisional region $S_2$, a region below and on the left of the reference point $(a, b)$ as the divisional region $S_3$, and a region above and on the right of the reference point $(a, b)$ as the divisional region $S_4$.

The area $(S_i)$ of the divisional region $S_i$ (i = 1, 2, 3, 4) at time $T = t$ is represented using Equations (32) to (35) as follows.

[Math. 32]

$$S_1 = \left| x + \frac{v_x}{T_f}(t-\alpha) + 1 - a \right| \cdot \left| y + \frac{v_y}{T_f}(t-\alpha) - b \right|$$

$$\cdots (32)$$

[Math. 33]

$$S_2 = \left| x + \frac{v_x}{T_f}(t-\alpha) - a \right| \cdot \left| y + \frac{v_y}{T_f}(t-\alpha) - b \right|$$

$$\cdots (33)$$

[Math. 34]

$$S_3 = \left| x + \frac{v_x}{T_f}(t-\alpha) - a \right| \cdot \left| y + \frac{v_y}{T_f}(t-\alpha) + 1 - b \right|$$

$$\cdots (34)$$

[Math. 35]

$$S_4 = \left| x + \frac{v_x}{T_f}(t-\alpha) + 1 - a \right| \cdot \left| y + \frac{v_y}{T_f}(t-\alpha) + 1 - b \right|$$

$$\cdots (35)$$

Now, it is assumed that, among the eight sub-fields SF1 to SF8 in the display model (Fig. 96), a certain sub-field SF#j serves as a sub-field of interest SF#j and that the cross-section region passes through the sub-field of interest SF#j during a period from time $T=_{sfa}$ to time $T=_{sfb}$.

The light-intensity integrating region serving as the trajectory of the cross-section region passing through the sub-field of interest SF#j is equal to a combination of the trajectories of the individual divisional regions $S_1$ to $S_4$ at the time the cross-section region passes therethrough.

Now, it is assumed that, within the light-intensity integrating region, a portion including the region serving as the trajectory of the divisional region $S_i$ (solid body having the divisional region $S_i$ as a cross section) is referred to as a divisional solid body $V_i$. Then, the volume $(V_i)$ of the divisional solid body $V_i$ can be determined by integrating the divisional region $S_i$ from time $t_{sfa}$ to $t_{sfb}$ in accordance with Equations (36) to (39) as follows.

[Math. 36]

$$V_1 = \int_{t_{sfa}}^{t_{sfb}} S_1 \, dt$$

$$\ldots (36)$$

[Math. 37]

$$V_2 = \int_{t_{sfa}}^{t_{sfb}} S_2 \, dt$$

$$\ldots (37)$$

[Math. 38]

$$V_3 = \int_{t_{sfa}}^{t_{sfb}} S_3 \, dt$$

$$\ldots (38)$$

[Math. 39]

$$V_4 = \int_{t_{sfa}}^{t_{sfb}} S_4 \, dt$$

$$\ldots (39)$$

Note that, here, it is assumed that, when the cross-section region passes through the sub-field of interest SF#j, the reference point (a, b) is not changed (the reference point (a, b) that has existed in the cross-section region when the cross-section region starts passing through the sub-field of interest SF#j continues existing in the cross-section region until the cross-section region passes through the sub-field of interest SF#j).

In contrast, in the display model, it is assumed that the volume of the pixel field region (Fig. 96) which is a rectangular prism solid body having a region of a pixel in the sub-field of interest SF#j as a cross section and extending in the direction of time T is V. Then, the volume V of this pixel field region and the volume ($V_i$) of the divisional solid bodies $V_1$, $V_2$, $V_3$, and $V_4$ have the relationship of Equation (40).

[Math. 40]

$$V = \sum_{i=1}^{4} V_i$$

$$\ldots \quad (40)$$

The divisional solid body $V_i$, which is a portion of the light-intensity integrating region, occupies a portion of a certain pixel field region in the sub-field of interest SF#j, of which the ratio of occupation is assumed to be referred to as an occupancy ratio. Then, the occupancy ratio is represented by $V_i/V$ and can be determined using Equations (36) to (40).

Now, if it is assumed that the pixel field region, a portion of which is occupied by the divisional solid body $V_i$, in the sub-field of interest SF#j is referred to as an occupied pixel field region, the light intensity corresponding to the influence of (the light intensity in) this occupied pixel field region on the pixel value of the pixel of interest (hereinafter referred to as influential light intensity, as desired) can be determined by multiplying the occupancy ratio $V_i/V$ by the light intensity $SF_{Vi}$ in the occupied pixel field region.

Here, when the occupied pixel field region in the sub-field of interest SF#j is emitting light, the light intensity $SF_{Vi}$ in the occupied pixel field region is set to the weight L of the luminance of this sub-field of interest SF#j. When the occupied pixel field region in the sub-field of interest SF#j is not emitting light (no light emission), the light intensity $SF_{Vi}$ is set to 0. Note that light emission/no light emission of the occupied pixel field region in the sub-field of interest SF#j can be recognized from the light emitting pattern indicated by the light-emission control information SF supplied from the sub-field developing unit 20200 (Fig. 68) to the light-intensity integrating unit 20300.

The light intensity $P_{SFL,j}$ corresponding to the influence of (the light intensity in) the sub-field of interest SF#j on the pixel value of the pixel of interest (light intensity caused by the sub-field of interest SF#j) is the sum total of the influential light intensities $SF_{V1} \times V_1/V$, $SF_{V2} \times V_2/V$, $SF_{V3} \times V_3/V$, and $SF_{V4} \times V_4/V$ in the occupied pixel field region, portions of which are occupied by the divisional solid bodies $V_1$, $V_2$, $V_3$, and $V_4$. Thus, the light intensity $P_{SFL,j}$ can be determined using Equation (41).

[Math. 41]

$$P_{SFL,\,j} = \sum_{i=1}^{4} \frac{V_i}{V} SF_{V_l}$$

$$\ldots \quad (41)$$

In the light-intensity integrating unit 20300 (Fig. 68), $P_{SFL,1}$ to $P_{SFL,8}$ caused by the eight sub-fields SF1 to SF8 are determined for the pixel of interest in accordance with Equation (41). Then, in the light-intensity integrating unit 20300, $P_{SFL,1}$ to $P_{SFL,8}$ caused by the eight sub-fields SF1 to SF8 are integrated and the integrated value given by $P_{SFL,1} + P_{SFL,2} + \ldots + P_{SFL,8}$ is regarded as the pixel value of the pixel of interest. Note that determining the integrated value given by $P_{SFL,1} + P_{SFL,2} + \ldots + P_{SFL,8}$ is equivalent to determining the influential light intensities in all the pixel sub-field regions through which the light-intensity integrating region passes and integrating these influential light intensities.

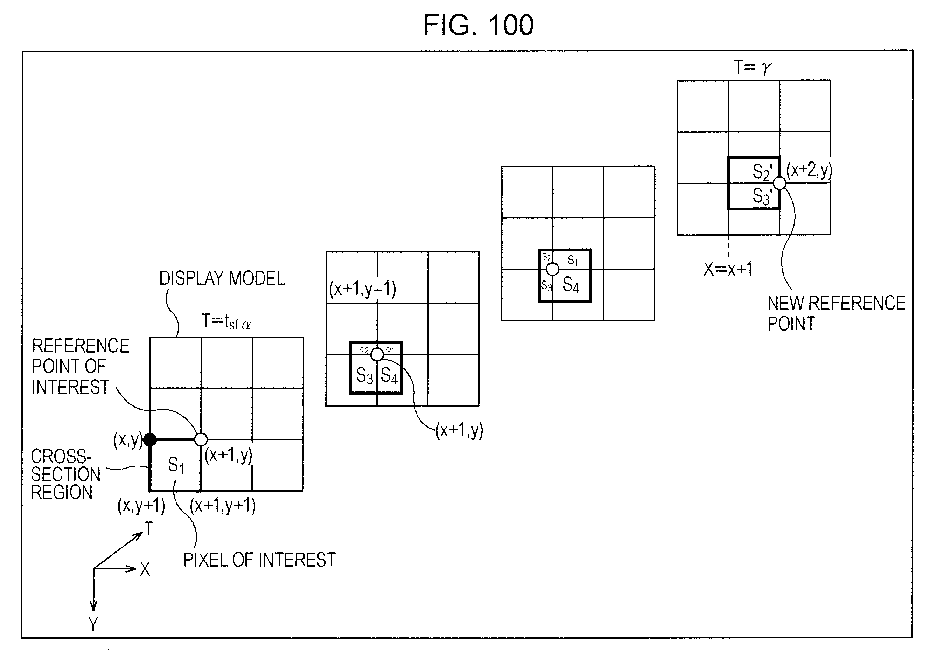

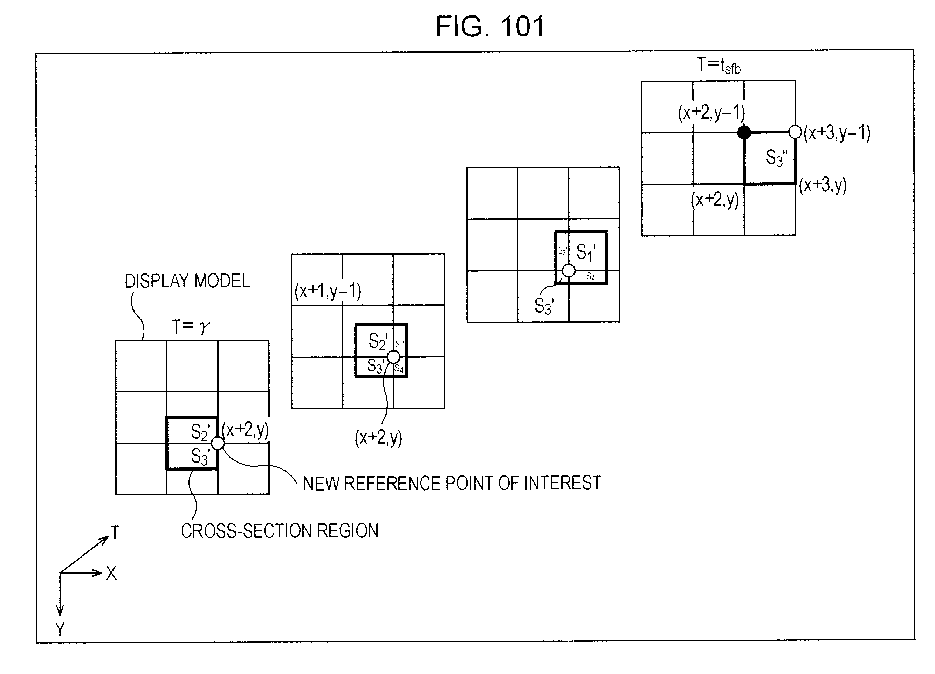

Incidentally, regarding the cross-section region which moves with time T, as described above, a plurality of reference points may exist in the cross-section region, or a reference point in the cross-section region may be changed to (another reference point). Such a case will be explained with reference to Figs. 100 and 101.

Figs. 100 and 101 illustrate a cross-section region that moves with time T within a display model, with a pixel at a position (x, y) in the display model serving as a pixel of interest.

Note that Fig. 101 is a diagram continued from Fig. 101.

In Figs. 100 and 101, letting the pixel at the pixel position (x, y) be a pixel of interest, (a photographic subject appearing in) the pixel of interest is moving, for a period from time $T = t_{sfa}$ to time $T = T_{sfb}$, to a position (x+2, y-1) by a movement amount expressed as a motion vector (+2, -1).

As above, in the cross-section region which is a region of the pixel of interest which moves from the position (x, y) to the position (x+2, y-1), when the position of this cross-section region perfectly matches the position of a region of a pixel in the display model (when viewed in the XY plane), four vertices of the region of the pixel exist as reference points in the cross-section region.

That is, for example, in the cross-section region at the position (x, y) at which movement starts (cross-section region whose upper left vertex is positioned at the position (x, y)), four reference points, namely, the point (x, y), the point (x+1, y), the point (x, y+1), and the point (x+1, y+1) exist.

As above, when a plurality of reference points exist in the cross-section region, for example, one reference point located in the line-of-sight direction mv at the pixel of interest (direction of a motion vector detected for the pixel of interest) is selected as a reference point used to determine the pixel value of the pixel of interest (hereinafter referred to as a reference point of interest, as desired).

That is, for example, in a case where the X component of the motion vector representing the line-of-sight direction mv at the pixel of interest is greater than 0 (sign is positive) and the Y component thereof is less than or equal to 0 (Y component is 0 or the sign thereof is negative), the upper right reference point (x+1, y) is selected as a reference point of interest among the four reference points (x, y), (x+1, y), (x, y+1), and (x+1, y+1).

Also, for example, in a case where the X component of the motion vector representing the line-of-sight direction mv at the pixel of interest is less than or equal to 0 and the Y component thereof is less than or equal to 0, the upper left reference point (x, y) is selected as a reference point of interest among the four reference points (x, y), (x+1, y), (x, y+1), and (x+1, y+1).

Furthermore, for example, in a case where the X component of the motion vector representing the line-of-sight direction mv at the pixel of interest is less than or equal to 0 and the Y component thereof is greater than 0, the lower left reference point (x, y+1) is selected as a reference point of interest among the four reference points (x, y), (x+1, y), (x, y+1), and (x+1, y+1).

Also, for example, in a case where both the X component and the Y component of the motion vector representing the line-of-sight direction mv at the pixel of interest are greater than 0, the lower right reference point (x+1, y+1) is selected as a reference point of interest among the four reference points (x, y), (x+1, y), (x, y+1), and (x+1, y+1).

In Fig. 100, since the motion vector representing the line-of-sight direction mv at the pixel of interest is the vector (+2, -1), the upper right reference point (x+1, y) is selected as a reference point of interest.

After the reference point of interest (x+1, y) is selected in the manner as above, the cross-section region can be divided on the basis of the reference point of interest (x+1, y) into the four divisional regions $S_1$, $S_2$, $S_3$, and $S_4$ explained in Fig. 99. Therefore, the pixel value of the pixel of interest can be determined in accordance with Equations (32) to (41) unless the cross-section region moves in the line-of-sight direction mv to thereby achieve a state where this cross-section region contains a new reference point.

In contrast, in a case where the cross-section region moves in the line-of-sight direction mv to thereby achieve a state where this cross-section region contains a new reference point, for this new reference point, a new reference point of interest is re-selected in a manner similar to that in the case described above, and accordingly, the reference point of interest is changed.

That is, for example, in Fig. 100, at time T = γ, the X coordinate x+1 of the position of the cross-section region matches the X coordinate x+1 of the position of the pixel in the display model, and accordingly, a new reference point (x+2, y) is contained in the cross-section region.

In this case, for the new reference point (x+2, y), a new reference point of interest is re-selected. In the current case, since only the reference point (x+2, y) is the new reference point, this reference point (x+2, y) is selected as a new reference point of interest, and accordingly, the reference point of interest is changed from the reference point (x+1, y) to the reference point (x+2, y).

Note that also in a case where the Y coordinate of the position of the cross-section region matches the Y coordinate of the position of the pixel in the display model, and accordingly, a new reference point is contained in the cross-section region, the reference point of interest is changed in the manner as described above.

Fig. 101 illustrates the cross-section region obtained after the reference point of interest has been changed, that is, after the new reference point of interest (x+2, y) has been selected.

After a new reference point of interest has been selected, the cross-section region can be divided on the basis of this new reference point of interest into four divisional regions in a manner similar to that in the case explained in Fig. 99. In Fig. 101, the cross-section region is divided into four divisional regions $S_1$', $S_2$', $S_3$', and $S_4$'.

After the new reference point of interest is selected, in a case where the cross-section region moves in the line-of-sight direction mv to thereby achieve a state where a new reference point is contained in this cross-section region, for this new reference point, a new reference point of interest is re-selected in a manner similar to that in the case described above, and accordingly, the reference point of interest is changed.

In Fig. 101, at time T=$t_{sfb}$, the X coordinate x+2 of the position of the cross-section region matches the X coordinate x+2 of the position (x+2, y-1) of the pixel in the display model, and additionally the Y coordinate y-1 of the position of the cross-section region matches the Y coordinate y-1 of the position (x+2, y-1) of the pixel in the display model. Accordingly, three new reference points (x+2, y-1), (x+3, y-1), and (x+3, y) are contained in the cross-section region.

When the cross-section region still moves thereafter, a new reference point of interest is re-selected in the manner described above among the three new reference points (x+2, y-1), (x+3, y-1), and (x+3, y).

As above, by re-selecting (changing) a reference point of interest, the occupancy ratio at which the light-intensity integrating region occupies the occupied pixel field region (Fig. 96), i.e., the ratio $V_\varepsilon/V$ of the volume ($V_\varepsilon$) of a portion $V_\varepsilon$ of the occupied pixel field region, which is occupied by the light-intensity integrating region (since this portion corresponds to the above-described divisional solid body, this portion is hereinafter referred to as a divisional solid body portion, as desired) to the volume (V) of the occupied pixel field region V, can be determined.

That is, for example, as illustrated in Figs. 100 and 101, in a case where the cross-section region moves from the position (x, y) to the position (x+2, y-1) for a period from time $T = t_{sfa}$ to time $T = t_{sfb}$ and passes through the sub-field of interest SF#j, when the reference point of interest is changed only once at time $T = \gamma$, the volume ($V_\varepsilon$) of, for example, the divisional solid body portion $V_\varepsilon$ in the sub-field of interest SF#j, which is occupied by the light-intensity integrating region within the occupied pixel field region having the region of the pixel at the position (x+1, y-1) as a cross section, can be determined using Equation (42).

[Math. 42]

$$V_\varepsilon = \int_{t_{sfa}}^{\gamma} S_1 \, dt + \int_{\gamma}^{t_{sfb}} S_2' \, dt$$

$$\ldots \quad (42)$$

Here, in Equation (42), $S_1$ indicates, as illustrated in Fig. 100, the area of a divisional region in the region of the pixel at the position (x+1, y-1), which defines the cross section of the occupied pixel field region, during a period from time $T = t_{sfa}$ to time $T = \gamma$ during which the reference point (x+1, y) serves as the reference point of interest. Also, $S_2'$ indicates, as illustrated in Fig. 101, the area of a divisional region in the region of the pixel at the position (x+1, y-1), which defines the cross section of the occupied pixel field region, during a period from time $T = \gamma$ to time $T = t_{sfb}$ during which the reference point (x+2, y) serves as the reference point of interest.

As given in Equation (42), the volume ($V_\varepsilon$) of the divisional solid body portion $V_\varepsilon$ in the sub-field of interest SF#j, which is occupied by the light-intensity integrating region within the occupied pixel field region having the region of the pixel at a certain position (X, Y) as a cross section, can be determined by integrating the area (in Equation (42), the areas $S_1$ and $S_2'$) of a divisional region in the region of the pixel defining the cross section of the occupied pixel field region, with the section of integration being divided at a point at which the reference point of interest is changed (in Equation (42), into a period from time $T = t_{sfa}$ to time $T = \gamma$ and a period from time $T = \gamma$ to time $T = t_{sfb}$).

Then, the occupancy ratio $V_\varepsilon/V$ at which the light-intensity integrating region occupies the occupied pixel field region can be determined by dividing the volume ($V_\varepsilon$) of the divisional solid body portion $V_\varepsilon$, which is occupied by the light-intensity integrating region within the occupied pixel field region, by the volume (V) of the occupied pixel field region V.

After the occupancy ratio $V_\varepsilon/V$ has been determined, as explained in Figs. 98 and 99, the occupancy ratio $V_i/V$ is multiplied by the light intensity in the occupied pixel field region. Thus, the light intensity (influential light intensity) corresponding to the influence of (the light intensity in) the occupied pixel field region on the pixel value of the pixel of interest can be determined. Then, the influential light intensities in all the pixel sub-field regions through which the light-intensity integrating region passes are determined, and the influential light intensities are integrated. Thus, the pixel value of the pixel of interest can be determined.

Next, as given in Equation (42), in order to determine the volume ($V_\varepsilon$) of the divisional solid body portion $V_\varepsilon$, which is occupied by the light-intensity integrating region within the occupied pixel field region, the time at which the reference point of interest is changed (in Equation (42), time $\gamma$) (hereinafter referred to as a change time, as desired) is necessary.

A change of the reference point of interest occurs when the X coordinate of the position of the cross-section region matches the X coordinate of the position of a pixel in the display model or when the Y coordinate of the position of the cross-section region matches the Y coordinate y-1 of the position of a pixel in the display model. Therefore, the change time can be determined in the following manner.

That is, for example, now, as illustrated in Fig. 98 described above, it is assumed that, letting a pixel at a pixel position (x, y) be a pixel of interest, the cross-section region located at the position (x, y) moved at time $T = \alpha$ by a movement amount expressed as a motion vector $(v_x, v_y)$ during a period of time $T_f$ and moved to a position $(x+v_x, y+v_y)$ at time $T = \beta \, (= \alpha + T_f)$.

In this case, a change time $T_{cx}$ at which the X coordinate of the position of the cross-section region matches the X coordinate of the position of the pixel in the display model is represented by Equation (43).

[Math. 43]

$$T_{cx} = \frac{T_f}{|v_x|} N$$

$$N = 1, 2, \cdots, |v_x|$$

$$\cdots \quad (43)$$

Here, it is assumed that the X component $v_x$ of the motion vector takes an integer value.

Also, a change time $T_{cy}$ at which the Y coordinate of the position of the cross-section region matches the Y coordinate of the position of the pixel in the display model is represented by Equation (44).

[Math. 44]

$$T_{cy} = \frac{T_f}{|v_y|} N$$

$$N = 1, 2, \cdots, |v_y|$$

$$\cdots \quad (44)$$

Here, it is assumed that the Y component $v_y$ of the motion vector takes an integer value.

Note that in a case where the X component $v_x$ of the motion vector is a value other than 0, every time the time T becomes the change time $T_{cx}$, which is determined in accordance with Equation (43), a point obtained by adding +1 or -1 to the X coordinate of the reference point, which was the immediately preceding reference point of interest, becomes a new reference point of interest (changed reference point). That is, in a case where the X component $v_x$ of the motion vector is positive, a point obtained by adding +1 to the X coordinate of the reference point, which was the immediately preceding reference point of interest, becomes a new reference point of interest. In a case where the X component $v_x$ of the motion vector is ne tive, a point obtained by adding -1 to the X coordinate of the reference point, which was the immediately preceding reference point of interest, becomes a new reference point of interest.

Likewise, in a case where the Y component $v_y$ of the motion vector is a value other than 0, every time the time T becomes the change time $T_{cy}$, which is determined in accordance with Equation (44), a point obtained by adding +1 or -1 to the Y coordinate of the reference point, which was the immediately preceding reference point of interest, becomes a new reference point of interest. That is, in a case where the Y component $v_y$ of the motion vector is positive, a point obtained by adding +1 to the Y coordinate of the reference point, which was the immediately preceding reference point of interest, becomes a new reference point of interest. In a case where the Y component $v_y$ of the motion vector is negative, a point obtained by adding -1 to the Y coordinate of the reference point, which was the immediately preceding reference point of interest, becomes a new reference point of interest.

Note that in a case where the change times $T_{cx}$ and $T_{cy}$ are equal, a point obtained in the manner described above by adding +1 or -1 to both the X coordinate and the Y coordinate of the reference point, which was the immediately preceding reference point of interest, becomes a new reference point of interest.

Here, in Figs. 100 and 101, at time $T = t_{sfa}$, the cross-section region located at the position (x, y) moves by a movement amount expressed as a motion vector $(v_x, v_y) = (+2, -1)$ during the period of time $T_f$, and moves to a position (x+2, y-1) at time $T = t_{sfb}$ (= $t_{sfa} + T_f$).

In Figs. 100 and 101, time $T = \gamma$ is the change time $T_{cx}$ when the variable N in Equation (43) is 1. In Equation (43), by setting $T_f = t_{sfb} - t_{sfa}$, N = 1, and $v_x = +2$, the change time $T_{cx} = \gamma$ can be determined in accordance with the equation $(t_{sfb} - t_{sfa}) \times 1/|I+2|$.

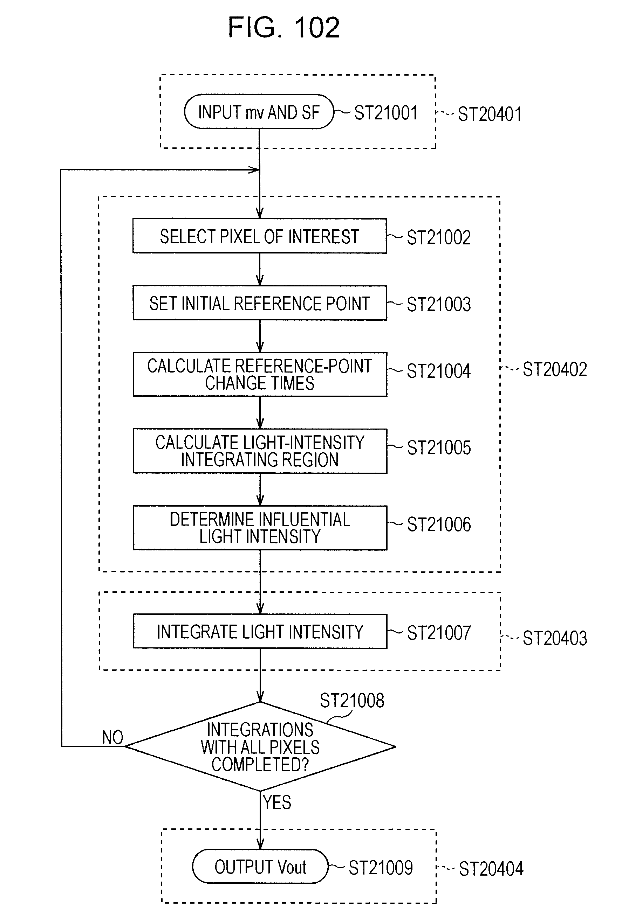

Next, the light-intensity integrating process in step ST20400 of Fig. 87, which has been explained in Fig. 90, will be further explained in detail with reference to a flowchart of Fig. 102.

In step ST21001, the line-of-sight direction mv at each pixel in the field of interest, which is detected in step ST20200 of Fig. 87, is supplied from the motion detecting unit 20100 (Fig. 68) to the light-intensity integrating unit 20300. Additionally, the light-emission control information SF indicating the light emitting pattern of the sub-fields of the field of interest, which is generated in step ST20300 of Fig. 87, is supplied from the sub-field developing unit 20200 (Fig. 68) to the light-intensity integrating unit 20300.

Here, step ST21001 corresponds to step ST20401 of Fig. 90.

Thereafter, the process proceeds from step ST21001 to step ST21002, in which in the light-intensity integrating unit 20300 (Fig. 75), the light-intensity-integrating-region decision circuit 20301 selects, as a pixel of interest, one of pixels unselected as pixels of interest among the pixels constituting the field of interest. The process proceeds to step ST21003.

In step ST21003, the light-intensity-integrating-region decision circuit 20301 sets (selects), for the pixel of interest, a reference point that serves as an initial (first) reference point of interest among reference points in the display model on the basis of the line-of-sight direction mv at this pixel of interest. The process proceeds to step ST21004.

In step ST21004, the light-intensity-integrating-region decision circuit 20301 determines, for the pixel of interest, change times at which the reference point of interest is changed, as has been explained using Equations (43) and (44). Additionally, the light-intensity-integrating-region decision circuit 20301 determines, at each change time, a reference point that serves as a new reference point of interest. The process proceeds to step ST21005.

In step ST21005, the light-intensity-integrating-region decision circuit 20301 determines a light-intensity integrating region using the line-of-sight direction mv at the pixel of interest, the change times determined in step ST21004, and the reference point that serves as a new reference point of interest at each change time.

That is, in step ST21005, the light-intensity-integrating-region decision circuit 20301 determines, for each of the eight sub-fields SF1 to SF8, the volume ($V_i$) of a divisional solid body potion $V_i$ (Equation (41)) in the occupied pixel field region, which is occupied by the light-intensity integrating region of the pixel of interest, by using the line-of-sight direction mv at the pixel of interest, the change times, and the reference point that serves as a new reference point of interest at each change time. Here, a region obtained by combining all the divisional solid body portions $V_i$ obtained for the individual eight sub-fields SF1 to SF8 becomes a light-intensity integrating region.

In step ST21005, the light-intensity-integrating-region decision circuit 20301 further determines, for each of the eight sub-fields SF1 to SF8, the occupancy ratio $V_i/V$ at which the light-intensity integrating region of the pixel of interest occupies the occupied pixel field region. The process proceeds to step ST21006.

In step ST21006, the light-intensity-integrating-region decision circuit 20301 determines, for the individual eight sub-fields SF1 to SF8, light intensities (influential light intensities) $P_{SFL,1}$ to $P_{SFL,8}$ each corresponding to the influence of (the light intensity in) the occupied pixel field region on the pixel value of the pixel of interest, as explained using Equation (41), by multiplying the occupancy ratio $V_i/V$, at which the light-intensity integrating region of the pixel of interest occupies the occupied pixel field region, by the light intensity $SF_{Vi}$ in this occupied pixel field region, and supplies the influential light intensities $P_{SFL,1}$ to $P_{SFL,8}$ to the light-intensity integrating circuit 20302.

Note that the light intensity $SF_{Vi}$ in the occupied pixel field region in the sub-field SF#j is set to the weight L of the luminance of the sub-field SF#j when this sub-field SF#j is emitting light. When the sub-field SF#j is not emitting light (no light emission), the light intensity $SF_{Vi}$ is set to 0. The light-intensity-integrating-region decision circuit 20301 recognizes light emission/no light emission of the sub-field SF#j from the light emitting pattern indicated by the light-emission control information SF supplied from the sub-field developing unit 20200 (Fig. 68).

Here, the foregoing steps ST21002 to ST21006 correspond to step ST20402 of Fig. 90.

Thereafter, the process proceeds from step ST21006 to step ST21007, in which the light-intensity integrating circuit 20302 integrates the influential light intensities $P_{SFL,1}$ to $P_{SFL,8}$ from the light-intensity-integrating-region decision circuit 20301, thereby determining the pixel value of the pixel of interest. The process proceeds to step ST21008.

Here, step ST21007 corresponds to step ST20403 of Fig. 90.

In step ST21008, it is determined whether or not the light-intensity-integrating-region decision circuit 20301 has selected all the pixels constituting the field of interest as pixels of interest.

In a case where it is determined in step ST21008 that all the pixels constituting the field of interest have not yet been selected as pixels of interest, the process returns to step ST21002. The light-intensity-integrating-region decision circuit 20301 selects, as a new pixel of interest, one of the pixels unselected as pixels of interest among the pixels constituting the field of interest. Subsequently, a similar process is repeated.

Also, in a case where it is determined in step ST21008 that all the pixels constituting the field of interest have been selected as pixels of interest, the process proceeds to step ST21009, in which the light-intensity integrating circuit 20302 outputs an output image Vout composed of pixel values determined by selecting all the pixels constituting the field of interest as pixels of interest.

Here, step ST21009 corresponds to step ST20404 of Fig. 90.

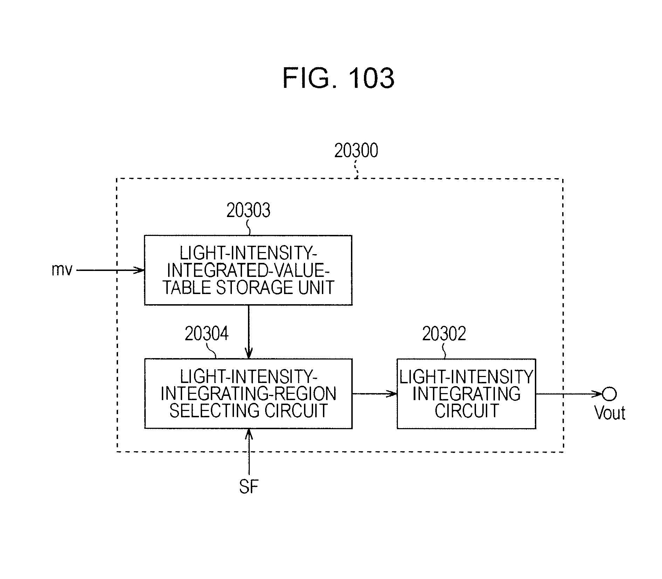

Next, Fig. 103 illustrates another example structure of the light-intensity integrating unit 20300 of Fig. 68.

Note that in the figure, portions corresponding to those in the case of Fig. 75 are designated by the same numerals and explanations thereof are omitted hereinafter, as desired.

That is, the light-intensity integrating unit 20300 of Fig. 103 is common to that in the case of Fig. 75 in that it is provided with a light-intensity integrating circuit 20302. However, the light-intensity integrating unit 20300 of Fig. 103 is different from that in the case of Fig. 75 in that it is provided with, instead of the light-intensity-integrating-region decision circuit 20301 of Fig. 75, a light-intensity-integrated-value-table storage unit 20303 and a light-intensity-integrating-region selecting circuit 20304.

In the light-intensity integrating unit 20300 of Fig. 103, an occupancy ratio is determined for a pixel of interest on the basis of the line-of-sight direction mv at the pixel of interest by using a table in which the line-of-sight direction mv is associated with an occupancy ratio (hereinafter referred to as a light-intensity-integrated-value table, as desired).

That is, in Fig. 103, the light-intensity-integrated-value-table storage unit 20303 stores the light-intensity-integrated-value table.

The line-of-sight direction mv at each pixel in the field of interest is supplied to the light-intensity-integrated-value-table storage unit 20303 from the motion detecting unit 20100 (Fig. 68). The light-intensity-integrated-value-table storage unit 20303 sequentially regards the pixels constituting the field of interest as pixels of interest and reads, from the light-intensity-integrated-value table, the occupancy ratio correlated with the line-of-sight direction mv at each pixel of interest, which is supplied thereto, as the occupancy ratio $V_i/V$ at which the light-intensity integrating region of the pixel of interest occupies the occupied pixel field region. The light-intensity-integrated-value-table storage unit 20303 supplies the occupancy ratio $V_i/V$ to the light-intensity-integrating-region selecting circuit 20304.

The light-intensity-integrating-region selecting circuit 20304 is supplied with, as described above, besides the occupancy ratio from the light-intensity-integrated-value-table storage unit 20303, light-emission control information SF from the sub-field developing unit 20200 (Fig. 68), which indicates a light emitting pattern of sub-fields of the field of interest.

The light-intensity-integrating-region selecting circuit 20304 recognizes light emission/no light emission of the occupied pixel field region in the sub-field SF#j from the light emitting pattern indicated by the light-emission control information SF supplied from the sub-field developing unit 20200. Furthermore, when the occupied pixel field region in the sub-field SF#j is emitting light, the light-intensity-integrating-region selecting circuit 20304 sets the light intensity $SF_{Vi}$ in this occupied pixel field region to the weight L of the luminance of the sub-field SF#j. When the occupied pixel field region in the sub-field SF#j is not emitting light (no light emission), the light-intensity-integrating-region selecting circuit 20304 sets the light intensity $SF_{Vi}$ in this occupied pixel field region to 0.

Then, the light-intensity-integrating-region selecting circuit 20304 determines, for the individual eight sub-fields SF1 to SF8, light intensities (influential light intensities) $P_{SFL,1}$ to $P_{SFL,8}$ each corresponding to the influence of (the light intensity in) the occupied pixel field region on the pixel value of the pixel of interest, as explained using Equation (41), by multiplying the occupancy ratio $V_i/V$, at which the light-intensity integrating region of the pixel of interest occupies the occupied pixel field region, which is from the light-intensity-integrated-value-table storage unit 20303, by the light intensity $SF_{Vi}$ in this occupied pixel field region, and supplies the influential light intensities $P_{SFL,1}$ to $P_{SFL,8}$ to the light-intensity integrating circuit 20302.

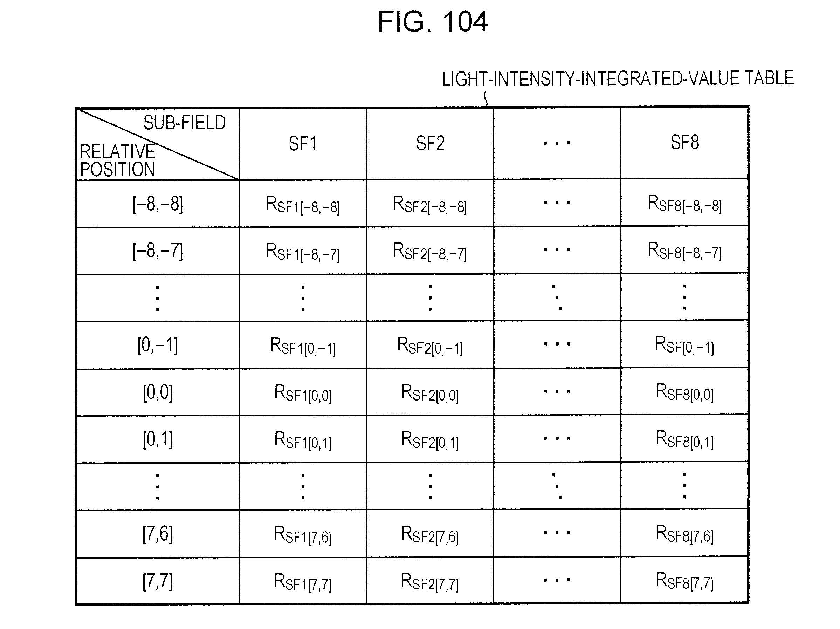

Fig. 104 schematically illustrates the light-intensity-integrated-value table stored in the light-intensity-integrated-value-table storage unit 20303 of Fig. 103.

In the light-intensity-integrated-value table, the line-of-sight direction mv serving as a motion vector that can be detected by the motion detecting unit 20100, and the occupancy ratio $V_i/V$, at which the light-intensity integrating region having the region of the pixel as a cross section occupies the occupied pixel field region, which is determined in advance for each of the eight sub-fields SF1 to SF8 by calculations with this line-of-sight direction mv, are stored in association with each other.

That is, the light-intensity-integrated-value table is prepared for each line-of-sight direction mv. Therefore, when the search range of the motion vector serving as the line-of-sight direction mv is, for example, as described below, a range of 16 x 16 pixels, and when the line-of-sight direction mv may take 256 possible directions, only 256 light-intensity-integrated-value tables exist.

In the light-intensity-integrated-value table for one line-of-sight direction mv, the occupancy ratio $V_i/V$ for each of the eight sub-fields SF1 to SF8 is registered. Accordingly, the line-of-sight direction mv is associated with the occupancy ratio $V_i/V$ for each of the eight sub-fields SF1 to SF8, which correspond to that line-of-sight direction mv.

Fig. 104 illustrates a light-intensity-integrated-value table for a certain line-of-sight direction mv.

The light-intensity-integrated-value table for one line-of-sight direction mv is a table in which, for example, a sub-field SF#j is plotted in abscissa, and a relative position [x, y] from a pixel of interest is plotted in ordinate.

Here, in the present embodiment, since there are eight sub-fields SF1 to SF8, column spaces corresponding to the individual eight sub-fields SF1 to SF8 are provided in abscissa of the light-intensity-integrated-value table.

Also, the x coordinate and the y coordinate of the relative position [x, y] in ordinate of the light-intensity-integrated-value table represent the position in the X direction and the position in the Y direction, respectively, with reference to the position of the pixel of interest (origin). For example, the relative position [1, 0] represents the position of a pixel that is adjacent to and on the right of the pixel of interest. For example, the relative position [0, -1] represents the position of a pixel that is adjacent to and above the pixel of interest.

Now, when the search range of the motion vector serving as the line-of-sight direction mv is, for example, a range of 16 x 16 pixels having -8 to +7 pixels in the X direction and the Y direction, with reference to the pixel of interest serving as the center, the movement amount by which the pixel of interest moves within one field may take 256 possible positions from [-8, -8] to [7, 7] with respect to the pixel of interest. Thus, column spaces corresponding to the individual 256 possible relative positions [x, y] are provided in ordinate of the light-intensity-integrated-value table.

In a case where the line-of-sight direction mv is represented by a certain motion vector MV, in the light-intensity-integrated-value table corresponding to this line-of-sight direction MV, in the column space defined by the column of a certain sub-field SF#j and the row at a certain relative position [x, y], the occupancy ratio $R_{SF\#j[x, y]}$ ($V_i/V$ in Equation (41)) or $V_\varepsilon/V$ obtained by dividing $V_\varepsilon$ in Equation (42) by the volume ($V$) of the occupied pixel field region V) at which the light-intensity integrating region of the pixel of interest occupies the occupied pixel field region $B_{SF\#j[x, y]}$ in the sub-field SF#j, which has, as a cross section, the region of the pixel whose relative position from the pixel of interest is expressed as [x, y], is determined in advance by calculations and registered.

Note that in a case where the light-intensity integrating region of the pixel of interest does not pass through the occupied pixel field region $B_{SF\#j[x, y]}$ in the sub-field SF#j, which has, as a cross section, the region of the pixel whose relative position from the pixel of interest is expressed as [x, y] (in a case where the occupied pixel field region $B_{SF\#j[x, y]}$ and the light-intensity integrating region of the pixel of interest do not overlap), the occupancy ratio $R_{SF\#j[x, y]}$ at which the light-intensity integrating region of the pixel of interest occupies this occupied pixel field region $B_{SF\#j[x, y]}$ is set to 0.

Here, in a case where the line-of-sight direction mv at the pixel of interest is expressed as, for example, the motion vector (1, -1), the light-intensity integrating region of the pixel of interest passes only through, among occupied pixel field regions in the individual sub-fields SF1 to SF8, which have, as cross sections, individual regions of 256 pixels within the search range of 16 × 16 pixels having the pixel of interest as the center (256 × 8 occupied pixel field regions), eight occupied pixel field regions $B_{SF1[0, 0]}$ to $B_{SF8[0, 0]}$ in the individual sub-fields SF1 to SF8, which have the region of the pixel of interest as a cross section, eight occupied pixel field regions $B_{SF1[1, 0]}$ to $B_{SF8[1, 0]}$ in the individual sub-fields SF1 to SF8, which have the pixel adjacent to and on the right of the pixel of interest as a cross section, eight occupied pixel field regions $B_{SF1[0, -1]}$ to $B_{SF8[0, -1]}$ in the individual sub-fields SF1 to SF8, which have the pixel adjacent to and above the pixel of interest as a cross section, and eight occupied pixel field regions $B_{SF1[1, -1]}$ to $B_{SF8[1, -1]}$ in the individual sub-fields SF1 to SF8, which have the pixel adjacent to and above and on the right of the pixel of interest as a cross section, and does not pass through the other occupied pixel field regions.

Therefore, if it is assumed that, among the eight occupied pixel field regions $B_{SF1[0, 0]}$ to $B_{SF8[0, 0]}$ in the individual sub-fields SF1 to SF8, which have the region of the pixel of interest as a cross section, the volumes ($V_i$ in Equations (36) to (40)) of portions (divisional solid body portions) through which the light-intensity integrating region of the pixel of interest passes are represented by $V_{SF1[0, 0]}$ to $V_{SF8[0, 0]}$; that, among the eight occupied pixel field regions $B_{SF1[1, 0]}$ to $B_{SF8[1, 0]}$ in the individual sub-fields SF1 to SF8, which have the pixel adjacent to and on the right of the pixel of interest as a cross section, the volumes of portions through which the light-intensity integrating region of the pixel of interest passes are represented by $V_{SF1[1, 0]}$ to $V_{SF8[1, 0]}$; that, among the eight occupied pixel field regions $B_{SF1[0, 1]}$ to $B_{SF8[0, 1]}$ in the individual sub-fields SF1 to SF8, which have the pixel adjacent to and above the pixel of interest as a cross section, the volumes of portions through which the light-intensity integrating region of the pixel of interest passes are represented by $V_{SF1[0, -1]}$ to $V_{SF8[0, -1]}$; and that, among the eight occupied pixel field regions $B_{SF1[1, -1]}$ to $B_{SF8[1, -1]}$ in the individual sub-fields SF1 to SF8, which have the pixel adjacent to and above and on the right of the pixel of interest as a cross section, the volumes of portions through which the light-intensity integrating region of the pixel of interest passes are represented by $V_{SF1[1, -1]}$ to $V_{SF8[1, -1]}$, in the light-intensity-integrated-value table corresponding to the line-of-sight direction mv, in which the line-of-sight direction mv is expressed as the motion vector (1, -1), the occupancy ratios $R_{SF1[0, 0]}$ to $R_{SF8[0, 0]}$ are set to values $V_{SF1[0, 0]}/V$ to $V_{SF8[0, 0]}/V$, respectively; the occupancy ratios $R_{SF1[1, 0]}$ to $R_{SF8[1, 0]}$ are set to values $V_{SF1[1, 0]}/V$ to $V_{SF8[1, 0]}/V$, respectively; the occupancy ratios $R_{SF1[0, -1]}$ to $R_{SF8[0, -1]}$ are set to values $V_{SF1[0, -1]}/V$ to $V_{SF8[0, -1]}/V$, respectively; and the occupancy ratios $R_{SF1[1, -1]}$ to $R_{SF8[1, -1]}$ are set to values $V_{SF1[1, -1]}/V$ to $V_{SF8[1, -1]}/V$, respectively. The other occupancy ratios are all set to 0.

The light-intensity-integrated-value-table storage unit 20303 (Fig. 103) reads a total of 8 x 256 possible occupancy ratios for the individual eight sub-fields SF1 to SF8 and for the individual 256 possible relative positions [-8, -8] to [7, 7], which are registered in the light-intensity-integrated-value table corresponding to the line-of-sight direction mv at the pixel of interest, and supplies the 8 × 256 possible occupancy ratios to the light-intensity-integrating-region selecting circuit 20304.

The light-intensity-integrating-region selecting circuit 20304 selects occupancy ratios whose values are other than 0 from among the occupancy ratios from the light-intensity-integrated-value-table storage unit 20303, and multiplies the occupancy ratios whose values are other than 0 by the corresponding light quantities $SF_{vi}$, thereby determining the

influential light intensities.

Note that, here, the light-intensity-integrating-region selecting circuit 20304 selects occupancy ratios whose values are other than 0 from among the occupancy ratios from the light-intensity-integrated-value-table storage unit 20303, and multiplies the occupancy ratios whose values are other than 0 by the corresponding light quantities $SF_{vi}$, thereby determining the influential light intensities. Since the influential light intensity obtained by multiplying an occupancy ratio whose value is 0 by any light intensity $SF_{vi}$ is 0, the light-intensity-integrating-region selecting circuit 20304 can determine the influential light intensities by multiplying the occupancy ratios from the light-intensity-integrated-value-table storage unit 20303 by corresponding light intensities $SF_{Vi}$, without particularly selecting occupancy ratios whose values are other than 0 from among the occupancy ratios from the light-intensity-integrated-value-table storage unit 20303.

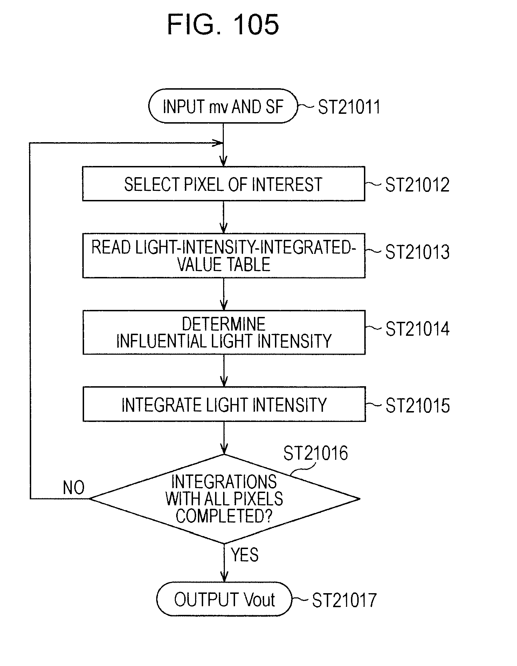

Next, the light-intensity integrating process performed by the light-intensity integrating unit 20300 of Fig. 103 will be explained in detail with reference to the flowchart of Fig. 105.

In step ST21011, the line-of-sight direction mv at each pixel in the field of interest is supplied from the motion detecting unit 20100 (Fig. 68) to the light-intensity-integrated-value-table storage unit 20303 in the light-intensity integrating unit 20300. Additionally, light-emission control information SF indicating the light emitting pattern of sub-fields of the field of interest is supplied from the sub-field developing unit 20200 (Fig. 68) to the light-intensity-integrating-region selecting circuit 20304 in the light-intensity integrating unit 20300.

Thereafter, the process proceeds from step ST21011 to step ST21012, in which the light-intensity-integrated-value-table storage unit 20303 selects, as a pixel of interest, one of pixels unselected as pixels of interest from among the pixels constituting the field of interest. The process proceeds to step ST21013.

In step ST21013, the light-intensity-integrated-value-table storage unit 20303 reads, from the light-intensity-integrated-value table corresponding to the line-of-sight direction mv at the pixel of interest, all occupancy ratios $R_{SF\#j[x, y]}$ registered therein among line-of-sight directions mv from the motion detecting unit 20100, and supplies the occupancy ratios $R_{SF\#j[x, y]}$ to the light-intensity-integrating-region selecting circuit 20304. The process proceeds to step ST21014.

In step ST21014, the light-intensity-integrating-region selecting circuit 20304 determines the light intensity (influential light intensity) corresponding to the influence of (the light intensity in) the occupied pixel field region $B_{SF\#j[x, y]}$ on the pixel value of the pixel of interest, by multiplying the occupancy ratio $R_{SF\#j[x, y]}$ from the light-intensity-integrated-value-table storage unit 20303 by the light intensity $SF_j$ in the corresponding occupied pixel field region $B_{SF\#j[x, y}$, and supplies the determined light intensity to the light-intensity integrating circuit 20302.

Note that the light intensity $SF_j$ in the occupied pixel field region in the sub-field SF#j is set to the weight L of the luminance of the sub-field SF#j when this sub-field SF#j is emitting light. When the sub-field SF#j is not emitting light (no light emission), the light intensity $SF_{Vi}$ is set to 0. The light-intensity-integrating-region selecting circuit 20304 recognizes light emission/no light emission of the sub-field SF#j from the light emitting pattern indicated by the light-emission control information SF supplied from the sub-field developing unit 20200 (Fig. 68).

Thereafter, the process proceeds from step ST21014 to step ST21015, in which the light-intensity integrating circuit 20302 integrates all the influential light intensities from the light-intensity-integrating-region decision circuit 20304, thereby determining the pixel value of the pixel of interest. The process proceeds to step ST21016.

In step ST21016, it is determined whether or not the light-intensity-integrating-region selecting circuit 20304 has selected all the pixels constituting the field of interest as pixels of interest.

In a case where it is determined in step ST21016 that all the pixels constituting the field of interest have not yet been selected as pixels of interest, the process returns to step ST21012. The light-intensity-integrated-value-table storage unit 20303 selects, as a new pixel of interest, one of the pixels unselected as pixels of interest from among the pixels constituting the field of interest. Subsequently, a similar process is repeated.

Also, in a case where it is determined in step ST21016 that all the pixels constituting the field of interest have been selected as pixels of interest, the process proceeds to step ST21017, in which the light-intensity integrating circuit 20302 outputs an output image Vout composed of pixel values determined by selecting all the pixels constituting the field of interest as pixels of interest.

Next, the series of processes described above can be performed by dedicated hardware or software. In a case where the series of processes is performed by software, a program constituting the software is installed into a general-purpose computer or the like.

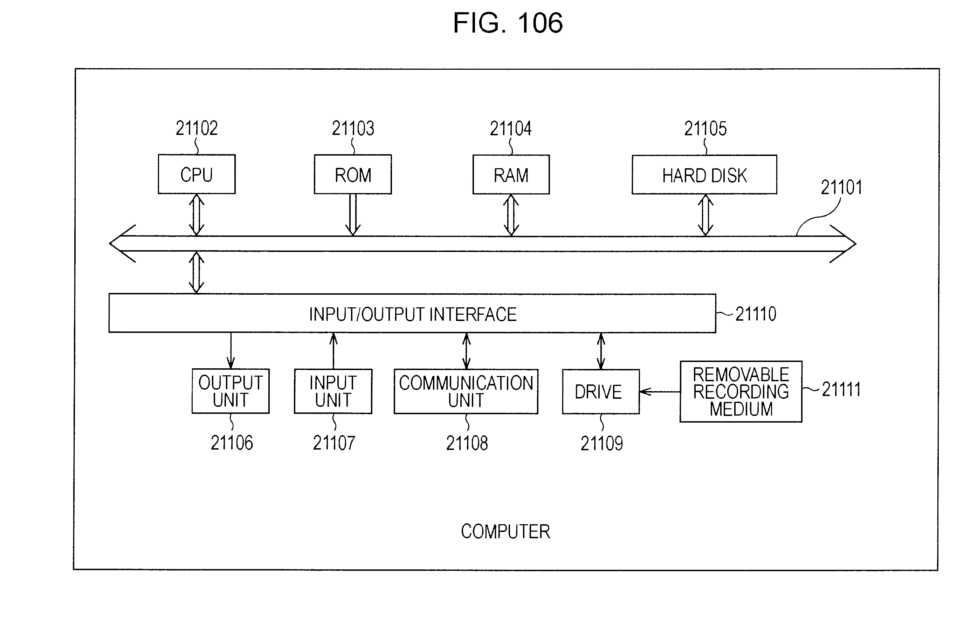

Thus, Fig. 106 illustrates an example structure of an embodiment of a computer into which a program that executes the series of processes described above is installed.

The program can be recorded in advance on a hard disk 21105 or a ROM 21103 serving as a recording medium incorporated in a computer.

Alternatively, the program can be temporarily or permanently stored (recorded) on a removable recording medium 21111, such as a flexible disk, a CD-ROM (Compact Disc Read Only Memory), an MO (Magneto Optical) disk, a DVD (Digital Versatile Disc), a magnetic disk, or a semiconductor memory. The removable recording medium 21111 of this type can be provided as so-called packaged software.

Note that the program can be, as well as installed into the computer from the removable recording medium 21111 as described above, transferred to the computer from a download site in a wireless fashion via a satellite for digital satellite broadcasting or transferred to the computer in a wired fashion via a network such as a LAN (Local Area Network) or the Internet. In the computer, the program transferred in such a manner can be received by a communication unit 21108 and installed into the hard disk 21105 incorporated therein.

The computer incorporates therein a CPU (Central Processing Unit) 21102. The CPU 21102 is connected to an input/output interface 21110 via a bus 21101. When an instruction is input from a user through an operation or the like of an input unit 21107 constructed with a keyboard, a mouse, a microphone, and the like via the input/output interface 21110, the CPU 21102 executes a program stored in the ROM (Read Only Memory) 21103 according to the instruction. Alternatively, the CPU 21102 loads onto a RAM (Random Access Memory) 21104 a program stored in the hard disk 21105, a program that is transferred from a satellite or a network, received by the communication unit 21108, and installed into the hard disk 21105, or a program that is read from the removable recording medium 21111 mounted in a drive 21109 and installed into the hard disk 21105, and executes the program. Accordingly, the CPU 21102 performs the processes according to the flowcharts described above or the processes performed by the structure of the block diagrams described above. Then, the CPU 21102 causes this processing result to be, according to necessity, for example, output from an output unit 21106 constructed with an LCD (Liquid Crystal Display), a speaker, and the like via the input/output interface 21110, sent from the communication unit 21108, or recorded or the like onto the hard disk 21105.

[Embodiment of Image Signal Processing Device capable of Reproducing Apparent Image on Plasma Display (PDP (Plasma Display Panel)) Using Displays of other Devices such as CRT (Cathode Ray Tube) or LCD (Liquid Crystal Display) by Performing Signal Processing]

Next, an explanation will be given of an embodiment of an image signal processing device that reproduces an apparent image, when the image is displayed on a PDP, using displays of other devices.

In a PDP, for example, as described in Masayuki KAWAMURA, "Yokuwakaru Purazuma Terebi (Understanding Plasma TV)", Dempa Publications, Inc., a stripe rib structure or the like is adopted. Each pixel is configured such that portions that emit light of R (Red), G (Green), and B (Blue) are arrayed in a stripe pattern.

Incidentally, in a case where how an image is displayed on a PDP is evaluated, if a monitor such as a CRT or an LCD is used as an evaluation monitor, since a PDP and an LCD or the like have different display characteristics, depending on images displayed on an LCD, it has been difficult to evaluate the appearance or quality of an image that is (to be) displayed on a PDP.

That is, the image quality of an image that is displayed on an LCD during evaluation and the image quality of an image that is displayed on a PDP during actual viewing on the PDP do not always match.

Thus, in the following, an explanation will be given of an embodiment that can provide reproduction of an apparent image (when the image is displayed) on a PDP using a display other than a PDP, such as, for example, an LCD, by performing signal processing.

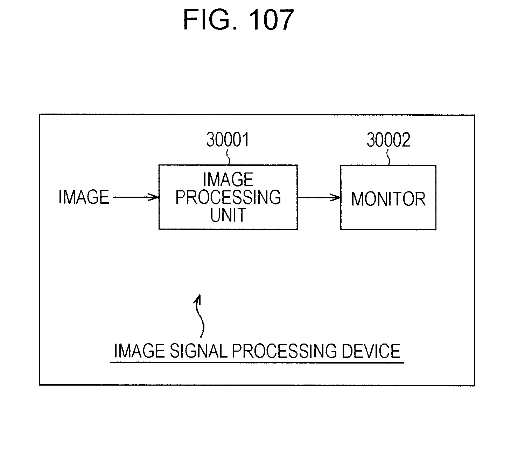

Fig. 107 illustrates an example structure of an embodiment of an image signal processing device that reproduces an apparent image on a PDP using a display other than a PDP.

In Fig. 107, the image signal processing device is constructed from an image processing unit 30001 and a monitor 30002. An image signal supplied to the image processing unit 30001 is processed so that an image obtained when an image signal is displayed on the monitor 30002 serving as a display apparatus of a display type other than that of a PDP can look like an image displayed on a PDP display apparatus, and is displayed on the monitor 30002.

That is, the image processing unit 30001 subjects the image signal supplied thereto to at least one of a color shift addition process for reproducing color shift caused by a moving image, which occurs because lighting of RGB (Red, Green, and Blue) is turned on in this order, a spatial dither addition process for reproducing a dither pattern to be applied in a space direction, a temporal dither addition process for reproducing a dither pattern to be applied in a time direction, an inter-pixel pitch reproduction process for reproducing a space between pixel pitches, and a stripe array reproduction process for reproducing a stripe array, and supplies a resulting image signal to the monitor 30002.

The monitor 30002 is a display apparatus of a display type other than that of a PDP, that is, for example, a display apparatus of an LCD or a CRT, and displays an image in accordance with the image signal supplied from the image processing unit 30001. The monitor 30002 displays an image in accordance with the image signal from the image processing unit 30001, so that an image that would be displayed on a PDP display apparatus is displayed on the monitor 30002.

As described above, in the image processing unit 30001, at least one of the color shift addition process, the spatial dither addition process, the temporal dither addition process, the inter-pixel pitch reproduction process, and the stripe array reproduction process is performed.

First, an explanation will be given of the stripe array reproduction process among the color shift addition process, spatial dither addition process, temporal dither addition process, inter-pixel pitch reproduction process, or stripe array reproduction process performed in the image processing unit 30001.

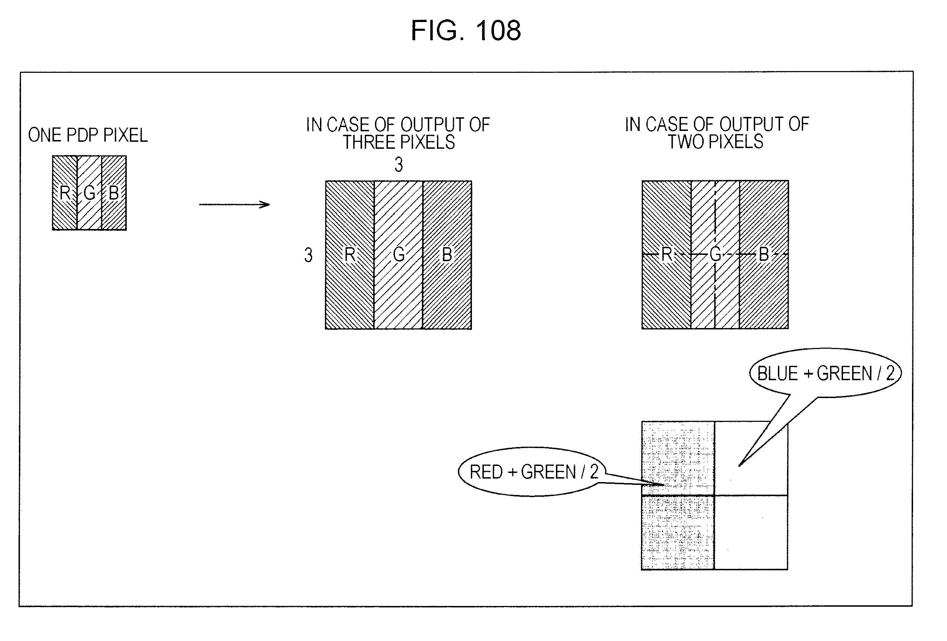

Fig. 108 is a diagram explaining the stripe array reproduction process.

74

In the stripe array reproduction process, a stripe array, which is unique to PDPs, is reproduced. In an output monitor, two or more pixels are used for displaying of one pixel of a PDP.

In the stripe array reproduction process, each pixel value is decomposed into RGB value components which are arranged longitudinally for display.

In the case of non-multiples of three pixels such as two pixels, similar reproduction can be realized by displaying colors mixed in appearance.

Accordingly, apparent stripes, which are unique to PDPs, can also be realized using a liquid crystal monitor or the like.

Also, in some target panels, RGB components do not have equal widths. Changing the widths of RGB components accordingly allows for more improved reproducibility.

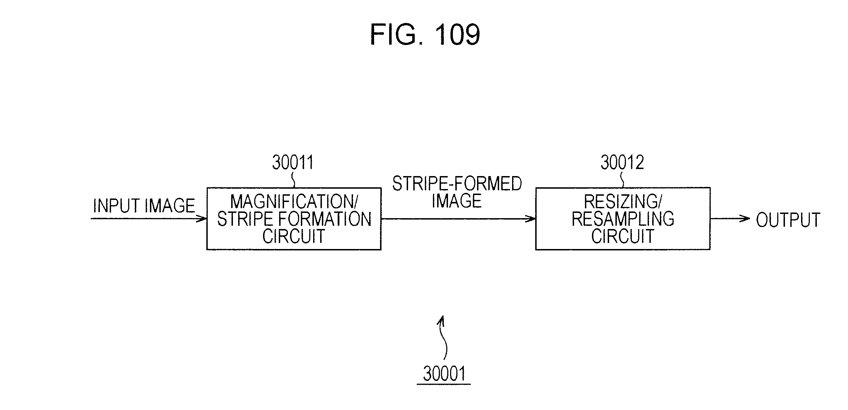

Fig. 109 illustrates an example structure of an image processing unit 30001 for performing the stripe array reproduction process.

A magnification/stripe formation circuit 30011 magnifies an image signal supplied to the image processing unit 30001 N-fold, that is, for example, three-fold, and decomposes the image signal into an array of stripes. The magnification/stripe formation circuit 30011 outputs a stripe-formed image signal.

A resizing/resampling circuit 30012 resamples the image signal output from the magnification/stripe formation circuit 30011 in accordance with an output image size (the size of an image to be displayed on the monitor 30002), and outputs a result.

Note that the image signal output from the resizing/resampling circuit 30012 is supplied to the monitor 30002 and is displayed.

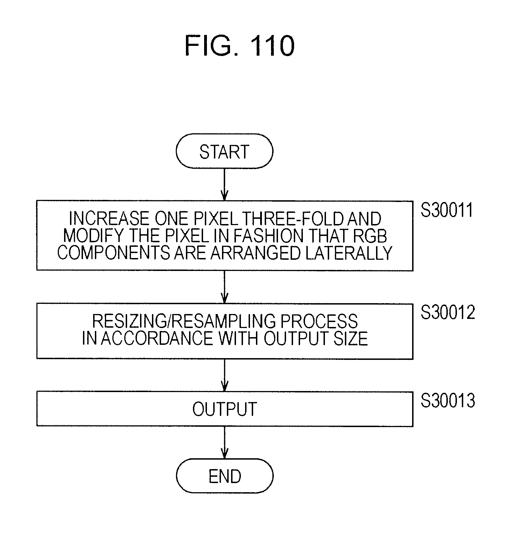

Fig. 110 is a flowchart explaining the stripe array reproduction process performed in the image processing unit 30001 of Fig. 109.

In step S30011, the magnification/stripe formation circuit 30011 magnifies the size of one pixel of an image signal three-fold, and modifies the pixel in a fashion that RGB components are arranged laterally. The magnification/stripe formation circuit 30011 supplies a resulting image signal to the resizing/resampling circuit 30012. The process proceeds to step S30012.

In step S30012, the resizing/resampling circuit 30012 performs a process of resizing the image signal from the magnification/stripe formation circuit 30011 in accordance with an output image size and resampling it. The process proceeds to step S30013. In step S30013, the resizing/resampling circuit 30012 outputs an image signal obtained in the process in step S30012 to the monitor 30002.

Next, an explanation will be given of the color shift addition process (process for reproducing color shift caused by a moving image) among the color shift addition process, spatial dither addition process, temporal dither addition process, inter-pixel pitch reproduction process, or stripe array reproduction process performed in the image processing unit 30001.

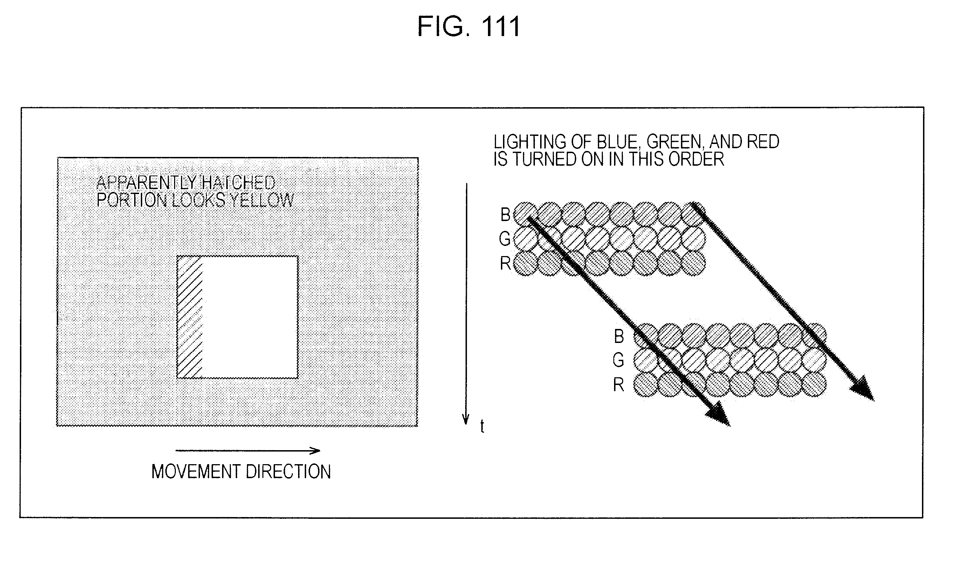

Fig. 111 is a diagram explaining color shift that occurs in an image displayed on a PDP.

PDPs have a characteristic in that, as is particularly noticeable for a white object which moves horizontally, which is produced by difference in the lighting duration of RGB components, if a person follows this object with his/her eye, colors look shifted.

In the color shift addition process, this characteristic is reproduced also with the monitor 30002 such as a liquid crystal panel. The reproduction is performed by the following procedure.

1. Object Boundary Detection

The boundary of an object is detected from an image using edge detection or the like. In particular, a white object or the like is selected as a target.

2. Movement Amount Extraction

A movement amount of the object determined in the procedure of item 1 above with respect to a subsequent frame is determined. A technique such as the block matching method is used.

3. Addition of Color Shift

Optimum color shift is added in accordance with the RGB light emission characteristics of the PDP on which reproduction is to be performed and the movement amount of the object.

The amount of addition of color shift is decided depending on the light emission characteristics of the PDP to be matched with the movement amount.

For example, in the case of a characteristic in which the lighting of blue (B) is turned off earlier than the lighting of green (G) by a time interval of 1/3 fr (fr is a frame period), a pixel value near an edge has a blue color component set to 2/3.

Similarly, an adjacent pixel value can be generated by reducing the subtraction of the blue component so as to cause color shift having a width corresponding to the moving amount.

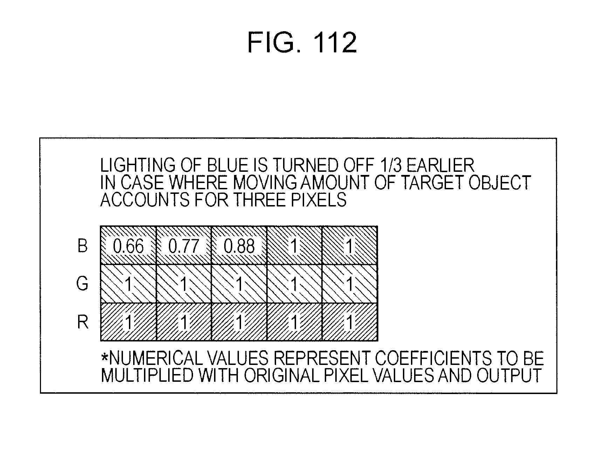

Fig. 112 represents coefficients to be multiplied with the original pixel values in a PDP having a characteristic that the lighting of blue is turned off earlier than that of green by a time interval of 1/3 fr in order to add color shift caused in a case where the moving amount of an object appearing on an image accounts for three pixels.

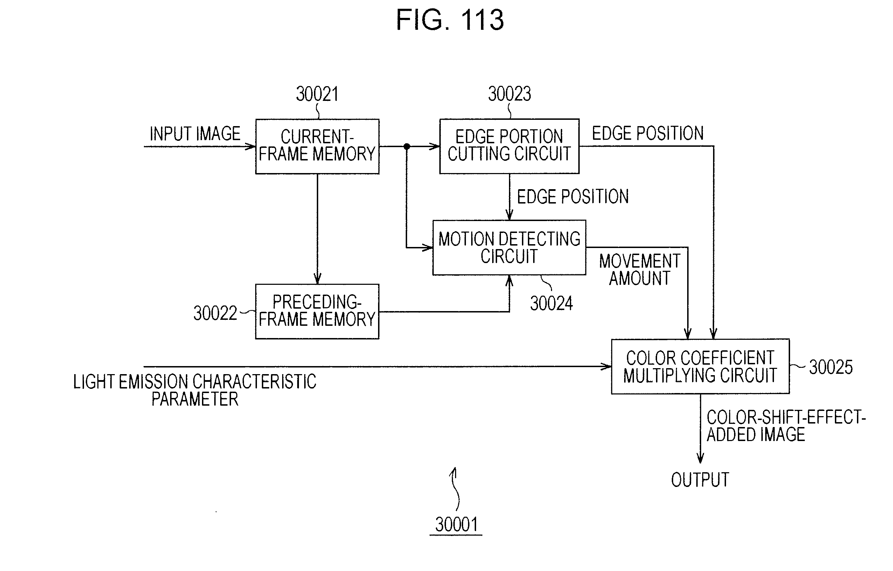

Fig. 113 illustrates an example structure of an image processing unit 30001 for performing the color shift addition process.

A current-frame memory 30021 stores an image signal supplied to the image processing unit 30001, and supplies the image signal as the image signal of the current frame to a preceding-frame memory 30022, an edge portion cutting circuit 30023, and a motion detecting circuit 30024.

The preceding-frame memory 30022 stores the image signal of the current frame supplied from the current-frame memory 30021, and delays the image signal by a time interval corresponding to one frame before supplying the image signal to the motion detecting circuit 30024. Therefore, when the image signal of the current frame is supplied from the current-frame memory 30021 to the motion detecting circuit 30024, the image signal of the preceding frame, which is one frame preceding the current frame, is supplied from the preceding-frame memory 30022 to the motion detecting circuit 30024.

The edge portion cutting circuit 30023 detects an edge portion of the image signal of the current frame from the current-frame memory 30021, and supplies the edge position of this edge portion to the motion detecting circuit 30024 and a color coefficient multiplying circuit 30025. Furthermore, the edge portion cutting circuit 30023 also supplies the image signal of the current frame from the current-frame memory 30021 to the color coefficient multiplying circuit 30025.

The motion detecting circuit 30024 calculates a movement amount between the frames at the specified position from the edge portion cutting circuit 30023, and outputs the movement amount to the color coefficient multiplying circuit 30025.

That is, the motion detecting circuit 30024 detects a movement amount of the edge portion at the edge position from the edge portion cutting circuit 30023 using the image signal of the current frame from the current-frame memory 30021 and the image signal from the preceding-frame memory 30022, and supplies the movement amount to the color coefficient multiplying circuit 30025.

The color coefficient multiplying circuit 30025 generates, in coordination with the light emission characteristics (of the PDP) specified, a coefficient for adding color shift in accordance with the movement amount at the specified position, and multiplies the image by the coefficient, which is then output.

That is, the color coefficient multiplying circuit 30025 is configured to be supplied with a light emission characteristic parameter representing the light emission characteristics (display characteristics) of the PDP.

The color coefficient multiplying circuit 30025 determines a coefficient for causing color shift in accordance with the light emission characteristics represented by the light emission characteristic parameter, a position (the position of a pixel) from the edge position from the edge portion cutting circuit 30023, and the movement amount of the edge portion from the motion detecting circuit 30024. The color coefficient multiplying circuit 30025 outputs an image signal of a color obtained by multiplying (a pixel value of) the image signal from the edge portion cutting circuit 30023 by the coefficient. Then, the image signal output from the color coefficient multiplying circuit 30025 is supplied to the monitor 30002 and is displayed.

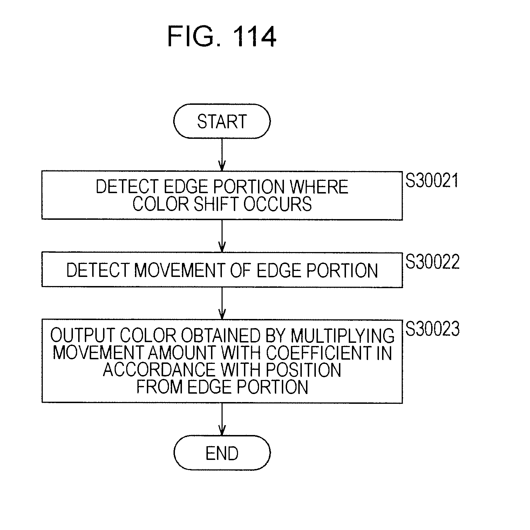

Fig. 114 is a flowchart explaining the color shift addition process performed in the image processing unit 30001 of Fig. 113.

In step S30021, the edge portion cutting circuit 30023 detects an edge portion where color shift occurs from the image signal of the current frame from the current-frame memory 30021, and supplies the edge position of this edge portion to the motion detecting circuit 30024 and the color coefficient multiplying circuit 30025. Additionally, the portion cutting circuit 30023 supplies the image signal of the current frame to the color coefficient multiplying circuit 30025. The process proceeds to step S30022.

In step S30022, the motion detecting circuit 30024 detects a movement amount of the edge portion at the edge position from the edge portion cutting circuit 30023 using the image signal of the current frame from the current-frame memory 30021 and the image signal of the preceding-frame memory 30022, and supplies the movement amount to the color coefficient multiplying circuit 30025. The process proceeds to step S30023.

In step S30023, the color coefficient multiplying circuit 30025 determines a coefficient for causing color shift in accordance with the light emission characteristics represented by the light emission characteristic parameter, the movement amount of the edge portion from the motion detecting circuit 30024, and the position from the edge portion at the edge position from the edge portion cutting circuit 30023. Then, the color coefficient multiplying circuit 30025 multiplies a color (pixel value) of each pixel of the image signal of the current frame from the edge portion cutting circuit 30023 by the coefficient, and outputs the image signal of the color obtained as a result of the multiplication to the monitor 30002.

Next, an explanation will be given of the inter-pixel pitch reproduction process (process for reproducing a pixel pitch at the time of reproduction of the same size) among the color shift addition process, spatial dither addition process, temporal dither addition process, inter-pixel pitch reproduction process, or stripe array reproduction process performed in the image processing unit 30001.

In a case where the reproduction of the size of a target PDP is also to be realized, an equivalent size can be obtained using an electronic zoom function such as DRC (Digital Reality Creation). More accurate matching of appearances can be achieved by also reproducing a space between pixel pitches.

Here, DRC is described in, for example, Japanese Unexamined Patent Application Publication No. 2005-236634, Japanese Unexamined Patent Application Publication No. 2002-223167, or the like as a class classification adaptive process.

It is assumed that, for example, the size of the PDP to be matched is two-fold. In this case, two-fold electronic zoom can be used to provide the appearance of the same size. More improved reproducibility is realized by also adding the visual effect of gaps between pixels, which is specific to large-screen PDPs.

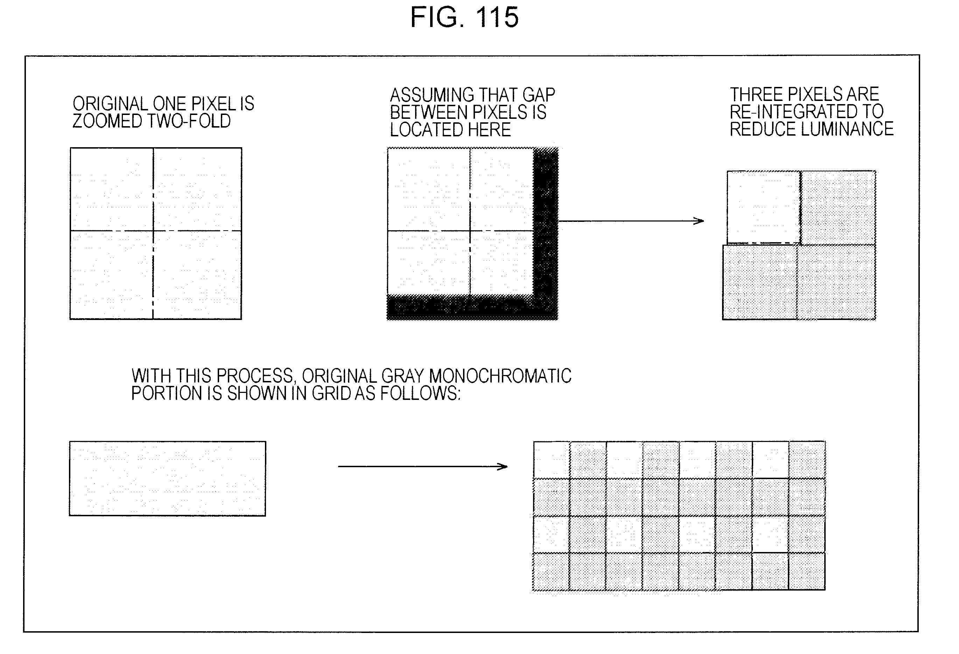

In the case of two-fold, an effect as illustrated in Fig. 115 may be added.

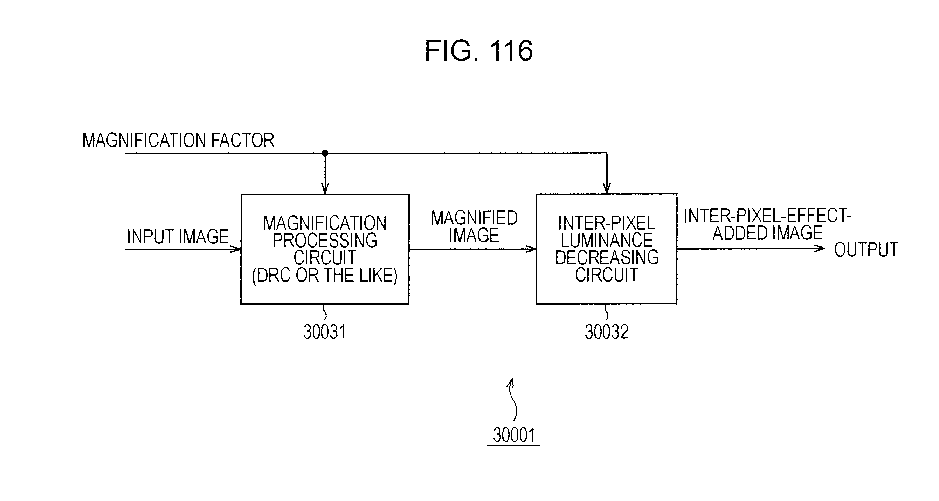

Fig. 116 illustrates an example structure of an image processing unit 30001 for performing the inter-pixel pitch reproduction process.

A magnification processing circuit 30031 magnifies an image signal supplied to the image processing unit 30001 to an output image size. That is, the magnification processing circuit 30031 performs a process of magnifying a portion of an image in accordance with a magnification factor supplied thereto. Then, the magnification processing circuit 30031 outputs a magnified image obtained as a result of the process to an inter-pixel luminance decreasing circuit 30032.

The inter-pixel luminance decreasing circuit 30032 performs a process of reducing a luminance value with respect to a position where a gap between pixels exists in accordance with a magnification factor supplied thereto. That is, the inter-pixel luminance decreasing circuit 30032 processes the image signal from the magnification processing circuit 30031 so as to reduce the luminance of a portion where a space between pixels exists. Then, the inter-pixel luminance decreasing circuit 30032 outputs the image signal obtained as a result of this process to the monitor 30002.

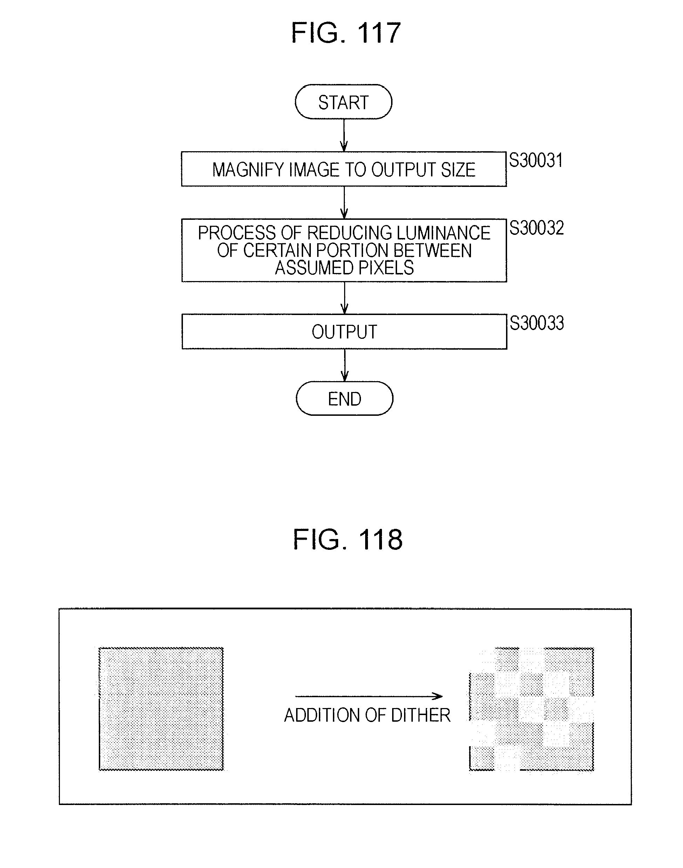

Fig. 117 is a flowchart explaining the inter-pixel pitch reproduction process performed in the image processing unit 30001 of Fig. 116.

In step S30031, the magnification processing circuit 30031 magnifies an image to an output image size, and supplies a resulting image to the inter-pixel luminance decreasing circuit 30032. The process proceeds to step S30032. In step S30032, the inter-pixel luminance decreasing circuit 30032 performs a process of reducing the luminance of a certain portion between assumed pixels with respect to the image from the magnification processing circuit 30031. Then, the process proceeds from step S30032 to step S30033, in which the inter-pixel luminance decreasing circuit 30032 outputs an image obtained in step S30032 to the monitor 30002.

Next, an explanation will be given of the spatial dither addition process (process for reproducing a spatial dither pattern) among the color shift addition process, spatial dither addition process, temporal dither addition process, inter-pixel pitch reproduction process, or stripe array reproduction process performed in the image processing unit 30001.

In many PDP panels, dithering is used in order to ensure color gradation levels (colors are arranged in a mosaic pattern to provide a pseudo-increase in gradation levels) .

The reproduction of this dither pattern allows more accurate matching of appearances.

A target PDP panel has a color in which dithering is visible. In a portion with a small amount of color change within a screen, a color that matches this dithering-visible color can be reproduced by, as illustrated in Fig. 118, performing a process of adding dither.

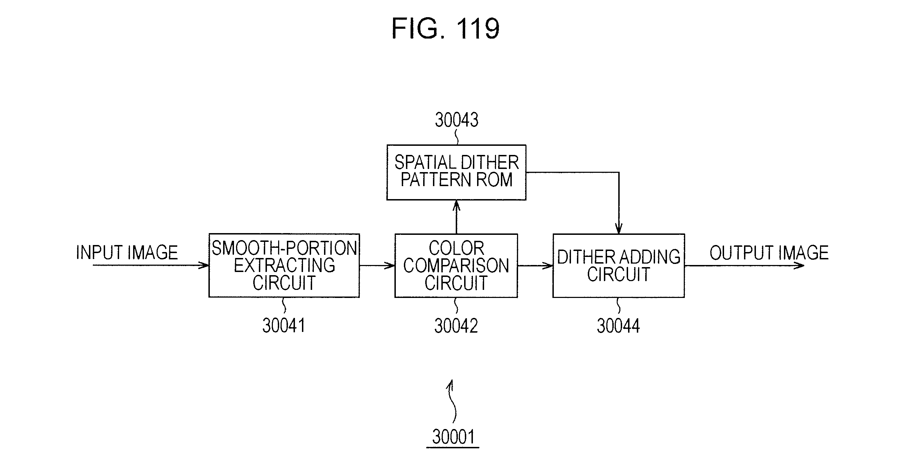

Fig. 119 illustrates an example structure of an image processing unit 30001 for performing the spatial dither addition process.

A smooth-portion extracting circuit 30041 extracts a smooth part (smooth portion) of an image signal supplied to the image processing unit 30001, and supplies the smooth portion to a color comparison circuit 30042 together with the image signal.

The color comparison circuit 30042 determines whether or not the color of the smooth portion from the smooth-portion extracting circuit 30041 is a color in which dithering is visible.

That is, the color comparison circuit 30042 compares the color of the smooth portion extracted by the smooth-portion extracting circuit 30041 with colors (represented by RGB values) registered in a lookup table stored in a spatial dither pattern ROM. In a case where the color of the smooth portion is a color other than a color associated with the spatial dither pattern "no pattern", which will be described below, among the colors registered in the lookup table, the color comparison circuit 30042 determines that the color of the smooth portion is a color in which dithering is visible. Then, the color comparison circuit 30042 supplies, together with this determination result, the image signal from the smooth-portion extracting circuit 30041 to a dither adding circuit 30044.

The lookup table is stored in a spatial dither pattern ROM 30043.

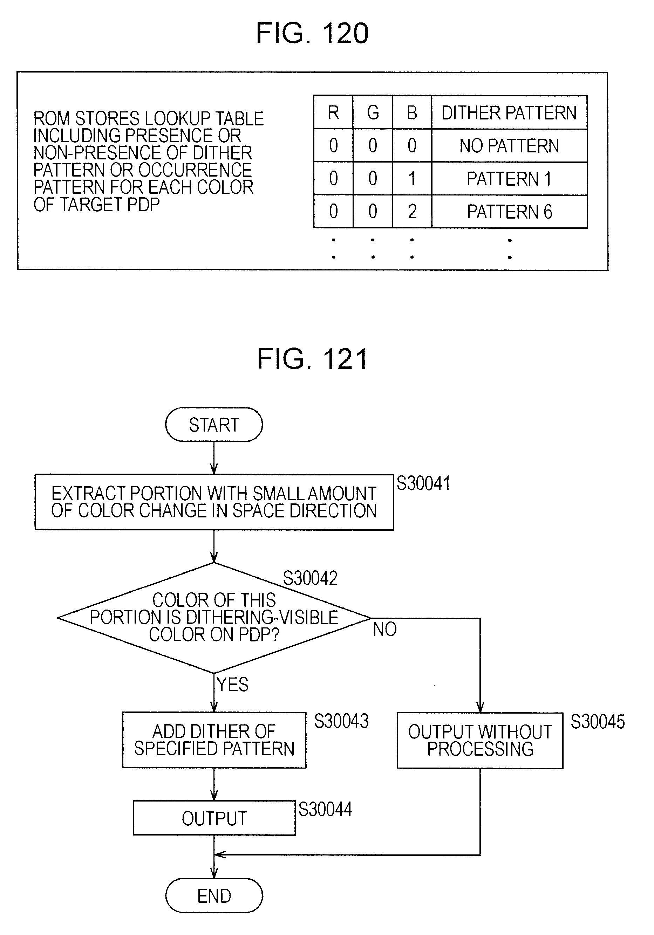

Here, Fig. 120 illustrates a lookup table stored in the spatial dither pattern ROM 30043.

In the lookup table, an RGB value of each color is associated with a spatial dither pattern serving as a spatial dither pattern that can be easily seen when a color represented by this RGB value is displayed on the PDP.

Note that in the lookup table, for an RGB value of a color in which dithering is not visible, "no pattern" (indicating that dithering is not visible) is registered as a spatial dither pattern.

Also, in the color comparison circuit 30042 (Fig. 119), it is determined that a color represented by an RGB value associated with the spatial dither pattern "no pattern" is not a color in which dithering is visible, and it is determined that other colors are colors in which dithering is visible.

Referring back to Fig. 119, the spatial dither pattern ROM 30043 supplies a spatial dither pattern associated in the lookup table stored therein with an RGB value representing the color of the smooth portion, which is from the smooth-portion extracting circuit 30041, that is targeted for determination by the color comparison circuit 30042, to the dither adding circuit 30044.

The dither adding circuit 30044 adds the spatial dither represented by the spatial dither pattern specified from the spatial dither pattern ROM 30043 to the image signal from the color comparison circuit 30042.

That is, in a case where a determination result indicating that the color of the smooth portion is a color in which dithering is visible is supplied from the color comparison circuit 30042, the dither adding circuit 30044 adds the dither represented by the spatial dither pattern supplied from the spatial dither pattern ROM 30043 to the image signal of the smooth portion of the image signal from the color comparison circuit 30042, and outputs a result to the monitor 30002.

Fig. 121 is a flowchart explaining the spatial dither addition process performed by the image processing unit 30001 of Fig. 119.

In step S30041, the smooth-portion extracting circuit 30041 extracts a smooth portion that is a part with a small amount of color change in the space direction from the image signal, and supplies the smooth portion to the color comparison circuit 30042 together with the image signal.
The process proceeds to step S30042.

In step S30042, the color comparison circuit 30042 refers to the lookup table stored in the spatial dither pattern ROM 30043, and determines whether or not the color of the smooth portion from the smooth-portion extracting circuit 30041 is a dithering-visible color on the PDP.

In a case where it is determined in step S30042 that the color of the smooth portion from the smooth-portion extracting circuit 30041 is a dithering-visible color on the PDP, the color comparison circuit 30042 supplies a determination result indicating this determination and the image signal from the smooth-portion extracting circuit 30041 to the dither adding circuit 30044. Additionally, the spatial dither pattern ROM 30043 supplies the spatial dither pattern associated in the lookup table with the RGB value of the color of the smooth portion that is targeted for determination by the color comparison circuit 30042 to the dither adding circuit 30044. The process proceeds to step S30043.

In step S30043, the dither adding circuit 30044 adds the specified pattern, that is, the spatial dither represented by the spatial dither pattern from the spatial dither pattern ROM 30043, to the smooth portion of the image signal from the color comparison circuit 30042. The process proceeds to step S30044. In step S30044, the dither adding circuit 30044 outputs the image signal with the dither added thereto to the monitor 30002.

In contrast, in a case where it is determined in step S30042 that the color of the smooth portion from the smooth-portion extracting circuit 30041 is not a dithering-visible color on the PDP, the color comparison circuit 30042 supplies a determination result indicating this determination and the image signal from the smooth-portion extracting circuit 30041 to the dither adding circuit 30044. The process proceeds to step S30045.

In step S30045, the dither adding circuit 30044 outputs the image signal from the color comparison circuit 30042 directly to the monitor 30002 without adding dither to the image signal.

Next, an explanation will be given of the temporal dither addition process (process for reproducing time-direction dither) among the color shift addition process, spatial dither addition process, temporal dither addition process, inter-pixel pitch reproduction process, or stripe array reproduction process performed in the image processing unit 30001.

In PDP panels, dithering is also used in the time direction in order to ensure color gradation levels. Also in this case, reproducibility is improved by performing similar processing.

One frame of an input image is divided into the number of pieces that can be output at a speed equal to the response speed of a monitor to be used in accordance with a color, which are displayed. The method of division is to output a dither pattern obtained by performing the integration in the time direction of the PDP in which divisional pieces are to approach.

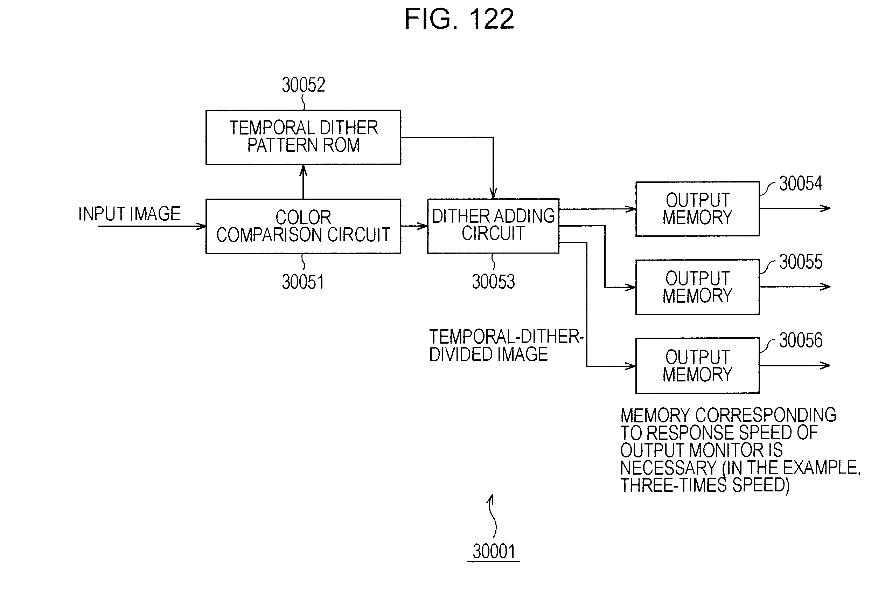

Fig. 122 illustrates an example structure of an image processing unit 30001 for performing the temporal dither addition process.

A color comparison circuit 30051 compares a color of each pixel of an image signal of one frame supplied to the image processing unit 30001 with (RGB values representing) colors registered in a lookup table stored in a temporal dither pattern ROM 30052 to thereby determine whether or not the color of the pixel of the image signal is a color in which dithering is visible.

Then, in a case where the color of the image signal matches one of the colors registered in the lookup table, the color comparison circuit 30051 determines that this color is a color in which dithering is visible. Then, the color comparison circuit 30051 supplies, together with a determination result indicating this determination, the image signal of one frame to a dither adding circuit 30044.

The temporal dither pattern ROM 30052 stores a lookup table. In the lookup table stored in the temporal dither pattern ROM 30052, (an RGB value representing) a color in which dithering is visible when displayed on the PDP and a temporal dither pattern that is a pattern of a pixel value of each sub-frame when this color is displayed at a plurality of sub-frames are registered in associated with each other.

Here, the term sub-frame is equivalent to a sub-field that is used for display on a PDP.

Also, here, it is assumed that the plurality of sub-frames described above are, for example, three sub-frames and that the monitor 30002 has a performance capable of displaying at least three sub-frames for a period of one frame.

The temporal dither pattern ROM 30052 supplies a temporal dither pattern associated in the lookup table stored therein with a color in which it has been determined by the color comparison circuit 30051 dithering is visible, that is, information representing a set of individual pixel values of three sub-frames, to the dither adding circuit 30053.

The dither adding circuit 30053 divides (time-divides), for a color in which it has been determined dithering is visible, which is from the color comparison circuit 30051, the image signal of one frame from the color comparison circuit 30051 into three sub-frames of the pixel values represented by the temporal dither pattern supplied from the temporal dither pattern ROM 30052, thereby adding a temporal dither pattern to the image signal of the frame from the color comparison circuit 30051.

That is, adding a temporal dither pattern to an image signal of one frame means that an image signal of one frame is divided on a pixel-by-pixel basis into a plurality of sub-frames (here, three sub-frame) of the pixel values represented by the temporal dither pattern.

One image signal among the image signals of the three sub-frames obtained by adding the temporal dither pattern using the dither adding circuit 30053 is supplied to an output memory 30054, another image signal to an output memory 30055, and the other image signal to an output memory 30056.

Each of the output memories 30054 to 30056 stores the image signal of the sub-frame supplied from the dither adding circuit 30053, and supplies the sub-frame to the monitor 30002 at a timing for display.

Note that in the monitor 30002, sub-frames are displayed in periods in which three sub-frames can be displayed within one frame, such as a period of 1/3 the frame period.

Here, in Fig. 122, the three output memories 30054 to 30056 are provided as memories for storing image signals of sub-frames. The same number of memories for storing image signals of sub-frames is required as the number of sub-frames that can be obtained by adding a temporal dither pattern using the dither adding circuit 30053.

For example, in a case where the number of sub-frames that can be obtained by adding a temporal dither pattern using the dither adding circuit 30053 is equal to a maximum number (the response speed of the monitor 30002) that can be displayed within one frame on the monitor 30002, a number of memories equal to that number are required as memories for storing image signals of sub-frames.

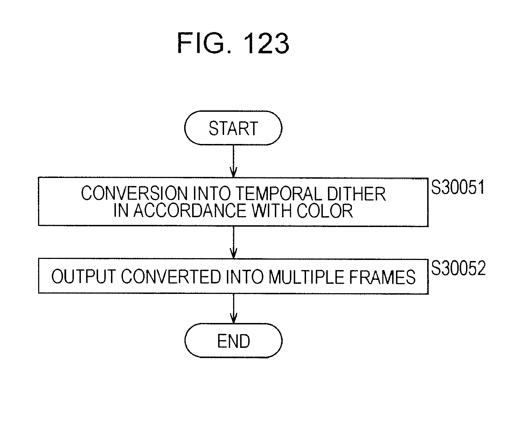

Fig. 123 is a flowchart explaining the temporal dither addition process performed by the image processing unit 30001 of Fig. 122.

The color comparison circuit 30051 refers to the lookup table stored in the temporal dither pattern ROM 30052 to determine whether or not a color of each pixel of an image signal of one frame supplied to the image processing unit 30001 is a color in which dithering is visible, and supplies, together with a determination result obtained for this pixel, the image signal of that frame to the dither adding circuit 30053.

In contrast, the temporal dither pattern ROM 30052 supplies, for each pixel, to the dither adding circuit 30053 a temporal dither pattern associated in the lookup table with a color in which it has been determined by the color comparison circuit 30051 dithering is visible.

In step S30051, the dither adding circuit 30053 adds, for a color in which it has been determined dithering is visible, which is from the color comparison circuit 30051, a temporal dither pattern to an image signal of one frame from the color comparison circuit 30051. The process proceeds to step S30052.

That is, the dither adding circuit 30053 divides an image signal of one frame from the color comparison circuit 30051 into image signals of three sub-frames by dividing the pixel value of each pixel of the image signal of that frame into three pixel values, which are represented by the temporal dither pattern supplied from the temporal dither pattern ROM 30052, and setting the three pixel values as the pixel values of individual pixels corresponding to the three sub-frames. Then, the dither adding circuit 30053 supplies one image signal among the image signals of the three sub-frames to the output memory 30054, another image signal to the output memory 30055, and the other image signal to the output memory 30056 for storage. Note that, for a pixel of a color in which dithering is not visible, for example, 1/3 the pixel value thereof can be set as the pixel value of a sub-frame.

In step S30052, the output memories 30054 to 30056 output the image signals of the sub-frames stored in step S30051 to the monitor 30002 at timings for the sub-frames to be displayed.

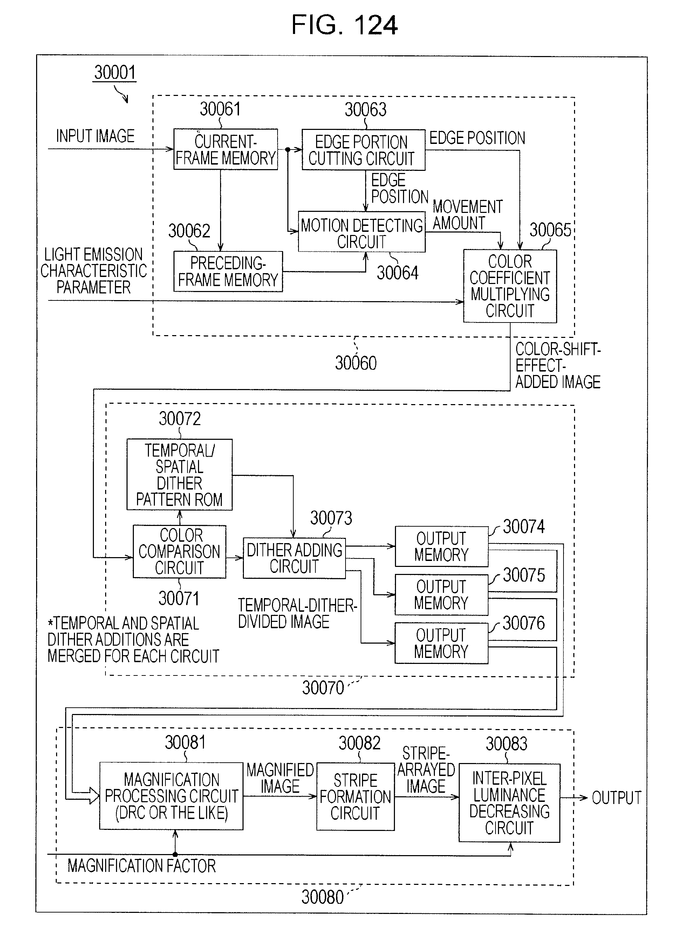

Next, Fig. 124 illustrates an example structure of an image processing unit 30001 for performing all the color shift addition process, spatial dither addition process, temporal dither addition process, inter-pixel pitch reproduction process, and stripe array reproduction process.

In Fig. 124, the image processing unit 30001 is constructed from image processing units 30060, 30070, and 30080.

The image processing unit 30060 is constructed from a current-frame memory 30061, a preceding-frame memory 30062, an edge portion cutting circuit 30063, a motion detecting circuit 30064, and a color coefficient multiplying circuit 30065.

The current-frame memory 30061 to the color coefficient multiplying circuit 30065 are configured in a manner similar to that of the current-frame memory 30021 to color coefficient multiplying circuit 30025 of Fig. 113, respectively. Therefore, the image processing unit 30060 subjects the image signal supplied to the image processing unit 30001 to a color shift addition process similar to that in the case of Fig. 113, and supplies a resulting image signal to the image processing unit 30070.

The image processing unit 30070 is constructed from a color comparison circuit 30071, a temporal/spatial dither pattern ROM 30072, a dither adding circuit 30073, and output memories 30074 to 30076.

The color comparison circuit 30071 performs a process similar to that of each of the color comparison circuit 30042 of Fig. 119 and the color comparison circuit 30051 of Fig. 122 on the image signal supplied from the image processing unit 30060.

The temporal/spatial dither pattern ROM 30072 has stored therein a lookup table similar to each of the lookup table stored in the spatial dither pattern ROM 30043 of Fig. 119 and the lookup table stored in the temporal dither pattern ROM 30052 of Fig. 122, and performs, based on this lookup table, a process similar to that of each of the spatial dither pattern ROM 30043 of Fig. 119 and the temporal dither pattern ROM 30052 of Fig. 122.

Like the dither adding circuit 30044 of Fig. 119, the dither adding circuit 30073 adds spatial dither represented by a spatial dither pattern to the image signal, and further adds a temporal dither pattern to the image signal, thereby dividing that image signal into three sub-frames. The dither adding circuit 30073 individually supplies the three sub-frames to the output memories 30074 to 30076.

Like the output memories 30054 to 30056 of Fig. 122, the output memories 30074 to 3007 store the image signals of the sub-frames from the dither adding circuit 30073. The image signals of the sub-frames stored in the output memories 30074 to 30076 are supplied to the image processing unit 30080.

In the image processing unit 30070 constructed as above, a spatial dither addition process similar to that in the case of Fig. 119 and a temporal dither addition process similar that in the case of Fig. 122 are performed on the image signal output from the image processing unit 30060.

The image processing unit 30080 is constructed from a magnification processing circuit 30081, a stripe formation circuit 30082, and an inter-pixel luminance decreasing circuit 30083.

The magnification processing circuit 30081 performs a process similar to that of the magnification processing circuit 30031 of Fig. 116 on the image signal from the image processing unit 30070, and supplies a resulting image signal to the stripe formation circuit 30082.

The stripe formation circuit 30082 performs, on the image signal from the magnification processing circuit 30081, only a process for decomposition into stripe arrays within the process performed by the magnification/stripe formation circuit 30011 of Fig. 109, and supplies a resulting image signal to the inter-pixel luminance decreasing circuit 30083.

Therefore, a process similar to that performed by the magnification/stripe formation circuit 30011 of Fig. 109 is performed using both the magnification processing circuit 30081 and the stripe formation circuit 30082.

The inter-pixel luminance decreasing circuit 30083 performs a process similar to that performed by the inter-pixel luminance decreasing circuit 30032 of Fig. 116 on the image signal from the stripe formation circuit 30082, and outputs the image signal obtained as a result of the process to the monitor 30002.

Therefore, in the image processing unit 30080, a stripe array reproduction process similar to that in the case of Fig. 116 and an inter-pixel pitch reproduction process similar to that in the case of Fig. 119 are performed.

Note that in the image processing unit 30080, the stripe array reproduction process and the inter-pixel pitch reproduction process are performed on each of the image signals of the three sub-frames supplied from the image processing unit 30070.

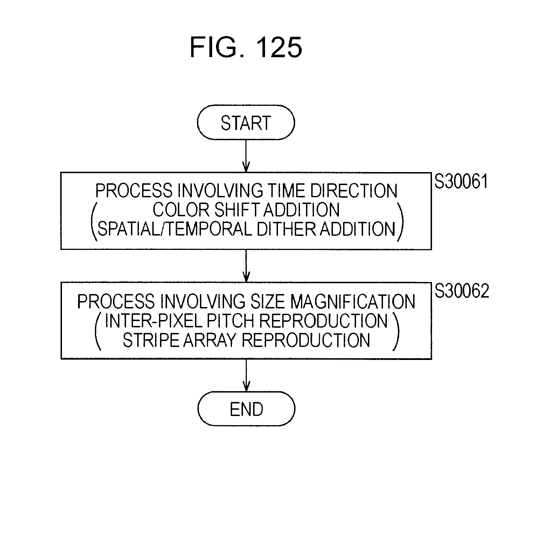

Fig. 125 is a flowchart explaining the process of the image processing unit 30001 of Fig. 124.

In step S30061, a process involving a time direction is performed. That is, in step S30061, the color shift addition process is performed in the image processing unit 30060, and the spatial dither addition process and the temporal dither addition process are performed in the image processing unit 30070.

Then, the process proceeds from step S30061 to step S30062, in which a process involving size magnification is performed. That is, in step S30062, the inter-pixel pitch reproduction process and the stripe array reproduction process are performed in the image processing unit 30080.

As above, the image processing unit 30001 performs at least one of the color shift addition process, the spatial dither addition process, the temporal dither addition process, the inter-pixel pitch reproduction process, and the stripe array reproduction process. Thus, an apparent image on a PDP can be reproduced using a display other than a PDP, such as, for example, an LCD, by performing signal processing.

Also, the reproduction is performed by performing signal processing, whereby image quality evaluation or the like of a plasma display can be performed at the same time on the same screen of the same monitor.

Next, a portion of the series of processes described above can be performed by dedicated hardware or can be performed by software. In a case where the series of processes is performed by software, a program constituting the software is installed into a general-purpose computer or the like.

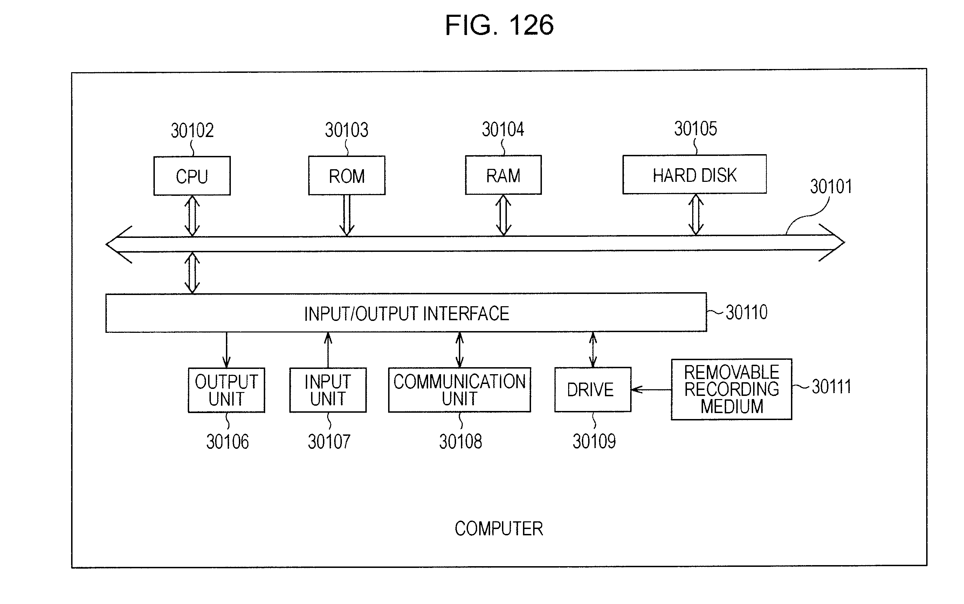

Thus, Fig. 126 illustrates an example structure of an embodiment of a computer into which a program that executes the series of processes described above is installed.

The program can be recorded in advance on a hard disk 30105 or a ROM 30103 serving as a recording medium incorporated in a computer.

Alternatively, the program can be temporarily or permanently stored (recorded) on a removable recording medium 30111 such as a flexible disk, a CD-ROM (Compact Disc Read Only Memory), an MO (Magneto Optical) disk, a DVD (Digital Versatile Disc), a magnetic disk, or a semiconductor memory. The removable recording medium 30111 of this type can be provided as so-called packaged software.

Note that the program can be, as well as installed into the computer from the removable recording medium 30111 as described above, transferred to the computer from a download site in a wireless fashion via a satellite for digital satellite broadcasting or transferred to the computer in a wired fashion via a network such as a LAN (Local Area Network) or the Internet. In the computer, the program transferred in such a manner can be received by a communication unit 30108 and installed into the hard disk 30105 incorporated therein.

The computer incorporates therein a CPU (Central Processing Unit) 30102. The CPU 30102 is connected to an input/output interface 30110 via a bus 30101. When an instruction is input from a user through an operation or the like of an input unit 30107 constructed with a keyboard, a mouse, a microphone, and the like via the input/output interface 30110, the CPU 30102 executes a program stored in the ROM (Read Only Memory) 30103 according to the instruction. Alternatively, the CPU 30102 loads onto a RAM (Random Access Memory) 30104 a program stored in the hard disk 30105, a program that is transferred from a satellite or a network, received by the communication unit 30108, and installed into the hard disk 30105, or a program that is read from the removable recording medium 30111 mounted in a drive 30109 and installed into the hard disk 30105, and executes the program. Accordingly, the CPU 30102 performs the processes according to the flowcharts described above or the processes performed by the structure of the block diagrams described above. Then, the CPU 30102 causes this processing result to be, according to necessity, for example, output from an output unit 30106 constructed with an LCD (Liquid Crystal Display), a speaker, and the like via the input/output interface 30110, sent from the communication unit 30108, or recorded or the like onto the hard disk 30105.

Here, in this specification, processing steps describing a program for causing a computer to perform various processes may not necessarily be processed in time sequence in accordance with the order described as the flowcharts, and include processes executed in parallel or individually (for example, parallel processes or object-based processes).

Further, the program may be processed one computer or processed in a distributed fashion by a plurality of computers. Furthermore, the program may be transferred to a remote computer and executed thereby.

Note that embodiments of the present invention are not limited to the embodiments described above, and a variety of modifications can be made without departing from the scope of the present invention.

**Claims**

1. A display control apparatus for controlling display of an image, comprising:

   signal processing means for performing a predetermined signal process on input image data; and
   display control means for causing an image corresponding to the input image data to be displayed in a display region of a display apparatus having a screen with a larger number of pixels than the number of pixels of the input image data, the display region being a part of the screen, and causing an image corresponding to processed image data obtained by the predetermined signal process to be displayed in a display region that is another part of the screen.

2. The display control apparatus according to Claim 1, wherein the signal processing means performs a signal process for generating, as the processed image data, image data for displaying on the display apparatus an image equivalent to the image corresponding to the input image data to be displayed on another display apparatus having a display characteristic different from that of the display apparatus.

3. The display control apparatus according to Claim 2, wherein the other display apparatus is an apparatus that displays an image using a PDP (Plasma Display Panel) or a CRT (Cathode Ray Tube).

4. The display control apparatus according to Claim 1, wherein the signal processing means performs a signal process equivalent to a process to which the input image data is subjected when another display apparatus displays an image.

5. The display control apparatus according to Claim 4, wherein the signal processing means performs a signal process equivalent to an enhancement process for enhancing a portion of an image, an adaptive gamma correction process for performing adaptive gamma correction, or a high-frame-rate process for generating high-frame-rate image data, to which the input image data is subjected when the other display apparatus displays an image.

6. The display control apparatus according to Claim 1, wherein the signal processing means performs a signal process equivalent to a process for magnifying an image or a process for interpolating a frame, which is performed by another display apparatus.

7. A display control method for controlling display of an image, comprising the steps of:

   performing a predetermined signal process on input image data; and
   causing an image corresponding to the input image data to be displayed in a display region of a display apparatus having a screen with a larger number of pixels than the number of pixels of the input image data, the display region being a part of the screen, and causing an image corresponding to processed image data obtained by the predetermined signal process to be displayed in a display region that is another part of the screen.

8. A program for causing a computer to execute a display control process for controlling display of an image, the program causing the computer to execute the display control process comprising the steps of:

   performing a predetermined signal process on input image data; and
   causing an image corresponding to the input image data to be displayed in a display region of a display apparatus having a screen with a larger number of pixels than the number of pixels of the input image data, the display region being a part of the screen, and causing an image corresponding to processed image data obtained by the predetermined signal process to be displayed in a display region that is another part of the screen.

# FIG. 1

MONITOR SYSTEM

## FIG. 2

## FIG. 3

YES IMAGE = H x V PIXELS? S11

NO

CONVERT IMAGE DATA S12

PERFORM SIGNAL PROCESSING S13

DISPLAY IMAGE S14

## FIG. 4

$12_1$

FIRST SIGNAL PROCESSING UNIT

$31_1$

IMAGE CONVERSION UNIT

CHECK IMAGE DATA

$12_2$

SECOND SIGNAL PROCESSING UNIT

$31_2$

IMAGE CONVERSION UNIT

$12_3$

THIRD SIGNAL PROCESSING UNIT

$31_3$

IMAGE CONVERSION UNIT

MAGNIFICATION FACTOR INFORMATION

# FIG. 5

| | |
|---|---|
| DISPLAY REGION #0<br>(CHECK IMAGE) | DISPLAY REGION #1<br>(m-TIMES MAGNIFIED IMAGE) |
| DISPLAY REGION #2<br>(m'-TIMES MAGNIFIED IMAGE) | DISPLAY REGION #3<br>(m''-TIMES MAGNIFIED IMAGE) |

~2

EP 2 101 313 A1

FIG. 6

m × V PIXELS

V PIXELS

H PIXELS

DISPLAY REGION #1

m × H PIXELS

m-TIMES MAGNIFIED IMAGE

CHECK IMAGE

H PIXELS

V PIXELS

DISPLAY RANGE REGION

# FIG. 7

$12_1$

FIRST SIGNAL PROCESSING UNIT

$41_1$

SIMULATION PROCESSING UNIT

CHECK IMAGE DATA

$12_2$

SECOND SIGNAL PROCESSING UNIT

$41_2$

SIMULATION PROCESSING UNIT

$12_3$

THIRD SIGNAL PROCESSING UNIT

$41_3$

SIMULATION PROCESSING UNIT

TYPE INFORMATION

# FIG. 8

| | |
|---|---|
| DISPLAY REGION #0<br>(CHECK IMAGE) | DISPLAY REGION #1<br>(PSEUDO-ORGANIC EL IMAGE) |
| DISPLAY REGION #2<br>(PSEUDO-PDP IMAGE) | DISPLAY REGION #3<br>(PSEUDO-CRT IMAGE) |

~2

FIG. 9

FIG. 10

| | |
|---|---|
| DISPLAY REGION #0<br>(CHECK IMAGE) | DISPLAY REGION #1<br>(m-TIMES MAGNIFIED IMAGE<br>OF PSEUDO-ORGANIC EL IMAGE) |
| DISPLAY REGION #2<br>(m'-TIMES MAGNIFIED IMAGE<br>OF PSEUDO-PDP IMAGE) | DISPLAY REGION #3<br>(m''-TIMES MAGNIFIED IMAGE<br>OF PSEUDO-CRT IMAGE) |

~2

EP 2 101 313 A1

# FIG. 11

$12_1$

FIRST SIGNAL PROCESSING UNIT

CHECK IMAGE DATA

$31_1$

IMAGE CONVERSION UNIT

$12_2$

SECOND SIGNAL PROCESSING UNIT

51

IMAGE CONVERSION UNIT

$12_3$

THIRD SIGNAL PROCESSING UNIT

$31_3$

IMAGE CONVERSION UNIT

52

IMAGE CONVERSION UNIT

MAGNIFICATION FACTOR INFORMATION,
PLAYBACK SPEED INFORMATION

## FIG. 12

| | |
|---|---|
| DISPLAY REGION #0<br>(CHECK IMAGE) | DISPLAY REGION #1<br>(m-TIMES MAGNIFIED IMAGE) |
| DISPLAY REGION #2<br>(q-TIMES-SPEED SLOW<br>PLAYBACK IMAGE) | DISPLAY REGION #3<br>(q"-TIMES-SPEED SLOW<br>PLAYBACK IMAGE OF m"-TIMES<br>MAGNIFIED IMAGE) |

~2

# FIG. 13

CHECK IMAGE DATA

$12_1$

FIRST SIGNAL PROCESSING UNIT

61

ENHANCEMENT PROCESSING UNIT

$12_2$

SECOND SIGNAL PROCESSING UNIT

62

ADAPTIVE GAMMA PROCESSING UNIT

$12_3$

THIRD SIGNAL PROCESSING UNIT

63

HIGH-FRAME-RATE PROCESSING UNIT

SIGNAL PROCESSING PARAMETER

# FIG. 14

| | |
|---|---|
| DISPLAY REGION #0<br>(CHECK IMAGE) | DISPLAY REGION #1<br>(ENHANCEMENT-PROCESSED<br>IMAGE) |
| DISPLAY REGION #2<br>(ADAPTIVE-GAMMA-PROCESSED<br>IMAGE) | DISPLAY REGION #3<br>(HIGH-FRAME-RATE IMAGE) |

~2

# FIG. 15

$12_1$

FIRST SIGNAL PROCESSING UNIT

$71_1$

CHECK IMAGE DATA

PSEUDO-INCHES IMAGE GENERATION UNIT

$12_2$

SECOND SIGNAL PROCESSING UNIT

$71_2$

PSEUDO-INCHES IMAGE GENERATION UNIT

$12_3$

THIRD SIGNAL PROCESSING UNIT

$71_3$

PSEUDO-INCHES IMAGE GENERATION UNIT

NUMBER-OF-INCHES INFORMATION

FIG. 16

# FIG. 17

H PIXELS

V PIXELS

CHECK IMAGE

H MONITOR PIXELS

V MONITOR PIXELS

DISPLAY REGION #i
(N-INCH)

# FIG. 18

PIXEL

H PIXELS

V PIXELS

~CHECK IMAGE

3 × H PIXELS

PIXEL

3 × V PIXELS

~PSEUDO-INCHES
IMAGE

MONITOR PIXEL

H MONITOR PIXELS

V MONITOR PIXELS

DISPLAY REGION #i
(3 × N-INCH)

# FIG. 19

PIXEL

H PIXELS

V PIXELS

~CHECK IMAGE

PIXEL

H/2 PIXELS

V/2 PIXELS

~PSEUDO-INCHES IMAGE

MONITOR PIXEL

H MONITOR PIXELS

V MONITOR PIXELS

DISPLAY REGION #i
(N/2-INCH)

FIG. 20

```
                    ┌──────────────────────────────────────────────────┐
                    ▼                                                    │
    ◄──OPERATION OF CHANGING NUMBER OF INCHES n PERFORMED?──S31──────────┤
                              │                         NO              │
                              │YES                                      │
                              ▼                                         │
    ┌──────────────────────────────────────────────────────┐ S32       │
    │ DETERMINE NUMBER-OF-PIXELS CHANGING RATIO n/N AT       │           │
    │ WHICH NUMBER OF PIXELS OF CHECK IMAGE IS CHANGED       │           │
    └──────────────────────────────────────────────────────┘           │
                              │                                         │
                              ▼                                         │
    ┌──────────────────────────────────────────────────────┐ S33       │
    │ GENERATE PSEUDO-INCHES IMAGE CORRESPONDING TO n-INCH IMAGE         │
    │ DISPLAYED ON n-INCH SCREEN BY CHANGING NUMBER OF PIXELS OF         │
    │ CHECK IMAGE ACCORDING TO NUMBER-OF-PIXELS CHANGING RATIO n/N       │
    └──────────────────────────────────────────────────────┘           │
                              │                                         │
              YES             ▼            S34                          │
      ┌────────────◄      n ≤ N?      ►─────────────┐                   │
      │                              NO             │                   │
      ▼                                             ▼                   │
┌──────────────────────┐ S35      ┌──────────────────────────┐ S36     │
│ EXTRACT ENTIRE PSEUDO-INCHES     │ EXTRACT H x V PIXELS IN PSEUDO-INCHES │
│ IMAGE AS DISPLAY IMAGE │          │ IMAGE AS DISPLAY IMAGE   │         │
└──────────────────────┘          └──────────────────────────┘         │
      │                                             │                   │
      └─────────────────────┬───────────────────────┘                   │
                            ▼                                           │
    ┌──────────────────────────────────────────────────────┐ S37       │
    │ DISPLAY DISPLAY IMAGE IN DISPLAY REGION WITH H x V MONITOR PIXELS  │
    └──────────────────────────────────────────────────────┘           │
                            │                                           │
                            └───────────────────────────────────────────┘
```

# FIG. 21

FIRST SIGNAL PROCESSING UNIT $12_1$

CHECK IMAGE DATA

IMAGE CONVERSION UNIT $31_1$

PSEUDO-INCHES IMAGE GENERATION UNIT $71_1$

SECOND SIGNAL PROCESSING UNIT $12_2$

IMAGE CONVERSION UNIT $31_2$

PSEUDO-INCHES IMAGE GENERATION UNIT $71_2$

THIRD SIGNAL PROCESSING UNIT $12_3$

IMAGE CONVERSION UNIT $31_3$

PSEUDO-INCHES IMAGE GENERATION UNIT $71_3$

MAGNIFICATION FACTOR INFORMATION,
NUMBER-OF-INCHES INFORMATION

EP 2 101 313 A1

# FIG. 22

| | |
|---|---|
| DISPLAY REGION #0<br>(CHECK IMAGE) | DISPLAY REGION #1<br>(m-TIMES MAGNIFIED IMAGE OF<br>n-INCH PSEUDO-INCHES IMAGE) |
| DISPLAY REGION #2<br>(m'-TIMES MAGNIFIED IMAGE OF<br>n'-INCH PSEUDO-INCHES IMAGE) | DISPLAY REGION #3<br>(m"-TIMES MAGNIFIED IMAGE OF<br>n"-INCH PSEUDO-INCHES IMAGE) |

~2

# FIG. 23

CHECK IMAGE DATA

**FIRST SIGNAL PROCESSING UNIT** ($12_1$)

$31_1$ IMAGE CONVERSION UNIT

$71_1$ PSEUDO-INCHES IMAGE GENERATION UNIT

**SECOND SIGNAL PROCESSING UNIT** ($12_2$)

$31_2$ IMAGE CONVERSION UNIT

$41_2$ SIMULATION PROCESSING UNIT

$71_2$ PSEUDO-INCHES IMAGE GENERATION UNIT

**THIRD SIGNAL PROCESSING UNIT** ($12_3$)

$31_3$ IMAGE CONVERSION UNIT

$41_3$ SIMULATION PROCESSING UNIT

$71_3$ PSEUDO-INCHES IMAGE GENERATION UNIT

MAGNIFICATION FACTOR INFORMATION, TYPE INFORMATION, NUMBER-OF-INCHES INFORMATION

EP 2 101 313 A1

FIG. 24

| DISPLAY REGION #0<br>(CHECK IMAGE)<br>(N-INCH) | DISPLAY REGION #1<br>(m-TIMES MAGNIFIED IMAGE)<br>(n-INCH) |
|---|---|
| DISPLAY REGION #2<br>(m'-TIMES MAGNIFIED IMAGE OF<br>PSEUDO-PDP IMAGE)<br>(n'-INCH) | DISPLAY REGION #3<br>(m"-TIMES MAGNIFIED IMAGE OF<br>PSEUDO-CRT IMAGE)<br>(n"-INCH) |

~2

EP 2 101 313 A1

## FIG. 25

# FIG. 26

START

SELECT PIXEL OF INTEREST  S111

SELECT PREDICTION TAP AND CLASS TAP  S112

CLASS CLASSIFICATION  S113

OBTAIN TAP COEFFICIENT  S114

PREDICTIVE COMPUTATION  S115

YES  PIXEL REMAINS?  S116

NO

END

# FIG. 27

EP 2 101 313 A1

FIG. 28

# FIG. 29

# FIG. 30

START

GENERATE TEACHER DATA AND STUDENT DATA — S121

SELECT PIXEL OF INTEREST — S122

SELECT PREDICTION TAP AND CLASS TAP — S123

CLASS CLASSIFICATION — S124

ADDITIONAL ADDITION — S125

YES ← PIXEL REMAINS? — S126

NO

CALCULATE TAP COEFFICIENT — S127

END

# FIG. 31

EP 2 101 313 A1

# FIG. 32

TAP COEFFICIENT

CLASS ────────────────────────► COEFFICIENT MEMORY ─164

163

PARAMETER Z ──► PARAMETER MEMORY

COEFFICIENT GENERATION UNIT ─161

COEFFICIENT SEED MEMORY

162

155

# FIG. 33

## FIG. 34

PIXEL-OF-INTEREST SELECTION UNIT — 141

TAP SELECTION UNIT — 193

CLASS CLASSIFICATION UNIT — 144

TAP SELECTION UNIT — 192

ADDITIONAL ADDITION UNIT — 195

COEFFICIENT SEED CALCULATION UNIT — 196

STUDENT DATA

TEACHER DATA

PARAMETER Z

COEFFICIENT SEED DATA

176

EP 2 101 313 A1

# FIG. 35

START

GENERATE TEACHER DATA AND STUDENT DATA — S131

z = 0 — S132

SELECT PIXEL OF INTEREST — S133

SELECT PREDICTION TAP AND CLASS TAP — S134

CLASS CLASSIFICATION — S135

ADDITIONAL ADDITION — S136

S138
z++ ← NO — z == Z? S137

YES

PIXEL REMAINS? S139 — YES

NO

CALCULATE COEFFICIENT SEED — S140

END

# FIG. 36

# FIG. 37

IMAGE SIGNAL →

10011
BRIGHTNESS
ADJUSTMENT
CONTRAST
ADJUSTMENT
UNIT

→

10012
IMAGE QUALITY
IMPROVEMENT
PROCESSING
UNIT

→

10013
$\gamma$ CORRECTION
UNIT

IMAGE SIGNAL
(CRT DRIVING)
→ TO LCD PANEL

# FIG. 38

IMAGE SIGNAL →

10031
BRIGHTNESS ADJUSTMENT CONTRAST ADJUSTMENT UNIT

10032
IMAGE QUALITY IMPROVEMENT PROCESSING UNIT

10033
ABL PROCESSING UNIT

10034
VM PROCESSING UNIT

10035
CRT γ PROCESSING UNIT

CRT PROCESSING IMAGE SIGNAL → TO LCD PANEL

10036
FULL SCREEN BRIGHTNESS AND AVERAGE LEVEL DETECTION UNIT

10038
ABL CONTROL UNIT

10037
PEAK DETECTION DIFFERENTIAL CONTROL VALUE DETECTION UNIT

10039
VM CONTROL UNIT

10040
DISPLAY COLOR TEMPERATURE COMPENSATION CONTROL UNIT

EP 2 101 313 A1

# FIG. 39

EP 2 101 313 A1

# FIG. 40

START

ADJUSTMENT PROCESS S10011

IMAGE QUALITY
IMPROVEMENT PROCESS S10012

ABL PROCESS S10013

VM PROCESS S10014

CRT $\gamma$ PROCESS S10015

END

FIG. 41

# FIG. 42

COEFFICIENT = 1

VM COEFFICIENT

t=-2    t=0    t=+2

t=-3    t=-1    t=+1    t=+3

FIG. 43

# FIG. 44

# FIG. 45

BLUE

GREEN

RED

A    SHADOW MASK

RED

GREEN

BLUE

B    APERTURE GRILLE

EP 2 101 313 A1

# FIG. 46

BLUE

GREEN

RED

SPOT

A   RANGE OVER WHICH ELECTRON BEAM IMPINGES AT INTERMEDIATE LUMINANCE LEVEL

SHADOW MASK

RED

GREEN

BLUE

SPOT

B   RANGE OVER WHICH ELECTRON BEAM IMPINGES AT INTERMEDIATE LUMINANCE LEVEL

APERTURE GRILLE

EP 2 101 313 A1

## FIG. 47

BLUE
GREEN
RED

A   RANGE OVER WHICH ELECTRON BEAM IMPINGES AT HIGH LUMINANCE LEVEL

SHADOW MASK

SPOT

RED
GREEN
BLUE

SPOT

B   RANGE OVER WHICH ELECTRON BEAM IMPINGES AT HIGH LUMINANCE LEVEL

APERTURE GRILLE

EP 2 101 313 A1

FIG. 48

**A**

GREEN FLUORESCENT MATERIAL
RED FLUORESCENT MATERIAL
BLUE FLUORESCENT MATERIAL

APERTURE GRILLE

SLIT IN APERTURE GRILLE

ELECTRON BEAM

**B**

GREEN FLUORESCENT MATERIAL
RED FLUORESCENT MATERIAL
BLUE FLUORESCENT MATERIAL

ELECTRON BEAM

# FIG. 49

INTENSITY OF
ELECTRON BEAM

# FIG. 50

INTENSITY OF
ELECTRON BEAM

A

B

C

EP 2 101 313 A1

# FIG. 51

INTENSITY OF
ELECTRON BEAM

A

C

B

D

EP 2 101 313 A1

FIG. 52

INTENSITY OF
ELECTRON BEAM

A

C

B

D

# FIG. 53

INTENSITY OF ELECTRON BEAM

A

C

B

D

EP 2 101 313 A1

# FIG. 54

SLIT PITCH

PIXEL-OF-INTEREST POSITION

SLIT OF INTEREST

LEFT SLIT

SLIT WIDTH

RIGHT SLIT

APERTURE GRILLE

PROBABILITY DENSITY FUNCTION

$-\dfrac{S}{2}$ $\dfrac{S}{2}$

ADJACENT-PIXEL INTEGRATION INTERVAL

PIXEL-OF-INTEREST INTEGRATION INTERVAL (HORIZONTAL DIRECTION)

A

PIXEL-OF-INTEREST POSITION (VERTICAL DIRECTION)

PIXEL-OF-INTEREST INTEGRATION INTERVAL (VERTICAL DIRECTION)

B

ADJACENT-PIXEL INTEGRATION INTERVAL (VERTICAL DIRECTION)

C

EP 2 101 313 A1

# FIG. 55

ELECTRON BEAM

APERTURE GRILLE

A

B

EP 2 101 313 A1

# FIG. 56

x: HORIZONTAL PIXEL POSITION (RELATIVE)

y: VERTICAL PIXEL POSITION (RELATIVE)

A

A (x−1,y−1)  B (x+0,y−1)  C (x+1,y−1)

D (x−1,y+0)  E (x+0,y+0)  F (x+1,y+0)

G (x−1,y+1)  H (x+0,y+1)  I (x+1,y+1)

PIXEL OF INTEREST

PIXEL VALUE (H)

INTENSITY

0

C

y

INTENSITY

PIXEL VALUE (H)

0

x

B

EP 2 101 313 A1

# FIG. 57

FIG. 58

# FIG. 59

10220

```
           SELECTOR        EB FUNCTION        SELECTOR
                              UNIT
```

10271              10250              10272

# FIG. 60

10282

LEVEL SHIFT UNIT
(ADDER)

10283

GAIN ADJUSTMENT
UNIT

NPUT SIGNAL
(RGB)

OUTPUT SIGNAL
(RGB)

COLOR TEMPERATURE
SETTING VALUE
(CONTROL SIGNAL)

CONTROL UNIT

10281

EP 2 101 313 A1

# FIG. 61

10034

## FIG. 62

10310

INPUT SIGNAL
(IMAGE SIGNAL)

10311

DELAY TIMING
ADJUSTMENT UNIT

(INPUT SIGNAL)

OUTPUT SIGNAL
(IMAGE SIGNAL)

MULTIPLYING
CIRCUIT

DIFFERENTIATING
CIRCUIT

THRESHOLD
PROCESSING UNIT

WAVEFORM
SHAPING
PROCESSING
UNIT

VM
COEFFICIENT

10312        10313

10314

10315

VM CONTROL SIGNAL

143

# FIG. 63

EDGE PIXEL VALUE

PIXEL VALUE

INPUT SIGNAL

C

OUTPUT SIGNAL

D

OUTPUT SIGNAL

E

COEFFICIENT=1.1

COEFFICIENT=1.0
COEFFICIENT=0.95

t=−2    t=0    t=+2
t=−3    t=−1    t=+1    t=+3

VM COEFFICIENT

A

COEFFICIENT=1.2

COEFFICIENT=1.0
COEFFICIENT=0.95

t=−2    t=0    t=+2
t=−3    t=−1    t=+1    t=+3

VM COEFFICIENT

B

EP 2 101 313 A1

# FIG. 64

10310

10327

(INPUT SIGNAL)

OUTPUT SIGNAL
(IMAGE SIGNAL)

PREDICTION UNIT

INPUT SIGNAL
(IMAGE SIGNAL)

10321

TAP SELECTION UNIT

PREDICTION UNIT

10325

CLASS DECISION UNIT

10324

CLASS PREDICTION COEFFICIENT STORAGE UNIT

10323

TAP COEFFICIENT STORAGE UNIT

VM COEFFICIENT

10326

10322

VM CONTROL SIGNAL

EP 2 101 313 A1

# FIG. 65

TAP COEFFICIENT (VM COEFFICIENT) LEARNING PROCESS

GENERATE TEACHER DATA AND STUDENT DATA — S10021

SELECT PIXEL OF INTEREST — S10022

SELECT PREDICTION TAP AND CLASS TAP — S10023

CLASS CLASSIFICATION — S10024

ADDITIONAL ADDITION — S10025

YES / PIXEL REMAINS? \ S10026

NO

CALCULATE TAP COEFFICIENT — S10027

END

# FIG. 66

CALCULATION OF CLASS PREDICTION COEFFICIENT

SELECT CLASS TAP FROM STUDENT DATA — S10031

$j=1$ — S10032

SELECT ALL CLASS TAPS AS LEARNING CLASS TAPS — S10033

GENERATE NORMAL EQUATIONS WHICH MINIZE PREDICTION ERROR OF PREDICTION VALUE OF PIXEL $x_{M+1}$ TO BE PREDICTED — S10034

DETERMINE CLASS PREDICTION COEFFICIENTS $c_{j,1}$, $c_{j,2}$, ..., $c_{j,M}$ OF CLASS #j — S10035

$j = J?$ — S10036

YES

NO

$j++$ — S10037

END

DETERMINE ERROR — S10038

SELECT CLASS TAP FOR WHICH ERROR IS GREATER THAN OR EQUAL TO THRESHOLD VALUE AS LEARNING CLASS TAP — S10039

## FIG. 67

EP 2 101 313 A1

# FIG. 68

20100

MOTION DETECTING UNIT

mv

20300

LIGHT-INTENSITY INTEGRATING UNIT

Vin

Vout

SF

SUB-FIELD DEVELOPING UNIT

20200

# FIG. 69

20100

20101

CORRELATION CALCULATING CIRCUIT

20103

LINE-OF-SIGHT DECISION CIRCUIT

mv

Vin

DELAY CIRCUIT

20102

# FIG. 70

CURRENT FIELD

BL

PIXEL OF INTEREST

PREVIOUS FIELD

SEARCH RANGE

SAME POSITION AS BL
IN CURRENT FIELD

# FIG. 71

CURRENT FIELD

BL

PIXEL OF INTEREST

PREVIOUS FIELD

MOTION VECTOR (mv)

SEARCH RANGE

SAME POSITION AS BL
IN CURRENT FIELD

# FIG. 72

20200

20201

20202

Vin → SUB-FIELD ASSIGNING CIRCUIT → LIGHT-EMISSION DECISION CIRCUIT → SF

# FIG. 73

1 FIELD

SF1   SF2   SF3   SF4   SF5   SF6   SF7   SF8

ADDRESS PERIOD

LIGHT EMITTING PERIOD

# FIG. 74

SF8

SF7

SF6

SF5

SF4
SF3
SF2
SF1

T

X

Y

LIGHT EMITTING
PERIOD
ADDRESS PERIOD

1 FIELD

EP 2 101 313 A1

# FIG. 75

20300

20301

20302

mv → LIGHT-INTENSITY-INTEGRATING-REGION DECISION CIRCUIT → LIGHT-INTENSITY INTEGRATING CIRCUIT → Vout

SF

# FIG. 76

C      A      B

SF1
SF2
SF3
SF4
SF5
TIME
SF6
SF7
SF8
T

B'     A'     C'

PIXEL POSITION X,Y

# FIG. 77

# FIG. 78

SF8
SF7
SF6
SF5
SF4
SF3
SF2
SF1

T
X
Y

LINE OF SIGHT

LIGHT-INTENSITY
INTEGRATING REGION

EP 2 101 313 A1

FIG. 79

# FIG. 80

EP 2 101 313 A1

# FIG. 81

Vpo

| 4 | 4 |
|---|---|
| 4 | 4 |

→

Vd

| 3 | 3 |
|---|---|
| 3 | 7 |

# FIG. 82

20400
GRADATION-LEVEL
CONVERTING UNIT

Vin

Vd

20100
MOTION
DETECTING
UNIT

mv

20300
LIGHT-INTENSITY
INTEGRATING UNIT

Vout

SF

SUB-FIELD
DEVELOPING UNIT

20200

FIG. 83

EP 2 101 313 A1

# FIG. 84

Vin

20500

Vd → DITHER CORRECTING CIRCUIT — Vmb → DIFFUSED-ERROR CORRECTING CIRCUIT → Vm

20501          20502

# FIG. 85

| Vd | | | Vmb | |
|----|----|----|----|----|
| 3 | 3 | → | 4 | 4 |
| 3 | 7 | | 4 | 4 |

# FIG. 86

| Vin | 100 | 105 | 90 | · · · |
|-----|-----|-----|-----|-------|
| Vmb | 90 | 110 | 80 | · · · |
| Vm | 95 | 100 | 90 | · · · |

SEQUENCE OF DIFFUSED ERRORS →

# FIG. 87

INPUT Vin — ST20100

↓

DETECT MOTION — ST20200

↓

DEVELOP SUB-FIELDS — ST20300

↓

INTEGRATE LIGHT INTENSITY — ST20400

↓

OUTPUT Vout — ST20500

# FIG. 88

INPUT Vin — ST20201

↓

CALCULATE CORRELATION — ST20202

↓

ST20203

CALCULATIONS WITH ALL CANDIDATES COMPLETED?

NO

YES

↓

DECIDE LINE OF SIGHT — ST20204

↓

OUTPUT mv — ST20205

FIG. 89

INPUT Vin — ST20301

↓

ASSIGN SUB-FIELDS — ST20302

↓

DECIDE LIGHT EMISSION — ST20303

↓

OUTPUT SF — ST20304

FIG. 90

INPUT mv AND SF — ST20401

↓

DECIDE LIGHT-INTENSITY INTEGRATING REGION — ST20402

↓

INTEGRATE LIGHT INTENSITY — ST20403

↓

OUTPUT Vout — ST20404

FIG. 91

INPUT Vin — ST20110

↓

DETECT MOTION — ST20210

↓

CONVERT GRADATION LEVEL — ST20310

↓

DEVELOP SUB-FIELDS — ST20410

↓

CALCULATE LIGHT INTENSITY — ST20510

↓

OUTPUT Vout — ST20610

# FIG. 92

INPUT Vin — ST20311

↓

ADD ERRORS — ST20312

↓

CONVERT GRADATION LEVEL — ST20313

↓

CALCULATE ERROR — ST20314

↓

PERFORM
DITHER CONVERSION — ST20315

↓

OUTPUT Vd — ST20316

# FIG. 93

INPUT Vin — ST20120

↓

CONVERT GRADATION LEVEL — ST20220

↓

DETECT MOTION — ST20320

↓

DEVELOP SUB-FIELDS — ST20420

↓

INTEGRATE LIGHT
INTENSITY — ST20520

↓

OUTPUT Vout — ST20620

# FIG. 94

INPUT Vin — ST20130

↓

CONVERT GRADATION LEVEL — ST20230

↓

CORRECT VISION — ST20330

↓

DETECT MOTION — ST20430

↓

DEVELOP SUB-FIELDS — ST20530

↓

INTEGRATE
LIGHT INTENSITY — ST20630

↓

OUTPUT Vout — ST20730

# FIG. 95

INPUT Vd — ST20331

↓

PERFORM DITHER
CORRECTION — ST20332

↓

CORRECT DIFFUSED ERROR — ST20333

↓

OUTPUT Vm — ST20334

## FIG. 96

DISPLAY MODEL

EP 2 101 313 A1

# FIG. 97

(300, 200)         (301, 200)

PIXEL AT
POSITION (300, 200)

(300, 201)         (301, 201)

# FIG. 98

$(x+v_x, y+v_y)$ $(x+1+v_x, y+v_y)$

$T=\beta=\alpha+T_f$

$(x+v_x, y+1+v_y)$ $(x+1+v_x, y+1+v_y)$

$A\left(x+\dfrac{v_x}{T_f}(t-\alpha), y+\dfrac{v_y}{T_f}(t-\alpha)\right)$ $B\left(x+\dfrac{v_x}{T_f}(t-\alpha)+1, y+\dfrac{v_y}{T_f}(t-\alpha)\right)$

$T=t$

$C\left(x+\dfrac{v_x}{T_f}(t-\alpha), y+\dfrac{v_y}{T_f}(t-\alpha)+1\right)$

CROSS-SECTION REGION

$D\left(x+\dfrac{v_x}{T_f}(t-\alpha)+1, y+\dfrac{v_y}{T_f}(t-\alpha)+1\right)$

$(x,y)$ $(x+1,y)$

LIGHT-INTENSITY INTEGRATING REGION

$T=\alpha$

$(x, y+1)$ $(x+1, y+1)$

## FIG. 99

$A\left(x+\dfrac{v_x}{T_f}(t-\alpha),y+\dfrac{v_y}{T_f}(t-\alpha)\right)$

$B\left(x+\dfrac{v_x}{T_f}(t-\alpha)+1,y+\dfrac{v_y}{T_f}(t-\alpha)\right)$

CROSS-SECTION REGION

$S_2$  $S_1$

$L_Y$

$L_X$  (a,b)

T=t

$S_3$  $S_4$

$C\left(x+\dfrac{v_x}{T_f}(t-\alpha),y+\dfrac{v_y}{T_f}(t-\alpha)+1\right)$

$D\left(x+\dfrac{v_x}{T_f}(t-\alpha)+1,y+\dfrac{v_y}{T_f}(t-\alpha)+1\right)$

# FIG. 100

DISPLAY MODEL

REFERENCE POINT OF INTEREST

$T = \gamma$

NEW REFERENCE POINT

$X = x+1$

$S_2'$ $(x+2,y)$

$S_3'$

$(x+1,y-1)$

$S_2$ $S_1$

$S_3$ $S_4$

$(x+1,y)$

$S_2$ $S_1$

$S_3$ $S_4$

$T = t_{sf \alpha}$

$(x,y)$

CROSS-SECTION REGION

$S_1$ $(x+1,y)$

$(x,y+1)$ $(x+1,y+1)$

T

X

PIXEL OF INTEREST

Y

EP 2 101 313 A1

# FIG. 101

# FIG. 102

INPUT mv AND SF ──ST21001 ┊--- ST20401

SELECT PIXEL OF INTEREST ──ST21002

SET INITIAL REFERENCE POINT ──ST21003

CALCULATE REFERENCE-POINT CHANGE TIMES ──ST21004 ┊--- ST20402

CALCULATE LIGHT-INTENSITY INTEGRATING REGION ──ST21005

DETERMINE INFLUENTIAL LIGHT INTENSITY ──ST21006

INTEGRATE LIGHT INTENSITY ──ST21007 ┊--- ST20403

ST21008

INTEGRATIONS WITH ALL PIXELS COMPLETED?

NO

YES

OUTPUT Vout ──ST21009 ┊--- ST20404

FIG. 103

20300

20303

LIGHT-INTENSITY-
INTEGRATED-VALUE-
TABLE STORAGE UNIT

mv

20304

LIGHT-INTENSITY-
INTEGRATING-REGION
SELECTING CIRCUIT

20302

LIGHT-INTENSITY
INTEGRATING
CIRCUIT

Vout

SF

# FIG. 104

LIGHT-INTENSITY-INTEGRATED-VALUE TABLE

| SUB-FIELD RELATIVE POSITION | SF1 | SF2 | · · · | SF8 |
|---|---|---|---|---|
| [−8,−8] | $R_{SF1[-8,-8]}$ | $R_{SF2[-8,-8]}$ | · · · | $R_{SF8[-8,-8]}$ |
| [−8,−7] | $R_{SF1[-8,-7]}$ | $R_{SF2[-8,-7]}$ | · · · | $R_{SF8[-8,-7]}$ |
| ⋮ | ⋮ | ⋮ | ⋮ | ⋮ |
| [0,−1] | $R_{SF1[0,-1]}$ | $R_{SF2[0,-1]}$ | · · · | $R_{SF[0,-1]}$ |
| [0,0] | $R_{SF1[0,0]}$ | $R_{SF2[0,0]}$ | · · · | $R_{SF8[0,0]}$ |
| [0,1] | $R_{SF1[0,1]}$ | $R_{SF2[0,1]}$ | · · · | $R_{SF8[0,1]}$ |
| ⋮ | ⋮ | ⋮ | ⋮ | ⋮ |
| [7,6] | $R_{SF1[7,6]}$ | $R_{SF2[7,6]}$ | · · · | $R_{SF8[7,6]}$ |
| [7,7] | $R_{SF1[7,7]}$ | $R_{SF2[7,7]}$ | · · · | $R_{SF8[7,7]}$ |

# FIG. 105

INPUT mv AND SF — ST21011

SELECT PIXEL OF INTEREST — ST21012

READ LIGHT-INTENSITY-INTEGRATED-VALUE TABLE — ST21013

DETERMINE INFLUENTIAL LIGHT INTENSITY — ST21014

INTEGRATE LIGHT INTENSITY — ST21015

ST21016

INTEGRATIONS WITH ALL PIXELS COMPLETED?

NO

YES

OUTPUT Vout — ST21017

FIG. 106

EP 2 101 313 A1

# FIG. 107

# FIG. 108

ONE PDP PIXEL

| R | G | B |

IN CASE OF OUTPUT OF
THREE PIXELS

3

3 | R | G | B

IN CASE OF OUTPUT OF
TWO PIXELS

R G B

BLUE + GREEN / 2

RED + GREEN / 2

EP 2 101 313 A1

# FIG. 109

EP 2 101 313 A1

INPUT IMAGE → | MAGNIFICATION/ STRIPE FORMATION CIRCUIT (30011) | → STRIPE-FORMED IMAGE → | RESIZING/ RESAMPLING CIRCUIT (30012) | → OUTPUT

30001

# FIG. 110

START

INCREASE ONE PIXEL THREE-FOLD AND
MODIFY THE PIXEL IN FASHION THAT RGB
COMPONENTS ARE ARRANGED LATERALLY — S30011

RESIZING/RESAMPLING PROCESS
IN ACCORDANCE WITH OUTPUT SIZE — S30012

OUTPUT — S30013

END

# FIG. 111

APPARENTLY HATCHED
PORTION LOOKS YELLOW

MOVEMENT DIRECTION

LIGHTING OF BLUE, GREEN, AND RED
IS TURNED ON IN THIS ORDER

B
G
R

B
G
R

t

FIG. 112

LIGHTING OF BLUE IS TURNED OFF 1/3 EARLIER
IN CASE WHERE MOVING AMOUNT OF TARGET OBJECT
ACCOUNTS FOR THREE PIXELS

| | | | | | |
|---|---|---|---|---|---|
| B | 0.66 | 0.77 | 0.88 | 1 | 1 |
| G | 1 | 1 | 1 | 1 | 1 |
| R | 1 | 1 | 1 | 1 | 1 |

*NUMERICAL VALUES REPRESENT COEFFICIENTS TO BE
MULTIPLIED WITH ORIGINAL PIXEL VALUES AND OUTPUT

# FIG. 113

# FIG. 114

```
            ┌─────────────┐
            │    START     │
            └──────┬───────┘
                   │
                   ▼
  ┌──────────────────────────────────────┐  S30021
  │   DETECT EDGE PORTION WHERE           │
  │   COLOR SHIFT OCCURS                  │
  └──────────────────┬───────────────────┘
                     │
                     ▼
  ┌──────────────────────────────────────┐  S30022
  │   DETECT MOVEMENT OF EDGE PORTION     │
  └──────────────────┬───────────────────┘
                     │
                     ▼
  ┌──────────────────────────────────────┐  S30023
  │ OUTPUT COLOR OBTAINED BY MULTIPLYING  │
  │ MOVEMENT AMOUNT WITH COEFFICIENT IN   │
  │ ACCORDANCE WITH POSITION              │
  │ FROM EDGE PORTION                     │
  └──────────────────┬───────────────────┘
                     │
                     ▼
            ┌─────────────┐
            │     END      │
            └─────────────┘
```

# FIG. 115

ORIGINAL ONE PIXEL IS
ZOOMED TWO-FOLD

ASSUMING THAT GAP
BETWEEN PIXELS IS
LOCATED HERE

THREE PIXELS ARE
RE-INTEGRATED TO
REDUCE LUMINANCE

WITH THIS PROCESS, ORIGINAL GRAY MONOCHROMATIC
PORTION IS SHOWN IN GRID AS FOLLOWS:

EP 2 101 313 A1

# FIG. 116

MAGNIFICATION FACTOR

INPUT IMAGE → 
MAGNIFICATION PROCESSING CIRCUIT (DRC OR THE LIKE)
30031

→ MAGNIFIED IMAGE →

INTER-PIXEL LUMINANCE DECREASING CIRCUIT
30032

→ INTER-PIXEL-EFFECT-ADDED IMAGE → OUTPUT

30001

EP 2 101 313 A1

# FIG. 117

```
        START

MAGNIFY IMAGE TO OUTPUT SIZE          S30031

PROCESS OF REDUCING LUMINANCE         S30032
 OF CERTAIN PORTION BETWEEN
       ASSUMED PIXELS

        OUTPUT                        S30033

         END
```

# FIG. 118

ADDITION OF DITHER

EP 2 101 313 A1

# FIG. 119

30043

SPATIAL DITHER
PATTERN ROM

INPUT IMAGE → SMOOTH-PORTION
EXTRACTING
CIRCUIT → COLOR
COMPARISON
CIRCUIT → DITHER ADDING
CIRCUIT → OUTPUT IMAGE

30041

30042

30044

30001

# FIG. 120

| R | G | B | DITHER PATTERN |
|---|---|---|---|
| 0 | 0 | 0 | NO PATTERN |
| 0 | 0 | 1 | PATTERN 1 |
| 0 | 0 | 2 | PATTERN 6 |

ROM STORES LOOKUP TABLE INCLUDING PRESENCE OR NON-PRESENCE OF DITHER PATTERN OR OCCURRENCE PATTERN FOR EACH COLOR OF TARGET PDP

# FIG. 121

START

EXTRACT PORTION WITH SMALL AMOUNT OF COLOR CHANGE IN SPACE DIRECTION — S30041

COLOR OF THIS PORTION IS DITHERING-VISIBLE COLOR ON PDP? — S30042

NO

YES

ADD DITHER OF SPECIFIED PATTERN — S30043

OUTPUT WITHOUT PROCESSING — S30045

OUTPUT — S30044

END

# FIG. 122

INPUT IMAGE → COLOR COMPARISON CIRCUIT (30051) → TEMPORAL DITHER PATTERN ROM (30052) → DITHER ADDING CIRCUIT (30053) → OUTPUT MEMORY (30054), OUTPUT MEMORY (30055), OUTPUT MEMORY (30056)

TEMPORAL-DITHER-DIVIDED IMAGE

MEMORY CORRESPONDING TO RESPONSE SPEED OF OUTPUT MONITOR IS NECESSARY (IN THE EXAMPLE, THREE-TIMES SPEED)

30001

EP 2 101 313 A1

# FIG. 123

START

CONVERSION INTO TEMPORAL DITHER
IN ACCORDANCE WITH COLOR — S30051

OUTPUT CONVERTED INTO MULTIPLE FRAMES — S30052

END

# FIG. 124

# FIG. 125

```
           ┌─────────┐
           │  START  │
           └─────────┘
                │
                ▼
┌──────────────────────────────────────┐ S30061
│   PROCESS INVOLVING TIME DIRECTION    │
│  ⎛         COLOR SHIFT ADDITION       ⎞│
│  ⎝ SPATIAL/TEMPORAL DITHER ADDITION  ⎠│
└──────────────────────────────────────┘
                │
                ▼
┌──────────────────────────────────────┐ S30062
│  PROCESS INVOLVING SIZE MAGNIFICATION │
│  ⎛  INTER-PIXEL PITCH REPRODUCTION  ⎞ │
│  ⎝    STRIPE ARRAY REPRODUCTION     ⎠ │
└──────────────────────────────────────┘
                │
                ▼
           ┌─────────┐
           │   END   │
           └─────────┘
```

# FIG. 126

## INTERNATIONAL SEARCH REPORT

| International application No. |
| --- |
| PCT/JP2007/074259 |

A. CLASSIFICATION OF SUBJECT MATTER
*G09G5/14*(2006.01)i, *G09G5/00*(2006.01)i, *G09G5/36*(2006.01)i, *G09G5/377*(2006.01)i, *H04N17/04*(2006.01)i

According to International Patent Classification (IPC) or to both national classification and IPC

B. FIELDS SEARCHED

Minimum documentation searched (classification system followed by classification symbols)
G09G3/00-5/42, H04N17/04

| Documentation searched other than minimum documentation to the extent that such documents are included in the fields searched | | | |
| --- | --- | --- | --- |
| Jitsuyo Shinan Koho | 1922-1996 | Jitsuyo Shinan Toroku Koho | 1996-2008 |
| Kokai Jitsuyo Shinan Koho | 1971-2008 | Toroku Jitsuyo Shinan Koho | 1994-2008 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
| --- | --- | --- |
| X<br>Y | JP 2000-310987 A (Mitsubishi Electric Corp.),<br>07 November, 2000 (07.11.00),<br>Par. Nos. [0029], [0030], [0042] to [0047];<br>Figs. 7 to 9<br>(Family: none) | 1,4,5,7,8<br>2,3 |
| X<br>Y | JP 8-76741 A (Konica Corp.),<br>22 March, 1996 (22.03.96),<br>Par. Nos. [0057] to [0068], [0076]; Figs.<br>5 to 15<br>& US 5982953 A | 1,4,6-8<br>2,3 |

| ☒ Further documents are listed in the continuation of Box C. | ☐ See patent family annex. |
| --- | --- |

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search<br>03 March, 2008 (03.03.08) | Date of mailing of the international search report<br>11 March, 2008 (11.03.08) |
| --- | --- |
| Name and mailing address of the ISA/<br>Japanese Patent Office | Authorized officer |
| Facsimile No. | Telephone No. |

Form PCT/ISA/210 (second sheet) (April 2007)

**INTERNATIONAL SEARCH REPORT**

International application No.

PCT/JP2007/074259

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 11-231827 A  (Matsushita Electric Industrial Co., Ltd.),<br>27 August, 1999 (27.08.99),<br>Par. Nos. [0096] to [0127], [0145], [0146];<br>Figs. 19 to 26<br>& EP 893916 A2           & KR 99014172 A<br>& US 6310588 B1 | 2,3 |

Form PCT/ISA/210 (continuation of second sheet) (April 2007)

**INTERNATIONAL SEARCH REPORT**

International application No.

PCT/JP2007/074259

**Box No. II        Observations where certain claims were found unsearchable (Continuation of item 2 of first sheet)**

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☐ Claims Nos.:
because they are dependent claims and are not drafted in accordance with the second and third sentences of Rule 6.4(a).

**Box No. III        Observations where unity of invention is lacking (Continuation of item 3 of first sheet)**

This International Searching Authority found multiple inventions in this international application, as follows:

    The technical feature common to the inventions of claims 1-8 is a feature
disclosed in claim 1.
    However, the search has revealed that the technical feature  is not novel
since it is disclosed in Documents JP 2000-310987 A (Mitsubishi Electric
Corp.) 07 November, 2000 (07.11.00), [0029], [0030], [0042]-[0047], [Fig.
7] to [Fig. 9] (family: none), JP 8-76741 A (Konica Corp.), 22 March, 1996
(22.03.96), [0057]-[0068], [0076], [Fig. 5]-[Fig. 15] & US 5982953 A.

    (Continued to extra sheet)

1. ☒ As all required additional search fees were timely paid by the applicant, this international search report covers all searchable claims.

2. ☐ As all searchable claims could be searched without effort justifying additional fees, this Authority did not invite payment of additional fees.

3. ☐ As only some of the required additional search fees were timely paid by the applicant, this international search report covers only those claims for which fees were paid, specifically claims Nos.:

4. ☐ No required additional search fees were timely paid by the applicant.   Consequently, this international search report is restricted to the invention first mentioned in the claims; it is covered by claims Nos.:

**Remark on Protest**        ☐ The additional search fees were accompanied by the applicant's protest and, where applicable,
the                                             payment of a protest fee.

☐ The additional search fees were accompanied by the applicant's protest but the applicable protest fee was not paid within the time limit specified in the invitation.

☒ No protest accompanied the payment of additional search fees.

Form PCT/ISA/210 (continuation of first sheet (2)) (April 2007)

**INTERNATIONAL SEARCH REPORT**

International application No.

PCT/JP2007/074259

Continuation of Box No.III of continuation of first sheet(2)

As a result, the technical feature makes no contribution over the prior art and the common feature cannot be a special technical feature within the meaning of PCT Rule 13.2, second sentence.

Accordingly, there exists no technical feature common to all the inventions of claims 1-8.
Since there exists no other common feature which can be considered as a special technical feature within the meaning of PCT Rule 13.2, second sentence, no technical relationship within the meaning of PCT Rule 13 between the different inventions can be seen.

Consequently, it is obvious that the inventions of claims 1-8 do not satisfy the requirement of unity of invention.

It should be noted that the technical feature disclosed in claims 4-6 makes no contribution over the prior art, either.

Therefore, the inventions of claims 1-8 are divided into the following groups of inventions:
(1) claims 1, 4-8
(2) claims 2, 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001136548 A
- JP 8023460 A
- JP 2002354290 A
- JP 2005229245 A
- JP 2005236634 A
- JP 2002223167 A
- JP 2005039817 A
- JP 2004039300 A
- JP 8163582 A
- JP 2002232905 A
- JP 61167280 A
- JP 5084706 A
- WO 00010324 A
- JP 7095591 A
- JP 3271101 B
- JP 2000039864 A
- JP 2004138783 A